(19) Europäisches Patentamt
European Patent Office
Office européen des brevets

(11) **EP 4 040 309 A1**

(12) **EUROPEAN PATENT APPLICATION**

(43) Date of publication:
**10.08.2022 Bulletin 2022/32**

(21) Application number: **21218473.3**

(22) Date of filing: **03.05.2018**

(51) International Patent Classification (IPC):
***G06F 16/33*** *(2019.01)* ***G06F 16/9032*** *(2019.01)*
***G06F 16/9038*** *(2019.01)* ***G06F 40/20*** *(2020.01)*

(52) Cooperative Patent Classification (CPC):
**G06F 16/90332; G06F 16/3344; G06F 16/9038; G06F 40/20**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.05.2017 US 201762500999 P**
**06.11.2017 US 201715804991**

(62) Document number(s) of the earlier application(s) in accordance with Art. 76 EPC:
**18729514.2 / 3 535 676**

(71) Applicant: **Tableau Software, Inc.**
**Seattle, WA 98103 (US)**

(72) Inventors:
- **SETLUR, Vidya, R.**
  **Seattle, 98103 (US)**
- **BATTERSBY, Sarah, E.**
  **Seattle, 98103 (US)**
- **TORY, Melanie, K.**
  **Seattle, 98103 (US)**
- **GOSSWEILER, Richard, C., III**
  **Seattle, 98103 (US)**
- **CHANG, Angel, Xuan**
  **Seattle, 98103 (US)**
- **DYKEMAN, Isaac, J.**
  **Seattle, 98103 (US)**
- **PRINCE, Enamul, Hoque**
  **Seattle, 98103 (US)**

(74) Representative: **Mewburn Ellis LLP**
**Aurora Building**
**Counterslip**
**Bristol BS1 6BX (GB)**

Remarks:
•This application was filed on 31-12-2021 as a divisional application to the application mentioned under INID code 62.
•Claims filed after the date of filing of the application (Rule 68(4) EPC).

# (54) SYSTEMS AND METHODS OF APPLYING PRAGMATICS PRINCIPLES FOR INTERACTION WITH VISUAL ANALYTICS

(57) A method uses natural language processing for visual analysis of a dataset by a computer. The computer displays a data visualization based on a dataset retrieved from a database using a first set of one or more database queries. The computer receives user input (e.g., keyboard or voice) to specify a natural language command related to the displayed data visualization. Based on the displayed data visualization, the computer extracts one or more independent analytic phrases from the natural language command. The computer further computes a set of one or more conversation centers associated with the natural language command based on the set of one or more analytic phrases. The computer then computes a set of analytical functions associated with the set of one or more conversation centers, thereby creating a set of one or more functional phrases. The device then updates the data visualization based on the set of one or more functional phrases.

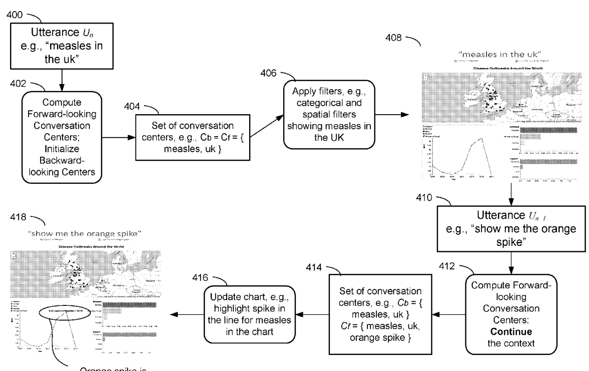

Figure 4A

EP 4 040 309 A1

## Description

### TECHNICAL FIELD

The disclosed implementations relate generally to data visualization and more specifically to systems, methods, and user interfaces that enable users to interact with and explore datasets using a natural language interface.

### BACKGROUND

Data visualization applications enable a user to understand a data set visually, including distribution, trends, outliers, and other factors that are important to making business decisions. Some data sets are very large or complex, and include many data fields. Various tools can be used to help understand and analyze the data, including dashboards that have multiple data visualizations. However, some functionality may be difficult to use or hard to find within a complex user interface. Most systems return only very basic interactive visualizations in response to queries, and others require expert modeling to create effective queries. Other systems require simple closed-ended questions, and then are only capable of returning a single text answer or a static visualization.

### SUMMARY

Accordingly, there is a need for tools that allow users to effectively utilize functionality provided by data visualization applications. One solution to the problem is providing a natural language interface as part of a data visualization application (e.g., within the user interface for the data visualization application) for an interactive query dialog that provides graphical answers to natural language queries. The natural language interface allows users to access complex functionality using ordinary questions or commands. Questions and insights often emerge from previous questions and patterns of data that a person sees. By modeling the interaction behavior as a conversation, the natural language interface can apply principles of pragmatics to improve interaction with visual analytics. Through various techniques for deducing the grammatical and lexical structure of utterances and their context, the natural language interface supports various pragmatic forms of natural language interaction with visual analytics. These pragmatic forms include understanding incomplete utterances, referring to entities within utterances and visualization properties, supporting long, compound utterances, identifying synonyms and related concepts, and 'repairing' responses to previous utterances. Furthermore, the natural language interface provides appropriate visualization responses either within an existing visualization or by creating new visualizations when necessary, and resolves ambiguity through targeted textual feedback and ambiguity widgets. In this way, the natural language interface allows users to efficiently explore data displayed (e.g., in a data visualization) within the data visualization application.

In accordance with some implementations, a method executes at an electronic device with a display. For example, the electronic device can be a smart phone, a tablet, a notebook computer, or a desktop computer. The device displays a data visualization based on a dataset retrieved from a database using a first set of one or more database queries. A user specifies a first natural language command related to the displayed data visualization. Based on the displayed data visualization, the device extracts a first set of one or more independent analytic phrases from the first natural language command. The device then computes a first set of one or more conversation centers associated with the first natural language command based on the first set of one or more analytic phrases. The device then computes a first set of analytical functions associated with the first set of one or more conversation centers, thereby creating a first set of one or more functional phrases. The device then updates the data visualization based on the first set of one or more functional phrases.

In some implementations, the device receives a second natural language command related to the updated data visualization. After receiving the second natural language command, the device extracts a second set of one or more independent analytic phrases from the second natural language command, and computes a temporary set of one or more conversation centers associated with the second natural language command based on the second set of one or more analytic phrases, according to some implementations. The device then derives a second set of one or more conversation centers from the first set of one or more conversation centers and the temporary set of one or more conversation centers using one or more transitional rules. The device computes a second set of one or more analytical functions associated with the second set of one or more conversation centers, thereby creating a second set of one or more functional phrases. The device then updates the data visualization based on the second set of one or more functional phrases.

In some implementations, each of the conversation centers of the first set of one or more conversation centers, the temporary set of one or more conversation centers, and the second set of one or more conversation centers comprises a value for a variable (e.g., a data attribute or a visualization property). In such implementations, the device uses the transitional rules by performing a sequence of operations that comprises: determining whether a first variable is included in the first set of one or more conversation centers; determining whether the first variable is included in the temporary set of one or more conversation centers; determining a respective transitional rule of the one or more transitional rules to apply based on whether the first variable is included in the first set of one or more conversation centers and/or the temporary set of one or more conversation centers; and applying the respective transitional rule.

In some implementations, the one or more transitional rules used by the device comprise a CONTINUE rule for including each conversation center in the first set of one or more conversation centers in the second set of one or more conversation centers, and adding one or more conversation centers from the temporary set of one or more conversation centers to the second set of one or more conversation centers.

In some such implementations, the device applies the respective transitional rule by performing a sequence of operations that comprises: in accordance with a determination that (i) the first variable is included in the temporary set of one or more conversation centers, and (ii) the first variable is not included in the first set of one or more conversation centers, the device applying the CONTINUE rule to include the first variable to the second set of one or more conversation centers.

In some implementations, the one or more transitional rules used by the device comprise a RETAIN rule for retaining each conversation center in the first set of one or more conversation centers in the second set of one or more conversation centers without adding any conversation center from the temporary set of one or more conversation centers to the second set of one or more conversation centers.

In some such implementations, the device applies the respective transitional rule by performing a sequence of operations that comprises: in accordance with a determination that (i) the first variable is included in the first set of one or more conversation centers, and (ii) the first variable is not included in the temporary set of one or more conversation centers, applying the RETAIN rule to include each conversation center in the first set of one or more conversation centers to the second set of one or more conversation centers.

In some implementations, the one or more transitional rules used by the device comprise a SHIFT rule for including each conversation center in the first set of one or more conversation centers in the second set of one or more conversation centers, and replacing one or more conversation centers in the second set of one or more conversation centers with conversation centers in the temporary set of one or more conversation centers.

In some such implementations, the device applies the respective transitional rule by performing a sequence of operations that comprises: in accordance with a determination that (i) the first variable is included in the first set of one or more conversation centers, and (ii) the first variable is included in the temporary set of one or more conversation centers: determining whether a first value of the first variable in the first set of one or more conversation centers is different from a second value of the first variable in the temporary set of one or more conversation centers; in accordance with a determination that the first value is different from the second value, applying the SHIFT rule for including each conversation center in the first set of one or more conversation centers in the second set of one or more conversation centers, and replacing the value for the first variable in the second set of one or more conversation centers with the second value.

In some such implementations, the device further determines if a widget corresponding to the first variable has been removed by the user; and in accordance with the determination that the widget has been removed, applying the SHIFT rule for including each conversation center in the first set of one or more conversation centers in the second set of one or more conversation centers, and replacing the value for the first variable in the second set of one or more conversation centers with a new value (e.g., a maximum value, or a super-set value) that includes the first value.

In some implementations, the device creates a first set of one or more queries based on the first set of one or more functional phrases, and requeries the database using the first set of one or more queries, thereby retrieving a second dataset, and then displays an updated data visualization using the second dataset. In some implementations, the device creates a second set of one or more queries based on the second set of one or more functional phrases, and requeries the database using the second set of one or more queries, thereby retrieving a third dataset, and then displays an updated data visualization using the third dataset. In some instances, requerying the database is performed locally at the computing device using cached or stored data at the computing device. For example, requerying is commonly performed locally when the natural language command specifies one or more filters. In some implementations, the device further creates and displays a new data visualization using the second dataset or the third dataset.

In some implementations, the device further determines if the user has selected a dataset different from the first dataset, or if the user has reset the data visualization, and, if so, resets each of the first set of one or more conversation centers, the temporary set of one or more conversation centers, and the second set of one or more conversation centers to an empty set that includes no conversation centers.

Typically, an electronic device includes one or more processors, memory, a display, and one or more programs stored in the memory. The programs are configured for execution by the one or more processors and are configured to perform any of the methods described herein. The one or more programs include instructions for displaying a data visualization based on a first dataset retrieved from a database using a first set of one or more queries. The one or more programs also include instructions for receiving a first user input to specify a first natural language command related to the data visualization. The one or more programs also include instructions for extracting a first set of one or more independent analytic phrases from the first natural language command. The one or more programs also include instructions for computing a first set of one or more conversation centers associated with the first natural language command based on the first set of one or more analytic phrases. The one or more programs also include instructions for computing a first set of analytical functions associated with the first set of one or more conversation centers, thereby creating a first set of one or more functional phrases, and updating the data visualization based on the first set of one or more functional phrases.

In some implementations, the one or more programs include instructions for receiving a second user input to specify a second natural language command related to the updated data visualization. The one or more programs also include instructions for extracting a second set of one or more independent analytic phrases from the second natural language command. The one or more programs also include instructions for computing a temporary set of one or more conversation centers associated with the second natural language command based on the second set of one or more analytic phrases. The one or more programs also include instructions for deriving a second set of one or more conversation centers from the first set of one or more conversation centers and the temporary set of one or more conversation centers using one or more transitional rules. The one or more programs also include instructions for computing a second set of one or more analytical functions associated with the second set of one or more conversation centers, thereby creating a second set of one or more functional phrases, and updating the data visualization based on the second set of one or more functional phrases.

In some implementations, a non-transitory computer readable storage medium stores one or more programs configured for execution by a computing device having one or more processors, memory, and a display. The one or more programs are configured to perform any of the methods described herein. The one or more programs include instructions for displaying a data visualization based on a first dataset retrieved from a database using a first set of one or more queries. The one or more programs also include instructions for receiving a first user input to specify a first natural language command related to the data visualization. The one or more programs also include instructions for extracting a first set of one or more independent analytic phrases from the first natural language command. The one or more programs also include instructions for computing a first set of one or more conversation centers associated with the first natural language command based on the first set of one or more analytic phrases. The one or more programs also include instructions for computing a first set of analytical functions associated with the first set of one or more conversation centers, thereby creating a first set of one or more functional phrases, and updating the data visualization based on the first set of one or more functional phrases.

In some implementations, the one or more programs include instructions for receiving a second user input to specify a second natural language command related to the updated data visualization. The one or more programs also include instructions for extracting a second set of one or more independent analytic phrases from the second natural language command. The one or more programs also include instructions for computing a temporary set of one or more conversation centers associated with the second natural language command based on the second set of one or more analytic phrases. The one or more programs also include instructions for deriving a second set of one or more conversation centers from the first set of one or more conversation centers and the temporary set of one or more conversation centers using one or more transitional rules. The one or more programs also include instructions for computing a second set of one or more analytical functions associated with the second set of one or more conversation centers, thereby creating a second set of one or more functional phrases, and updating the data visualization based on the second set of one or more functional phrases.

In another aspect, in accordance with some implementations, the device displays a data visualization based on a dataset retrieved from a database using a first set of one or more database queries. A user specifies a first natural language command related to the displayed data visualization. Based on the displayed data visualization, the device extracts a first set of one or more independent analytic phrases from the first natural language command. The device then computes a first set of one or more conversation centers associated with the first natural language command based on the first set of one or more analytic phrases. The device then computes a first set of analytical functions associated with the first set of one or more conversation centers, thereby creating a first set of one or more functional phrases. The device then updates the data visualization based on the first set of one or more functional phrases. The user specifies a second natural language command related to the updated data visualization. After receiving the second natural language command, the device extracts a second set of one or more independent analytic phrases from the second natural language command, and computes a temporary set of one or more conversation centers associated with the second natural language command based on the second set of one or more analytic phrases. The device then computes cohesion between the first set of one or more analytic phrases and the second set of one or more analytic phrases. The device then derives a second set of one or more conversation centers from the first set of one or more conversation centers and the temporary set of one or more conversation centers based on the cohesion. The device computes a second set of one or more analytical functions associated with the second set of one or more conversation centers, thereby creating a second set of one or more functional phrases. The device then updates the data visualization based on the second set of one or more functional phrases.

In some implementations, the device computes the cohesion and derives the second set of one or more conversation centers by performing a sequence of operations that comprises: identifying a phrase structure of the second set of one or more analytic phrases; identifying one or more forms of pragmatics based on the phrase structure; and deriving the second set of one or more conversation centers from the first set of one or more conversation centers and the temporary set of one or more conversation centers based on the one or more forms of pragmatics.

In some such implementations, the device identifies the phrase structure by performing a sequence of operations that comprises: parsing the second natural language command applying a probabilistic grammar, thereby obtaining a parsed output; and resolving the parsed output to corresponding categorical and data attributes. In some such implementations, parsing the second natural language command further comprises deducing syntactic structure by employing a part-of-speech API (e.g., a Part-of-Speech (PS) tagger) provided by a natural language toolkit.

In some implementations, the device identifies the one or more forms of pragmatics by performing a sequence of operations that comprises determining whether the second natural language command is an incomplete utterance (sometimes called an Ellipsis) by determining whether one or more linguistic elements are absent in the phrase structure. In some such implementations, the device derives the second set of one or more conversation centers by performing a sequence of operations that comprises: in accordance with the determination that the second natural language command is an incomplete utterance: determining a first subset of conversation centers in the first set of one or more conversation centers, the first subset of conversation centers corresponding to the one or more linguistic elements absent in the phrase structure; and computing the second set of one or more conversation centers by combining the temporary set of one or more conversation centers with the first subset of conversation centers.

In some implementations, the device identifies the one or more forms of pragmatics by performing a sequence of operations that comprises determining whether the second natural language command is a reference expression by determining whether one or more anaphoric references is present in the phrase structure; and the device derives the second set of one or more conversation centers by performing another sequence of operations that comprises: in accordance with the determination that the second natural command is a reference expression: searching the first set of one or more conversation centers to find a first subset of conversation centers that corresponds to a phrasal chunk in the second natural language command that contains a first anaphoric reference of the one or more anaphoric references; and computing the second set of one or more conversation centers based on the temporary set of one or more conversation centers and the first subset of conversation centers.

In some such implementations, the device further determines if the first anaphoric reference is accompanied by a verb in the second natural language command, and if so, searches the first set of one or more conversation centers to find a first action conversation center that refers to an action verb (e.g., "filter out"); and computes the second set of one or more conversation centers based on the temporary set of one or more conversation centers, the first subset of conversation centers, and the first action conversation center.

In some such implementations, the device determines if the first anaphoric reference is a deictic reference that refers to some object in the environment, typically by pointing, and if so, computes the second set of one or more conversation centers based on the temporary set of one or more conversation centers, and a characteristic of the object. Deictic references are typically enabled through multimodal interaction (e.g., via the use of a mouse in addition to speech or text).

In some such implementations, the device further determines if the first anaphoric reference is a reference to a visualization property in the updated data visualization, and if so, computes the second set of one or more conversation centers based on the temporary set of one or more conversation centers, and data related to the visualization property

In some implementations, the device identifies the one or more forms of pragmatics by performing a sequence of operations that comprises determining whether the second natural language command is a repair utterance by determining whether the phrase structure corresponds to one or more predefined repair utterances (say, to repair a potential ambiguity in the first natural language command or how the results are presented to the user). For example, the user utters "get rid of condo" or "change from condo to townhomes." In such implementations, if the device determines that the second natural language command is a repair utterance, the device computes the second set of one or more conversation centers based on the temporary set of one or more conversation centers; and updates one or more data attributes in the second set of one or more conversation centers based on the one or more predefined repair utterances and the phrase structure.

In some such implementations, the device determines if the phrase structure corresponds to a repair utterance to change a default behavior related to displaying a data visualization (e.g., highlighting for selection, such as in response to "no filter, instead"), and if so, the device changes the default behavior related to displaying.

In some implementations, the device identifies the one or more forms of pragmatics by performing a sequence of operations that comprises determining whether the second natural language command is a conjunctive expression by (i) determining explicit or implicit presence of conjunctions in the phrase structure, and (ii) determining whether the temporary set of one or more conversation centers includes each conversation center in the first set of one or more conversation centers. In such implementations, the device derives the second set of one or more conversation centers by performing another set of operations that comprises: in accordance with the determination that the second natural language command is a conjunctive expression, computing the second set of one or more conversation centers based on the temporary set of one or more conversation centers

In some such implementations, the device determines if the second natural language command has more than one conjunct; and in accordance with the determination that the second natural language command has more than one conjunct, the device computes the second set of one or more analytical functions by linearizing the second natural language command. In some such implementations, the device linearizes the second natural language command by performing a sequence of operations that comprises: generating a parse tree for the second natural language command; traversing the parse tree in post-order to extract a first analytic phrase and a second analytic phrase, wherein the first analytic phrase and the second analytic phrase are adjacent nodes in the parse tree; computing a first analytical function and a second analytical function corresponding to the first analytic phrase and the second analytic phrase, respectively; and combining the first analytical function with the second analytical function by applying one or more logical operators based on one or more characteristics of the first analytical function and the second analytic function, wherein the one or more characteristics include attributor type, operator type, and a value.

In some such implementations, the first analytical function comprises a first attribute (sometimes herein called a variable, and includes a visualization property), a first operator, and a first value; the second analytical function comprises a second attribute (sometimes herein called a variable, and includes a visualization property), a second operator, and a second value.

In some such implementations, combining the first analytical function with the second analytical function comprises: determining whether the first attribute is a categorical type attribute or an ordered type attribute, and determining whether the second attribute is a categorical type attribute or an ordered type attribute; determining whether the first attribute and the second attribute are identical; and, in accordance with a determination that the first attribute and the second attribute are identical and are both categorical type attributes, applying a union operator to combine the first analytical function and the second analytical function.

In some such implementations, combining the first analytical function with the second analytical function comprises: determining whether the first attribute is a categorical type attribute or an ordered type attribute, and determining whether the second attribute is a categorical type attribute or an ordered type attribute; determining whether the first attribute and the second attribute are identical; and, in accordance with a determination that the first attribute and the second attribute are non-identical, applying the intersection operator to combine the first analytical function and the second analytical function.

In some such implementations, combining the first analytical function with the second analytical function comprises: determining whether the first attribute is a categorical type attribute or an ordered type attribute, and determining whether the second attribute is a categorical type attribute or an ordered type attribute; determining whether the first attribute and the second attribute are identical; and, in accordance with a determination that the first attribute and the second attribute are identical and are both ordered type attributes: determining the operator types of the first operator and the second operator; and, in accordance with a determination that the first operator and the second operator are both equality operators, applying the union operator to combine the first analytical function and the second analytical function.

In some such implementations, combining the first analytical function with the second analytical function comprises: determining whether the first attribute is a categorical type attribute or an ordered type attribute, and determining whether the second attribute is a categorical type attribute or an ordered type attribute; determining whether the first attribute and the second attribute are identical; and, in accordance with a determination that the first attribute and the second attribute are identical and are both ordered type attributes: determining the operator types of the first operator and the second operator; and in accordance with a determination that the first operator is a "less than" operator and the second operator is a "greater than" operator: determining whether the first value is less than the second value; and in accordance with a determination that the first value is less than the second value, applying the union operator to combine the first analytical function and the second analytical function.

In some such implementations, combining the first analytical function with the second analytical function comprises: determining whether the first attribute is a categorical type attribute or an ordered type attribute, and determining whether the second attribute is a categorical type attribute or an ordered type attribute; determining whether the first attribute and the second attribute are identical; and, in accordance with a determination that the first attribute and the second attribute are identical and are both ordered type attributes: determining the operator types of the first operator and the second operator; and in accordance with a determination that the first operator is a "greater than" operator and the second operator is a "lesser than" operator: determining whether the first value is less than the second value; and in accordance with a determination that the first value is less than the second value, applying the intersection operator to combine the first analytical function and the second analytical function.

In some implementations, the device further computes semantic relatedness between the second set of one or more extracted analytic phrases and one or more attributes of data included in the updated data visualization, and computes analytical functions associated with the second set of one or more analytic phrases, thereby creating the second set of one or more functional phrases, based on the semantically related one or more attributes of data. As opposed to grammatical cohesion or cohesion between contexts, lexical cohesion looks for cohesion within the context.

In some such implementations, the device computes semantic relatedness by performing a sequence of operations that comprises: training a first neutral network model on a large corpus of text, thereby learning word embeddings; computing a first word vector for a first word in a first phrase in the second set of one or more analytic phrases using a second neural network model, the first word vector mapping the first word to the word embeddings; computing a second word vector for a first data attribute in the one or more data attributes using the second neural network model, the second word vector mapping the first data attribute to the word embeddings; and computing relatedness between the first word vector and the second word vector using a similarity metric.

In some such implementations, the first neural network model comprises Word2vec™ model. In some such implementations, the second neural network model comprises recurrent neural network model.

In some such implementations, the similarity metric is based at least on (i) Wu-Palmer distance between word senses associated with the first word vector and the second word vector, (ii) a weighting factor, and (iii) a pairwise cosine distance between the first word vector and the second word vector.

In some such implementations, the device computes analytical functions by performing a sequence of operations that comprises: obtaining word definitions for the second set of one or more analytic phrases from a publicly available dictionary; determining whether the word definitions contain one or more predefined adjectives using a part-of-speech API provided by a natural language toolkit; and in accordance with the determination that the word definitions contain one or more predefined adjectives, mapping the one or more predefined adjectives to one or more analytical functions.

Typically, an electronic device includes one or more processors, memory, a display, and one or more programs stored in the memory. The programs are configured for execution by the one or more processors and are configured to perform any of the methods described herein. The one or more programs include instructions for displaying a data visualization based on a first dataset retrieved from a database using a first set of one or more queries. The one or more programs also include instructions for receiving a first user input to specify a first natural language command related to the data visualization. The one or more programs also include instructions for extracting a first set of one or more independent analytic phrases from the first natural language command. The one or more programs also include instructions for computing a first set of one or more conversation centers associated with the first natural language command based on the first set of one or more analytic phrases. The one or more programs also include instructions for computing a first set of analytical functions associated with the first set of one or more conversation centers, thereby creating a first set of one or more functional phrases. The one or more programs also include instructions for updating the data visualization based on the first set of one or more functional phrases. The one or more programs also include instructions for receiving a second user input to specify a second natural language command related to the updated data visualization. The one or more programs also include instructions for extracting a second set of one or more independent analytic phrases from the second natural language command. The one or more programs also include instructions for computing a temporary set of one or more conversation centers associated with the second natural language command based on the second set of one or more analytic phrases. The one or more programs also include instructions for computing cohesion between the first set of one or more analytic phrases and the second set of one or more analytic phrases. The one or more programs also include instructions for deriving a second set of one or more conversation centers from the first set of one or more conversation centers and the temporary set of one or more conversation centers based on the cohesion. The one or more programs also include instructions for computing a second set of one or more analytical functions associated with the second set of one or more conversation centers, thereby creating a second set of one or more functional phrases, and updating the data visualization based on the second set of one or more functional phrases.

In some implementations, a non-transitory computer readable storage medium stores one or more programs configured for execution by a computing device having one or more processors, memory, and a display. The one or more programs are configured to perform any of the methods described herein. The one or more programs include instructions for displaying a data visualization based on a first dataset retrieved from a database using a first set of one or more queries. The one or more programs also include instructions for receiving a first user input to specify a first natural language command related to the data visualization. The one or more programs also include instructions for extracting a first set of one or more independent analytic phrases from the first natural language command. The one or more programs also include instructions for computing a first set of one or more conversation centers associated with the first natural language command based on the first set of one or more analytic phrases. The one or more programs also include instructions for computing a first set of analytical functions associated with the first set of one or more conversation centers, thereby creating a first set of one or more functional phrases. The one or more programs also include instructions for updating the data visualization based on the first set of one or more functional phrases. The one or more programs also include instructions for receiving a second user input to specify a second natural language command related to the updated data visualization. The one or more programs also include instructions for extracting a second set of one or more independent analytic phrases from the second natural language command. The one or more programs also include instructions for computing a temporary set of one or more conversation centers associated with the second natural language command based on the second set of one or more analytic phrases. The one or more programs also include instructions for computing cohesion between the first set of one or more analytic phrases and the second set of one or more analytic phrases. The one or more programs also include instructions for deriving a second set of one or more conversation centers from the first set of one or more conversation centers and the temporary set of one or more conversation centers based on the cohesion. The one or more programs also include instructions for computing a second set of one or more analytical functions associated with the second set of one or more conversation centers, thereby creating a second set of one or more functional phrases, and updating the data visualization based on the second set of one or more functional phrases.

In another aspect, in accordance with some implementations, a method executes at an electronic device with a display. For example, the electronic device can be a smart phone, a tablet, a notebook computer, or a desktop computer. The device displays a data visualization based on a dataset retrieved from a database using a first set of one or more database queries. A user specifies a first natural language command related to the displayed data visualization. Based on the displayed data visualization, the device extracts a first set of one or more independent analytic phrases from the first natural language command. The device then computes a first set of one or more conversation centers associated with the first natural language command based on the first set of one or more analytic phrases. The device then computes a first set of analytical functions associated with the first set of one or more conversation centers, thereby creating a first set of one or more functional phrases. The device then updates the data visualization based on the first set of one or more functional phrases. The user specifies a second natural language command related to the updated data visualization. After receiving the second natural language command, the device extracts a second set of one or more independent analytic phrases from the second natural language command, and computes a temporary set of one or more conversation centers associated with the second natural language command based on the second set of one or more analytic phrases. The device then derives a second set of one or more conversation centers from the first set of one or more conversation centers and the temporary set of one or more conversation centers using one or more transitional rules. The device then updates the data visualization based on the second set of one or more conversation centers.

In some implementations, the device further determines one or more data attributes corresponding to the second set of one or more conversation centers; scans displayed data visualizations to identify one or more of the displayed data visualizations that contain data marks whose characteristics correspond to a first data attribute in the one or more data attributes; and highlights the data marks whose characteristics correspond to the first data attribute. In some such implementations, the device further filters, from the displayed data visualizations, results that contain data marks whose characteristics do not correspond to the one or more data attributes. Further, in some such implementations, the device receives a user input to determine whether to filter or to highlight the data marks (e.g., via a natural language command, such as ’exclude,’ ’remove,’ and ’filter only’).

In some implementations, the visualization characteristics include one or more of color, size, and shape. In some implementations, the visualization characteristics correspond to a visual encoding of data marks. In some implementations, the visual encoding is one or more of color, size, and shape.

In some implementations, the device determines if none of the displayed data visualizations contain data marks whose characteristics correspond to the first data attribute, and if so, generates a specification for a new data visualization with the first data attribute (e.g., aggregation types) and displays the new data visualization. In some such implementations, displaying the new data visualization further comprises determining a chart type based on the specification; and generating and displaying the chart. Further, in some such implementations, the chart is positioned using a two-dimensional grid-based layout algorithm, automatically coordinated with other data visualizations (sometimes herein called views).

In some implementations, the device performs further performs a sequence of operations comprising: computing a second set of one or more analytical functions associated with the second set of one or more conversation centers, thereby creating a second set of one or more functional phrases; selecting a first functional phrase from the second set of one or more functional phrases, wherein the first functional phrase comprises a parameterized data selection criterion; selecting an initial range for values of the parameters of the parameterized data selection criterion; displaying an editable user interface control (e.g., widgets) corresponding to the parameterized data selection criterion, wherein the user interface control displays the current values of the parameters; and ordering a displayed set of one or more editable user interface controls based on the order of queries in the second natural language command, wherein the order of queries is inferred while extracting the second set of one or more analytic phrases from the second natural language command. In some such implementations, the user interface control allows adjustment of the first functional phrase. Further, in some such implementations, the user interface control displays a slider, which enables a user to adjust the first functional phrase. In some such implementations, ordering the displayed set of one or more editable user interface controls further comprises using a library that facilitates the compact placement of small word-scale visualization within text. In some such implementations, the library is Sparklificator™.

In some implementations, the device performs a sequence of operations aimed at automatically correcting some user errors. The sequence of operations comprises: determining a first token in the second natural language command that does not correspond to any of the analytic phrases in the second set of one or more analytic phrases (for e.g., due to a parsing failure); searching for a correctly spelled term corresponding to the first token using a search library by comparing the first token with one or more features of the first dataset; and substituting the correctly spelled term for the first token in the second natural language command to obtain a third natural language command; and extracting the second set of one or more analytic phrases from the third natural language command. In some such implementations, the one or more features include data attributes, cell values, and related keywords of the first dataset. In some such implementations, the search library is a fuzzy string library, such as Fuse.js™.

In some such implementations, the device further performs a sequence of operations comprising: determining whether there is no correctly spelled term corresponding to the first token; and in accordance with a determination that there is no correctly spelled term corresponding to the first token: parsing the second natural language command to obtain a parse tree; pruning the parse tree to remove the portion of the tree corresponding to the first token; and extracting the second set of one or more analytic phrases based on the pruned parse tree.

In some implementations, the device further generates a textual feedback indicating that the first token was unrecognized and therefore removed from the second natural language command - a situation that typically occurs when the utterance was only partially understood. In some such implementations, the device displays the first token.

In some implementations, the device further generates a textual feedback indicating that the correctly spelled term is substituted for the first token in the second natural language command. This is typically the situation when the utterance was not successfully understood, but the device suggested an alternative query. Further, in some such implementations, the device displays and highlights the correctly spelled term.

Typically, an electronic device includes one or more processors, memory, a display, and one or more programs stored in the memory. The programs are configured for execution by the one or more processors and are configured to perform any of the methods described herein. The one or more programs include instructions for displaying a data visualization based on a first dataset retrieved from a database using a first set of one or more queries. The one or more programs also include instructions for receiving a first user input to specify a first natural language command related to the data visualization. The one or more programs also include instructions for extracting a first set of one or more independent analytic phrases from the first natural language command. The one or more programs also include instructions for computing a first set of one or more conversation centers associated with the first natural language command based on the first set of one or more analytic phrases. The one or more programs also include instructions for computing a first set of analytical functions associated with the first set of one or more conversation centers, thereby creating a first set of one or more functional phrases. The one or more programs also include instructions for updating the data visualization based on the first set of one or more functional phrases. The one or more programs also include instructions for receiving a second user input to specify a second natural language command related to the updated data visualization. The one or more programs also include instructions for extracting a second set of one or more independent analytic phrases from the second natural language command. The one or more programs also include instructions for computing a temporary set of one or more conversation centers associated with the second natural language command based on the second set of one or more analytic phrases. The one or more programs also include instructions for deriving a second set of one or more conversation centers from the first set of one or more conversation centers and the temporary set of one or more conversation centers using one or more transitional rules. The one or more programs also include instructions for updating the data visualization based on the second set of one or more conversation centers, wherein the updating comprises: determining one or more data attributes corresponding to the second set of one or more conversation centers; scanning displayed data visualizations to identify one or more of the displayed data visualizations that contain data marks whose characteristics correspond to a first data attribute in the one or more data attributes; and highlighting the data marks whose characteristics correspond to the first data attribute.

In some implementations, a non-transitory computer readable storage medium stores one or more programs configured for execution by a computing device having one or more processors, memory, and a display. The one or more programs are configured to perform any of the methods described herein. The one or more programs include instructions for displaying a data visualization based on a first dataset retrieved from a database using a first set of one or more queries. The one or more programs also include instructions for receiving a first user input to specify a first natural language command related to the data visualization. The one or more programs also include instructions for extracting a first set of one or more independent analytic phrases from the first natural language command. The one or more programs also include instructions for computing a first set of one or more conversation centers associated with the first natural language command based on the first set of one or more analytic phrases. The one or more programs also include instructions for computing a first set of analytical functions associated with the first set of one or more conversation centers, thereby creating a first set of one or more functional phrases. The one or more programs also include instructions for updating the data visualization based on the first set of one or more functional phrases. The one or more programs also include instructions for receiving a second user input to specify a second natural language command related to the updated data visualization. The one or more programs also include instructions for extracting a second set of one or more independent analytic phrases from the second natural language command. The one or more programs also include instructions for computing a temporary set of one or more conversation centers associated with the second natural language command based on the second set of one or more analytic phrases. The one or more programs also include instructions for deriving a second set of one or more conversation centers from the first set of one or more conversation centers and the temporary set of one or more conversation centers using one or more transitional rules. The one or more programs also include instructions for updating the data visualization based on the second set of one or more conversation centers, wherein the updating comprises: determining one or more data attributes corresponding to the second set of one or more conversation centers; scanning displayed data visualizations to identify one or more of the displayed data visualizations that contain data marks whose characteristics correspond to a first data attribute in the one or more data attributes; and highlighting the data marks whose characteristics correspond to the first data attribute.

Thus methods, systems, and graphical user interfaces are disclosed that allow users to efficiently explore data displayed within a data visualization application.

Both the foregoing general description and the following detailed description are exemplary and explanatory, and are intended to provide further explanation of the invention as claimed.

BRIEF DESCRIPTION OF THE DRAWINGS

For a better understanding of the aforementioned systems, methods, and graphical user interfaces, as well as additional systems, methods, and graphical user interfaces that provide data visualization analytics, reference should be made to the Description of Implementations below, in conjunction with the following drawings in which like reference numerals refer to corresponding parts throughout the figures.

Figure 1 illustrates a graphical user interface used in some implementations.

Figure 2 is a block diagram of a computing device according to some implementations.

Figure 3A is a process flow diagram illustrating a process for using natural language applying pragmatics principles for visual analysis of a dataset according to some implementations; and Figure 3B is a state machine diagram that illustrates conversation center states and the transition between the states when particular transitional rules are triggered, in accordance with some implementations.

Figures 4A - 4B are diagrams illustrating the use of different transition rules in handling analytical conversations according to some implementations; and Figures 4C - 4G illustrate graphical user interfaces (that relate to Figures 4A - 4B) for interactive data analysis using natural language processing in a data visualization application according to some implementations.

Figure 5 is a diagram illustrating a general framework for the application of principles of pragmatics for visual analytics according to some implementations.

Figure 6A is a diagram illustrating the application of pragmatics principles for incomplete utterances (sometimes herein called Ellipsis) according to some implementations; and Figures 6B - 6D illustrate graphical user interfaces (that relate to Figure 6A) for interactive data analysis using natural language processing in a data visualization application according to some implementations.

Figure 7A is a diagram illustrating the application of pragmatics principles for utterances with referring expressions (sometimes herein called anaphoric references) according to some implementations; and Figures 7B - 7F illustrate graphical user interfaces (that relate to Figure 7A) for interactive data analysis using natural language processing in a data visualization application according to some implementations.

Figure 8A is a diagram illustrating the application of pragmatics principles for utterances with conjunctions according to some implementations; Figure 8B illustrates a graphical user interface (that relates to Figure 8A) for interactive data analysis using natural language processing in a data visualization application according to some implementations; and Figure 8C illustrates how a system iteratively connects the analytical functions of adjacent nodes in a parse tree by linearization, in accordance with some implementations.

Figure 9A is a diagram illustrating the application of pragmatics principles for handling lexical cohesion according to some implementations; and Figures 9B - 9D illustrate graphical user interfaces (that relate to Figure 9A) for interactive data analysis using natural language processing in a data visualization application according to some implementations.

Figure 10A is a diagram illustrating the application of pragmatics principles for repair utterances according to some implementations; and Figures 10B - 10C illustrate graphical user interfaces (that relate to Figure 10A) for interactive data analysis using natural language processing in a data visualization application according to some implementations.

Figure 11A is a diagram illustrating the application of pragmatics principles for handling responses and feedback according to some implementations; Figure 11B is a data visualization that further illustrates the methodology shown in Figure 11A; and Figure 11C shows how a dashboard is progressively constructed based on the input utterances, in accordance with some implementations.

Figure 12A illustrates a set of widgets generated for handling ambiguity in a user query according to some implementations; and Figure 12B illustrates examples of feedback for various situations according to some implementations.

Figures 13A-13J provide a flowchart of a process that uses natural language for visual analysis of a dataset applying pragmatics principles, according to some implementations.

Figures 14A-14R provide a flowchart of a process that uses natural language for visual analysis of a dataset applying pragmatics principles, including for handling various forms of pragmatics, according to some implementations.

Figures 15A-15H provide a flowchart of a process that uses natural language for visual analysis of a dataset applying pragmatics principles, including for handling responses and feedback, and for handling ambiguity in a user query, according to some implementations.

Reference will now be made to implementations, examples of which are illustrated in the accompanying drawings. In the following description, numerous specific details are set forth in order to provide a thorough understanding of the present invention. However, it will be apparent to one of ordinary skill in the art that the present invention may be practiced without requiring these specific details.

DESCRIPTION OF IMPLEMENTATIONS

Figure 1 illustrates a graphical user interface 100 for interactive data analysis. The user interface 100 includes a Data tab 114 and an Analytics tab 116 in accordance with some implementations. When the Data tab 114 is selected, the user interface 100 displays a schema information region 110, which is also referred to as a data pane. The schema information region 110 provides named data elements (e.g., field names) that may be selected and used to build a data visualization. In some implementations, the list of field names is separated into a group of dimensions (e.g., categorical data) and a group of measures (e.g., numeric quantities). Some implementations also include a list of parameters. When the Analytics tab 116 is selected, the user interface displays a list of analytic functions instead of data elements (not shown).

The graphical user interface 100 also includes a data visualization region 112. The data visualization region 112 includes a plurality of shelf regions, such as a columns shelf region 120 and a rows shelf region 122. These are also referred to as the column shelf 120 and the row shelf 122. As illustrated here, the data visualization region 112 also has a large space for displaying a visual graphic (also referred to herein as a data visualization). Because no data elements have been selected yet, the space initially has no visual graphic. In some implementations, the data visualization region 112 has multiple layers that are referred to as sheets.

In some implementations, the graphical user interface 100 also includes a natural language processing region 124. The natural language processing region 124 includes an input bar (also referred to herein as a command bar) for receiving natural language commands. A user may interact with the input bar to provide commands. For example, the user may type a command in the input bar to provide the command. In addition, the user may indirectly interact with the input bar by speaking into a microphone (e.g., an audio input device 220) to provide commands. In some implementations, data elements are initially associated with the column shelf 120 and the row shelf 122 (e.g., using drag and drop operations from the schema information region 110 to the column shelf 120 and/or the row shelf 122). After the initial association, the user may use natural language commands (e.g., in the natural language processing region 124) to further explore the displayed data visualization. In some instances, a user creates the initial association using the natural language processing region 124, which results in one or more data elements being placed in the column shelf 120 and the row shelf 122. For example, the user may provide a command to create a relationship between data element X and data element Y. In response to receiving the command, the column shelf 120 and the row shelf 122 may be populated with the data elements (e.g., the column shelf 120 may be populated with data element X and the row shelf 122 may be populated with data element Y, or vice versa).

Figure 2 is a block diagram illustrating a computing device 200, which can display the graphical user interface 100 in accordance with some implementations. Various examples of the computing device 200 include a desktop computer, a laptop computer, a tablet computer, and other computing devices that have a display and a processor capable of running a data visualization application 230. The computing device 200 typically includes one or more processing units (processors or cores) 202, one or more network or other communications interfaces 204, memory 206, and one or more communication buses 208 for interconnecting these components. The communication buses 208 optionally include circuitry (sometimes called a chipset) that interconnects and controls communications between system components. The computing device 200 includes a user interface 210. The user interface 210 typically includes a display device 212. In some implementations, the computing device 200 includes input devices such as a keyboard, mouse, and/or other input buttons 216. Alternatively, or in addition, in some implementations, the display device 212 includes a touch-sensitive surface 214, in which case the display device 212 is a touch-sensitive display. In some implementations, the touch-sensitive surface 214 is configured to detect various swipe gestures (e.g., continuous gestures in vertical and/or horizontal directions) and/or other gestures (e.g., single/double tap). In computing devices that have a touch-sensitive display 214, a physical keyboard is optional (e.g., a soft keyboard may be displayed when keyboard entry is needed). The user interface 210 also includes an audio output device 218, such as speakers or an audio output connection connected to speakers, earphones, or headphones. Furthermore, some computing devices 200 use a microphone and voice recognition to supplement or replace the keyboard. Optionally, the computing device 200 includes an audio input device 220 (e.g., a microphone) to capture audio (e.g., speech from a user).

The memory 206 includes high-speed random-access memory, such as DRAM, SRAM, DDR RAM, or other random-access solid-state memory devices; and may include non-volatile memory, such as one or more magnetic disk storage devices, optical disk storage devices, flash memory devices, or other non-volatile solid-state storage devices. In some implementations, the memory 206 includes one or more storage devices remotely located from the processor(s) 202. The memory 206, or alternately the non-volatile memory device(s) within the memory 206, includes a non-transitory computer-readable storage medium. In some implementations, the memory 206 or the computer-readable storage medium of the memory 206 stores the following programs, modules, and data structures, or a subset or superset thereof:

- an operating system 222, which includes procedures for handling various basic system services and for performing hardware dependent tasks;
- a communications module 224, which is used for connecting the computing device 200 to other computers and devices via the one or more communication network interfaces 204 (wired or wireless), such as the Internet, other wide area networks, local area networks, metropolitan area networks, and so on;
- a web browser 226 (or other application capable of displaying web pages), which enables a user to communicate over a network with remote computers or devices;
- an audio input module 228 (e.g., a microphone module) for processing audio captured by the audio input device 220. The captured audio may be sent to a remote server and/or processed by an application executing on the computing device 200 (e.g., the data visualization application 230);
- a data visualization application 230 for generating data visualizations and related features. The application 230 includes a graphical user interface 232 (e.g., the graphical user interface 100 illustrated in Figure 1) for a user to construct visual graphics. For example, a user selects one or more data sources 240 (which may be stored on the computing device 200 or stored remotely), selects data fields from the data source(s), and uses the selected fields to define a visual graphic; and
- zero or more databases or data sources 240 (e.g., a first data source 240-1 and a second data source 240-2), which are used by the data visualization application 230. In some implementations, the data sources are stored as spreadsheet files, CSV files, text files, JSON files, XML files, or flat files, or stored in a relational database.

In some implementations, the data visualization application 230 includes a data visualization generation module 234, which takes user input (e.g., a visual specification 236), and generates a corresponding visual graphic. The data visualization application 230 then displays the generated visual graphic in the user interface 232. In some implementations, the data visualization application 230 executes as a standalone application (e.g., a desktop application). In some implementations, the data visualization application 230 executes within the web browser 226 or another application using web pages provided by a web server (e.g., a server-based application).

In some implementations, the information the user provides (e.g., user input) is stored as a visual specification 236. In some implementations, the visual specification 236 includes previous natural language commands received from a user or properties specified by the user through natural language commands.

In some implementations, the data visualization application 230 includes a language processing module 238 for processing (e.g., interpreting) commands provided by a user of the computing device. In some implementations, the commands are natural language commands (e.g., captured by the audio input device 220). In some implementations, the language processing module 238 includes sub-modules such as an autocomplete module, a pragmatics module, and an ambiguity module, each of which is discussed in further detail below.

In some implementations, the memory 206 stores metrics and/or scores determined by the language processing module 238. In addition, the memory 206 may store thresholds and other criteria, which are compared against the metrics and/or scores determined by the language processing module 238. For example, the language processing module 238 may determine a relatedness metric (discussed in detail below) for an analytic word/phrase of a received command. Then, the language processing module 238 may compare the relatedness metric against a threshold stored in the memory 206.

Each of the above identified executable modules, applications, or sets of procedures may be stored in one or more of the previously mentioned memory devices, and corresponds to a set of instructions for performing a function described above. The above identified modules or programs (i.e., sets of instructions) need not be implemented as separate software programs, procedures, or modules, and thus various subsets of these modules may be combined or otherwise re-arranged in various implementations. In some implementations, the memory 206 stores a subset of the modules and data structures identified above. Furthermore, the memory 206 may store additional modules or data structures not described above.

Although Figure 2 shows a computing device 200, Figure 2 is intended more as a functional description of the various features that may be present rather than as a structural schematic of the implementations described herein. In practice, and as recognized by those of ordinary skill in the art, items shown separately could be combined and some items could be separated.

Figures 3A is a process flow diagram illustrating a process or a framework for using natural language applying pragmatics principles for visual analysis of a dataset according to some implementations. The framework based on a *conversational interaction model* extends the centering approach employed in pragmatics theory to support inter-sentential transitional states of continuing, retaining, and shifting the context of the data attributes in play. The framework supports a "cycle of visual analysis," an interface that supports the fluid iterative exploration and refinement in visual analytics. Interaction with visual analysis is most effective when users can focus on answering the questions they have about their data, rather than focusing on how to operate the interface to the analysis tool. Pragmatics is particularly important for visual analysis flow, where questions and insights often emerge from previous questions and patterns of data that a person sees.

Sequences of utterances that exhibit coherence form a conversation. Coherence is a semantic property of conversation, based on the interpretation of each individual utterance relative to the interpretation of other utterances. As previously mentioned, in order to correctly interpret a set of utterances, the process framework utilizes and extends a model commonly used for discourse structure called *conversational centering*, in accordance with some implementations. In this model, utterances are divided into constituent discourse segments, embedding relationships that may hold between two segments. A center refers to those entities serving to link that utterance to other utterances in the discourse. Consider a discourse segment *DS* with utterances $U_1$, ..., $U_m$. Each utterance $U_n (1 \leq n < m)$ in *DS* is assigned a set of forward-looking centers, $C_f(U_n, DS)$ referring to the current focus of the conversation; each utterance other than the segment's initial utterance, is assigned a set of backward-looking centers, $C_b (U_n, DS)$. The set of backward-looking centers of a new utterance $U_{n+1}$ is $C_b (U_{n+1}, DS)$, which is equal to the forward-looking centers of $U_n$ (i.e., $C_f(U_n, DS)$). In the context of visual analytic conversations, forward and backward-looking centers include data attributes and values, visual properties, and analytical actions (e.g., filter, highlight).

Each discourse segment exhibits both global coherence *i.e.*, the global context of the entire conversation, usually referring to a topic or subject of the conversation, and local coherence *i.e.*, coherence amongst the utterances within that conversation. Local coherence refers to inferring a sequence of utterances within a local context through transitional states of *continuing*, *retaining*, and *replacing* between $C_f(U_n, DS)$ and $C_b (U_n, DS)$. The framework extends this conversational centering theory for visual analytical conversation by introducing a set of rules for each of these local coherence constructs, in accordance with some implementations.

Given an utterance $U_n$, a system implementing this framework responds by executing a series of analytical functions derived from the forward-looking centers $C_f(U_n, DS)$. An analytical function F(*X*, *op*, *v*) consists of a variable *X* (which can be an attribute or a visualization property), an operator *op*, and a value *v* (typically a constant), according to some implementations. For example, when the user says "measles in the uk," the system creates two functions namely F_CAT(diseases, ==, measles) and F_CAT(country, ==, uk). When the user provides a new utterance $U_{n+1}$, the system first creates a set of temporary centers $C_{temp}(U_{n+1}, DS)$ from $U_{n+1}$ without considering any previous context. The system then applies a set of rules to create a set of forward-looking centers, $C_f(U_{n+1}, DS)$ based on some set operations between $C_b(U_{n+1}, DS)$ and $C_{temp}(U_{n+1}, DS)$. The forward-looking centers are then used to respond to the user utterance according to some implementations.

Figure 3A illustrates this process for two utterances $U_n$ (302) and $U_{n+1}$ (312) according to some implementations. The system creates (304) a set of temporary centers $C_{temp}(U_n)$ (306) from $U_n$ without considering any previous context. At the time of receiving utterance $U_n$, the system has either pre-computed a set of backward-looking conversation centers $C_b(U_n)$ (301) based on a previous utterance $U_{n-1}$, or, if $U_n$ is the first utterance, initialized $C_b(U_n)$ to a null set. The system then applies (308) one or more transitional rules (described below in reference to Figure 3B) to derive a set of forward-looking centers $C_f(U_n)$ (310) from the backward-looking centers $C_b(U_n)$ (301) and the temporary conversation centers $C_{temp}(U_n)$ (306). The forward-looking conversation centers $C_f(U_n)$ (310) are also the backward-looking conversation centers $C_b(U_{n+1})$ for the next utterance $U_{n+1}$ (312). The process described thus far is repeated for the next utterance $U_{n+1}$ (312). The system computes (314) a set of temporary centers $C_{temp}(U_n)$ (316) from $U_n$ without considering any previous context. The system then applies (318) the one or more transitional rules to derive a set of forward-looking centers $C_f(U_{n+1})$ (319) from the backward-looking centers $C_b(U_{n+1})$ (310) and the temporary conversation centers $C_{temp}(U_{n+1})$ (316). The system uses the forward-looking conversation centers $C_f(U_{n+1})$ (319) for updating one or more data visualization(s) according to some implementations. The system also uses the set of forward-looking centers $C_f(U_{n+1})$ (319) as the backward-looking conversation centers $C_b(U_{n+2})$ for the next utterance $U_{n+2}$, and so on. When the user either moves to a different dataset or resets the visualization, the system updates the global coherence of the analytical conversation, and clears all previous states (including the forward-looking conversation centers, the backward-looking conversation centers, and the temporary conversation centers), in accordance with some implementations.

Figure 3B is a state machine diagram that illustrates conversation center states and the transition between the states, in accordance with some implementations. State 322 encapsulates backward-looking conversation centers $C_b$ and temporary conversation centers $C_{temp}$, and each of the states 324, 326 and 328 represent different states of forward-looking conversation centers $C_f$. The conversation centers correspond to an utterance $U_{n+1}$ (not shown). The following is a description of each of the transitional rules, i.e., when each transition occurs and how the end states are computed.

The transition Continue 323 continues the context from the backward-looking centers $C_b$ to the forward-looking centers $C_f$, in accordance with some implementations. In other words, each of the conversation center in the backward-looking conversation centers $C_b$ is included in the forward-looking conversation centers $C_f$(324). Using a set notation, for a given utterance $U_{n+1}$, in a discourse segment *DS*, as a result of this transition,

$C_b(U_{n+1}, DS) \in C_f(U_{n+1}, DS)$, along with other entities

This transition occurs when a variable *X* is in $C_{temp}(U_{n+1})$ but not in $C_b(U_{n+1}, DS)$, in accordance with some implementations. In this case, the system performs the following union operation:

$$C_f(U_{n+1}, DS) = C_b(U_{n+1}, DS) \cup C_{temp}(U_{n+1}, DS)$$

The transition Retain 325 retains the context from the backward-looking centers $C_b$ (322) in the forward-looking centers $C_f$(326) without adding additional entities to the forward-looking centers, in accordance with some implementations; i.e.,

$$C_f(U_{n+1}, DS) = C_b(U_{n+1}, DS)$$

The transition Retain 325 triggers when the variable *X* is in $C_b(U_{n+1}, DS)$ but not in $C_{temp}(U_{n+1}, DS)$, in accordance with some implementations.

In some implementations, with the Shift transition 327, the context shifts from the backward-looking conversation centers 322 to the forward-looking conversation centers 328; i.e.,

$$C_f(U_{n+1}, DS) \neq C_b(U_{n+1}, DS)$$

In some implementations, the Shift transition 327 occurs when the variable *X* is in both $C_b(U_{n+1}, DS)$ and $C_{temp}(U_{n+1}, DS)$, but the corresponding values are different. In this case, the system replaces all the backward-centers $C_b(U_{n+1}, DS)$ containing *X* with $C_{temp}(U_{n+1}, DS)$. As Figure 3B illustrates, this replacement can be represented using the equation:

$$C_f(U_{n+1}, DS) = C_b\ (U_{n+1}, DS) - X_{Cb} + X_{Ctemp}$$

In some implementations, the Shift transition 327 also occurs when a filter constraint is removed; for e.g., removing a widget for measles shifts the disease variable from measles to all diseases.

Figure 4A is a diagram illustrating the use of different transition rules in handling analytical conversations according to some implementations. Suppose a system implements the framework described above in reference to Figures 3A and 3B. When the system receives an utterance 400 (e.g., "measles in the uk"), the system computes (402) forward-looking conversation centers (404) corresponding to the utterance, and initializes backward-looking centers, in accordance with some implementations. The conversation centers for the example utterance are 'measles' and 'uk.' Based on the computed conversation centers, the system applies (406) filters to update the visualization, e.g., applies categorical and spatial filters showing measles in the UK in the visualization 408. Figure 4D shows an enlarged version of the visualization 408. As shown in Figure 4D, the utterance "measles in the UK" results in the system showing a visualization of "Disease Outbreaks Around the World" with the focus on (DISEASES == Measles (442) and COUNTRY == United Kingdom (444)). Referring back to Figure 4A, supposing the user responds to the visualization 408 with a new utterance 410 (e.g., "show me the orange spike"), the system computes (412) the forward-looking conversation centers by applying the Continue rule (described above in reference to 323, Figure 3B). This is because the temporary conversation center (not shown) for the example utterance includes "orange spike" that corresponds to visualization characteristics (a type of variable), viz. variable shape (with the value 'spike') and variable color (with the value 'orange'), and these variables are absent in the backward-looking conversation centers (404). Moreover, since utterance 410 does not refer to the other variables (DISEASES or COUNTRY) in the backward-looking conversation centers (404), the system does not apply the Retain rule or the Shift rule. The forward-looking conversation centers (414) for utterance 410 are thus computed to be {measles, uk, orange spike}. Based on these forward-looking centers, the system updates the corresponding charts in the data visualization, e.g., by highlighting the orange spike in the line for measles in the chart in the visualization 418. Figure 4E shows an enlarged version of the visualization 418. As the example shows, the system highlights and annotates (446) the spike with the words "4.4 cases of Measles in 2013" in response to the utterance "show me the orange spike," in accordance with some implementations.

Figure 4B is another diagram further illustrating the application of different transitional rules for example utterances. This example follows the user response to visualization 438 in Figure 4A. Referring to Figure 4B, when the system receives an utterance 420 (e.g., "mumps over there"), the system computes (422) forward-looking conversation centers corresponding to the utterance, in accordance with some implementations. The backward-looking conversation centers (424) (e.g., {measles, uk, orange spike}) correspond to the forward-looking conversation centers (414) computed in the previous step (in response to utterance 410) shown in Figure 4A. The temporary conversation centers (not shown) for the utterance 420 (e.g., "mumps over there") does not include a conversation center (e.g., "orange spike") derived for the prior utterance. This triggers the system to apply the Retain rule (described above in reference to 325, Figure 3B). For example, the temporary conversation centers include the DISEASES variable but the value of that variable is changed from measles to mumps. This causes the system to apply the Shift rule (described above in reference to 327, Figure 3B). As a result, the system computes the forward-looking conversation centers (424) (for e.g., {mumps, uk}). Based on these forward-looking conversation centers, the system responds (426) by applying necessary filters (e.g., retaining spatial filter for UK, updating categorical filter to mumps), and updating visualization (e.g., removing highlighted spike in the line for measles), as shown in the visualization 428. Figure 4F shows an enlarged version of the visualization 428. As shown in Figure 4F, the utterance "mumps over there" results in the system showing a visualization of "Disease Outbreaks Around the World" with the focus on (DISEASES == Mumps (448) and COUNTRY == United Kingdom (450)).

Referring back to Figure 4B, to continue the example, supposing the user queries with another utterance (430) (e.g., "measles epidemic in Malawi congo angola"), the system computes (432) the forward-looking centers corresponding to this utterance by applying the Shift rule described above. For the example shown, the reason for applying the Shift rule is that the values of the variable DISEASES are now different, viz. measles and epidemic; similarly, the geographic region has changed from UK to Malawi, Congo ad Angola. Based on applying the Shift rule, the system computes the forward-looking conversation centers (434) (for this example, the centers are {measles, epidemic, malawi, congo, angola}). Based on the forward-looking conversation centers (434), the system responds (436) to the utterance further by applying appropriate filters (e.g., categorical filter for measles epidemics, and new spatial filter on Malawi, Congo, and Angola, replacing UK), thereby generating the visualization 438 (e.g., showing Measles epidemic in Malawi, Congo and Angola). Figure 4G shows an enlarged version of the visualization 438. As shown in Figure 4G, the utterance "measles epidemic in malawi congo angola" results in the system showing a visualization of "Disease Outbreaks Around the World" with the focus on (DISEASES == Measles (452), IMPACT == Epidemic (454), COUNTRY == Malawi (456), COUNTRY == Congo (458), and COUNTRY == Angola (460)).

Figure 4C illustrates the updates to the data visualizations in response to user utterances described above in reference to Figures 4A and 4B, in accordance with some implementations. The visualizations 408, 418, 428, and 438 were described above in reference to the enlarged Figures 4D, 4E, 4F, and 4G, respectively.

Figure 5 is a diagram illustrating a general framework for the application of principles of pragmatics for visual analytics according to some implementations. The framework utilizes and extends a model commonly used for discourse structure called *conversational centering*, in accordance with some implementations. In this model, utterances are divided into constituent discourse segments, embedding relationships that may hold between two segments. A center refers to those entities serving to link that utterance to other utterances in the discourse. Consider a discourse segment *DS* with utterances $U_1$, ..., $U_m$. Each utterance $U_n$ ($1 \leq n < m$) in *DS* is assigned a set of forward-looking centers, $C_f(U_n, DS)$ referring to the current focus of the conversation; each utterance other than the segment's initial utterance, is assigned a set of backward-looking centers, $C_b$ ($U_n$, *DS*). The set of backward-looking centers of a new utterance $U_{n+1}$ is $C_b$ ($U_{n+1}$, *DS*), which is equal to the forward-looking centers of $U_n$ (i.e., $C_f(U_n, DS)$). In the context of visual analytic conversations, forward and backward-looking centers include data attributes and values, visual properties, and analytical actions (e.g., filter, highlight).

Given an utterance $U_n$, a system implementing this framework responds by executing a series of analytical functions derived from the forward-looking centers $C_f(U_n, DS)$. An analytical function F(*X*, *op*, *v*) consists of a variable *X* (which can be an attribute or a visualization property), an operator *op,* and a value v (typically a constant). For example, when the user says "measles in the uk," the system creates two functions namely F_CAT(diseases, ==, measles) and F_CAT(country, ==, uk). When the user provides a new utterance $U_{n+1}$, the system first creates a set of temporary centers $C_{temp}(U_{n+1}, DS)$ from $U_{n+1}$ without considering any previous context. The system then applies a set of rules to create a set of forward-looking centers, $C_f(U_{n+1}, DS)$ based on some set operations between $C_b$ ($U_{n+1}$,*DS*) and $C_{temp}$ ($U_{n+1}$, *DS*). The forward-looking centers are then used to respond to the user utterance according to some implementations.

Figure 5 illustrates this process for two utterances $U_n$ (500) and $U_{n+1}$ (520) according to some implementations. The system computes (526) a set of temporary centers $C_{temp}(U_{n+1})$ (528) from $U_{n+1}$ without considering any previous context. At the time of receiving utterance $U_{n+1}$, the system has either pre-computed a set of backward-looking conversation centers $C_b$ ($U_{n+1}$) (504) based on the previous utterance $U_n$, or, if $U_n$ was the first utterance, initialized $C_b$ ($U_{n+1}$) (504) to a null set.

Conversation centering posits that utterances display connectedness between them. The manner in which these utterances link up with each other to form a conversation is *cohesion.* Cohesion comes about as a result of the combination of both lexical and grammatical structures in the constituent phrases. Identifying phrase structure is thus a logical starting point to resolve that utterance into one or more analytical functions applied to the visualization. Phrase structure includes both lexical and grammatical structure. In Figure 5, a system implementing this framework computes phrase structure for utterance $U_{n+1}$ (520) in step 522. Typically, a parser is used to compute the phrase structure. A parser accepts an input sentence (sometimes called a query or a natural language command) and breaks the input sentence into a sequence of tokens (linguistic elements) by applying a set of grammar rules specific to a particular natural language, such as English. In some implementations, the grammar rules can be modified to suit the environment. In some implementations, a probabilistic grammar is applied to provide a structural description of the input queries. Probabilistic grammars are useful in resolving ambiguities in sentence parsing. The probability distributions (for grammar production rules) can be estimated from a corpus of hand-parsed sentences, for instance. Some implementations deduce additional syntactic structure by employing a Part-Of-Speech (POS) Tagger that assigns parts of speech, such as noun, verb, adjective, to each word (sometimes called a token). Some implementations resolve the parsed output to corresponding categorical and ordered data attributes. As the dashed lines that connects the blocks 500 and 510 show, in some implementations, the system also computes (510) phrase structure for the utterance $U_n$ (500).

With the phrase structure(s), the system proceeds to determine (530) the type of pragmatic forms (examples of which are described below with reference to Figures 6A through 10C) and any other phrase structure related info (e.g., linguistic elements present in one utterance but absent in another). Based on the pragmatic form and phrase structure information (532), the system then derives (534) forward-looking conversation centers $C_f$ (536) of utterance $U_{n+1}$ (520) using the temporary conversation centers (528) and the backward-looking conversation centers $C_b$ (504), in accordance with some implementations. As shown in Figure 5, even before receiving utterance $U_{n+1}$ (520), the system derives and/or displays one or more initial visualizations (508) based on the backward-looking conversation centers $C_b$ (504) by applying (506) a first set of operations (e.g., applying filters) to existing visualizations. In some implementations, based on the forward-looking conversation centers $C_f$(536), the system applies (538) a second set of operations (e.g., applying filters) to update existing visualizations or generate new visualizations (540).

Figure 6A is a diagram illustrating the application of pragmatics principles for incomplete utterances (sometimes called *ellipsis*) according to some implementations. Ellipses are syntactically incomplete sentence fragments that exclude one or more linguistic elements. These utterances can be understood better with previously established context. Figure 6A illustrates how an incomplete utterance "townhomes" is understood in the context of the previous utterance "houses in less than 1M in Ballard." When the system receives an utterance $U_n$ (600), which in this example is the utterance "houses in less than 1M in Ballard," the system computes forward-looking centers and initializes backward-looking centers (for utterance $U_{n+1}$) in step 602, using the methodology described above in reference to Figure 5 (step 502), in accordance with some implementations. For the example utterance, the system computes the set of conversation centers to be {houses, ballard, and 1M}. In some implementations, the system applies (606) filters to the dataset based on the set of conversation centers (604), and displays a data visualization (608). In this example, the system applies numerical and spatial filters showing houses under $1M in Ballard. Figure 6D shows an enlarged version of the visualization 608. As shown in Figure 6C, the utterance "houses less than 1M in Ballard" results in the system showing a visualization of "Past Home Sales - Seattle" with the focus on (LAST_SALE_PRICE less than 1.0M (642) in Ballard (644)). Referring back to Figure 6A, in some implementations, the system also computes phrase structure (610) for the utterance $U_n$ in step 610 using one or more techniques described above in reference to step 510 of Figure 5.

In some implementations, when the system receives an utterance $U_{n+1}$ (620), which in this example is the utterance "townhomes," the system computes (626) temporary conversation centers for $U_{n+1}$ (620). For this example, the system computes the conversation centers (628) to be the set {townhomes}. Additionally, the system computes (622) phrase structure for the utterance $U_{n+1}$ (620) using techniques described above in reference to step 522 (Figure 5), in accordance with some implementations.

As mentioned above, ellipses exclude one or more linguistic elements. With the aid of the phrase structures (612 and 624), the system determines a subset of conversation centers of utterance $U_n$ (600) that corresponds to missing linguistic elements in utterance $U_{n+1}$ (620), in accordance with some implementations. In this example, the system computes the subset to be the set {ballard, 1M}, because the linguistic elements, viz., a noun phrase that refers to a place following a prepositional phrase (corresponding to "ballard") and a noun phrase that refers to a price value following another prepositional phrase (corresponding to "1M" or, more precisely, "under 1M"), are missing in utterance $U_{n+1}$ (620) but were present in utterance $U_n$ (600). On the other hand, the phrase "houses" in the utterance $U_n$ (600) and the phrase "townhomes" in the utterance $U_{n+1}$ (620) correspond to similar linguistic elements (for e.g., both phrases are noun phrases and refer to types of houses).

In step 634, the system combines the temporary set of conversation centers, which in this example is the set {townhomes}, with the subset of conversation centers (632) to arrive at a set of forward-looking conversation centers (638) for utterance $U_{n+1}$, in accordance with some implementations. Based on the computed set of forward-looking conversation centers (636), the system determines the type of filters to apply to the dataset and applies the appropriate filters in step 638 to display an appropriate data visualization (640), in accordance with some implementations. In this example, because the conversation centers "ballard" and " 1M" were retained from the backward-looking conversation centers (604), the system retains the numerical filter (corresponding to 1M) and spatial filter (corresponding to Ballard). Also, since the value of the conversation center (corresponding to home_type variable) changed from townhomes to houses, the system applies categorical filter on home_type to show the townhomes (instead of houses). Figure 6D shows an enlarged version of the visualization 640. As shown in Figure 6D, the utterance "townhomes" results in the system showing a visualization of "Past Home Sales - Seattle" retaining the LAST_SALE_PRICE widget or filter (642) and the spatial filter 644 from the previous visualization 608, and replacing the HOME_TYPE with townhouses (646).

Figure 6B illustrates the updates to the data visualizations in response to user utterances described above in reference to Figure 6A, in accordance with some implementations. The visualizations 608 and 640 were described above in reference to the enlarged Figures 6C and 6D respectively.

Figure 7A is a diagram illustrating the application of pragmatics principles for utterances with referring expressions (sometimes herein called *anaphoric* references) according to some implementations. Referring expressions help to unify the text and create economy, preventing unnecessary repetition. Referencing is a conversation form, which instead of being interpreted semantically in its own right, makes reference to something else for its interpretation. When the interpretation is within the text, this is known as *anaphoric* referencing. In visual analytics interaction, the reference pertains to data attributes and analytical functions. Figure 7A illustrates how an utterance "previous year" is understood in the context of the previous utterance "prices in 2015." When the system receives an utterance $U_n$ (700), which in this example is the utterance "prices in 2015," the system computes forward-looking centers and initializes backward-looking centers (for utterance $U_{n+1}$) in step 702, using the methodology described above in reference to Figure 5 (step 502), in accordance with some implementations. For the example utterance, the system computes the set of conversation centers to be {prices, 2015}. In some implementations, the system applies (706) filters to the dataset based on the set of conversation centers (704), and displays a data visualization (708). In this example, the system applies temporal filters showing home prices in the year 2015. Figure 7C shows an enlarged version of the visualization 708. As shown in Figure 7C, the utterance "prices in 2015" results in the system showing a visualization of "Past Home Sales - Seattle" in 2015. Although not shown, a previous visualization, e.g., in response to a previous utterance, caused the system to check prices in Seattle. Referring back to Figure 7A, when the system receives an utterance $U_{n+1}$ (720), which in this example is the utterance "previous year," the system computes (722) phrase structure for the utterance $U_{n+1}$ (720) using techniques described above in reference to step 522 (Figure 5), in accordance with some implementations.

As mentioned above, referring expressions with anaphoric references make references to something else within the text. Based on the phrase structure (724), the system identifies (726) anaphora in the utterance $U_{n+1}$ (720), in accordance with some implementations. In this example, the system identifies the anaphora (728) "previous." Using the identified anaphora, the system next identifies (734) phrasal chunk (732) containing the reference to identify the entities the reference is referring to, in accordance with some implementations. For the example shown, the system identifies the phrasal chunk "year" that corresponds to the anaphora "previous." Based on the identified anaphora and the phrasal chunk, in step 730, the system searches through the backward-looking centers to find such entities and replaces the anaphoric reference with these entities, in accordance with some implementations. Additionally, in some implementations, as is the case in this example, the system also detects and applies appropriate functions to the value of the entity. For the example shown, the system also detects that the user is referring to the "previous" year, and therefore the value of 2015 is decremented by 1 before arriving at the right value for the year variable. The system computes the date for 'previous' using a temporal function (e.g., DATECALC), in accordance with some implementations. The system arrives at a set of forward-looking conversation centers (736), which for this example is the set {prices, 2014}. Based on this set, the system takes necessary steps to update the visualization in step 738, in accordance with some implementations. For this example, the system retains a reference to year and updates the temporal filter to 2014, to show the visualization in 740. Figure 7D shows an enlarged version of the visualization 740. As shown in Figure 7D, the utterance "previous year" results in the system showing a visualization of "Past Home Sales-Seattle" in 2014, the year before 2015 (from the previous visualization).

Figures 7B - 7D illustrate graphical user interfaces (that relate to Figure 7A) for interactive data analysis using natural language processing in a data visualization application according to some implementations. Figure 7B illustrates the updates to the data visualizations in response to user utterances described above in reference to Figure 7A, in accordance with some implementations. The visualizations 708 and 740 were described above in reference to the enlarged Figures 7C and 7D respectively.

Although not shown in Figure 7A, in some implementations, a system repeats the steps to recognize multiple anaphoric references in a single expression. Additionally, in some implementations, the system identifies many types of anaphoric references in the given utterance, such as 'that,' 'those,' 'them,' 'ones,' 'previous,' 'next.' As another illustrative example, consider the utterance "Show fremont, queen anne, and ballard" followed by the utterance "condos in *those* districts." In this example, *those* is referring to some values (i.e., fremont, queen anne, and ballard) of the attribute neighborhood as indicated by the word districts.

In some implementations, the references refer to values of a data attribute. In some implementations, the references refer to actions that need to be executed by the system. For instance, consider the utterance "filter out ballard" followed by "do *that* to fremont." Here, the word *that* is not immediately followed by any noun, but immediately preceded by a verb word 'do.' In such cases, the system determines one or more actions mentioned in the previous utterance, which for this example is the action 'filter out'.

In some implementations, the system supports references that lie *outside* the text, and in the context of the visualization. In some such implementations, the forward-looking center $C_f$ references context within the visualization as opposed to text in the backward-looking center $C_b$. In some implementations, this form of indirect referencing includes a *deictic* reference that refers to some object in the environment, usually by pointing. In some such implementations, the system supports deictic references by enabling multimodal interaction (mouse + speech/text). Figure 7E shows an example visualization in response to a deictic reference. In some implementations, this form of indirect referencing includes a *visualization property* reference uses properties in the visualization such as mark properties, text in labels, axes and titles. Figure 7F shows an example visualization in response to a reference to a visualization property.

Figure 8A is a diagram illustrating the application of pragmatics principles for utterances with conjunctions according to some implementations. Conjunctions in utterances communicate a range of relations between phrase fragments called conjuncts. In a conversation, users tend to iteratively build a compound query by adding multiple conjuncts, often avoiding explicit use of conjunctions and connectors, such as 'and,' 'or,' 'also' between the phrases. Figure 8A illustrates how an utterance "houses in Ballard under 600k last summer" is understood in the context of the previous utterance "houses in Ballard." When the system receives an utterance $U_n$ (800), which in this example is the utterance "houses in Ballard," the system computes forward-looking centers and initializes backward-looking centers (for utterance $U_{n+1}$) in step 802, using the methodology described above in reference to Figure 5 (step 502), in accordance with some implementations. For the example utterance, the system computes the set of conversation centers to be {houses, ballard}. In some implementations, the system applies (806) filters to the dataset based on the set of conversation centers (804), and displays a data visualization (808). In this example, the system applies categorical and spatial filters showing houses in Ballard.

When the system receives an utterance $U_{n+1}$ (810), which in this example is the utterance "houses in Ballard under 600k last summer," the system computes (812) phrase structure for the utterance $U_{n+1}$ (810) using techniques described above in reference to step 522 (Figure 5), in accordance with some implementations. As mentioned above, a compound query consists of multiple (sometimes implicit) conjuncts between constituent phrases. Based on the phrase structure (814), the system identifies (816) conjuncts in the utterance $U_{n+1}$ (810), in accordance with some implementations. In this example, the system identifies multiple queries (818) viz., "houses," "in Ballard," "under 600k," and "last summer." Based on these queries (818) and the set of backward-looking conversation centers (804), the system computes (820) a set of forward-looking conversation centers (822), in accordance with some implementations. For example, the system selects matching context from utterance $U_n$ (800), and adds the new conversation centers derived from the conjuncts from utterance $U_{n+1}$ (810). The set of forward-looking conversation centers (822) for this example is the set {houses, ballard, <600k, last summer}. Based on this set, the system takes necessary steps to refine the current visualization in step 824, in accordance with some implementations. For this example, the system applies a numerical filter on house price and a temporal filter to show the past summer, to show the visualization in 826. Figure 8B shows an enlarged version of the visualization 826. As shown in Figure 8B, the utterance "houses in Ballard under 600k last summer" results in the system showing a visualization of "Past Home Sales - Seattle" in Ballard (828), with LAST_SALE_PRICE (830), under 600k (832), last summer. For this example, the system further resolves the period (for "last summer"), based on the previous visualization, as the time period 2015-6 to 2015-8-31 (834), in accordance with some implementations.

Figure 8C illustrates how a system iteratively connects the analytical functions of adjacent nodes in a parse tree by linearization, in accordance with some implementations. Finding implicit data coherence among conjuncts is sometimes a challenging task. In the example shown in Figure 8B, all the conjuncts refer to the same entity "houses in Ballard." However, there are cases where conjuncts map to different entities. An example utterance is "houses in Ballard under 600k condos in South Lake Union." The system determines whether individual conjuncts resolve to the same or different entities, in accordance with some implementations. In some such implementations, the system employs a rule-based technique that takes a potentially long utterance with possibly implicit conjunctions, translating the utterance into a set of analytical functions chained together by logical operators. The system then executes these analytical functions in response to the user utterance, in accordance with some implementations.

In some implementations, the system resolves multiple conjuncts within compound utterances to invoke one or more corresponding analytical functions through a process of linearization. In some such implementations, an analytical function F(*X*, op, v) consists of a variable *X*(*e.g.*, an attribute), an operator op, and a value v. Each attribute is either categorical or ordered. The ordered data type is further categorized into ordinal and quantitative. The linearization process considers the types of attributes and operators to combine analytical functions using logical operators (*i.e.*, Λ, V) as described below.

Applying the V operator: When two or more adjacent conjuncts share an attribute and if that attribute's data type is categorical, then the system connects these conjuncts by V, in accordance with some implementations. Similarly, if that shared attribute is ordered and the function's operator is ==, the system applies V, in accordance with some implementations. In such cases, V is logically more appropriate as a choice because applying Λ would not match to any item in the data table. For example, if the utterance is "show me condos and townhomes," then the system generates the following combination of analytical functions: (F_CAT(homeType, ==, condo) V F_CAT(homeType, ==, townhome)), in accordance with some implementations. In this example, both 'condo' and 'town-home' belong to the same categorical attribute, i.e., homeType. Because a particular house (item) cannot be both 'condo' and 'townhome' at the same time, applying the V operator is logically more appropriate than applying the Λ operator. Similarly, if the user utters "2 3 bedroom houses," the system generates (F_ORDINAL(bed, ==, 2) V F ORDINAL(bed, ==, 3)), in accordance with some implementations. The V operator is also appropriate if attribute type is ordered and involves the condition $X<_{v1}$ and $X>_{v2}$, where $_{v1}<_{v2}$. For instance, if the utterance is "before 2013 and after 2014," then the V operator will be used between the two conjuncts, in accordance with some implementations. Again, in this instance, applying the Λ operator would result in matching no item in the data table.

Applying the Λ operator: The Λ operator is appropriate if attribute type is ordered and involves the condition $X>_{v1}$ and $X<_{v2}$, where $_{v1}<_{v2}$. For example, "houses over 400k and under 700k" resolves to (F NUMERIC(price, >, 4000000) Λ F NUMERIC(price, <, 700000)). "Beds between 2 to 4" resolves to (F ORDINAL(beds, >=, 2) Λ F NUMERIC(beds, <=, 4)). Notice that applying V operator would result in matching to all items in the data table. In some implementations, the Λ operator is also applied when there is no common attribute between two conjuncts. For example, the utterance "price under 600k with 2 beds" resolves to (F ORDINAL(beds, ==, 2) Λ F NUMERIC(price, <=, 600000)).

In order to generate the analytical function representation of the whole utterance, the system traverses a corresponding parse tree for the utterance generated by a parser (e.g., parser described above in reference to Figure 5) in post-order and applies the above two rules iteratively on the phrases as illustrated in Figure 8C. For the example shown in Figure 8C, the system takes the utterance "condos under 600K townhomes under 1M" as input, and iteratively applies the above rules to generate the chain of analytical functions.

Figure 9A is a diagram illustrating the application of pragmatics principles for handling lexical cohesion according to some implementations. The previous three types of pragmatics - ellipsis, referencing, and conjunction, provide *grammatical cohesion* to the conversation. In addition to these grammatical constructs, users often find ways for expressing concepts through related word meanings, i.e., senses in conversation, a term called *lexical cohesion.* These word senses can be as simple as spelling, stemming and plurality variations (*e.g.*, 'profit' and 'profits'), synonyms (e.g., 'country' and 'nation'), to related or co-occurring terms (*e.g.*, 'violence' and 'crime'). Often word senses are related to each other within a semantic context.

Figure 9A illustrates how an utterance "the cheapest" is understood in the context of the previous utterance "most expensive houses in Queen Anne." When the system receives an utterance $U_n$ (900), which in this example is the utterance "most expensive houses in Queen Anne," the system computes forward-looking centers and initializes backward-looking centers (for utterance $U_{n+1}$) in step 902, using the methodology described above in reference to Figure 5 (step 502), in accordance with some implementations. For the example utterance, the system computes the set of conversation centers to be {most expensive, houses, Queen Anne}. In some implementations, the system maps (906) one or more conversation centers to a corresponding analytical function for generating a data visualization (908), in accordance with some implementations. In the example shown, the system maps "most expensive" to the analytical function TOP _N(sale_price) of houses. Some implementations also annotate price range for clarity. In this example, the system applies categorical and spatial filters showing houses in Ballard. Figure 9B shows an enlarged version of the visualization 908. As shown in Figure 9B, the utterance "most expensive houses in Queen Anne" results in the system showing a visualization of "Past Home Sales - Seattle" that comprises the top 10% of LAST_SALE_PRICE (928) in Queen Anne (930), in accordance with some implementations.

When the system receives an utterance $U_{n+1}$ (910), which in this example is the utterance "the cheapest," the system computes (912) phrase structure for the utterance $U_{n+1}$ (914) using techniques described above in reference to step 522 (Figure 5), in accordance with some implementations. As mentioned above, a user utterance sometimes has word senses that are better understood in the context of previous utterances. Based on the phrase structure (914), the system identifies (916) candidates for lexical cohesion in the utterance $U_{n+1}$ (910), in accordance with some implementations. In this example, the system identifies a candidate "cheapest" (918) for cohesion analysis. Based on the identified one or more cohesion candidates (918) and the set of backward-looking conversation centers (904), the system computes (920) a set of forward-looking conversation centers (922), in accordance with some implementations. For the example shown, the system computes semantically related data attribute (e.g., sale_price) corresponding to the lexical cohesion candidates (e.g., 'most expensive' or 'cheapest'), replacing relevant numerical attributes, while continuing the rest of the context from utterance $U_n$ (904), in accordance with some implementations.

In some implementations, the system identifies attribute word senses by employing the Word2vec™ model containing learned vector representations of large text corpora, computing word vectors using a recurrent neural network. In some implementations, the semantic relatedness $S_{rel}$ between a word $w_i$ in a given utterance and a data attribute $d_j$, is the maximum value of a score computed as follows:

$$S_{rel}(w_i, d_j) = max_{m,n} \lambda \cos(v_{w_i}, v_{d_j}) + (1-\lambda)\frac{1}{dist(S_{i,m}, S_{j,n})} \quad (1)$$

In formula (1), dist($S_{i,m}$, $S_{j,n}$) is the Wu-Palmer distance between the two senses $S_{i,m}$, $S_{j,n}$. $^v{}_{wi}$, $^v{}_{dj}$ are the vector representations of $w_i$ and that $d_j$, respectively. λ is a weighting factor applied to a pairwise cosine distance between the vectors.

The Word2vec™ model is used here only as an example. A number of other neural network models can be used to identify word senses, such as Stanford University's GloVe™. Some libraries, such as GenSim™ and Deeplearning4j™, provide a choice of different word embedding models in a single package.

In some implementations, the system not only computes semantic relatedness between terms and data attributes, but also computes the type of analytical function associated with each term. For example, the system performs the additional steps for queries "show me the *cheapest* houses near Ballard" or "where are the *mansions* in South Lake Union?" The system considers the corresponding dictionary definitions as additional features to these word vectors, and checks if the definitions contain quantitative adjectives such as 'less,' 'more,' 'low,' 'high' using a POS tagger, in accordance with some implementations. The system then maps appropriate analytical functions to these adjectives, in accordance with some implementations. Figure 9B illustrates an example where the phrase "most expensive" is mapped to Top-N(sale price). Figure 9C illustrates another example where the term "cheapest" is mapped to Bottom-N(sale price). Figure 9D, similarly, illustrates a visualization (940) wherein the term "deadliest" is mapped to the Top-N values of the attribute "fatalities" (942).

Referring back to Figure 9A, for the running example, the system computes the set of forward-looking conversation centers (922) to be {the cheapest, houses, Queen Anne}, in accordance with some implementations. Based on this set, the system takes necessary steps to refine the current visualization in step 924 to generate an update visualization (926), in accordance with some implementations. For this example, the system maps "cheapest" to Bottom-N(sale_price), refines the current visualization by applying a numerical filter on house price. Figure 9C shows an enlarged version of the visualization 926. As shown in Figure 9C, the utterance "the cheapest" results in the system showing a visualization of "Past Home Sales - Seattle" (926), with bottom 10% of LAST_SALE_PRICE (932), in Queen Anne (930), in accordance with some implementations.

Figure 10A is a diagram illustrating the application of pragmatics principles for repair utterances according to some implementations. In the course of a conversation, it is typical for users to correct or clarify a previous utterance. In some implementations, the system supports the use of follow-up *repair utterances* to modify or 'repair' a potentially ambiguous utterance or to change the default behavior of how the results are presented to the user. For instance, to update the default behavior of the system, such as highlighting for selection, a user can use utterances like "no, filter instead." As another example, to update data attributes, a user can use utterances like "get rid of condo" or "change from condo to townhomes" as shown in Figure 7.

Figure 10A illustrates how an utterance "remove condos" is understood in the context of the previous utterance "houses in green lake." When the system receives an utterance $U_n$ (1000), which in this example is the utterance "houses in green lake," the system computes forward-looking centers and initializes backward-looking centers (for utterance $U_{n+1}$) in step 1002, using the methodology described above in reference to Figure 5 (step 502), in accordance with some implementations. For the example utterance, the system computes the set of conversation centers to be {houses, green lake}. The system generates or updates (1006) a data visualization (1008) based on the computed set of conversation centers (1004), in accordance with some implementations. In some implementations, the system applies filters to the dataset based on the set of conversation centers (1004), and displays a data visualization (1008). In this example, the system applies categorical and spatial filters showing houses in Green Lake. Figure 10B shows an enlarged version of the visualization 1008. As shown in Figure 10B, the utterance "houses in green lake" results in the system showing a visualization of "Past Home Sales - Seattle" in Green Lake (1028),

When the system receives an utterance $U_{n+1}$ (1010), which in this example is the utterance "remove condos," the system computes (1012) phrase structure for the utterance $U_{n+1}$ (1010) using techniques described above in reference to step 522 (Figure 5), in accordance with some implementations. As mentioned above, a repair utterance corrects or clarifies a previous utterance. Based on the phrase structure (1014), the system identifies (1016) utterance $U_{n+1}$ (1010) to be a repair utterance and then identifies the relevant repair terms (1018) within the utterance, in accordance with some implementations. In this example, the system identifies a repair term "remove" within the utterance "remove condos." Based on the set of one or more repair utterances and repair terms (1018), the system computes (1020) a set of forward-looking conversation centers (1022), in accordance with some implementations. For example, the system identifies conversation centers and/or data attributes in the previous utterance that related to the identified one or more repair terms, in accordance with some implementations. In some implementations, as illustrated in Figure 10A, the system repairs or disambiguates the conversation centers based on the repair terms (1018). The set of forward-looking conversation centers (1022) for this example is the set {houses not including condos, green lake}. Based on this set, the system takes necessary steps (1024) to update results from previous visualization, in accordance with some implementations. For this example, the system filters out condos to show the visualization in 1026. Figure 10C shows an enlarged version of the visualization 1026. As shown in Figure 10C, the utterance "remove condos" results in the system showing a visualization of "Past Home Sales - Seattle" in Green Lake (1028), filtering out HOME_TYPE == Condo/Coop (1030).

Figure 11A is a diagram illustrating the application of pragmatics principles for handling responses and feedback according to some implementations. A general framework for the application of principles of pragmatics for visual analytics is first described herein to provide context. The framework utilizes and extends a model commonly used for discourse structure called *conversational centering*, in accordance with some implementations. In this model, utterances are divided into constituent discourse segments, embedding relationships that may hold between two segments. A center refers to those entities serving to link that utterance to other utterances in the discourse. Consider a discourse segment *DS* with utterances $U_1, \ldots, U_m$. Each utterance $U_n$ ($1 \leq n < m$) in *DS* is assigned a set of forward-looking centers, $C_f(U_n, DS)$ referring to the current focus of the conversation; each utterance other than the segment's initial utterance, is assigned a set of backward-looking centers, $C_b(U_n, DS)$. The set of backward-looking centers of a new utterance $U_{n+1}$ is $C_b(U_{n+1}, DS)$, which is equal to the forward-looking centers of $U_n$ (i.e., $C_f(U_n, DS)$). In the context of visual analytic conversations, forward and backward-looking centers include data attributes and values, visual properties, and analytical actions (e.g., filter, highlight).

Given an utterance $U_n$, a system implementing this framework responds by executing a series of analytical functions derived from the forward-looking centers $C_f(U_n, DS)$. An analytical function F(*X*, *op*, *v*) consists of a variable *X* (which can be an attribute or a visualization property), an operator *op*, and a value *v* (typically a constant). For example, when the user says "measles in the uk," the system creates two functions namely F_CAT(diseases, ==, measles) and F_CAT(country, ==, uk). When the user provides a new utterance $U_{n+1}$, the system first creates a set of temporary centers $C_{temp}(U_{n+1}, DS)$ from $U_{n+1}$ without considering any previous context. The system then applies a set of rules to create a set of forward-looking centers, $C_f(U_{n+1}, DS)$ based on some set operations between $C_b(U_{n+1}, DS)$ and $C_{temp}(U_{n+1}, DS)$. The forward-looking centers are then used to respond to the user utterance according to some implementations.

To support a conversation, the visualizations shown by the system provide cohesive and relevant responses to various utterances. Sometimes, the system responds by changing the visual encoding of existing visualizations, while in other cases the system creates a new chart to support the visual analytical conversation more effectively. In addition to appropriate visualization responses, the system helps the user understand how the system has interpreted an utterance by producing appropriate feedback, and allows the user to rectify the interpretation through some interface controls as necessary. In a traditional dashboard, users interact by selecting items or attributes in a visualization that are highlighted to provide immediate visual feedback. Simultaneously, other charts are updated by highlighting or filtering out items. In a natural language interface, however, instead of making explicit selection by mouse/keyboard, the user mentions different attributes and values, making it a non-trivial task of deciding how each view within a dashboard should respond to the utterance. Another complication arises when the system has to support multiple visualizations.

Figure 11A shows a methodology for generating responses according to some implementations. To decide how the views (*V*) in a dashboard should respond to the utterance, a system according to some implementations proceeds as follows. The system computes a set of forward-looking conversation centers (1100) $C_f(U_{n+1})$ corresponding to the utterance $U_{n+1}$ based on conversation centers of a previous utterance $U_{n+1}$ and a set of temporary conversation centers computed using just the current context/utterance. The system creates (1102) a list of all data attributes (1104). Then the system determines (1106), for example by invoking a visualization manager, if any of the existing visualizations encode a respective attribute in the list of data attributes (1104). Next, the system determines (1118), if a visualization (sometimes herein called a view) directly encodes (e.g., without using any aggregate functions, such as count or average) the respective attribute as its dimensions (e.g., as a feature of the visualization). If it turns out that the attribute is encoded by an existing visualization *V* (i.e., the condition checked in 1118 is true/yes), the system highlights (1122) marks related to criteria corresponding to the respective attribute for an updated dashboard (1124). If the system on the other hand determines that a selected visualization (shown as visualization *V*) does not directly encode the respective attribute, the system filters (1120) results that do not match criteria for an updated dashboard (1124), in accordance with some implementations. This is typically the case when a secondary chart applies further data transformations on the result set (e.g., using a line chart or bar chart). In some such implementations, the system further highlights one or more results that match criteria corresponding to the respective attribute for the updated dashboard (1124).

Figure 11B is an example visualization (1170) that further illustrates the methodology shown in Figure 11A, in accordance with some implementations. The system highlights the items that match the criteria "measles in the uk" in the map chart (1172). The system also highlights the series (1176) in the line chart (1174), and highlights the bar (1180) in the barchart (1178) representing 'measles.' However, the bar chart (1182) on impact cannot highlight any mark because it does not encode any attribute in the list of attributes (e.g., list $\{X_1, X_2, ...X_m\}$ (1104)). Therefore, the system filters out the results that do not match the criteria "measles in the uk" and updates the chart accordingly. It is noted that users can change the default behavior by explicitly expressing the choice about whether to filter vs. highlight (*e.g.*, 'exclude,' 'remove,' 'filter only').

During visual analysis flow, there may be situations where the existing visualization cannot meet the evolving information needs of the user. This scenario could arise, for example, when a particular data attribute cannot be encoded effectively in the existing visualization (*e.g.*, time values in a map), warranting the need for creating a new visualization as a response. Drawing inspiration from work that connects visualization with language specification, the system supports the creation of different types of visualizations (e.g., bar chart, line chart, map chart, and scatterplot), in accordance with some implementations.

Figure 11C shows how a dashboard is progressively constructed based on the input utterances. The system generates visualization 1140 in response to the utterance "average price by neighborhood." When the user provides a next utterance "average price over time," the system responds by generating a line chart (1152) in the visualization (1150) that shows the time progression of the average price. Now, if the user next provides an utterance "by home type," the system enhances the line chart (1152) with lines (1162) corresponding to the different home types in the visualization (1160).

Referring back to Figure 11A, the underlying algorithm for creating or changing an existing visualization works as follows. First, the system determines (1106) if the creation of a new visualization or change of an existing one is necessary. The system analyzes the attributes specified in the forward-looking centers $C_f(U_{n+1})$ (1100), and searches for any current visualization that encodes these data properties. If there is no match with the specification of existing visualizations, shown as the arrow 'No' next to the decision block 1106, the system generates a corresponding new specification consisting of attributes and aggregation types. In Figure 11A, this is illustrated by the step 1108 that decides the type of chart (e.g., a bar chart, a map chart, or scatterplot) using an algorithm, in accordance with some implementations. In some such implementations, the system employs an automatic presentation algorithm to decide the type of chart generated based on this specification. In some such implementations, the system uses a simplified version of the automatic presentation algorithm described in Show me: Automatic presentation for visual analysis, by J. Mackinlay, P. Hanrahan, and C. Stole, which is incorporated herein by reference. Once the type of chart (1110) is decided, the system generates (1112) the type of chart to obtain a generated chart (1114). The system then positions the new chart (1114), in accordance with some implementations. In some such implementations, the system uses a two-dimensional grid-based layout algorithm, automatically coordinating the presentation of the new chart (1114) with other views of the visualization. The updated dashboard (1124) responds to subsequent utterances through actions like highlighting or filtering.

It is further noted that, although not shown in Figure 11A, the system repeats at least the steps 1106, 1118, 1120, 1122, 1108, 1112, and 1116 for each data attribute in the list of data attributes (1104), in accordance with some implementations.

Figure 12A illustrates a set of widgets generated for handling ambiguity in a user query according to some implementations. A challenge for natural language understanding systems that support interactive dialog is determining the intent of the utterance. In some implementations, the system automatically resolves various forms of syntactic, lexical and semantic ambiguities. These resolutions are expressed in the form of widgets and feedback to help the user understand the system's intent and the provenance of how the utterance was interpreted. By manipulating these widgets and viewing the feedback of what results are shown in the visualization, the user can, for instance, instantiate a follow-up repair utterance to override or clarify the system decisions made.

In some implementations, the system identifies one or more widgets from the analytical functions derived from an utterance. In some such implementations, the system organizes and presents the widgets in an intuitive way so that the user can understand how the system interprets her utterance and subsequently modify the interpretation using these widgets. For this purpose, the system takes the original utterance and orders the widgets in the same sequence as the corresponding query terms. In some such implementations, the system achieves this by using a library, such as Sparklificator™, that facilitates the placement of small word-scale visualization within text in a compact way. In addition, some implementations provide a set of interfaces to users including the ability to manipulate and/or remove a widget, to modify the query, and to resolve ambiguous queries.

Figure 12A shows how the system presents the widgets for the utterance "condo near Ballard under 1.2M," according to some implementations. In this example, the first term 'condo' was resolved to the widget representing the criteria 'HOME_TYPE equals Condo/coop' (1202). Then, the second widget conveys the fuzzy distance represented by 'near Ballard' (1204). Since 'under 1.2M' does not explicitly mention any attribute, the system determines whether the value 1200000 is within the range of minimum and maximum values of any numeric attribute in the data. If such an attribute exists (LAST_SALE_PRICE in this case), the system conveys that to the user (through the widget 1206), and then allows her to change the attribute using the drop-down menu (1208).

In addition to ambiguity handling, in some implementations, the system also provides feedback and meaningful hints to modify the text, when the system fails to completely understand the query. For instance, if the system cannot successfully parse the given utterance, the system first attempts to automatically correct the misspelled terms by comparing the tokens with the attributes, cell values, and related keywords in the current dataset using fuzzy string matching. When the user forms a query that is partially recognized, the system prunes the unrecognized terms from the corresponding parse tree and then shows the results based on the tokens that are understood. Figure 12B shows different example situations and the corresponding feedback generated by the system, in accordance with some implementations.

Figures 13A-13J provide a flow diagram illustrating a method 1300 of using (1302) natural language for visual analysis of a dataset applying principles of pragmatics. The steps of the method 1300 may be performed by a computer (e.g., a computing device 200). In some implementations, the computer includes (1304) a display, one or more processors, and memory. Figures 13A-13J correspond to instructions stored in a computer memory or computer-readable storage medium (e.g., the memory 206 of the computing device 200). The memory stores (1306) one or more programs configured for execution by the one or more processors (e.g., the processor(s) 202). For example, the operations of the method 1300 are performed, at least in part, by a data visualization generation module 234 and/or a language processing module 238.

In some implementations, the computer displays (1308) a data visualization based on a dataset retrieved from a database using a first set of one or more queries. For example, referring to Figure 1, a user may associate one or more data fields from a schema information region 110 with one or more shelves (e.g., the column shelf 120 and the row shelf 122, Figure 1) in the data visualization region 112. In response to receiving the user associations, in some implementations, the computer retrieves data for the data fields from the dataset using a set of one or more queries and then displays a data visualization (e.g., the data visualization 408) in the data visualization region 112 that corresponds to the received user inputs. Displaying data visualizations is discussed in further detail above with reference to Figure 1.

The computer receives (1310) a first user input to specify a first natural language command related to the displayed data visualization. In some implementations, the user input is received as text input (e.g., a via keyboard 216 or via touch sensitive display 214) from a user in a data-entry region on the display in proximity to the displayed data visualization. In some implementations, the user input is received as a voice command using a microphone (e.g., an audio input device 220) coupled to the computer. For example, referring to Figure 4A, the displayed data visualization 408 concerns measles in the uk. Receiving inputs (e.g., commands/queries) from a user is discussed in further detail above with reference to Figure 1.

Based on the displayed data visualization, the computer extracts (1312) a first set of one or more independent analytic phrases from the first natural language command. For example, referring to Figure 4A, the first natural language command received by the computer reads, "measles in the uk." The data visualization displayed prior to receiving the first natural language command concerns disease outbreaks around the world. In some implementations, the computer extracts "measles" and "in the uk" from the first natural language command because these analytic phrases relate to the displayed data visualization. When the phrases have direct reference to data fields in the displayed data visualization, extraction (1312) is straight forward: collect all phrases that are direct references to data fields. In some implementations, the computer stems or removes stop words, filler words, or any predefined set of words from the incoming query, and extracts (1312) all other phrases from the first natural language command because they may be related to the displayed data visualization. Some implementations use this approach when the phrases in the natural language command have some indirect reference to the data fields in the displayed visualization.

The language processing module 238 computes (1314) a first set of one or more conversation centers associated with the first natural language command based on the first set of one or more analytic phrases, in accordance with some implementations. A framework based on a *conversational interaction model* is described above in reference to Figures 3A, 5, and 11. A center refers to those entities serving to link that utterance (sometimes herein called a natural language command) to other utterances in a discourse (a series of utterances). Conversation centers include data attributes and values, visual properties, and analytical actions. Computing conversation centers based on the analytic phrases includes mapping the analytic phrases to one or more conversation centers after necessary transformations and analysis. For the example utterance "measles in the uk," the language processing module 238 processes the phrase "measles" and analyzes the phrase to infer that it refers to the data attribute DISEASE as shown in Figure 4D described above.

Subsequently, the language processing module 238 computes (1316) a first set of analytic functions associated with the first set of one or more conversation centers, thereby creating a first set of one or more functional phrases, in accordance with some implementations. As described above in reference to Figures 3A, 5, and 11, analytical functions each consist of a variable, an operator, and a value, according to some implementations. In some implementations, for the example utterance "measles in the uk," the language processing module 238 creates two functions, namely F_CAT(diseases, ==, measles) and F_CAT(country, ==, uk). In some implementations, as another example, for an utterance "condos under 600K," the language processing module 238 creates two functions F_CAT(homeType, == condo) and F_NUMERIC(price, <, 600000). In both these examples, the language processing module 238 searches one or more data attributes related to the displayed data visualization that correspond to the first set of one or more conversation centers to identify a first set of data attributes, according to some implementations. The language processing module 238 also identifies, by examining the first set of one or more conversation centers, a first set of operators (e.g., operator ==, operator <) and a first set of values corresponding to the first set of data attributes, according to some implementations. With the first set of variables (attributes), and the corresponding first set of operators and first set of values, the language processing module 238 constructs the first set of one or more analytical functions, thereby creating the first set of one or more functional phrases.

In some implementations, the computer updates (1318) the data visualization based on the first set of one or more functional phrases computed in step 1316. As shown in Figure 13I, in some implementations, the computer requeries (1372) the database using a second set of one or more queries based on the first set of one or more functional phrases, thereby retrieving a second dataset. In some instances, requerying the database is performed locally at the computing device using cached or stored data at the computing device. For example, requerying is commonly performed locally when the natural language command specifies one or more filters. In some such implementations, the computer updates (1374) the data visualization based on the second dataset. In some implementations, the computer further creates and displays (1376) a new data visualization (e.g., without updating the existing one or more data visualizations) using the second dataset.

Referring now back to Figure 13B, the computer receives (1320) a second user input to specify a second natural language command related to the displayed data visualization. In some implementations, the user input is received as text input (e.g., a via keyboard 216 or via touch sensitive display 214) from a user in a data-entry region on the display in proximity to the displayed data visualization. In some implementations, the user input is received as a voice command using a microphone (e.g., an audio input device 220) coupled to the computer. For example, referring to Figure 4A, the displayed data visualization 408 concerns measles in the uk, when the computer receives the second user input "show me the orange spike." Receiving inputs (e.g., commands/queries) from a user is discussed in further detail above with reference to Figure 1.

Based on the displayed data visualization, the computer extracts (1322) a second set of one or more independent analytic phrases from the second natural language command. For example, referring to Figure 4A, the second natural language command (410) received by the computer reads, "show me the orange spike." In some implementations, for this example, the computer extracts "the orange spike" from the second natural language command because these analytic phrases relate to the displayed data visualization (that concerns measles in the uk, and has an orange spike, a visualization property). When the phrases have direct reference to data fields in the displayed data visualization, extraction (1322) is straight forward: collect all phrases that are direct references to data fields. In some implementations, the computer stems or removes stop words, filler words, or any predefined set of words from the incoming query, and extracts (1322) all other phrases from the second natural language command because they may be related to the displayed data visualization. Some implementations use this approach when the phrases in the natural language command have some indirect reference to the data fields in the displayed visualization.

The language processing module computes (1324) a temporary set of one or more conversation centers associated with the second natural language command based on the second set of one or more analytic phrases, in accordance with some implementations.

The language processing module derives (1326) a second set of one or more conversation centers from the first set of one or more conversation centers and the temporary set of one or more conversation centers using one or more transitional rules, in accordance with some implementations. In some such implementations (1332), each of the conversation centers of the first set of one or more conversation centers, the temporary set of one or more conversation centers, and the second set of one or more conversation centers comprises a value for a variable (e.g., a data attribute or a visualization property). In some such implementations, the language processing module uses the transitional rules by performing a sequence of operations (as shown in Figure 13C) comprising: determining (1334) if a first variable is included in the first set of one or more conversation centers; determining (1336) if the first variable is included in the temporary set of one or more conversation centers; determining (1338) a respective transitional rule of the one or more transitional rules to apply based on whether the first variable is included in the first set of one or more conversation centers and/or the temporary set of one or more conversation centers; and applying (1339) the respective transitional rule.

In some implementations, as shown in Figure 13D, the one or more transitional rules used by the language processing module 238 comprise (1340) a CONTINUE rule for including each conversation center in the first set of one or more conversation centers in the second set of one or more conversation centers, and adding one or more conversation centers from the temporary set of one or more conversation centers to the second set of one or more conversation centers. In some such implementations, applying (1342) the respective transitional rule comprises: in accordance with a determination that (i) the first variable is included in the temporary set of one or more conversation centers, and (ii) the first variable is not included in the first set of one or more conversation centers, applying (1344) the CONTINUE rule to include the first variable in the second set of one or more conversation centers.

In some implementations, as shown in Figure 13E, the one or more transitional rules used by the language processing module 238 comprise (1346) a RETAIN rule for retaining each conversation center in the first set of one or more conversation centers in the second set of one or more conversation centers without adding any conversation center from the temporary set of one or more conversation centers to the second set of one or more conversation centers. In some such implementations, applying (1348) the respective transitional rule comprises: in accordance with a determination that (i) the first variable is included in the first set of one or more conversation centers, and (ii) the first variable is not included in the temporary set of one or more conversation centers, applying (1350) the RETAIN rule to include each conversation center in the first set of one or more conversation centers to the second set of one or more conversation centers.

In some implementations, as shown in Figure 13F, the one or more transitional rules used by the language processing module 238 comprise (1352) a SHIFT rule for including each conversation center in the first set of one or more conversation centers in the second set of one or more conversation centers, and replacing one or more conversation centers in the second set of one or more conversation centers with conversation centers in the temporary set of one or more conversation centers. In some such implementations, applying (1354) the respective transitional rule comprises: in accordance with a determination (1356) that (i) the first variable is included in the temporary set of one or more conversation centers, and (ii) the first variable is not included in the first set of one or more conversation centers, the language processing module 228 performs a sequence of operations to: determine (1358) if the value of the first variable in the first set of one or more conversation centers is different from the value of the first variable in the temporary set of one or more conversation centers; and in accordance with a determination that the values of the first variable are different, apply (1360) the SHIFT rule for including each conversation center in the first set of one or more conversation centers in the second set of one or more conversation centers, and replace the value for the first variable in the second set of one or more conversation centers with the value for the first variable in the temporary set of one or more conversation centers. In some such implementations, applying (1354) the respective transitional rule further comprises, as shown in Figure 13G, determining (1362) if a widget corresponding to the first variable has been removed by the user, and in accordance with the determination that the widget has been removed, applying (1364) the SHIFT rule for including each conversation center in the first set of one or more conversation centers in the second set of one or more conversation centers, and replace the value for the first variable in the second set of one or more conversation centers with a new value (e.g., a maximum value, a super-set value) that includes the value of the first variable in the first set of one or more conversation centers.

Referring now back to Figure 13B, the language processing module 238 computes (1328) a second set of one or more analytical functions associated with the second set of one or more conversation centers, thereby creating a second set of one or more functional phrases. The language processing module 238 performs this step, using the second set of one or more conversation centers computed in step 1326, in a manner similar to step 1316 described above.

The computer updates (1330) the data visualization based on the second set of one or more functional phrases, in accordance with some implementations. In some such implementations, as shown in Figure 13J, the computer requeries (1378) the database using a second set of one or more queries based on the first set of one or more functional phrases, thereby retrieving a third dataset; and updates (1380) the data visualization based on the third dataset. Further, in some such implementations, the computer creates and displays (1382) a new data visualization (e.g., without updating the existing one or more data visualizations) using the third dataset.

In some implementations, as shown in Figure 13H, the computer further determines (1366) if the user has selected a dataset different from the first dataset, determines (1368) if the user has reset the data visualization; and in accordance with a determination that (i) the user has selected a different dataset, or (ii) the user has reset the data visualization, resets (1370) each of the first set of one or more conversation centers, the temporary set of one or more conversation centers, and the second set of one or more conversation centers to an empty set that includes no conversation centers.

Figures 14A-14R provide a flow diagram illustrating a method 1400 of using (1402) natural language for visual analysis of a dataset applying principles of pragmatics, including for handling various forms of pragmatics, according to some implementations. The steps of the method 1400 may be performed by a computer (e.g., a computing device 200). In some implementations, the computer includes (1404) a display, one or more processors, and memory. Figures 14A-14R correspond to instructions stored in a computer memory or computer-readable storage medium (e.g., the memory 206 of the computing device 200). The memory stores (1406) one or more programs configured for execution by the one or more processors (e.g., the processor(s) 202). For example, the operations of the method 1400 are performed, at least in part, by a data visualization generation module 234 and/or a language processing module 238.

In some implementations, the computer displays (1408) a data visualization based on a dataset retrieved from a database using a first set of one or more queries. For example, referring to Figure 1, a user may associate one or more data fields from a schema information region 110 with one or more shelves (e.g., the column shelf 120 and the row shelf 122, Figure 1) in the data visualization region 112. In response to receiving the user associations, in some implementations, the computer retrieves data for the data fields from the dataset using a set of one or more queries and then displays a data visualization (e.g., the data visualization 408) in the data visualization region 112 that corresponds to the received user inputs. Displaying data visualizations is discussed in further detail above with reference to Figure 1.

The computer receives (1410) a first user input to specify a first natural language command related to the displayed data visualization. In some implementations, the user input is received as text input (e.g., a via keyboard 216 or via touch sensitive display 214) from a user in a data-entry region on the display in proximity to the displayed data visualization. In some implementations, the user input is received as a voice command using a microphone (e.g., an audio input device 220) coupled to the computer. For example, referring to Figure 6A, the displayed data visualization 608 concerns houses less than 1M in Ballard. Receiving inputs (e.g., commands/queries) from a user is discussed in further detail above with reference to Figure 1.

Based on the displayed data visualization, the computer extracts (1412) a first set of one or more independent analytic phrases from the first natural language command. For example, referring to Figure 6A, the first natural language command received by the computer reads, "houses less than 1M in Ballard." The data visualization displayed prior to receiving the first natural language command concerns past home sales in Seattle. In some implementations, the computer extracts "houses" and "less than 1M" and "in Ballard" from the first natural language command because these analytic phrases relate to the displayed data visualization. When the phrases have direct reference to data fields in the displayed data visualization, extraction (1412) is straight forward: collect all phrases that are direct references to data fields. In some implementations, the computer stems or removes stop words, filler words, or any predefined set of words from the incoming query, and extracts (1412) all other phrases from the first natural language command because they may be related to the displayed data visualization. Some implementations use this approach when the phrases in the natural language command have some indirect reference to the data fields in the displayed visualization.

The language processing module 238 computes (1414) a first set of one or more conversation centers associated with the first natural language command based on the first set of one or more analytic phrases, in accordance with some implementations. A framework based on a *conversational interaction model* is described above in reference to Figures 3A, 5, and 11. A center refers to those entities serving to link that utterance (sometimes herein called a natural language command) to other utterances in a discourse (a series of utterances). Conversation centers include data attributes and values, visual properties, and analytical actions. Computing conversation centers based on the analytic phrases includes mapping the analytic phrases to one or more conversation centers after necessary transformations and analysis. For the example utterance "houses less than 1M in Ballard," the language processing module 238 processes the phrase "less than 1M" and analyzes the phrase to infer that it refers to the data attribute LAST_SALE_PRICE as shown in Figure 6C described above.

Subsequently, the language processing module 238 computes (1416) a first set of analytic functions associated with the first set of one or more conversation centers, thereby creating a first set of one or more functional phrases, in accordance with some implementations. As described above in reference to Figures 3A, 5, and 11, analytical functions each consist of a variable, an operator, and a value, according to some implementations. In some implementations, for the example utterance "houses less than 1M in Ballard," the language processing module 238 creates two functions, creates four functions F_CAT(homeType, == condo), F_CAT(homeType, == townhouse), F_CAT(homeType == single), and F_NUMERIC(price, <, 500000). In this example, the language processing module 238 searches one or more data attributes related to the displayed data visualization that correspond to the first set of one or more conversation centers to identify a first set of data attributes, according to some implementations. The language processing module 238 also identifies, by examining the first set of one or more conversation centers, a first set of operators (e.g., operator ==, operator <) and a first set of values corresponding to the first set of data attributes, according to some implementations. With the first set of variables (attributes), and the corresponding first set of operators and first set of values, the language processing module 238 constructs the first set of one or more analytical functions, thereby creating the first set of one or more functional phrases.

In some implementations, the computer updates (1418) the data visualization based on the first set of one or more functional phrases computed in step 1416.

Referring now to Figure 14B, the computer receives (1420) a second user input to specify a second natural language command related to the displayed data visualization. In some implementations, the user input is received as text input (e.g., a via keyboard 216 or via touch sensitive display 214) from a user in a data-entry region on the display in proximity to the displayed data visualization. In some implementations, the user input is received as a voice command using a microphone (e.g., an audio input device 220) coupled to the computer. For example, referring to Figure 6A, the displayed data visualization 608 concerns houses less than 1M in Ballard, when the computer receives the second user input "townhomes." Receiving inputs (e.g., commands/queries) from a user is discussed in further detail above with reference to Figure 1.

Based on the displayed data visualization, the computer extracts (1422) a second set of one or more independent analytic phrases from the second natural language command. For example, referring to Figure 6A, the second natural language command (620) received by the computer reads, "townhomes." In some implementations, for this example, the computer extracts "townhomes" from the second natural language command because this analytic phrase relates to the displayed data visualization (that concerns townhomes in Ballard). When the phrases have direct reference to data fields in the displayed data visualization, extraction (1422) is straight forward: collect all phrases that are direct references to data fields. In some implementations, the computer stems or removes stop words, filler words, or any predefined set of words from the incoming query, and extracts (1422) all other phrases from the second natural language command because they may be related to the displayed data visualization. Some implementations use this approach when the phrases in the natural language command have some indirect reference to the data fields in the displayed visualization.

The language processing module computes (1424) a temporary set of one or more conversation centers associated with the second natural language command based on the second set of one or more analytic phrases, in accordance with some implementations.

The language processing module computes (1426) cohesion between the first set of one or more analytic phrases and the second set of one or more analytic phrases, and derives a second set of one or more conversation centers from the first set of one or more conversation centers and the temporary set of one or more conversation centers based on the cohesion, in accordance with some implementations. As shown in Figure 14C, in some implementations, computing cohesion comprises identifying (1434) a phrase structure of the second set of one or more analytic phrases. Computing phrase structure is described above in reference to Figure 5 (steps 522 or 510), and via the example in Figure 6A (steps 610 and 622), according to some implementations. In some implementations, identifying the phrase structure comprises parsing (1436) the second natural language command applying a probabilistic grammar (as explained above with reference to 522 or 510, Figure 5), thereby obtaining a parsed output. In some implementations, this step further comprises deducing (1438) syntactic structure by employing a part-of-speech API provided by a natural language toolkit, again as described above with reference to Figure 5. In some implementations, the parsed output is resolved (1440) by the language processing module to corresponding categorical and data attributes. For example, for the utterance "townhomes" (620) in Figure 6A, the language processing module resolves the categorical attribute to be home /(or house) type. In some implementations, although not shown, the language processing module resolves the parsed output to corresponding categorical and data attributes after step 1442.

Whence the phrase structure is identified in step 1434, the language processing module identifies one or more forms of pragmatic forms based on the phrase structure, according to some implementations. Subsequently, the language processing module derives (1446) the second set of one or more conversation centers from the first set of one or more conversation centers and the temporary set of one or more conversation centers based on the identified one or more forms of pragmatics. Figures 14D, 14E, 14H, and 14I described below illustrate how different types of pragmatic forms are identified and how the second set of one or more conversation centers are identified based on the identified form of pragmatics.

In some implementations, the language processing module 238 computes (1430) a second set of one or more analytical functions associated with the second set of one or more conversation centers, thereby creating a second set of one or more functional phrases. The language processing module 238 performs this step, using the second set of one or more conversation centers computed in step 1426, in a manner similar to step 1416 described above.

In some implementations, as shown in Figure 14P, the language processing module 238 computes (14.186) semantic relatedness between the second set of one or more extracted analytic phrases and one or more attributes of data included in the updated data visualization, and computes (14.188) analytical functions associated with the second set of one or more analytic phrases, thereby creating the second set of one or more functional phrases, based on the semantically related one or more attributes of data. In some implementations, the language processing module 238 computes semantically related terms for lexically cohesive expressions. The process of computing semantic relatedness and computing the analytical functions based on semantic relatedness was described above in reference to Figures 9A-9D. In some implementations, although not shown in Figure 14B, computing the second set of one or more analytical functions and the second set of one or more functional phrases based on semantic relatedness of data attributes is performed in addition to (rather than as an alternative to) step 1430 described above.

In some implementations, as shown in Figure 14Q, the language processing module 238 computes semantic relatedness by training (14.190) a first neural network model on a large corpus of text, thereby learning word embeddings. In some such implementations (14.192), the first neural network model comprises Word2vec™ model. In some implementations, the language processing module 238 computes (1494) a first word vector for a first word in a first phrase in the second set of one or more analytic phrases using a second neural network model, the first word vector mapping the first word to the word embeddings learn in step 14.190. In some such implementations (14.196), the second neural network model comprises recurrent neural network model. In some implementations, the language processing module computes (14.198) a second word vector for a first data attribute in the one or more data attributes using the second neural network model, the second word vector mapping the first data attribute to the word embeddings learnt in step 14.190. Although not shown in Figure 14Q, computing the first word vector and the second word vector can be in performed in parallel y the language processing module 238. Subsequently, the language processing module computes (14.200) relatedness between the first word vector and the second word vector using a similarity metric, according to some implementations. In some such implementations (14.202), the similarity metric is based at least on (i) Wu-Palmer distance between word senses associated with the first word vector and the second word vector, (ii) a weighting factor, and (iii) a pairwise cosine distance between the first word vector and the second word vector.

In some implementations, as shown in Figure 14R, the language processing module 238 obtains (14.204) word definitions for the second set of one or more analytic phrases from a publicly available dictionary, determines (14.206) whether the word definitions contain one or more predefined adjectives using a part-of-speech API provided by a natural language toolkit, and, in accordance with the determination that the word definitions contain one or more predefined adjectives, maps the one or more predefined adjectives to one or more analytical functions. These operations were described above in reference to Figure 9B, in accordance with some implementations. The language processing module 238 computes the type of analytical function for one or more terms in the second set of one or more analytic phrases. For instance, the term "cheapest" is mapped to Bottom_N(sale price).

Referring now back to Figure 14B, the computer updates (1432) the data visualization based on the second set of one or more functional phrases, in accordance with some implementations.

Figures 14D, 14E, 14H, and 14I each show the steps performed by the language processing module 238 to handle different types of pragmatic forms identified based on the phrase structure, and how the second set of one or more conversation centers are derived based on the identified form of pragmatics, in accordance with some implementations.

Figure 14D shows the steps performed by the language processing module 238 to derive the second set of one or more conversation centers for incomplete utterances, according to some implementations. The language processing module 238 identifies (1448) the pragmatic form to be an incomplete utterance by determining whether one or more linguistic elements are absent in the phrase structure, according to some implementations. In some implementations, subsequently, the language processing module 238 derives (1450) the second set of one or more conversation centers by performing a sequence of operations (1452) that includes: determining (1454) a first subset of conversation centers in the first set of one or more conversation centers, the first subset of conversation centers corresponding to the one or more linguistic elements absent in the phrase structure, and computing (1456) the second set of one or more conversation centers by combining the temporary set of one or more conversation centers with the first subset of conversation centers. Figure 6A described above shows an implementation that derives the second set of one or more conversation centers for incomplete utterances.

Figure 14E shows the steps performed by the language processing module 238 to derive the second set of one or more conversation centers for reference expressions, according to some implementations. The language processing module 238 identifies (1458) the pragmatic form to be a reference expression by determining if one or more anaphoric references is present in the phrase structure, according to some implementations. In some implementations, subsequently, the language processing module 238 derives (1460) the second set of one or more conversation centers by performing a sequence of operations (1462) that includes: searching (1464) the first set of one or more conversation centers to find a first subset of conversation centers that corresponds to a phrasal chunk in the second natural language command that contains a first anaphoric reference of the one or more anaphoric references, and computing (1466) the second set of one or more conversation centers based on the temporary set of one or more conversation centers and the first subset of conversation centers. Figure 7A described above shows an implementation that derives the second set of one or more conversation centers for reference expressions.

In some implementations, the language processing module 238 determines (1468) whether the first anaphoric reference is a reference to a visualization property in the updated data visualization (sometimes herein called a deictic reference), and, in accordance with a determination that the anaphoric reference is a deictic reference, computes (1470) the second set of one or more conversation centers based on the temporary set of one or more conversation centers, and data related to the visualization property.

In some implementations, as shown in Figure 14F, the language processing module 238 determines (1472) whether the first anaphoric reference is accompanied by a verb in the second natural language command, and, in accordance with a determination that the anaphoric reference is accompanied by a verb (1474), searches (1476) the first set of one or more conversation centers to find a first action conversation center that refers to an action verb, and computes (1478) the second set of one or more conversation centers based on the temporary set of one or more conversation centers and the first subset of conversation centers.

In some implementations, as shown in Figure 14G, the language processing module 238 determines (1480) whether the first anaphoric reference is a deictic reference that refers to some object in the environment, and, in accordance with a determination that the anaphoric reference is a deictic reference, computes (1482) the second set of one or more conversation centers based on the temporary set of one or more conversation centers, and a characteristic of the object.

Figure 14H shows the steps performed by the language processing module 238 to derive the second set of one or more conversation centers for repair utterances, according to some implementations. The language processing module 238 identifies (1484) the pragmatic form to be a repair utterance by determining if the phrase structure corresponds to one or more predefined repair utterances, according to some implementations. In some implementations, subsequently, the language processing module 238 derives (1486) the second set of one or more conversation centers by performing a sequence of operations (1488) that includes: computing (1490) the second set of one or more conversation centers based on the temporary set of one or more conversation centers, and updating (1492) one or more data attributes in the second set of one or more conversation centers based on the one or more predefined repair utterances and the phrase structure. Figure 10A described above shows an implementation that derives the second set of one or more conversation centers for repair utterances.

In some implementations, the language processing module 238 determines (1494) whether the phrase structure corresponds to a repair utterance to change a default behavior related to displaying a data visualization, and, in accordance with a determination that the phrase structure corresponds to a repair utterance to change a default behavior, changes (1496) the default behavior related to displaying.

Figure 14I shows the steps performed by the language processing module 238 to derive the second set of one or more conversation centers for conjunctive expressions, according to some implementations. The language processing module 238 identifies (1498) the pragmatic form to be a conjunctive expression by determining if the second natural language command is a conjunctive expression by (i) determining explicit or implicit presence of conjunctions in the phrase structure, and (ii) determining if the temporary set of one or more conversation centers includes each conversation center in the first set of one or more conversation centers, according to some implementations. In some implementations, subsequently, the language processing module 238 derives (14.100) the second set of one or more conversation centers by computing (14.104) the second set of one or more conversation centers based on the temporary set of one or more conversation centers, in accordance with the determination (14.102) that the second natural language command is a conjunctive expression. Figure 8A described above shows an implementation that derives the second set of one or more conversation centers for utterances with conjunctions.

In some implementations, the language processing module 238 determines (14.106) whether the second natural language command has more than one conjunct, and, in accordance with the determination that the second natural language command has more than one conjunct, computes (14.108) the second set of one or more analytical functions by linearizing the second natural language command.

In some implementations, the language processing module 238 linearizes the second natural language command by performing a sequence of operations shown in Figure 14J. The sequence of operations includes generating (14.110) a parse tree for the second natural language command, traversing (14.112) the parse tree in post-order to extract a first analytic phrase and a second analytic phrase, wherein the first analytic phrase and the second analytic phrase are adjacent nodes in the parse tree, and combining (14.114) the first analytical function with the second analytical function by applying one or more logical operators based on one or more characteristics of the first analytical function and the second analytic function, wherein the one or more characteristics include attribute type, operator type, and a value.

Figures 14K-14O each illustrate different instances of the last step (14.114) of combining the first analytical function with the second analytical function, according to some implementations. In each case (as shown by the labels 14.116, 14.126, 14.36, 14.150, and 14.168 in the respective figures), the first analytical function comprises a first attribute, a first operator, and a first value; the second analytical function comprises a second attribute, a second operator, and a second value.

In Figure 14K, the language processing module 238 combines (14.118) the first analytical function with the second analytical function by performing a sequence of operations, according to some implementations. The sequence of operations includes: determining (14.120) whether the first attribute is a categorical type attribute or an ordered type attribute, and determining whether the second attribute is a categorical type attribute or an ordered type attribute, determining (14.122) whether the first attribute and the second attribute are identical, in accordance with a determination that the first attribute and the second attribute are identical and are both categorical type attributes, applying (14.124) a union operator to combine the first analytical function and the second analytical function.

In Figure 14L, the language processing module 238 combines (14.128) the first analytical function with the second analytical function by performing a sequence of operations, according to some implementations. The sequence of operations includes: determining (14.130) whether the first attribute is a categorical type attribute or an ordered type attribute, and determining whether the second attribute is a categorical type attribute or an ordered type attribute, determining (14.132) whether the first attribute and the second attribute are identical, in accordance with a determination that the first attribute and the second attribute are non-identical, applying (14.134) the intersection operator to combine the first analytical function and the second analytical function.

In Figure 14M, the language processing module 238 combines (14.138) the first analytical function with the second analytical function by performing a sequence of operations, according to some implementations. The sequence of operations includes: determining (14.140) whether the first attribute is a categorical type attribute or an ordered type attribute, and determining whether the second attribute is a categorical type attribute or an ordered type attribute, determining (14.142) whether the first attribute and the second attribute are identical, in accordance with a determination that the first attribute and the second attribute are identical and are both ordered type attributes (14.144): determining (14.146) the operator types of the first operator and the second operator, and, in accordance with a determination that the first operator and the second operator are both equality operators, applying (14.148) the union operator to combine the first analytical function and the second analytical function.

In Figure 14N, the language processing module 238 combines (14.152) the first analytical function with the second analytical function by performing a sequence of operations, according to some implementations. The sequence of operations includes: determining (14.154) whether the first attribute is a categorical type attribute or an ordered type attribute, and determining whether the second attribute is a categorical type attribute or an ordered type attribute, determining (14.156) whether the first attribute and the second attribute are identical, and, in accordance with a determination that the first attribute and the second attribute are identical and are both ordered type attributes: determining (14.160) the operator types of the first operator and the second operator; in accordance with a determination that the first operator is a "less than" operator and the second operator is a "greater than" operator (14.162): determining (14.164) whether the first value is less than the second value, and, in accordance with a determination that the first value is less than the second value, applying (14.166) the union operator to combine the first analytical function and the second analytical function.

In Figure 14O, the language processing module 238 combines (14.170) the first analytical function with the second analytical function by performing a sequence of operations, according to some implementations. The sequence of operations includes: determining (14.172) whether the first attribute is a categorical type attribute or an ordered type attribute, and determining whether the second attribute is a categorical type attribute or an ordered type attribute, determining (14.174) whether the first attribute and the second attribute are identical, in accordance with a determination that the first attribute and the second attribute are identical and are both ordered type attributes (14.176): determining (14.178) the operator types of the first operator and the second operator; in accordance with a determination that the first operator is a "greater than" operator and the second operator is a "lesser than" operator (14.180): determining (14.182) whether the first value is less than the second value, and in accordance with a determination that the first value is less than the second value, applying (14.184) the intersection operator to combine the first analytical function and the second analytical function.

Figures 15A-15H provide a flowchart of a process (method 1500) that uses (1502) natural language for visual analysis of a dataset applying pragmatics principles, including for handling responses and feedback, and for handling ambiguity in a user query, according to some implementations. The steps of the method 1500 may be performed by a computer (e.g., a computing device 200). In some implementations, the computer includes (1504) a display, one or more processors, and memory. Figures 15A-15H correspond to instructions stored in a computer memory or computer-readable storage medium (e.g., the memory 206 of the computing device 200). The memory stores (1506) one or more programs configured for execution by the one or more processors (e.g., the processor(s) 202). For example, the operations of the method 1500 are performed, at least in part, by a data visualization generation module 234 and/or a language processing module 238.

In some implementations, the computer displays (1508) a data visualization based on a dataset retrieved from a database using a first set of one or more queries. For example, referring to Figure 1, a user may associate one or more data fields from a schema information region 110 with one or more shelves (e.g., the column shelf 120 and the row shelf 122, Figure 1) in the data visualization region 112. In response to receiving the user associations, in some implementations, the computer retrieves data for the data fields from the dataset using a set of one or more queries and then displays a data visualization (e.g., the data visualization 408) in the data visualization region 112 that corresponds to the received user inputs. Displaying data visualizations is discussed in further detail above with reference to Figure 1.

The computer receives (1510) a first user input to specify a first natural language command related to the displayed data visualization. In some implementations, the user input is received as text input (e.g., a via keyboard 216 or via touch sensitive display 214) from a user in a data-entry region on the display in proximity to the displayed data visualization. In some implementations, the user input is received as a voice command using a microphone (e.g., an audio input device 220) coupled to the computer. For example, referring to Figure 6A, the displayed data visualization 608 concerns houses less than 1M in Ballard. Receiving inputs (e.g., commands/queries) from a user is discussed in further detail above with reference to Figure 1.

Based on the displayed data visualization, the computer extracts (1512) a first set of one or more independent analytic phrases from the first natural language command. For example, referring to Figure 6A, the first natural language command received by the computer reads, "houses less than 1M in Ballard." The data visualization displayed prior to receiving the first natural language command concerns past home sales in Seattle. In some implementations, the computer extracts "houses" and "less than 1M" and "in Ballard" from the first natural language command because these analytic phrases relate to the displayed data visualization. When the phrases have direct reference to data fields in the displayed data visualization, extraction (1512) is straight forward: collect all phrases that are direct references to data fields. In some implementations, the computer stems or removes stop words, filler words, or any predefined set of words from the incoming query, and extracts (1412) all other phrases from the first natural language command because they may be related to the displayed data visualization. Some implementations use this approach when the phrases in the natural language command have some indirect reference to the data fields in the displayed visualization.

The language processing module 238 computes (1514) a first set of one or more conversation centers associated with the first natural language command based on the first set of one or more analytic phrases, in accordance with some implementations. A framework based on a *conversational interaction model* is described above in reference to Figures 3A, 5, and 11. A center refers to those entities serving to link that utterance (sometimes herein called a natural language command) to other utterances in a discourse (a series of utterances). Conversation centers include data attributes and values, visual properties, and analytical actions. Computing conversation centers based on the analytic phrases includes mapping the analytic phrases to one or more conversation centers after necessary transformations and analysis. For the example utterance "houses less than 1M in Ballard," the language processing module 238 processes the phrase "less than 1M" and analyzes the phrase to infer that it refers to the data attribute LAST_SALE_PRICE as shown in Figure 6C described above.

Subsequently, the language processing module 238 computes (1516) a first set of analytic functions associated with the first set of one or more conversation centers, thereby creating a first set of one or more functional phrases, in accordance with some implementations. As described above in reference to Figures 3A, 5, and 11, analytical functions each consist of a variable, an operator, and a value, according to some implementations. In some implementations, for the example utterance "houses less than 1M in Ballard," the language processing module 238 creates two functions, creates four functions F_CAT(homeType, == condo), F_CAT(homeType, == townhouse), F_CAT(homeType == single), and F_NUMERIC(price, <, 500000). In this example, the language processing module 238 searches one or more data attributes related to the displayed data visualization that correspond to the first set of one or more conversation centers to identify a first set of data attributes, according to some implementations. The language processing module 238 also identifies, by examining the first set of one or more conversation centers, a first set of operators (e.g., operator ==, operator <) and a first set of values corresponding to the first set of data attributes, according to some implementations. With the first set of variables (attributes), and the corresponding first set of operators and first set of values, the language processing module 238 constructs the first set of one or more analytical functions, thereby creating the first set of one or more functional phrases.

In some implementations, the computer updates (1518) the data visualization based on the first set of one or more functional phrases computed in step 1516.

Referring now to Figure 15B, the computer receives (1520) a second user input to specify a second natural language command related to the displayed data visualization. In some implementations, the user input is received as text input (e.g., a via keyboard 216 or via touch sensitive display 214) from a user in a data-entry region on the display in proximity to the displayed data visualization. In some implementations, the user input is received as a voice command using a microphone (e.g., an audio input device 220) coupled to the computer. For example, referring to Figure 6A, the displayed data visualization 608 concerns houses less than 1M in Ballard, when the computer receives the second user input "townhomes." Receiving inputs (e.g., commands/queries) from a user is discussed in further detail above with reference to Figure 1.

Based on the displayed data visualization, the computer extracts (1522) a second set of one or more independent analytic phrases from the second natural language command. For example, referring to Figure 6A, the second natural language command (620) received by the computer reads, "townhomes." In some implementations, for this example, the computer extracts "townhomes" from the second natural language command because this analytic phrase relates to the displayed data visualization (that concerns townhomes in Ballard). When the phrases have direct reference to data fields in the displayed data visualization, extraction (1522) is straight forward: collect all phrases that are direct references to data fields. In some implementations, the computer stems or removes stop words, filler words, or any predefined set of words from the incoming query, and extracts (1522) all other phrases from the second natural language command because they may be related to the displayed data visualization. Some implementations use this approach when the phrases in the natural language command have some indirect reference to the data fields in the displayed visualization.

The language processing module computes (1524) a temporary set of one or more conversation centers associated with the second natural language command based on the second set of one or more analytic phrases, in accordance with some implementations.

The language processing module derives (1526) a second set of one or more conversation centers from the first set of one or more conversation centers and the temporary set of one or more conversation centers using one or more transitional rules, in accordance with some implementations.

The computer updates (1528) the data visualization based on the second set of one or more functional phrases, in accordance with some implementations.

Referring to Figure 15C, in some implementations, the language processing module 238 determines (1530) one or more data attributes corresponding to the second set of one or more conversation centers. The language processing module 238 then scans (1532) displayed data visualizations to identify one or more of the displayed data visualizations that contain data marks whose characteristics correspond to a first data attribute in the one or more data attributes, according to some implementations. In some such implementations (1534), the visualization characteristics include one or more of color, size, and shape. In some such implementations (1536), the visualization characteristics correspond to a visual encoding of data marks.

Subsequently, the computer highlights (1538) the data marks whose characteristics correspond to the first data attribute, in accordance with some implementations. In some such implementations, the computer filters (1540) results from the displayed data visualizations that contain data marks whose characteristics do not correspond to the one or more data attributes. Further, in some such implementations, the computer receives (1542) a user input to determine whether to filter or to highlight the data marks, and filters or highlights the data marks on the displayed data visualizations based on the determination. Figure 11A described above showed an example application of pragmatic principles for handling responses and feedback according to some implementations. The descriptions for Figure 11A apply to the steps shown in Figure 15C. For example, step 1102 in Figure 11A to create a list of all data attributes corresponds to step 1530 to determine one or more data attributes. Similarly, step 1106 to decide which of the existing visualization encode a respective attribute correspond to step 1532 for scanning the displayed data visualizations.

Referring now to Figure 15D, in some implementations, the computer determines (1544) whether none of the displayed data visualizations contain data marks whose characteristics correspond to the first data attribute. In some implementations, in accordance with the determination that none of the displayed data visualizations contain data marks whose characteristics correspond to the first data attribute (1546): the computer generates (1548) a specification for a new data visualization with the first data attribute, and displays (1550) the new data visualization. In some implementations, displaying (1550) the new data visualization includes: determining (1552) a chart type based on the specification, and generating and displaying (1554) the chart. In some such implementations (1556), the chart is positioned using a two-dimensional grid-based layout algorithm, automatically coordinated with other data visualizations.

Referring to Figure 15E, in some implementations, the language processing module 238 computes (1558) a second set of one or more analytical functions associated with the second set of one or more conversation centers, thereby creating a second set of one or more functional phrases. In some implementations, the computer selects (1560) a first functional phrase from the second set of one or more functional phrases, wherein the first functional phrase comprises a parameterized data selection criterion. In some implementations, the computer selects (1562) an initial range for values of the parameters of the parameterized data selection criterion. In some implementations, the computer displays (1564) an editable user interface control corresponding to the parameterized data selection criterion, wherein the user interface control displays the current values of the parameters. In some such implementations (1566), the user interface control allows adjustment of the first functional phrase. Further, in some such implementations (1568), the user interface control displays a slider, which enables a user to adjust the first functional phrase. In some implementations, the computer orders (1570) a displayed set of one or more editable user interface controls based on the order of queries in the second natural language command, wherein the order of queries is inferred while extracting the second set of one or more analytic phrases from the second natural language command. In some such implementations, the computer uses (1572) a library that facilitates the compact placement of small word-scale visualization within text. In some such implementations (1574), the library is Sparklificator™. Figure 12A described above shows an example illustration of an interface that includes a selectable set of widgets presented to the user, according to some implementations.

Referring to Figure 15F, in some implementations, the computer determines (1576) a first token in the second natural language command that does not correspond to any of the analytic phrases in the second set of one or more analytic phrases. In some implementations, the computer searches (1578) for a correctly spelled term corresponding to the first token using a search library by comparing the first token with one or more features of the first dataset. In some such implementations (1580), the one or more features include data attributes, cell values, and related keywords of the first dataset. In some such implementations (1582), the search library is Fuse.js™.

In some implementations, the language processing module 238 substitutes (1584) the correctly spelled term for the first token in the second natural language command to obtain a third natural language command, and extracts (1586) the second set of one or more analytic phrases from the third natural language command.

In some implementations, as shown in Figure 15G, the language processing module 238 determines (1588) whether there is no correctly spelled term corresponding to the first token. In accordance with a determination that there is no correctly spelled term corresponding to the first token (1590), the language processing module parses (1592) the second natural language command to obtain a parse tree, prunes (1594) the parse tree to remove the portion of the tree corresponding to the first token, and extracts (1596) the parse tree to remove the portion of the tree corresponding to the first token. In some such implementations, the language processing module 238 substitutes (1598) the correctly spelled term for the first token in the second natural language command to obtain a third natural language command, and the computer displays (15.100) the first token.

In some implementations, as shown in Figure 15H, the computer generates (15.102) a textual feedback indicating that the correctly spelled term is substituted for the first token in the second natural language command. Further, in some such implementations, the computer displays (15.104) and highlights the correctly spelled term. Figure 12B described above shows several example situations and the corresponding feedback generated by the computer, in accordance with some implementations.

The terminology used in the description of the invention herein is for the purpose of describing particular implementations only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, steps, operations, elements, and/or components, but do not preclude the presence or addition of one or more other features, steps, operations, elements, components, and/or groups thereof.

The foregoing description, for purpose of explanation, has been described with reference to specific implementations. However, the illustrative discussions above are not intended to be exhaustive or to limit the invention to the precise forms disclosed. Many modifications and variations are possible in view of the above teachings. The implementations were chosen and described in order to best explain the principles of the invention and its practical applications, to thereby enable others skilled in the art to best utilize the invention and various implementations with various modifications as are suited to the particular use contemplated.

The following clauses, which form part of the description, provide general expressions of the disclosure herein:

1. A method of using natural language for visual analysis of a dataset, comprising:
at computer having a display, one or more processors, and memory storing one or more programs configured for execution by the one or more processors:

displaying a data visualization based on a first dataset retrieved from a database using a first set of one or more queries;
receiving a first user input to specify a first natural language command related to the data visualization;
extracting a first set of one or more independent analytic phrases from the first natural language command;
computing a first set of one or more conversation centers associated with the first natural language command based on the first set of one or more analytic phrases;
computing a first set of analytical functions associated with the first set of one or more conversation centers, thereby creating a first set of one or more functional phrases; and
updating the data visualization based on the first set of one or more functional phrases.

2. The method of clause 1, further comprising:

receiving a second user input to specify a second natural language command related to the updated data visualization;
extracting a second set of one or more independent analytic phrases from the second natural language command;
computing a temporary set of one or more conversation centers associated with the second natural language command based on the second set of one or more analytic phrases;
deriving a second set of one or more conversation centers from the first set of one or more conversation centers and the temporary set of one or more conversation centers using one or more transitional rules;
computing a second set of one or more analytical functions associated with the second set of one or more conversation centers, thereby creating a second set of one or more functional phrases; and
updating the data visualization based on the second set of one or more functional phrases.

3. The method of clause 2, wherein each of the conversation centers of the first set of one or more conversation centers, the temporary set of one or more conversation centers, and the second set of one or more conversation centers comprises a value for a variable that specifies either a data field attribute or a data visualization property, and wherein using the one or more transitional rules comprises:

determining whether a first variable is included in the first set of one or more conversation centers;
determining whether the first variable is included in the temporary set of one or more conversation centers;
determining a respective transitional rule of the one or more transitional rules to apply based on whether the first variable is included in the first set of one or more conversation centers and/or the temporary set of one or more conversation centers; and
applying the respective transitional rule.

4. The method of clause 3, wherein the one or more transitional rules comprise a CONTINUE rule for including each conversation center in the first set of one or more conversation centers in the second set of one or more conversation centers, and adding one or more conversation centers from the temporary set of one or more conversation centers to the second set of one or more conversation centers.

5. The method of clause 4, wherein applying the respective transitional rule comprises:
in accordance with a determination that (i) the first variable is included in the temporary set of one or more conversation centers, and (ii) the first variable is not included in the first set of one or more conversation centers, applying the CONTINUE rule to include the first variable in the second set of one or more conversation centers.

6. The method of clause 3, wherein the one or more transitional rules comprise a RETAIN rule for retaining each conversation center in the first set of one or more conversation centers in the second set of one or more conversation centers without adding any conversation center from the temporary set of one or more conversation centers to the second set of one or more conversation centers.

7. The method of clause 6, wherein applying the respective transitional rule comprises:
in accordance with a determination that (i) the first variable is included in the first set of one or more conversation centers, and (ii) the first variable is not included in the temporary set of one or more conversation centers, applying the RETAIN rule to include each conversation center in the first set of one or more conversation centers to the second set of one or more conversation centers.

8. The method of clause 3, wherein the one or more transitional rules comprise a SHIFT rule for including each conversation center in the first set of one or more conversation centers in the second set of one or more conversation centers, and replacing one or more conversation centers in the second set of one or more conversation centers with conversation centers in the temporary set of one or more conversation centers.

9. The method of clause 8, wherein applying the respective transitional rule comprises:
in accordance with a determination that (i) the first variable is included in the first set of one or more conversation centers, and (ii) the first variable is included in the temporary set of one or more conversation centers:

determining whether a first value of the first variable in the first set of one or more conversation centers is different from a second value of the first variable in the temporary set of one or more conversation centers;
in accordance with a determination that the first value is different from the second value, applying the SHIFT rule for including each conversation center in the first set of one or more conversation centers in the second set of one or more conversation centers, and replacing the value for the first variable in the second set of one or more conversation centers with the second value.

10. The method of clause 9, further comprising:

determining whether a widget corresponding to the first variable has been removed by the user; and
in accordance with the determination that the widget has been removed, applying the SHIFT rule for including each conversation center in the first set of one or more conversation centers in the second set of one or more conversation centers, and replacing the value for the first variable in the second set of one or more conversation centers with a new value that includes the first value.

11. The method of clause 1, further comprising:

determining whether the user has selected a dataset different from the first dataset;
determining whether the user has reset the data visualization; and
in accordance with a determination that (i) the user has selected a different dataset, or (ii) the user has reset the data visualization, resetting each of the first set of one or more conversation centers, the temporary set of one or more conversation centers, and the second set of one or more conversation centers to an empty set that includes no conversation centers.

12. The method of clause 1, wherein updating the data visualization based on the first set of one or more functional phrases comprises:

requerying the database using a second set of one or more queries based on the first set of one or more functional phrases, thereby retrieving a second dataset; and
updating the data visualization based on the second dataset.

13. The method of clause 12, further comprising creating and displaying a new data visualization using the second dataset.

14. The method of clause 2, wherein updating the data visualization based on the second set of one or more functional phrases comprises:

requerying the database using a third set of one or more queries based on the second set of one or more functional phrases, thereby retrieving a third dataset; and
updating the data visualization based on the third dataset.

15. The method of clause 14, further comprising creating and displaying a new data visualization using the third dataset.

16. An electronic device, comprising:

a display;
one or more processors;
memory; and
one or more programs, wherein the one or more programs are stored in the memory and configured to be executed by the one or more processors, the one or more programs including instructions for:

displaying a data visualization based on a first dataset retrieved from a database using a first set of one or more queries;
receiving a first user input to specify a first natural language command related to the data visualization;
extracting a first set of one or more independent analytic phrases from the first natural language command;
computing a first set of one or more conversation centers associated with the first natural language command based on the first set of one or more analytic phrases;
computing a first set of analytical functions associated with the first set of one or more conversation centers, thereby creating a first set of one or more functional phrases; and
updating the data visualization based on the first set of one or more functional phrases.

17. The electronic device of clause 16, wherein the one or more programs further comprise instructions for:

receiving a second user input to specify a second natural language command related to the updated data visualization;
extracting a second set of one or more independent analytic phrases from the second natural language command;
computing a temporary set of one or more conversation centers associated with the second natural language command based on the second set of one or more analytic phrases;
deriving a second set of one or more conversation centers from the first set of one or more conversation centers and the temporary set of one or more conversation centers using one or more transitional rules;
computing a second set of one or more analytical functions associated with the second set of one or more conversation centers, thereby creating a second set of one or more functional phrases; and
updating the data visualization based on the second set of one or more functional phrases.

18. A non-transitory computer readable storage medium storing one or more programs configured for execution by an electronic device with a display, the one or more programs comprising instructions for:

displaying a data visualization based on a first dataset retrieved from a database using a first set of one or more queries;
receiving a first user input to specify a first natural language command related to the data visualization;
extracting a first set of one or more independent analytic phrases from the first natural language command;
computing a first set of one or more conversation centers associated with the first natural language command based on the first set of one or more analytic phrases;
computing a first set of analytical functions associated with the first set of one or more conversation centers, thereby creating a first set of one or more functional phrases; and
updating the data visualization based on the first set of one or more functional phrases.

19. The non-transitory computer readable storage medium of clause 18, wherein the one or more programs further comprise instructions for:

receiving a second user input to specify a second natural language command related to the updated data visualization;
extracting a second set of one or more independent analytic phrases from the second natural language command;
computing a temporary set of one or more conversation centers associated with the second natural language command based on the second set of one or more analytic phrases;
deriving a second set of one or more conversation centers from the first set of one or more conversation centers and the temporary set of one or more conversation centers using one or more transitional rules;
computing a second set of one or more analytical functions associated with the second set of one or more conversation centers, thereby creating a second set of one or more functional phrases; and
updating the data visualization based on the second set of one or more functional phrases.

20. A method of using natural language for visual analysis of a dataset, comprising:
at computer having a display, one or more processors, and memory storing one or more programs configured for execution by the one or more processors:

displaying a data visualization based on a first dataset retrieved from a database using a first set of one or more queries;
receiving a first user input to specify a first natural language command related to the data visualization;
extracting a first set of one or more independent analytic phrases from the first natural language command;
computing a first set of one or more conversation centers associated with the first natural language command based on the first set of one or more analytic phrases;
computing a first set of analytical functions associated with the first set of one or more conversation centers, thereby creating a first set of one or more functional phrases;
updating the data visualization based on the first set of one or more functional phrases;
receiving a second user input to specify a second natural language command related to the updated data visualization;
extracting a second set of one or more independent analytic phrases from the second natural language command;
computing a temporary set of one or more conversation centers associated with the second natural language command based on the second set of one or more analytic phrases;
computing cohesion between the first set of one or more analytic phrases and the second set of one or more analytic phrases, and deriving a second set of one or more conversation centers from the first set of one or more conversation centers and the temporary set of one or more conversation centers based on the cohesion;
computing a second set of one or more analytical functions associated with the second set of one or more conversation centers, thereby creating a second set of one or more functional phrases; and
updating the data visualization based on the second set of one or more functional phrases.

21. The method of clause 20, wherein computing the cohesion and deriving the second set of one or more conversation centers based on the cohesion comprises:

identifying a phrase structure of the second set of one or more analytic phrases;
identifying one or more forms of pragmatics based on the phrase structure; and
deriving the second set of one or more conversation centers from the first set of one or more conversation centers and the temporary set of one or more conversation centers based on the one or more forms of pragmatics.

22. The method of clause 21, wherein identifying the phrase structure comprises:

parsing the second natural language command applying a probabilistic grammar, thereby obtaining a parsed output; and
resolving the parsed output to corresponding categorical and data attributes.

23. The method of clause 22, wherein parsing the second natural language command further comprises deducing syntactic structure by employing a part-of-speech API provided by a natural language toolkit.

24. The method of clause 21, wherein:

identifying the one or more forms of pragmatics comprises determining whether the second natural language command is an incomplete utterance by determining whether one or more linguistic elements are absent in the phrase structure; and
deriving the second set of one or more conversation centers comprises:
in accordance with the determination that the second natural language command is an incomplete utterance:

determining a first subset of conversation centers in the first set of one or more conversation centers, the first subset of conversation centers corresponding to the one or more linguistic elements absent in the phrase structure; and
computing the second set of one or more conversation centers by combining the temporary set of one or more conversation centers with the first subset of conversation centers.

25. The method of clause 21, wherein:

identifying the one or more forms of pragmatics comprises determining whether the second natural language command is a reference expression by determining whether one or more anaphoric references is present in the phrase structure; and
deriving the second set of one or more conversation centers comprises:
in accordance with the determination that the second natural command is a reference expression:

searching the first set of one or more conversation centers to find a first subset of conversation centers that corresponds to a phrasal chunk in the second natural language command that contains a first anaphoric reference of the one or more anaphoric references; and
computing the second set of one or more conversation centers based on the temporary set of one or more conversation centers and the first subset of conversation centers.

26. The method of clause 25, further comprising:

determining whether the first anaphoric reference is accompanied by a verb in the second natural language command;
in accordance with a determination that the anaphoric reference is accompanied by a verb:

searching the first set of one or more conversation centers to find a first action conversation center that refers to an action verb; and

computing the second set of one or more conversation centers based on the temporary set of one or more conversation centers, the first subset of conversation centers, and the first action conversation center.

27. The method of clause 25, further comprising:

determining whether the first anaphoric reference is a deictic reference that refers to some object in the environment;
in accordance with a determination that the anaphoric reference is a deictic reference, computing the second set of one or more conversation centers based on the temporary set of one or more conversation centers, and a characteristic of the object.

28. The method of clause 25, further comprising:

determining whether the first anaphoric reference is a reference to a visualization property in the updated data visualization;
in accordance with a determination that the anaphoric reference is a deictic reference, computing the second set of one or more conversation centers based on the temporary set of one or more conversation centers, and data related to the visualization property.

29. The method of clause 21, wherein:

identifying the one or more forms of pragmatics comprises determining whether the second natural language command is a repair utterance by determining whether the phrase structure corresponds to one or more predefined repair utterances; and
deriving the second set of one or more conversation centers comprises:
in accordance with the determination that the second natural language command is a repair utterance:

computing the second set of one or more conversation centers based on the temporary set of one or more conversation centers; and
updating one or more data attributes in the second set of one or more conversation centers based on the one or more predefined repair utterances and the phrase structure.

30. The method of clause 29, further comprising:

determining whether the phrase structure corresponds to a repair utterance to change a default behavior related to displaying a data visualization; and
in accordance with a determination that the phrase structure corresponds to a repair utterance to change a default behavior, changing the default behavior related to displaying.

31. The method of clause 21, wherein:

identifying the one or more forms of pragmatics comprises determining whether the second natural language command is a conjunctive expression by (i) determining explicit or implicit presence of conjunctions in the phrase structure, and (ii) determining whether the temporary set of one or more conversation centers includes each conversation center in the first set of one or more conversation centers; and
deriving the second set of one or more conversation centers comprises:
in accordance with the determination that the second natural language command is a conjunctive expression, computing the second set of one or more conversation centers based on the temporary set of one or more conversation centers.

32. The method of clause 31, further comprising:

determining whether the second natural language command has more than one conjunct; and
in accordance with the determination that the second natural language command has more than one conjunct, computing the second set of one or more analytical functions by linearizing the second natural language command.

33. The method of clause 13, wherein linearizing the second natural language command comprises:

generating a parse tree for the second natural language command;
traversing the parse tree in post-order to extract a first analytic phrase and a second analytic phrase, wherein the first analytic phrase and the second analytic phrase are adjacent nodes in the parse tree;
computing a first analytical function and a second analytical function corresponding to the first analytic phrase and the second analytic phrase, respectively; and
combining the first analytical function with the second analytical function by applying one or more logical operators based on one or more characteristics of the first analytical function and the second analytic function, wherein the one or more characteristics include attribute type, operator type, and a value.

34. The method of clause 33, wherein:

the first analytical function comprises a first attribute, a first operator, and a first value;
the second analytical function comprises a second attribute, a second operator, and a second value; and
combining the first analytical function with the second analytical function comprises:

determining whether the first attribute is a categorical type attribute or an ordered type attribute, and determining whether the second attribute is a categorical type attribute or an ordered type attribute;
determining whether the first attribute and the second attribute are identical; and
in accordance with a determination that the first attribute and the second attribute are identical and are both categorical type attributes, applying a union operator to combine the first analytical function and the second analytical function.

35. The method of clause 33, wherein:

the first analytical function comprises a first attribute, a first operator, and a first value;
the second analytical function comprises a second attribute, a second operator, and a second value; and
combining the first analytical function with the second analytical function comprises:

determining whether the first attribute is a categorical type attribute or an ordered type attribute, and determining whether the second attribute is a categorical type attribute or an ordered type attribute;
determining whether the first attribute and the second attribute are identical; and
in accordance with a determination that the first attribute and the second attribute are non-identical, applying the intersection operator to combine the first analytical function and the second analytical function.

36. The method of clause 33, wherein:

the first analytical function comprises a first attribute, a first operator, and a first value;
the second analytical function comprises a second attribute, a second operator, and a second value; and
combining the first analytical function with the second analytical function comprises:

determining whether the first attribute is a categorical type attribute or an ordered type attribute, and determining whether the second attribute is a categorical type attribute or an ordered type attribute;
determining whether the first attribute and the second attribute are identical; and
in accordance with a determination that the first attribute and the second attribute are identical and are both ordered type attributes:

determining the operator types of the first operator and the second operator; and
in accordance with a determination that the first operator and the second operator are both equality operators, applying the union operator to combine the first analytical function and the second analytical function.

37. The method of clause 33, wherein:

the first analytical function comprises a first attribute, a first operator, and a first value;
the second analytical function comprises a second attribute, a second operator, and a second value; and
combining the first analytical function with the second analytical function comprises:

determining whether the first attribute is a categorical type attribute or an ordered type attribute, and determining whether the second attribute is a categorical type attribute or an ordered type attribute;
determining whether the first attribute and the second attribute are identical; and
in accordance with a determination that the first attribute and the second attribute are identical and are both ordered type attributes:

determining the operator types of the first operator and the second operator; and
in accordance with a determination that the first operator is a "less than" operator and the second operator is a "greater than" operator:

determining whether the first value is less than the second value; and
in accordance with a determination that the first value is less than the second value, applying the union operator to combine the first analytical function and the second analytical function.

38. The method of clause 33, wherein:

the first analytical function comprises a first attribute, a first operator, and a first value;
the second analytical function comprises a second attribute, a second operator, and a second value; and
combining the first analytical function with the second analytical function comprises:

determining whether the first attribute is a categorical type attribute or an ordered type attribute, and determining whether the second attribute is a categorical type attribute or an ordered type attribute;
determining whether the first attribute and the second attribute are identical; and
in accordance with a determination that the first attribute and the second attribute are identical and are both ordered type attributes:

determining the operator types of the first operator and the second operator; and
in accordance with a determination that the first operator is a "greater than" operator and the second operator is a "lesser than" operator:

determining whether the first value is less than the second value; and
in accordance with a determination that the first value is less than the second value, applying the intersection operator to combine the first analytical function and the second analytical function.

39. The method of clause 20, further comprising:
computing semantic relatedness between the second set of one or more extracted analytic phrases and one or more attributes of data included in the updated data visualization, and computing analytical functions associated with the second set of one or more analytic phrases, thereby creating the second set of one or more functional phrases, based on the semantically related one or more attributes of data.

40. The method of clause 39, wherein computing semantic relatedness comprises:

training a first neutral network model on a large corpus of text, thereby learning word embeddings;
computing a first word vector for a first word in a first phrase in the second set of one or more analytic phrases using a second neural network model, the first word vector mapping the first word to the word embeddings;
computing a second word vector for a first data attribute in the one or more data attributes using the second neural network model, the second word vector mapping the first data attribute to the word embeddings; and
computing relatedness between the first word vector and the second word vector using a similarity metric.

41. The method of clause 40, wherein the first neural network model comprises Word2vec™ model.

42. The method of clause 40, wherein the second neural network model comprises recurrent neural network model.

43. The method of clause 40, wherein the similarity metric is based at least on (i) Wu-Palmer distance between word senses associated with the first word vector and the second word vector, (ii) a weighting factor, and (iii) a pairwise cosine distance between the first word vector and the second word vector.

44. The method of clause 39, wherein computing analytical functions comprises:

obtaining word definitions for the second set of one or more analytic phrases from a publicly available dictionary;
determining whether the word definitions contain one or more predefined adjectives using a part-of-speech API provided by a natural language toolkit; and
in accordance with the determination that the word definitions contain one or more predefined adjectives, mapping the one or more predefined adjectives to one or more analytical functions.

45. An electronic device, comprising:

a display;
one or more processors;
memory; and
one or more programs, wherein the one or more programs are stored in the memory and configured to be executed by the one or more processors, the one or more programs including instructions for:

displaying a data visualization based on a first dataset retrieved from a database using a first set of one or more queries;
receiving a first user input to specify a first natural language command related to the data visualization;
extracting a first set of one or more independent analytic phrases from the first natural language command;
computing a first set of one or more conversation centers associated with the first natural language command based on the first set of one or more analytic phrases;
computing a first set of analytical functions associated with the first set of one or more conversation centers, thereby creating a first set of one or more functional phrases;
updating the data visualization based on the first set of one or more functional phrases;
receiving a second user input to specify a second natural language command related to the updated data visualization;
extracting a second set of one or more independent analytic phrases from the second natural language command;
computing a temporary set of one or more conversation centers associated with the second natural language command based on the second set of one or more analytic phrases;
computing cohesion between the first set of one or more analytic phrases and the second set of one or more analytic phrases;
deriving a second set of one or more conversation centers from the first set of one or more conversation centers and the temporary set of one or more conversation centers based on the cohesion;
computing a second set of one or more analytical functions associated with the second set of one or more conversation centers, thereby creating a second set of one or more functional phrases; and
updating the data visualization based on the second set of one or more functional phrases.

46. A non-transitory computer readable storage medium storing one or more programs configured for execution by an electronic device with a display, the one or more programs comprising instructions for:

displaying a data visualization based on a first dataset retrieved from a database using a first set of one or more queries;
receiving a first user input to specify a first natural language command related to the data visualization;
extracting a first set of one or more independent analytic phrases from the first natural language command;
computing a first set of one or more conversation centers associated with the first natural language command based on the first set of one or more analytic phrases;
computing a first set of analytical functions associated with the first set of one or more conversation centers, thereby creating a first set of one or more functional phrases;
updating the data visualization based on the first set of one or more functional phrases;
receiving a second user input to specify a second natural language command related to the updated data visualization;
extracting a second set of one or more independent analytic phrases from the second natural language command;
computing a temporary set of one or more conversation centers associated with the second natural language command based on the second set of one or more analytic phrases;
computing cohesion between the first set of one or more analytic phrases and the second set of one or more analytic phrases;
deriving a second set of one or more conversation centers from the first set of one or more conversation centers and the temporary set of one or more conversation centers based on the cohesion;

computing a second set of one or more analytical functions associated with the second set of one or more conversation centers, thereby creating a second set of one or more functional phrases; and
updating the data visualization based on the second set of one or more functional phrases.

47. A method of using natural language for visual analysis of a dataset, comprising:
at computer having a display, one or more processors, and memory storing one or more programs configured for execution by the one or more processors:

displaying a data visualization based on a first dataset retrieved from a database using a first set of one or more queries;
receiving a first user input to specify a first natural language command related to the data visualization;
extracting a first set of one or more independent analytic phrases from the first natural language command;
computing a first set of one or more conversation centers associated with the first natural language command based on the first set of one or more analytic phrases;
computing a first set of analytical functions associated with the first set of one or more conversation centers, thereby creating a first set of one or more functional phrases;
updating the data visualization based on the first set of one or more functional phrases;
receiving a second user input to specify a second natural language command related to the updated data visualization;
extracting a second set of one or more independent analytic phrases from the second natural language command;
computing a temporary set of one or more conversation centers associated with the second natural language command based on the second set of one or more analytic phrases;
deriving a second set of one or more conversation centers from the first set of one or more conversation centers and the temporary set of one or more conversation centers using one or more transitional rules; and
updating the data visualization based on the second set of one or more conversation centers.

48. The method of clause 47, wherein updating the data visualization based on the second set of one or more conversation centers comprises:

determining one or more data attributes corresponding to the second set of one or more conversation centers;
scanning displayed data visualizations to identify one or more of the displayed data visualizations that contain data marks whose characteristics correspond to a first data attribute in the one or more data attributes; and
highlighting the data marks whose characteristics correspond to the first data attribute.

49. The method of clause 48, further comprising filtering results from the displayed data visualizations that contain data marks whose characteristics do not correspond to the one or more data attributes.

50. The method of clause 49, further comprising receiving a user input to determine whether to filter or to highlight the data marks, and filtering or highlighting the data marks on the displayed data visualizations based on the determination.

51. The method of clause 48, wherein the visualization characteristics include one or more of color, size, and shape.

52. The method of clause 48, wherein the visualization characteristics correspond to a visual encoding of data marks.

53. The method of clause 52, wherein the visual encoding is one or more of color, size, and shape.

54. The method of clause 48, further comprising:

determining whether none of the displayed data visualizations contain data marks whose characteristics correspond to the first data attribute; and
in accordance with the determination that none of the displayed data visualizations contain data marks whose characteristics correspond to the first data attribute:

generating a specification for a new data visualization with the first data attribute; and
displaying the new data visualization.

55. The method of clause 54, wherein displaying the new data visualization further comprises:

determining a chart type based on the specification; and
generating and displaying the chart.

56. The method of clause 55, wherein the chart is positioned using a two-dimensional grid-based layout algorithm, automatically coordinated with other data visualizations.

57. The method of clause 47, further comprising:

computing a second set of one or more analytical functions associated with the second set of one or more conversation centers, thereby creating a second set of one or more functional phrases;
selecting a first functional phrase from the second set of one or more functional phrases, wherein the first functional phrase comprises a parameterized data selection criterion;
selecting an initial range for values of the parameters of the parameterized data selection criterion;
displaying an editable user interface control corresponding to the parameterized data selection criterion, wherein the user interface control displays the current values of the parameters; and
ordering a displayed set of one or more editable user interface controls based on the order of queries in the second natural language command, wherein the order of queries is inferred while extracting the second set of one or more analytic phrases from the second natural language command.

58. The method of clause 57, wherein the user interface control allows adjustment of the first functional phrase.

59. The method of clause 58, wherein the user interface control displays a slider, which enables a user to adjust the first functional phrase.

60. The method of clause 57, wherein ordering the displayed set of one or more editable user interface controls further comprises using a library that facilitates the compact placement of small word-scale visualization within text.

61. The method of clause 60, wherein the library is Sparklificator™.

62. The method of clause 47, further comprising:

determining a first token in the second natural language command that does not correspond to any of the analytic phrases in the second set of one or more analytic phrases;
searching for a correctly spelled term corresponding to the first token using a search library by comparing the first token with one or more features of the first dataset;
substituting the correctly spelled term for the first token in the second natural language command to obtain a third natural language command; and
extracting the second set of one or more analytic phrases from the third natural language command.

63. The method of clause 62, wherein the one or more features include data attributes, cell values, and related keywords of the first dataset.

64. The method of clause 62, wherein the search library is Fuse.js™.

65. The method of clause 62, further comprising:

determining whether there is no correctly spelled term corresponding to the first token; and
in accordance with a determination that there is no correctly spelled term corresponding to the first token:

parsing the second natural language command to obtain a parse tree;
pruning the parse tree to remove the portion of the tree corresponding to the first token; and
extracting the second set of one or more analytic phrases based on the pruned parse tree.

66. The method of clause 65, further comprising generating a textual feedback indicating that the first token was unrecognized and therefore removed from the second natural language command.

67. The method of clause 62, further comprising displaying the first token.

68. The method of clause 62, further comprising generating a textual feedback indicating that the correctly spelled term is substituted for the first token in the second natural language command.

69. The method of clause 68, further comprising displaying and highlighting the correctly spelled term.

70. An electronic device, comprising:

a display;
one or more processors;
memory; and
one or more programs, wherein the one or more programs are stored in the memory and configured to be executed by the one or more processors, the one or more programs including instructions for:

displaying a data visualization based on a first dataset retrieved from a database using a first set of one or more queries;
receiving a first user input to specify a first natural language command related to the data visualization;
extracting a first set of one or more independent analytic phrases from the first natural language command;
computing a first set of one or more conversation centers associated with the first natural language command based on the first set of one or more analytic phrases;
computing a first set of analytical functions associated with the first set of one or more conversation centers, thereby creating a first set of one or more functional phrases;
updating the data visualization based on the first set of one or more functional phrases;
receiving a second user input to specify a second natural language command related to the updated data visualization;
extracting a second set of one or more independent analytic phrases from the second natural language command;
computing a temporary set of one or more conversation centers associated with the second natural language command based on the second set of one or more analytic phrases;
deriving a second set of one or more conversation centers from the first set of one or more conversation centers and the temporary set of one or more conversation centers using one or more transitional rules; and
updating the data visualization based on the second set of one or more conversation centers, wherein the updating comprises:

determining one or more data attributes corresponding to the second set of one or more conversation centers;
scanning displayed data visualizations to identify one or more of the displayed data visualizations that contain data marks whose characteristics correspond to a first data attribute in the one or more data attributes; and
highlighting the data marks whose characteristics correspond to the first data attribute.

71. A non-transitory computer readable storage medium storing one or more programs configured for execution by an electronic device with a display, the one or more programs comprising instructions for:

displaying a data visualization based on a first dataset retrieved from a database using a first set of one or more queries;
receiving a first user input to specify a first natural language command related to the data visualization;
extracting a first set of one or more independent analytic phrases from the first natural language command;
computing a first set of one or more conversation centers associated with the first natural language command based on the first set of one or more analytic phrases;
computing a first set of analytical functions associated with the first set of one or more conversation centers, thereby creating a first set of one or more functional phrases;
updating the data visualization based on the first set of one or more functional phrases;
receiving a second user input to specify a second natural language command related to the updated data visualization;
extracting a second set of one or more independent analytic phrases from the second natural language command;
computing a temporary set of one or more conversation centers associated with the second natural language command based on the second set of one or more analytic phrases;
deriving a second set of one or more conversation centers from the first set of one or more conversation centers and the temporary set of one or more conversation centers using one or more transitional rules; and
updating the data visualization based on the second set of one or more conversation centers, wherein the updating comprises:

determining one or more data attributes corresponding to the second set of one or more conversation centers;
scanning displayed data visualizations to identify one or more of the displayed data visualizations that contain data marks whose characteristics correspond to a first data attribute in the one or more data attributes; and
highlighting the data marks whose characteristics correspond to the first data attribute.

## Claims

**1.** A method of using natural language for visual analysis of a dataset, comprising:

at a computer having a display, one or more processors, and memory storing one or more programs configured for execution by the one or more processors:
displaying a data visualization based on a first dataset retrieved from a database using a first set of one or more queries;
receiving a first user input that includes a first utterance $U_n$ of a discourse segment DS of a discourse that is related to the data visualization, wherein:

in accordance with a determination that the first utterance $U_n$ is the first utterance in the discourse segment DS, assigning a null value to a first set of backward-looking centers $C_b$ ($U_n$) associated with the first utterance $U_n$; and
in accordance with a determination that the first utterance $U_n$ is preceded by a previous utterance $U_{n-1}$ in the discourse segment DS, assigning forward-looking centers $C_b$ ($U_{n-1}$) associated with the previous utterance $U_{n-1}$ as the backward-looking centers $C_b$ ($U_n$) for the first utterance $U_n$;
wherein each center associated with a respective utterance includes entities in the discourse segment DS that link the respective utterance to other utterances in the discourse segment DS;

extracting a first set of one or more analytic phrases $P_n$ from the first utterance $U_n$, each of the analytic phrases $P_n$ having a direct or indirect reference to a data attribute in the data visualization;
computing a first set of temporary centers $C_{temp}(U_n)$ from the first utterance $U_n$ without consideration for previous utterances;
computing a first set of forward-looking centers $C_f(U_n)$ associated with the first utterance $U_n$ based on the first set of one or more analytic phrases $P_n$ by applying one or more transitional rules to derive the first set of forward-looking centers $C_f(U_n)$ from the first set of backward-looking centers $C_b$ ($U_n$) and the first set of temporary conversation centers $C_{temp}$ ($U_n$);
creating a first set of one or more analytical functions based on the first set of forward-looking centers $C_f(U_n)$; and
updating the data visualization by executing the first set of one or more analytical functions;
wherein the first set of forward-looking conversation centers $C_f(U_n)$ and the first set of temporary centers $C_{temp}(U_n)$ each includes a value for a variable that specifies one or more of: a data field attribute, a data visualization property, or an analytical action.

**2.** The method of claim 1, further comprising:

receiving a second user input that includes a second utterance $U_{n+1}$ of the discourse segment *DS,* wherein the first utterance $U_n$ precedes the second utterance $U_{n+1}$;
assigning the first set of forward-looking centers $C_f(U_n)$ associated with the first utterance $U_n$ as backward-looking centers $C_b$ ($U_{n+1}$) for the second utterance $U_{n+1}$;
extracting a second set of one or more analytic phrases $P_{n+1}$ from the second utterance $U_{n+1}$, each of the analytic phrases $P_{n+1}$ having a direct or indirect reference to a data attribute in the data visualization;
computing a second set of temporary centers $C_{temp}$ ($U_{n+1}$) from the second utterance $U_{n+1}$ without consideration for previous utterances;
computing a second set of forward-looking centers $C_f(U_{n+1})$ associated with the second utterance $U_{n+1}$ based on the second set of one or more analytic phrases $P_{n+1}$ by applying one or more transitional rules to derive the second set of forward-looking centers $C_f(U_{n+1})$ from the second set of backward-looking $C_b$ ($U_{n+1}$) and the second set of temporary centers $C_{temp}$ ($U_{n+1}$);
creating a second set of one or more analytical functions based on the second set of forward-looking centers $C_f$($U_{n+1}$); and
updating the data visualization by executing the second set of analytical functions;
wherein the second set of forward-looking centers $C_f$($U_{n+1}$) and the second set of temporary centers $C_{temp}$ ($U_{n+1}$) each includes a value for a variable that specifies one or more of: a data field attribute, a data visualization property, or an analytical action.

**3.** The method any one of claims 1-2, wherein each analytical function includes (i) a variable that refers to an attribute or a visual property of the data visualization, (ii) an operator, and (iii) a respective value for the variable.

**4.** The method of any one of claims 1-3, further comprising:
in accordance with a determination that a variable is included in the second set of temporary centers $C_{temp}$ ($U_{n+1}$) and that the variable is not included in the second set of backward-looking center $C_b$ ($U_{n+1}$), applying a CONTINUE transitional rule that continues the context from the second set of backward-looking center $C_b$ ($U_{n+1}$) to the second set of forward-looking centers $C_f$($U_{n+1}$).

**5.** The method of claim 4, wherein applying the CONTINUE transitional rule includes:
including all entities of the second set of backward-looking centers $C_b$ ($U_{n+1}$) and all entities of the second set of temporary centers $C_{temp}$ ($U_{n+1}$) in the second set of forward-looking centers $C_f$($U_{n+1}$).

**6.** The method of any one of claims 1-5, further comprising:
in accordance with a determination that a variable is included in the second set of backward-looking centers $C_b$ ($U_{n+1}$) and that the variable is not included in the second set of temporary centers $C_{temp}$ ($U_{n+1}$), applying a RETAIN transitional rule that retains the context from the second set of backward-looking center $C_b$ ($U_{n+1}$) in the second set of forward-looking centers $C_f$($U_{n+1}$) without adding additional entities.

**7.** The method of claim 6, wherein applying the RETAIN transitional rule includes:
including all entities of the second set of backward-looking centers $C_b$ ($U_{n+1}$) in the second set of forward-looking centers $C_f$($U_{n+1}$).

**8.** The method of any one of claims 1-7, further comprising:
in accordance with a determination that a variable is included in the second set of temporary centers $C_{temp}$ ($U_{n+1}$) with an assigned first value and the variable is included in the second set of backward-looking center $C_b$ ($U_{n+1}$) with an assigned second value distinct from the first value, applying a SHIFT transitional rule that shifts the context from the second set of backward-looking center $C_b$ ($U_{n+1}$).

**9.** The method of claim 8, wherein applying the SHIFT transitional rule includes:
including all entities of the second set of backward-looking centers $C_b$ ($U_{n+1}$) that do not refer to the variable in the second set of forward-looking centers $C_f$($U_{n+1}$), and including all entities in the second set of temporary centers $C_{temp}$ ($U_{n+1}$) that refer to the variable in the second set of forward-looking centers $C_f$($U_{n+1}$).

**10.** The method of any one of claims 1-9, further comprising:
computing cohesion between the first set of one or more analytic phrases and the second set of one or more analytic phrases, wherein (i) the cohesion includes similarity in lexical or grammatical structures between the first set of one or more analytic phrases and the second set of one or more analytic phrases, and (ii) the second set of forward-looking centers $C_f$($U_{n+1}$) associated with the second utterance $U_{n+1}$ is derived from the first set of backward-looking $C_b$ ($U_{n+1}$) and the second set of temporary centers $C_{temp}$ ($U_{n+1}$) based on the computed cohesion.

**11.** The method of claim 10, wherein deriving the second set of forward-looking centers $C_f$ ($U_{n+1}$) from the first set of backward-looking $C_b$ ($U_{n+1}$) and the second set of temporary centers $C_{temp}$ ($U_{n+1}$) based on the computed cohesion includes:

identifying a phrase structure of the second set of one or more analytic phrases $P_{n+1}$;
identifying one or more forms of pragmatics based on the phrase structure; and
deriving the second set of forward-looking centers $C_f$($U_{n+1}$) from the first set of backward-looking $C_b$ ($U_{n+1}$) and the second set of temporary centers $C_{temp}$ ($U_{n+1}$) based on the one or more forms of pragmatics.

**12.** The method of claim 10, wherein identifying the phrase structure includes:

parsing the second utterance $U_{n+1}$ and applying a probabilistic grammar, thereby obtaining a parsed output; and
resolving the parsed output to corresponding data attributes in the data visualization.

**13.** The method of claim 10, wherein identifying one or more forms of pragmatics based on the phrase structure further comprises determining one or more of:

whether the second utterance $U_{n+1}$ is an incomplete utterance;
whether the second utterance $U_{n+1}$ is a reference expression;
whether the second utterance $U_{n+1}$ is a repair utterance; and
whether the second utterance $U_{n+1}$ is a conjunctive expression.

**14.** An electronic device, comprising:

a display;
one or more processors;
memory; and
one or more programs, wherein the one or more programs are stored in the memory and configured to be executed by the one or more processors, the one or more programs including instructions for causing the electronic device to perform a method according to any one of claims 1 to 13.

**15.** A non-transitory computer readable storage medium storing one or more programs configured for execution by an electronic device with a display, the one or more programs comprising instructions for causing the electronic device to perform a method according to any one of claims 1 to 13.

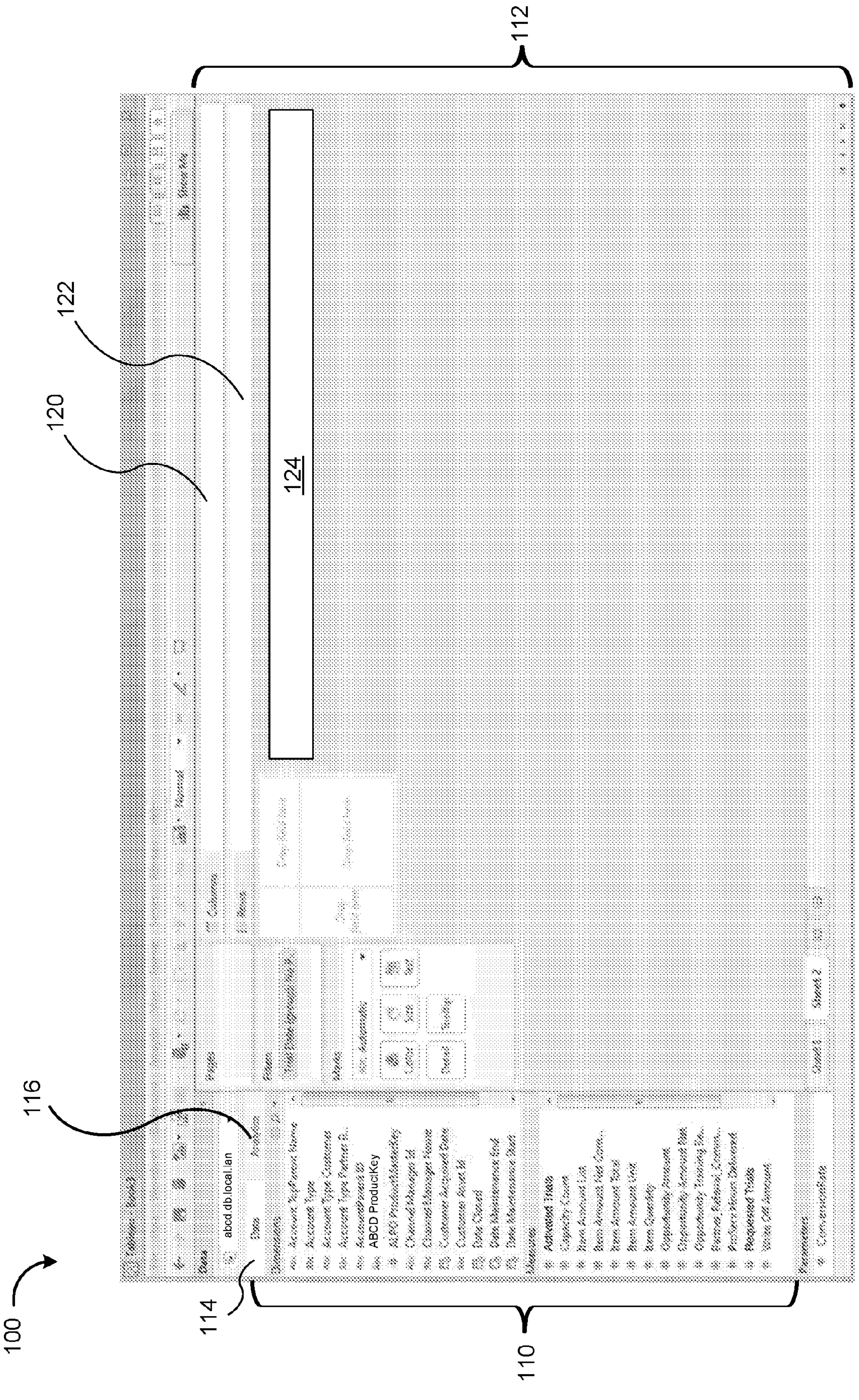
100
110
112
114
116
120
122
124
abcd.db.local.lan
ABCD ProductKey

Figure 1

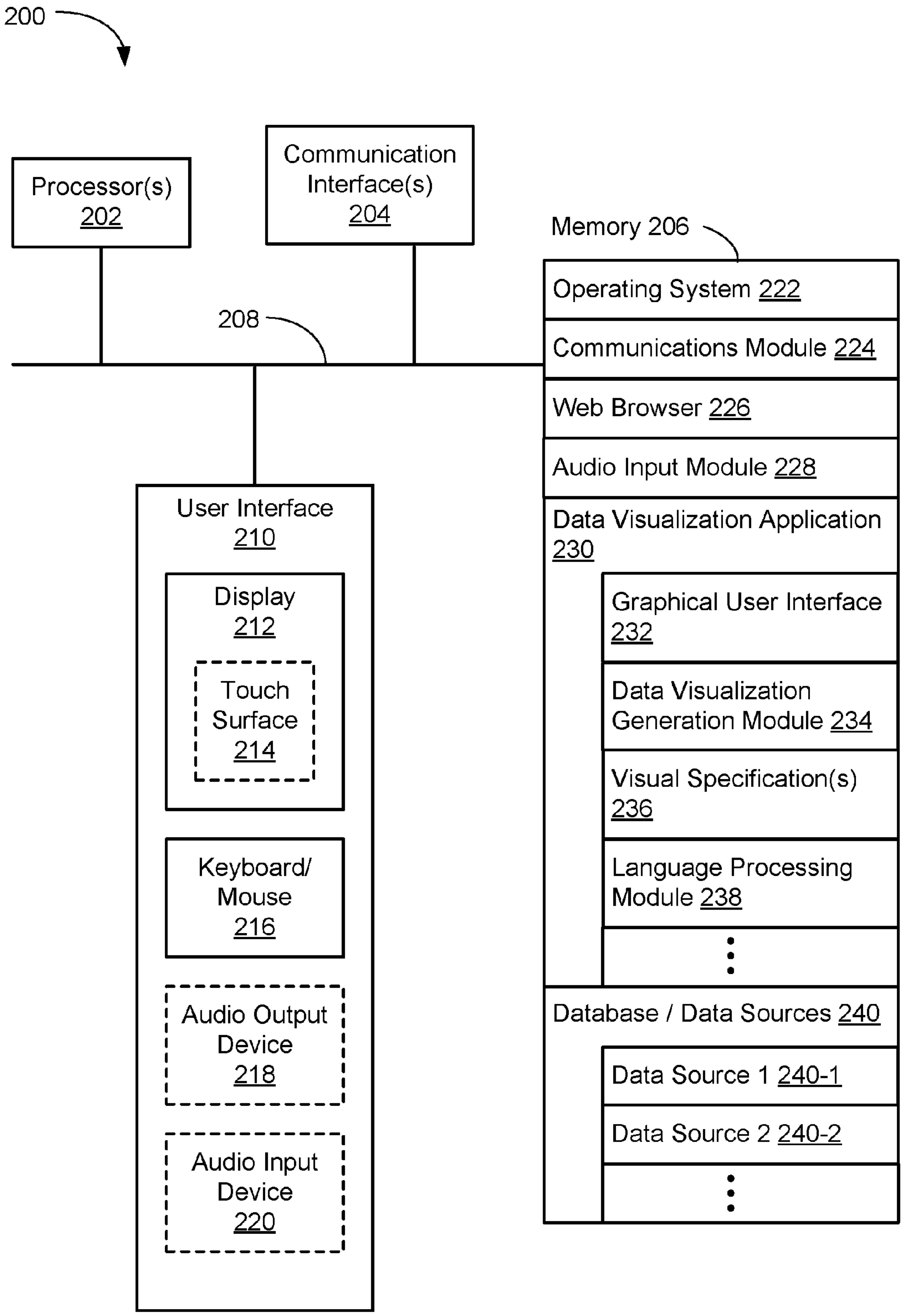
200
Processor(s)
202
Communication
Interface(s)
204
Memory 206
208
Operating System 222
Communications Module 224
Web Browser 226
Audio Input Module 228
Data Visualization Application
230
Graphical User Interface
232
Data Visualization
Generation Module 234
Visual Specification(s)
236
Language Processing
Module 238
Database / Data Sources 240
Data Source 1 240-1
Data Source 2 240-2
User Interface
210
Display
212
Touch
Surface
214
Keyboard/
Mouse
216
Audio Output
Device
218
Audio Input
Device
220

Figure 2

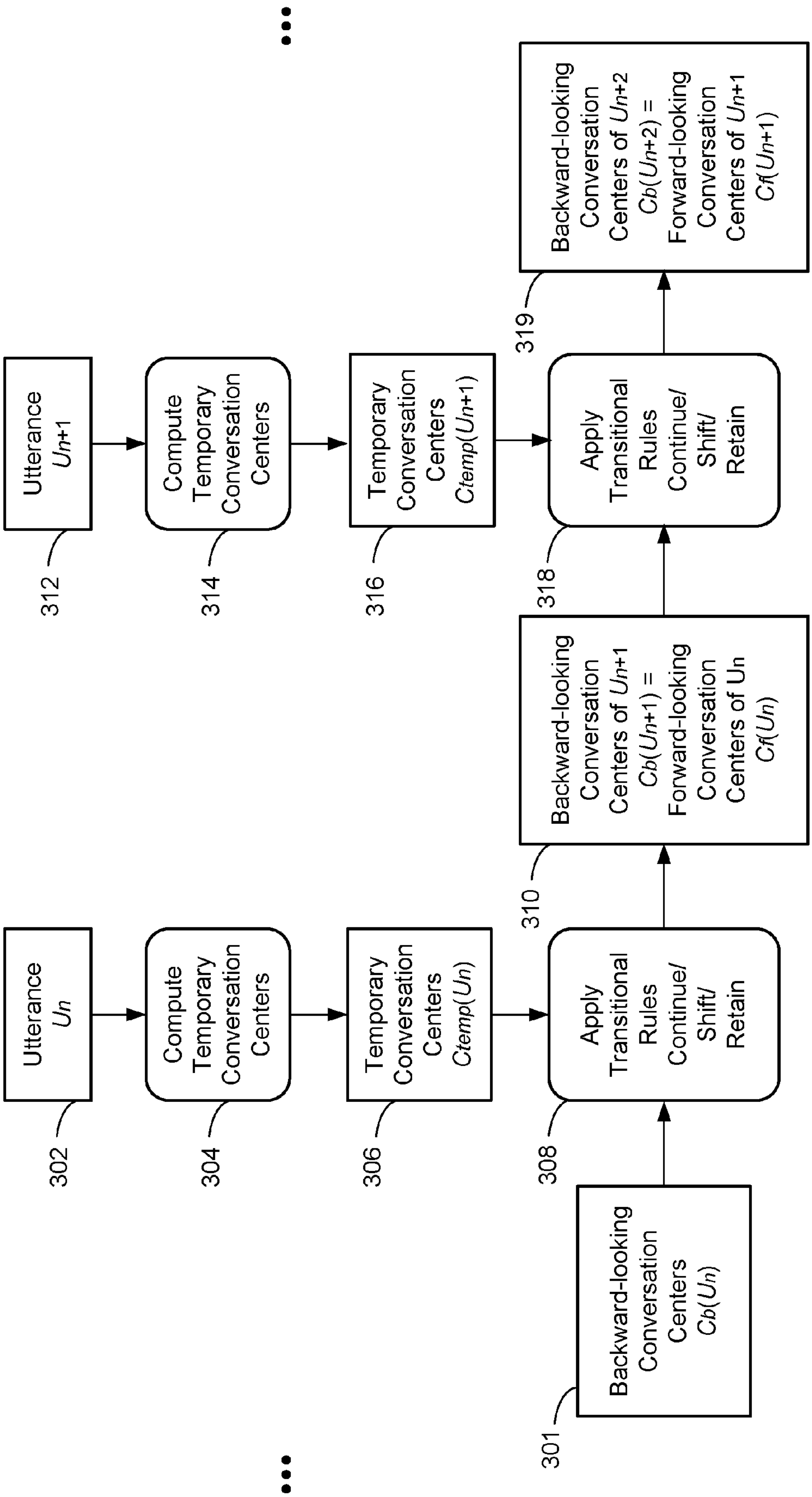
301
Backward-looking Conversation Centers Cb(Un)
302
Utterance Un
304
Compute Temporary Conversation Centers
306
Temporary Conversation Centers Ctemp(Un)
308
Apply Transitional Rules Continue/ Shift/ Retain
310
Backward-looking Conversation Centers of Un+1 Cb(Un+1) = Forward-looking Conversation Centers of Un Cf(Un)
312
Utterance Un+1
314
Compute Temporary Conversation Centers
316
Temporary Conversation Centers Ctemp(Un+1)
318
Apply Transitional Rules Continue/ Shift/ Retain
319
Backward-looking Conversation Centers of Un+2 Cb(Un+2) = Forward-looking Conversation Centers of Un+1 Cf(Un+1)

Figure 3A

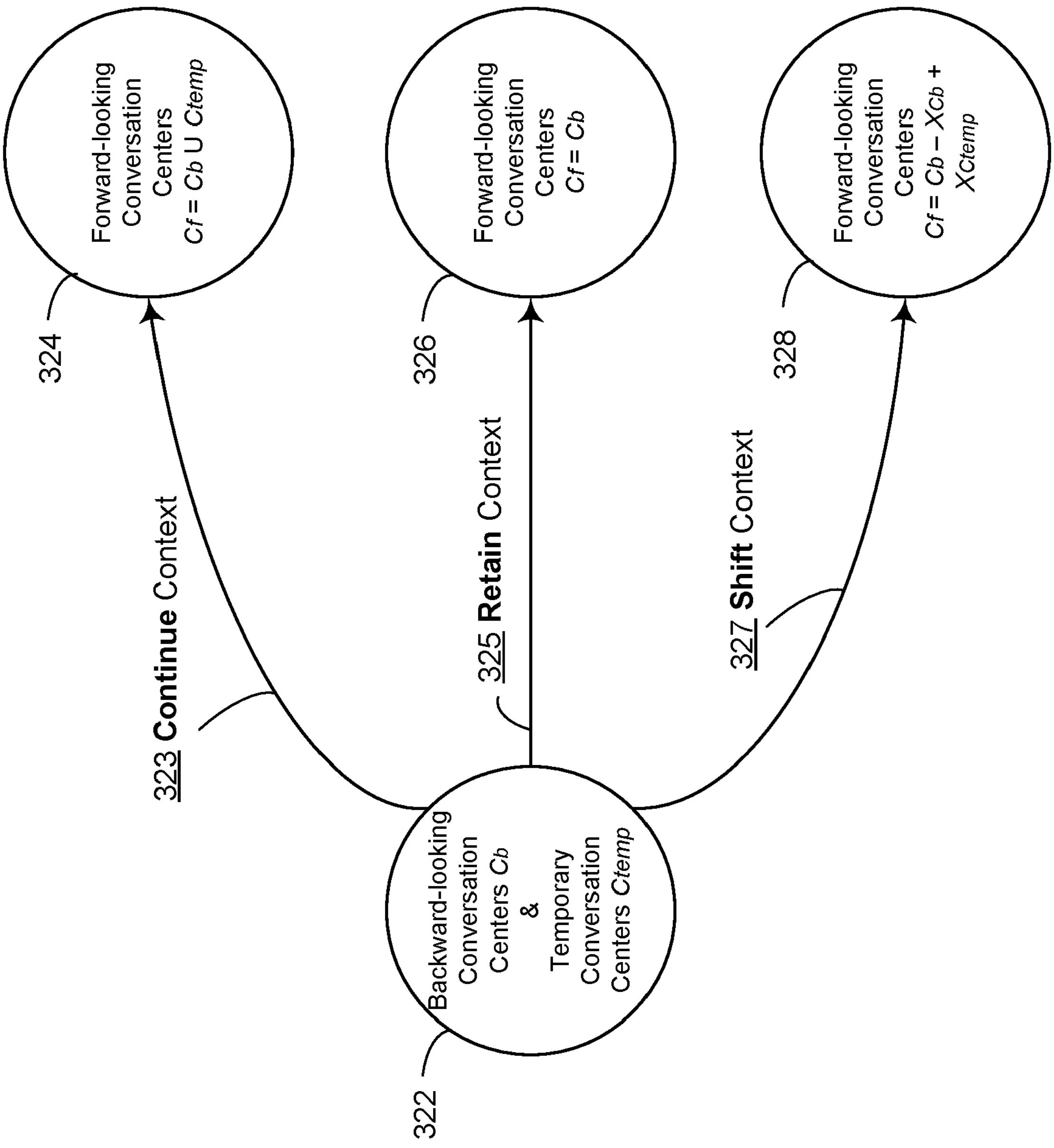
Forward-looking Conversation Centers Cf = Cb U Ctemp
Forward-looking Conversation Centers Cf = Cb
Forward-looking Conversation Centers Cf = Cb – XCb + XCtemp
324
326
328
323 Continue Context
325 Retain Context
327 Shift Context
Backward-looking Conversation Centers Cb & Temporary Conversation Centers Ctemp
322

Figure 3B

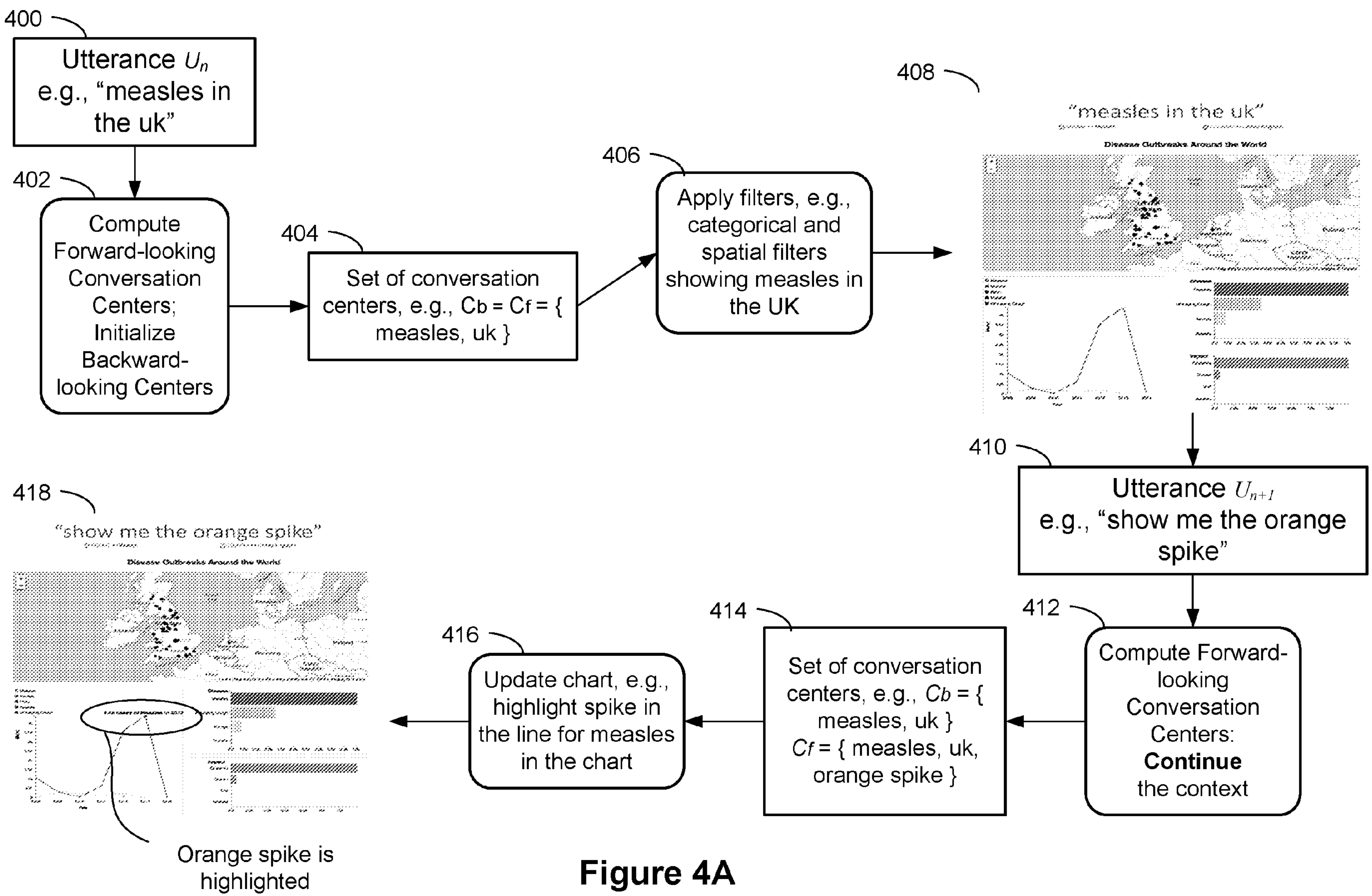
400
Utterance $U_n$ e.g., "measles in the uk"
402
Compute Forward-looking Conversation Centers; Initialize Backward-looking Centers
404
Set of conversation centers, e.g., $C_b = C_f$ = { measles, uk }
406
Apply filters, e.g., categorical and spatial filters showing measles in the UK
408
"measles in the uk"
410
Utterance $U_{n+1}$ e.g., "show me the orange spike"
412
Compute Forward-looking Conversation Centers: **Continue** the context
414
Set of conversation centers, e.g., $C_b$ = { measles, uk } $C_f$ = { measles, uk, orange spike }
416
Update chart, e.g., highlight spike in the line for measles in the chart
418
"show me the orange spike"
Orange spike is highlighted

Figure 4A

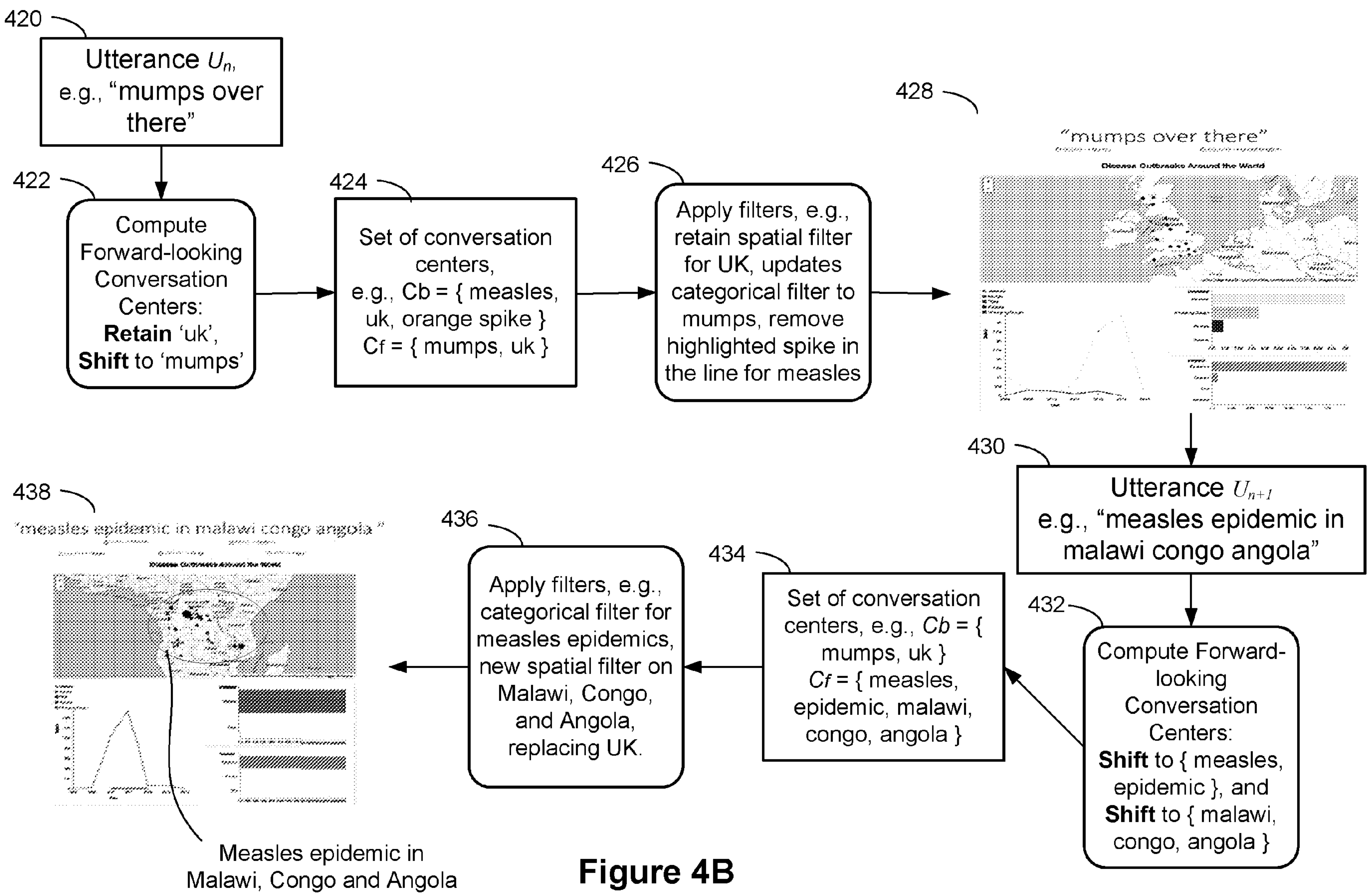
420
Utterance $U_n$, e.g., “mumps over there”
422
Compute Forward-looking Conversation Centers: **Retain** ‘uk’, **Shift** to ‘mumps’
424
Set of conversation centers, e.g., Cb = { measles, uk, orange spike } Cf = { mumps, uk }
426
Apply filters, e.g., retain spatial filter for **UK**, updates categorical filter to mumps, remove highlighted spike in the line for measles
428
“mumps over there”
430
Utterance $U_{n+1}$ e.g., “measles epidemic in malawi congo angola”
432
Compute Forward-looking Conversation Centers: **Shift** to { measles, epidemic }, and **Shift** to { malawi, congo, angola }
434
Set of conversation centers, e.g., *Cb* = { mumps, uk } *Cf* = { measles, epidemic, malawi, congo, angola }
436
Apply filters, e.g., categorical filter for measles epidemics, new spatial filter on Malawi, Congo, and Angola, replacing UK.
438
“measles epidemic in malawi congo angola”
Measles epidemic in Malawi, Congo and Angola

Figure 4B

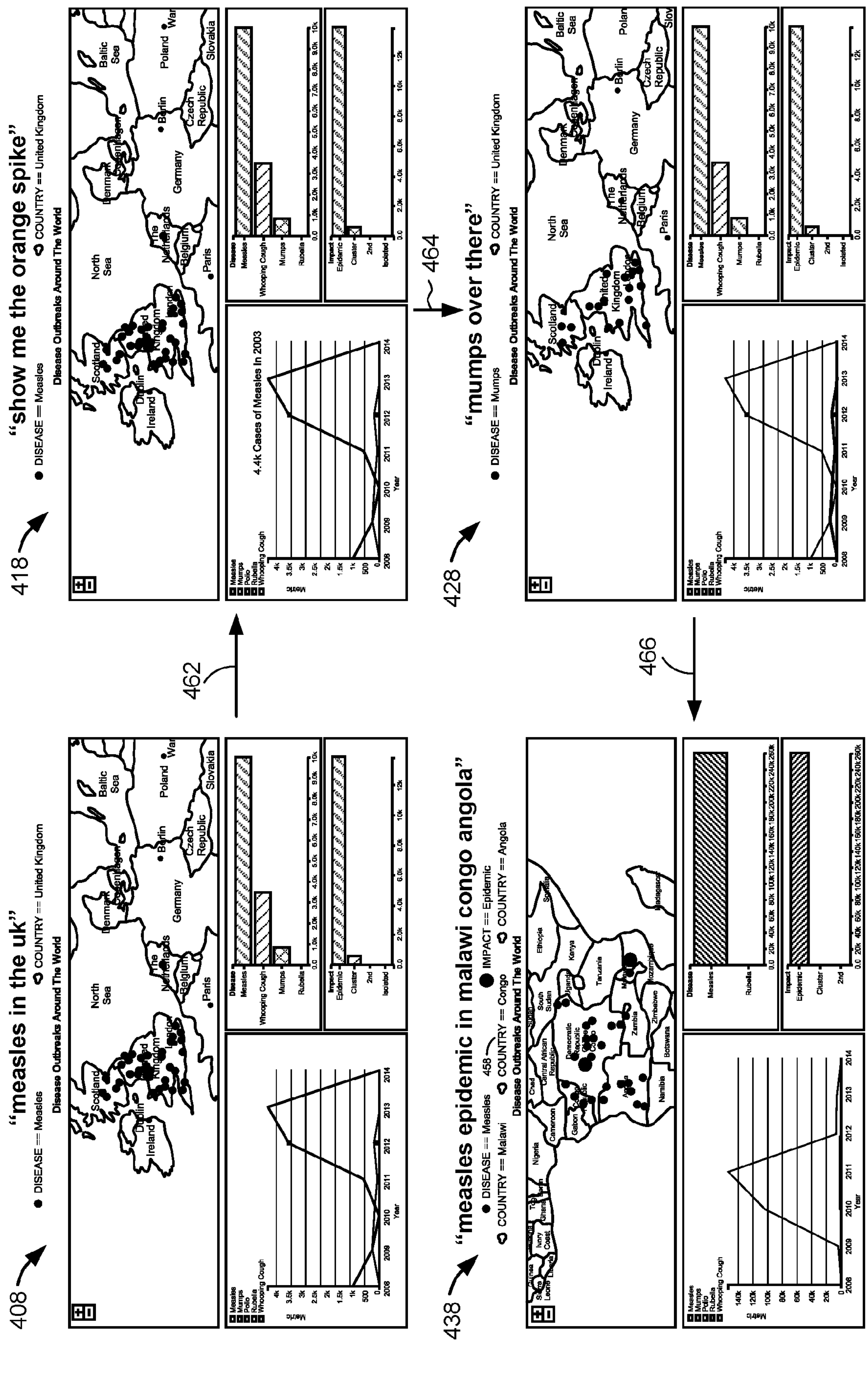
408
"measles in the uk"
DISEASE == Measles
COUNTRY == United Kingdom
Disease Outbreaks Around The World
418
"show me the orange spike"
DISEASE == Measles
COUNTRY == United Kingdom
Disease Outbreaks Around The World
4.4k Cases of Measles In 2003
462
464
428
"mumps over there"
DISEASE == Mumps
COUNTRY == United Kingdom
Disease Outbreaks Around The World
466
438
"measles epidemic in malawi congo angola"
DISEASE == Measles
IMPACT == Epidemic
COUNTRY == Malawi
458
COUNTRY == Congo
COUNTRY == Angola
Disease Outbreaks Around The World
Measles
Mumps
Polio
Rubella
Whooping Cough
Metric
Year
Disease
Impact
Epidemic
Cluster
2nd
Isolated

Figure 4C

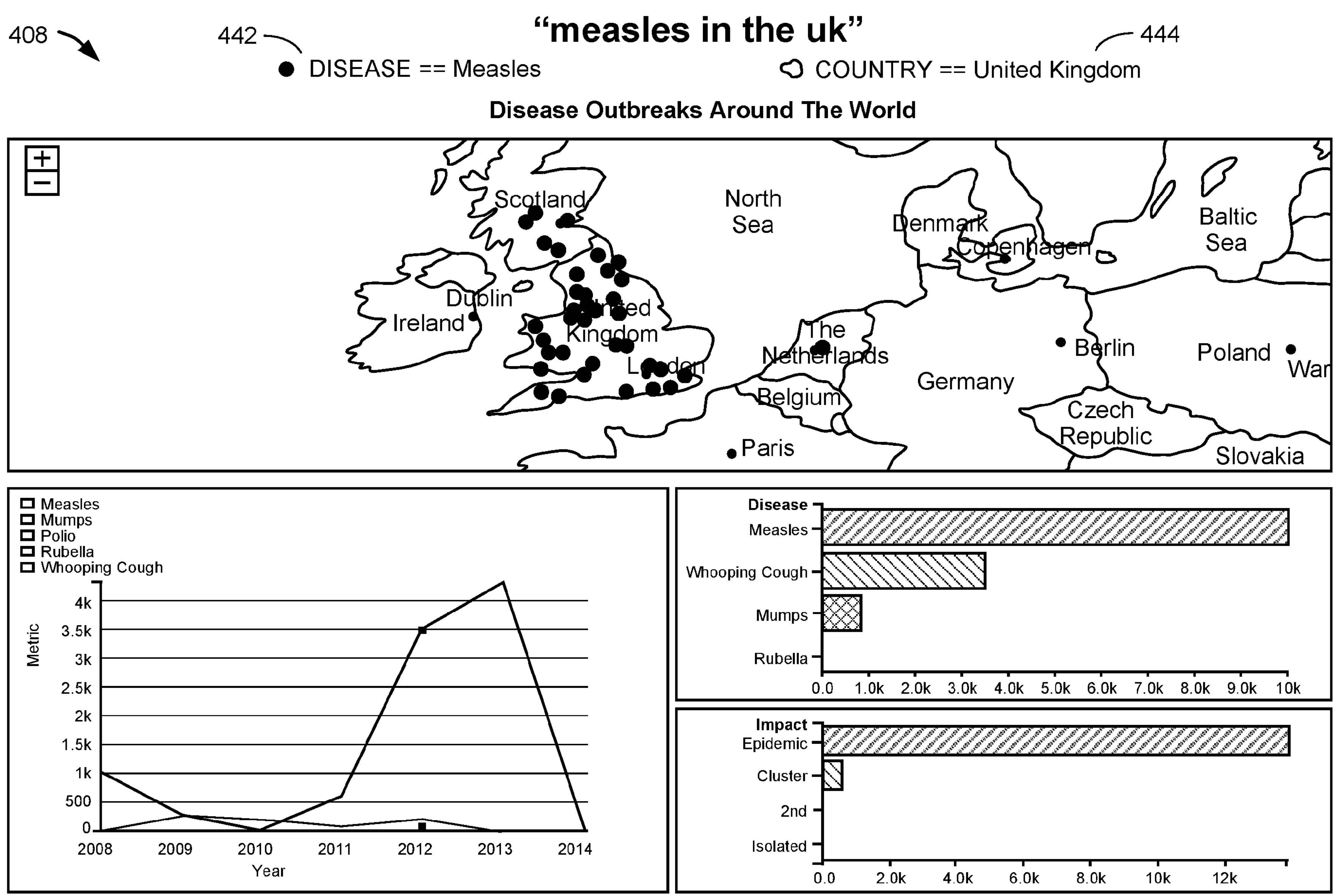
408
442
444
"measles in the uk"
DISEASE == Measles
COUNTRY == United Kingdom
Disease Outbreaks Around The World
Scotland
North Sea
Denmark
Copenhagen
Baltic Sea
Dublin
Ireland
United Kingdom
London
The Netherlands
Belgium
Paris
Germany
Berlin
Poland
War
Czech Republic
Slovakia
Measles
Mumps
Polio
Rubella
Whooping Cough
Metric
4k
3.5k
3k
2.5k
2k
1.5k
1k
500
0
2008
2009
2010
2011
2012
2013
2014
Year
Disease
Measles
Whooping Cough
Mumps
Rubella
0.0 1.0k 2.0k 3.0k 4.0k 5.0k 6.0k 7.0k 8.0k 9.0k 10k
Impact
Epidemic
Cluster
2nd
Isolated
0.0 2.0k 4.0k 6.0k 8.0k 10k 12k

Figure 4D

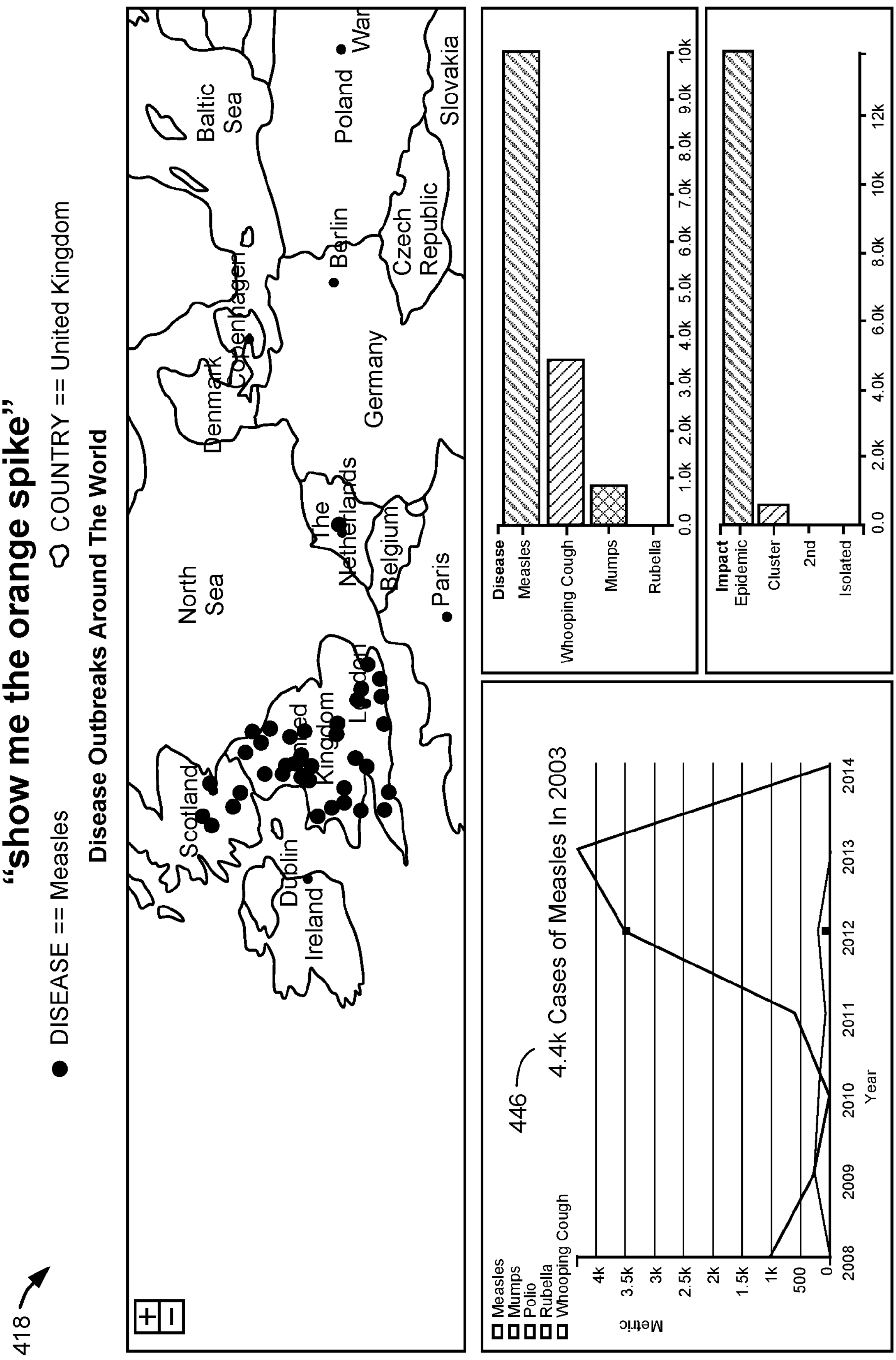

418
"show me the orange spike"
DISEASE == Measles
COUNTRY == United Kingdom
Disease Outbreaks Around The World
Scotland
Dublin
Ireland
United Kingdom
London
North Sea
The Netherlands
Belgium
Paris
Denmark
Copenhagen
Germany
Berlin
Baltic Sea
Poland
Czech Republic
Slovakia
War
446
4.4k Cases of Measles In 2003
Measles
Mumps
Polio
Rubella
Whooping Cough
Metric
4k
3.5k
3k
2.5k
2k
1.5k
1k
500
0
2008
2009
2010
2011
2012
2013
2014
Year
Disease
Measles
Whooping Cough
Mumps
Rubella
0.0
1.0k
2.0k
3.0k
4.0k
5.0k
6.0k
7.0k
8.0k
9.0k
10k
Impact
Epidemic
Cluster
2nd
Isolated
0.0
2.0k
4.0k
6.0k
8.0k
10k
12k


Figure 4E

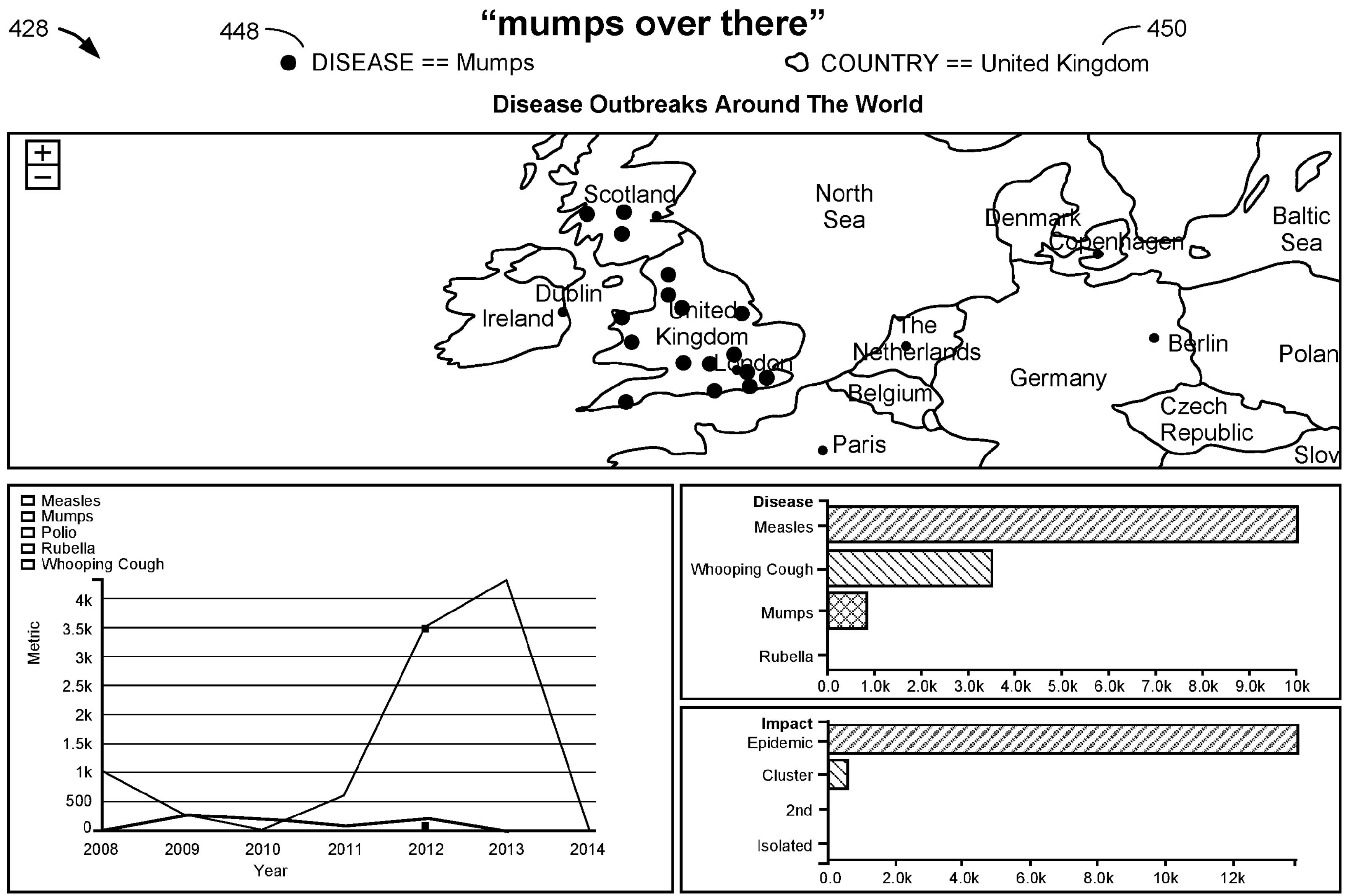
428
448
"mumps over there"
450
DISEASE == Mumps
COUNTRY == United Kingdom
Disease Outbreaks Around The World
Scotland
Ireland
Dublin
United Kingdom
London
North Sea
The Netherlands
Belgium
Paris
Denmark
Copenhagen
Baltic Sea
Germany
Berlin
Polan
Czech Republic
Slov
Measles
Mumps
Polio
Rubella
Whooping Cough
Metric
4k
3.5k
3k
2.5k
2k
1.5k
1k
500
0
2008
2009
2010
2011
2012
2013
2014
Year
Disease
Measles
Whooping Cough
Mumps
Rubella
0.0 1.0k 2.0k 3.0k 4.0k 5.0k 6.0k 7.0k 8.0k 9.0k 10k
Impact
Epidemic
Cluster
2nd
Isolated
0.0 2.0k 4.0k 6.0k 8.0k 10k 12k

Figure 4F

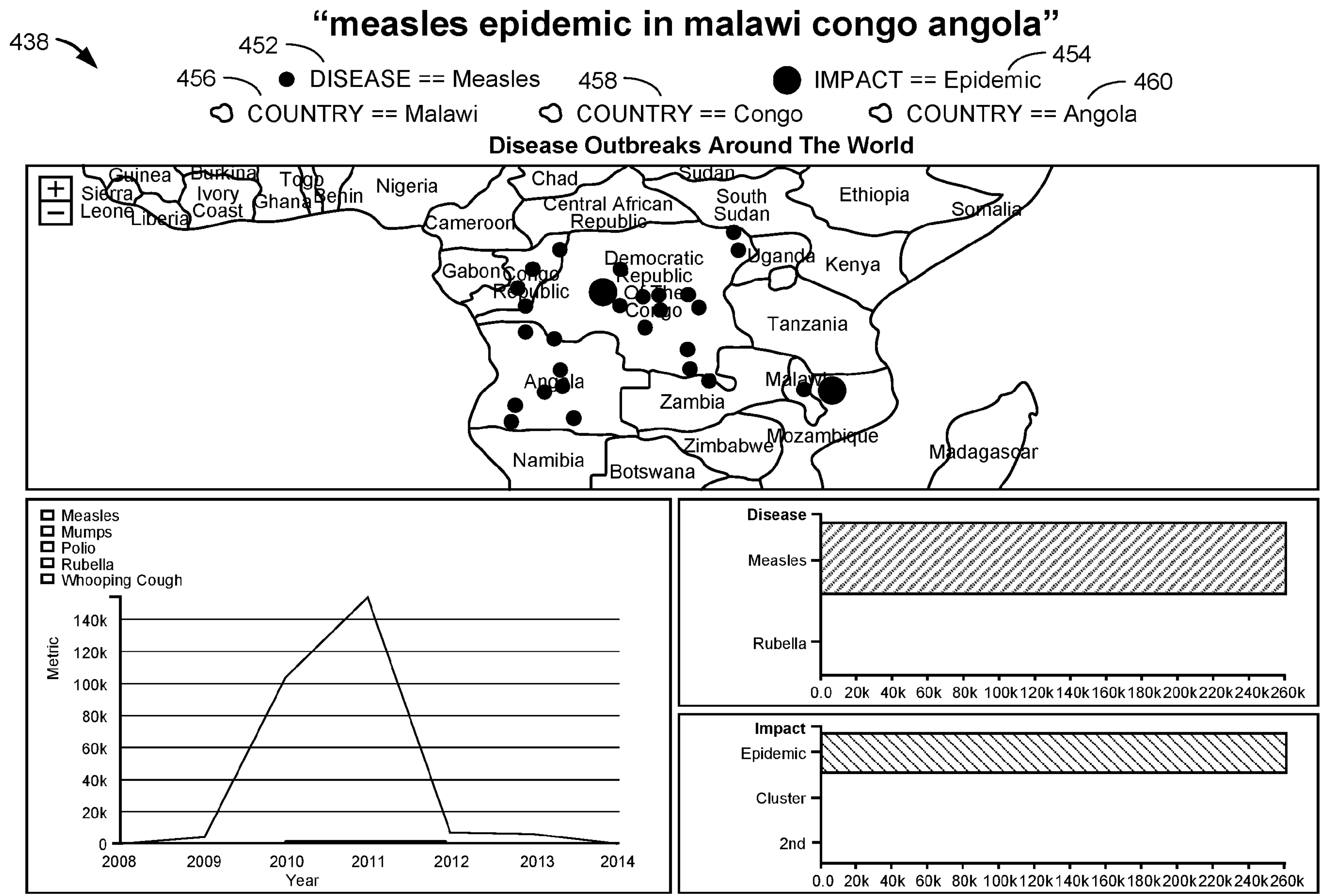

438
"measles epidemic in malawi congo angola"
452
454
456
458
460
DISEASE == Measles
IMPACT == Epidemic
COUNTRY == Malawi
COUNTRY == Congo
COUNTRY == Angola
Disease Outbreaks Around The World
Guinea
Burkina
Togo
Sierra Leone
Ivory Coast
Ghana
Benin
Liberia
Nigeria
Chad
Sudan
South Sudan
Ethiopia
Somalia
Central African Republic
Cameroon
Gabon
Congo Republic
Democratic Republic Of The Congo
Uganda
Kenya
Tanzania
Angola
Zambia
Malawi
Mozambique
Zimbabwe
Namibia
Botswana
Madagascar
Measles
Mumps
Polio
Rubella
Whooping Cough
Metric
140k
120k
100k
80k
60k
40k
20k
0
2008
2009
2010
2011
2012
2013
2014
Year
Disease
Measles
Rubella
0.0 20k 40k 60k 80k 100k 120k 140k 160k 180k 200k 220k 240k 260k
Impact
Epidemic
Cluster
2nd
0.0 20k 40k 60k 80k 100k 120k 140k 160k 180k 200k 220k 240k 260k


Figure 4G

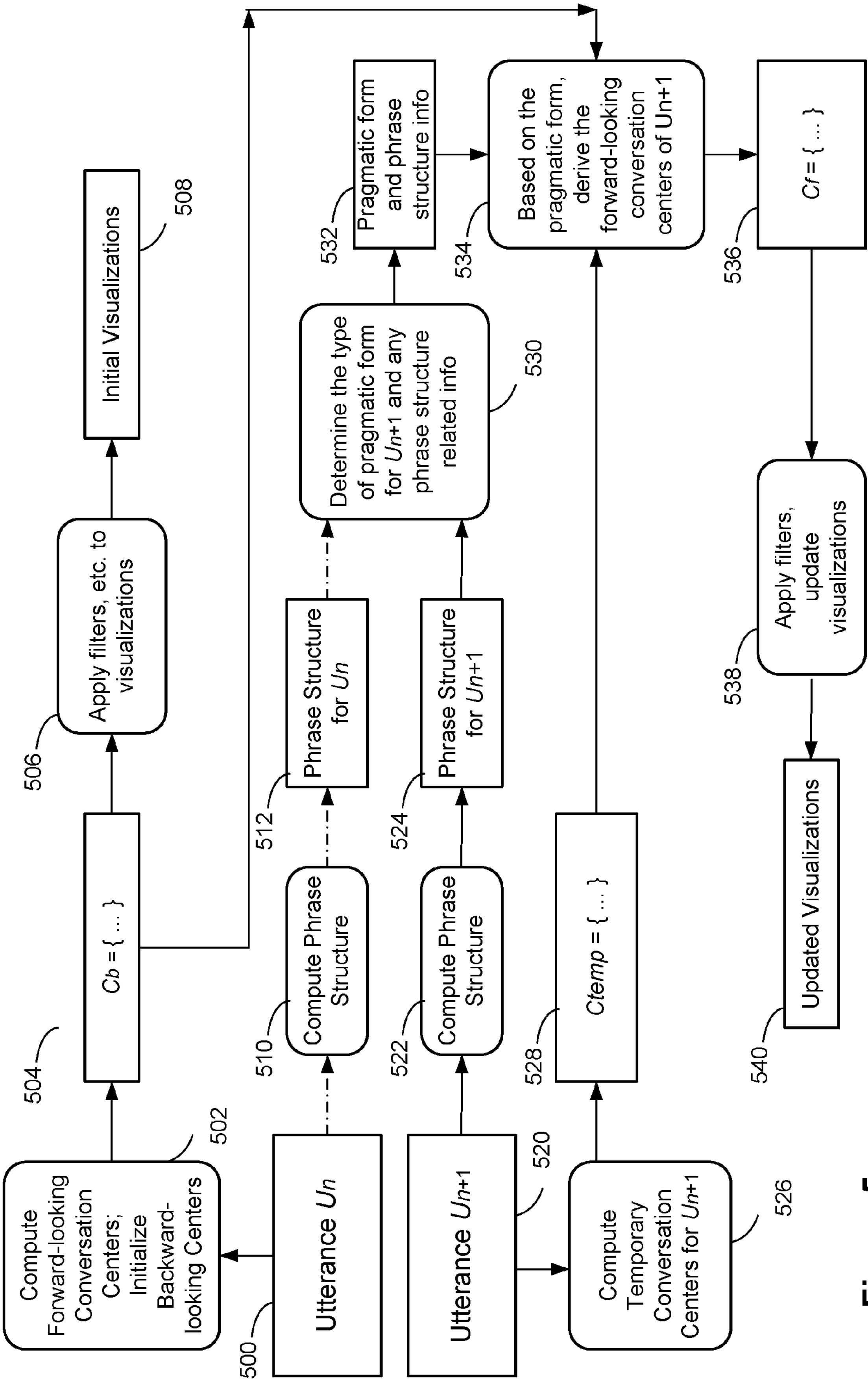
Compute Forward-looking Conversation Centers; Initialize Backward-looking Centers
502
500
Utterance $U_n$
Utterance $U_{n+1}$
520
Compute Temporary Conversation Centers for $U_{n+1}$
526
504
$C_b$ = { ... }
506
Apply filters, etc. to visualizations
Initial Visualizations
508
510
Compute Phrase Structure
512
Phrase Structure for $U_n$
522
Compute Phrase Structure
524
Phrase Structure for $U_{n+1}$
Determine the type of pragmatic form for $U_{n+1}$ and any phrase structure related info
530
532
Pragmatic form and phrase structure info
528
$C_{temp}$ = { ... }
534
Based on the pragmatic form, derive the forward-looking conversation centers of Un+1
536
$C_f$ = { ... }
538
Apply filters, update visualizations
540
Updated Visualizations

Figure 5

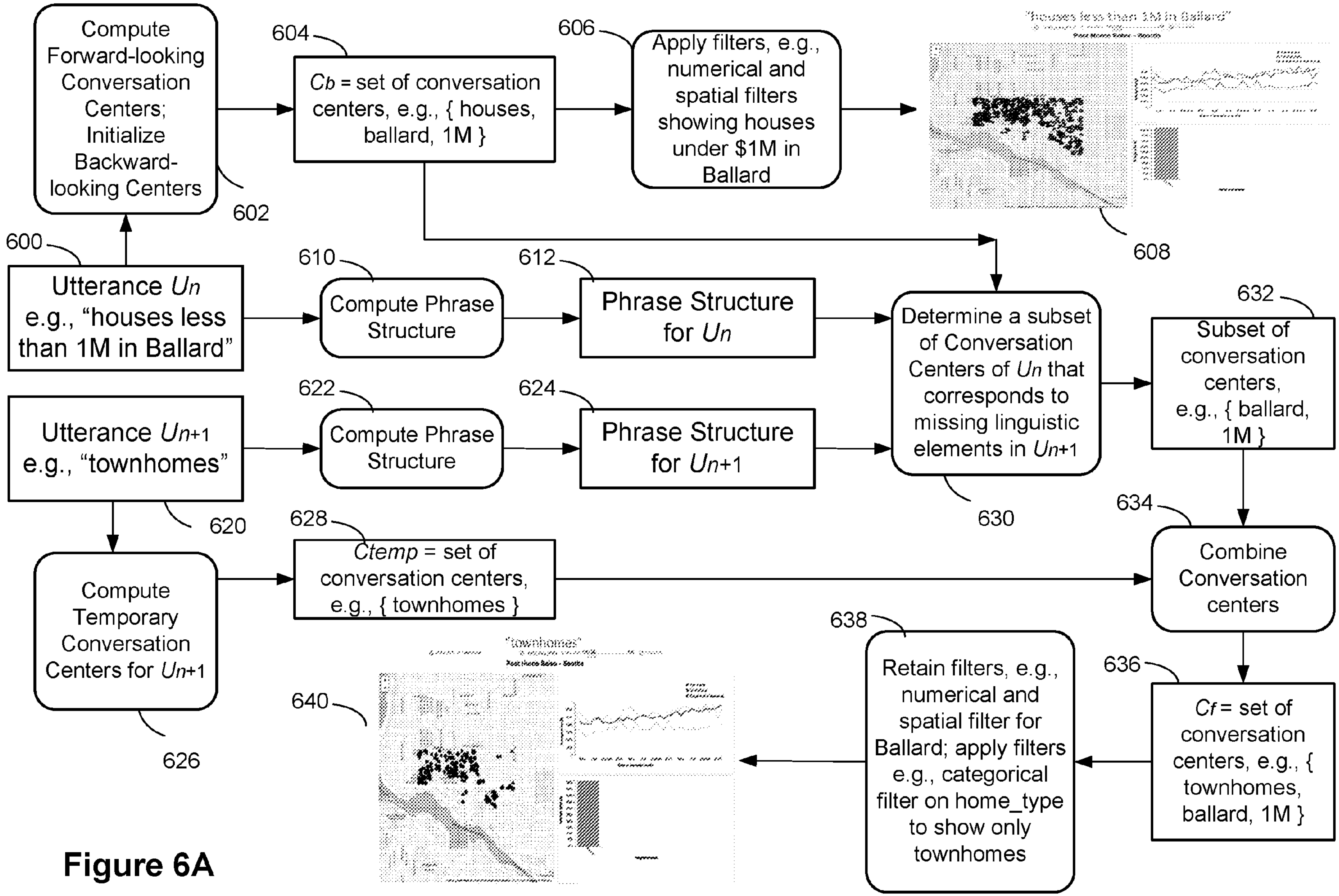

Compute Forward-looking Conversation Centers; Initialize Backward-looking Centers
602
604
Cb = set of conversation centers, e.g., { houses, ballard, 1M }
606
Apply filters, e.g., numerical and spatial filters showing houses under $1M in Ballard
"houses less than 1M in Ballard"
608
600
Utterance Un e.g., "houses less than 1M in Ballard"
610
Compute Phrase Structure
612
Phrase Structure for Un
Determine a subset of Conversation Centers of Un that corresponds to missing linguistic elements in Un+1
630
632
Subset of conversation centers, e.g., { ballard, 1M }
622
Compute Phrase Structure
624
Phrase Structure for Un+1
Utterance Un+1 e.g., "townhomes"
620
628
Ctemp = set of conversation centers, e.g., { townhomes }
634
Combine Conversation centers
Compute Temporary Conversation Centers for Un+1
626
638
Retain filters, e.g., numerical and spatial filter for Ballard; apply filters e.g., categorical filter on home_type to show only townhomes
636
Cf = set of conversation centers, e.g., { townhomes, ballard, 1M }
"townhomes"
640


Figure 6A

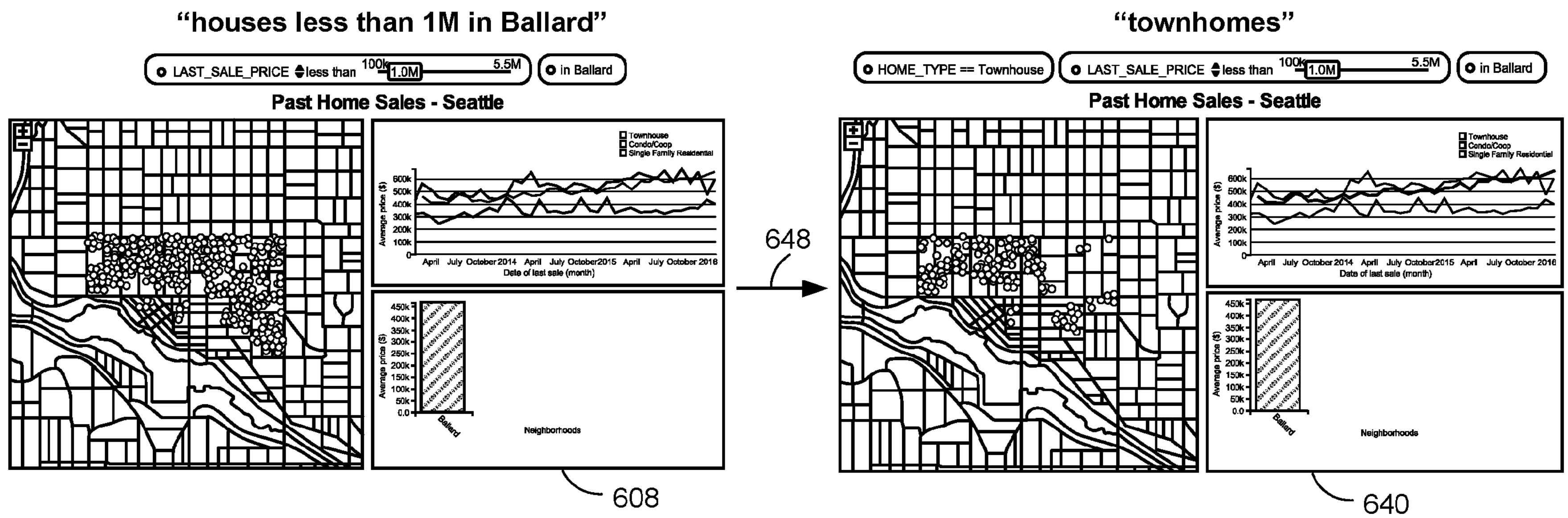
"houses less than 1M in Ballard"
LAST_SALE_PRICE less than 100k 1.0M 5.5M
in Ballard
Past Home Sales - Seattle
Townhouse
Condo/Coop
Single Family Residential
Average price ($)
600k
500k
400k
300k
200k
100k
0
April July October 2014 April July October2015 April July October 2016
Date of last sale (month)
450k
400k
350k
300k
250k
200k
150k
100k
50k
0.0
Ballard
Neighborhoods
608
648
"townhomes"
HOME_TYPE == Townhouse
LAST_SALE_PRICE less than 100k 1.0M 5.5M
in Ballard
Past Home Sales - Seattle
640

Figure 6B

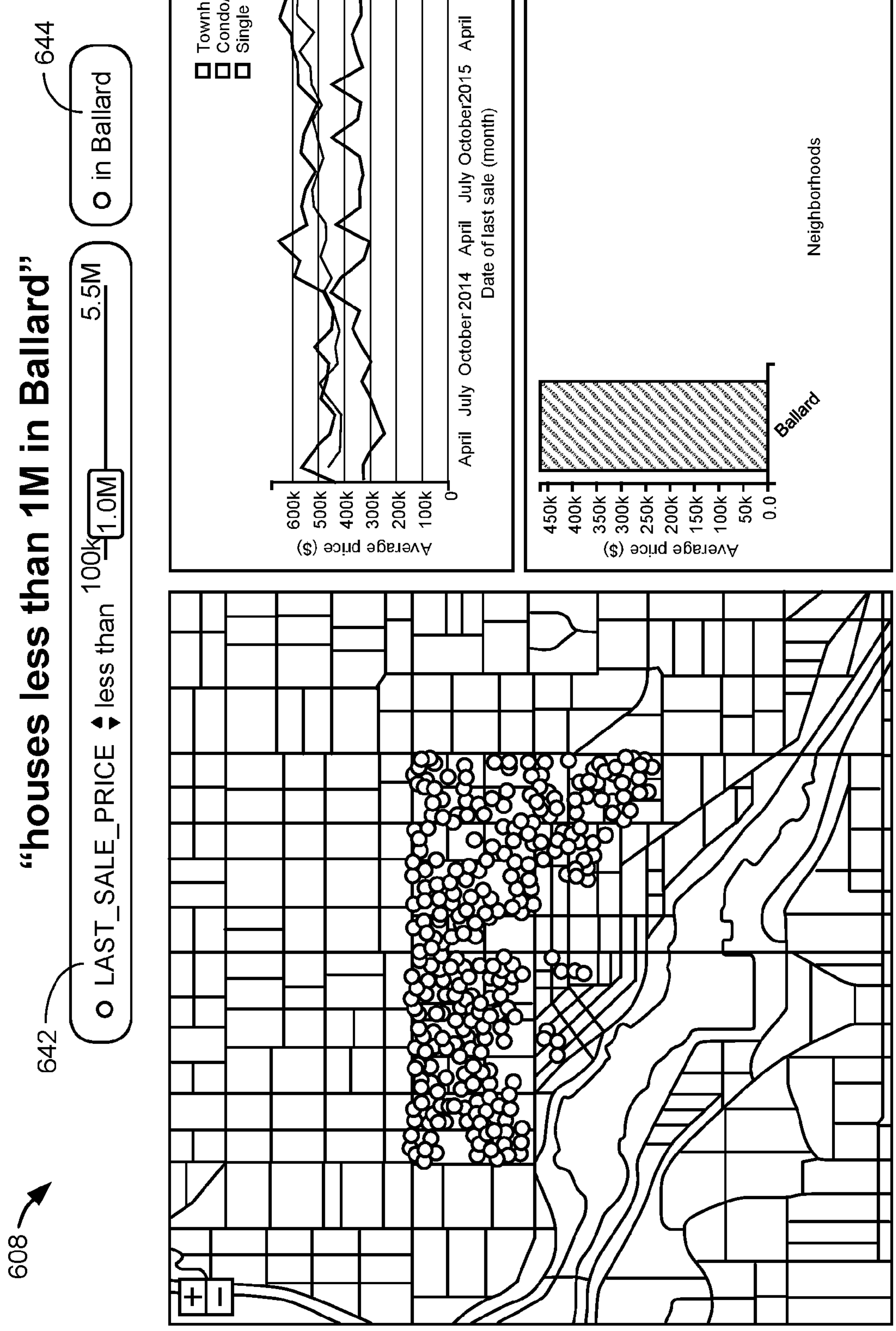
608
"houses less than 1M in Ballard"
642
LAST_SALE_PRICE less than
100k
1.0M
5.5M
644
in Ballard
Average price ($)
600k
500k
400k
300k
200k
100k
0
April July October 2014 April July October 2015 April July October 2016
Date of last sale (month)
Townhouse
Condo/Coop
Single family Residential
Average price ($)
450k
400k
350k
300k
250k
200k
150k
100k
50k
0.0
Ballard
Neighborhoods

Figure 6C

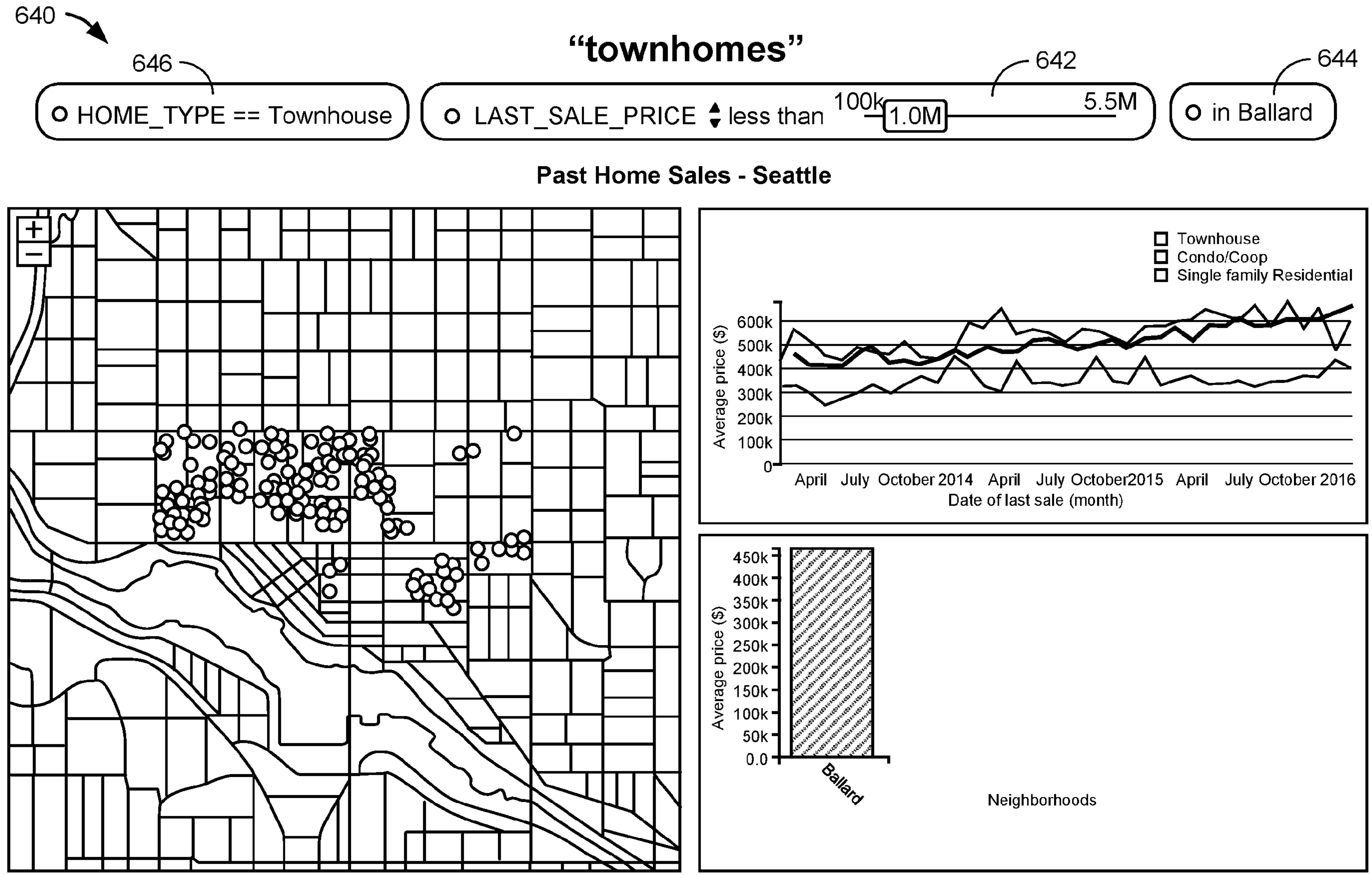
640
646
642
644
"townhomes"
HOME_TYPE == Townhouse
LAST_SALE_PRICE less than 100k 1.0M 5.5M
in Ballard
Past Home Sales - Seattle
Townhouse
Condo/Coop
Single family Residential
Average price ($)
600k
500k
400k
300k
200k
100k
0
April July October 2014 April July October2015 April July October 2016
Date of last sale (month)
Average price ($)
450k
400k
350k
300k
250k
200k
150k
100k
50k
0.0
Ballard
Neighborhoods

Figure 6D

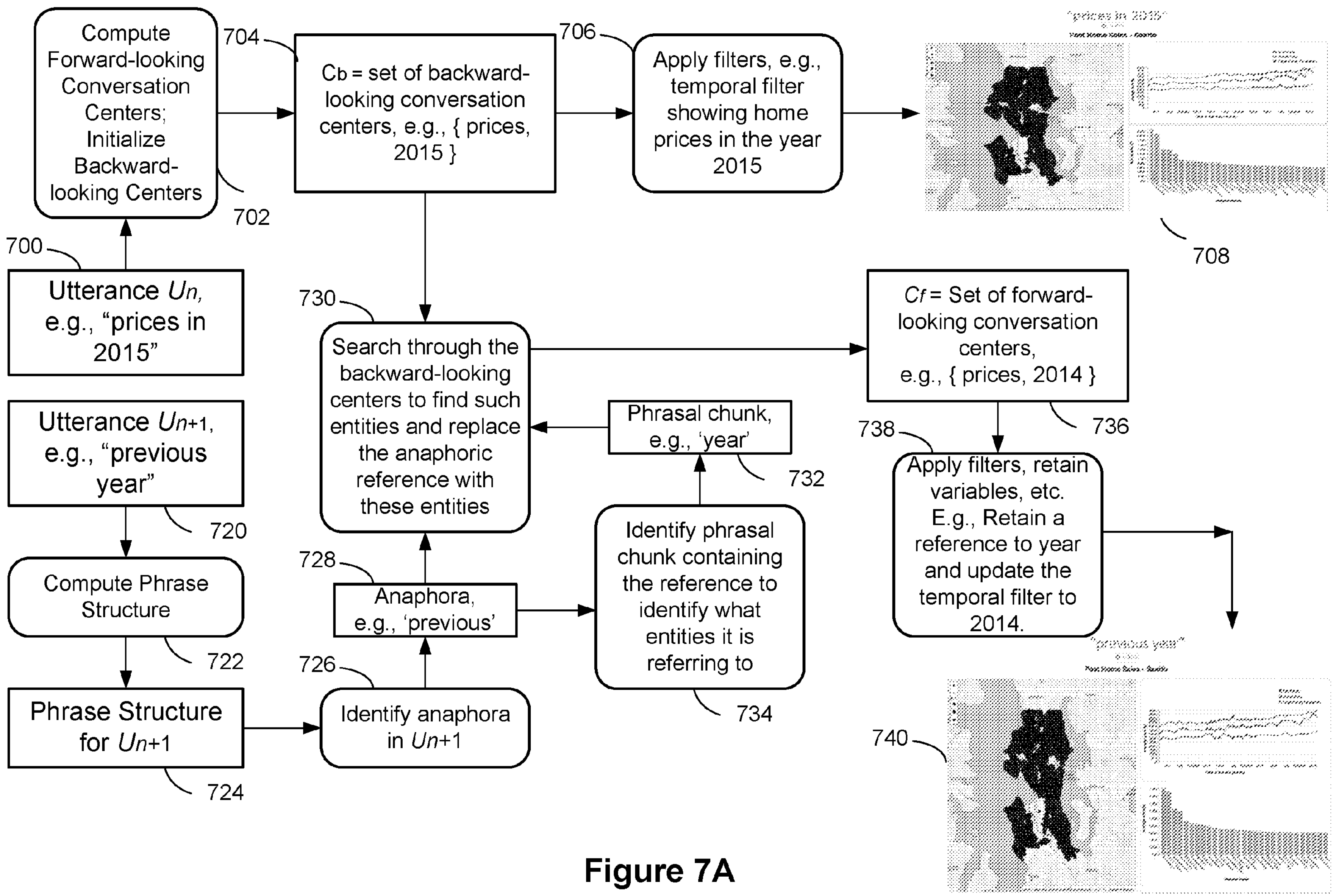
Compute Forward-looking Conversation Centers; Initialize Backward-looking Centers
702
704
Cb = set of backward-looking conversation centers, e.g., { prices, 2015 }
706
Apply filters, e.g., temporal filter showing home prices in the year 2015
708
700
Utterance Un, e.g., "prices in 2015"
Utterance Un+1, e.g., "previous year"
720
Compute Phrase Structure
722
Phrase Structure for Un+1
724
730
Search through the backward-looking centers to find such entities and replace the anaphoric reference with these entities
728
Anaphora, e.g., 'previous'
726
Identify anaphora in Un+1
Phrasal chunk, e.g., 'year'
732
Identify phrasal chunk containing the reference to identify what entities it is referring to
734
Cf = Set of forward-looking conversation centers, e.g., { prices, 2014 }
736
738
Apply filters, retain variables, etc. E.g., Retain a reference to year and update the temporal filter to 2014.
740

Figure 7A

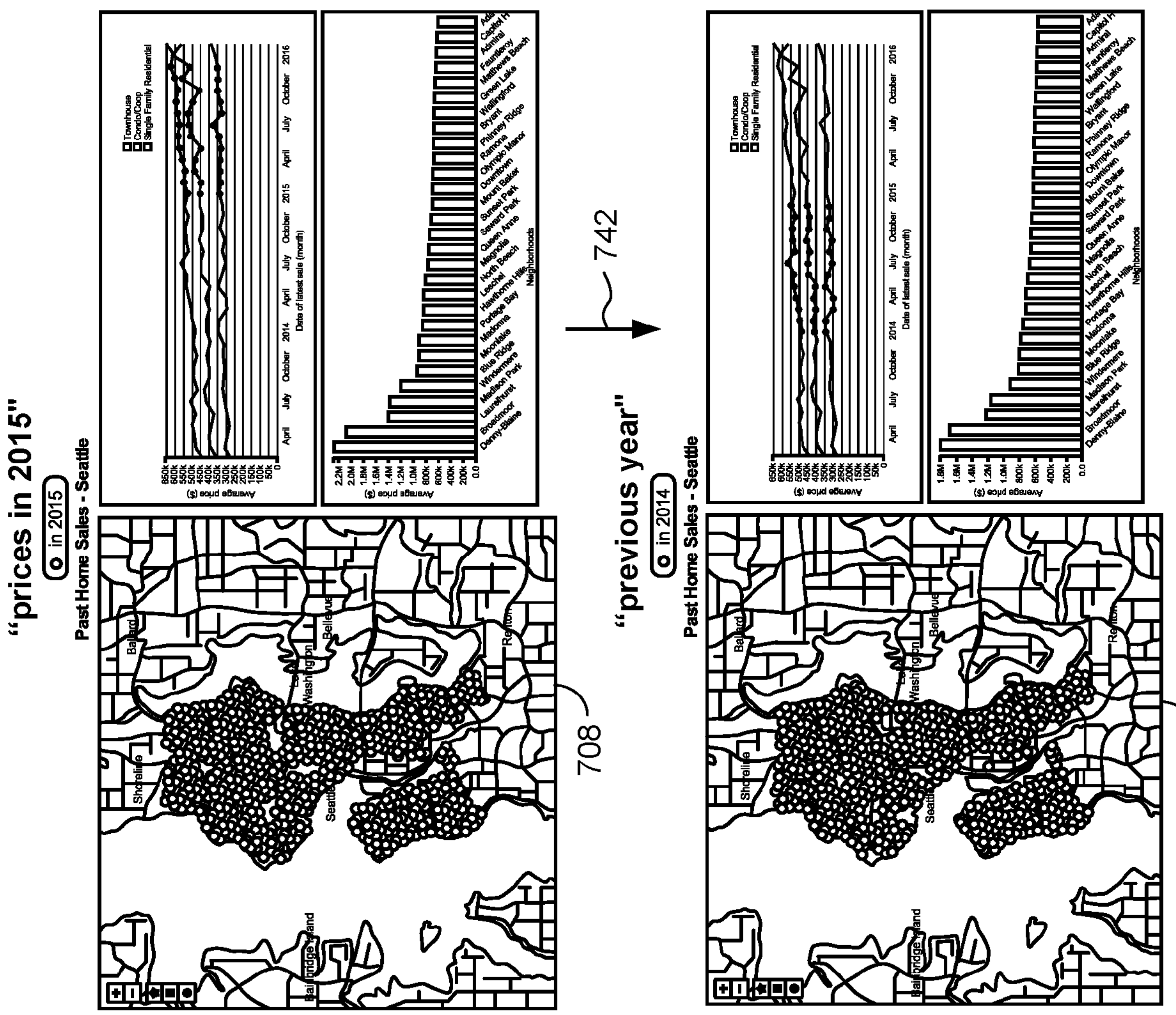
"prices in 2015"
in 2015
Past Home Sales - Seattle
Townhouse
Condo/Coop
Single Family Residential
Average price ($)
Date of latest sale (month)
Neighborhoods
Ballard
Shoreline
Seattle
Lake Washington
Bellevue
Renton
Bainbridge Island
708
742
"previous year"
in 2014
Past Home Sales - Seattle
740

Figure 7B

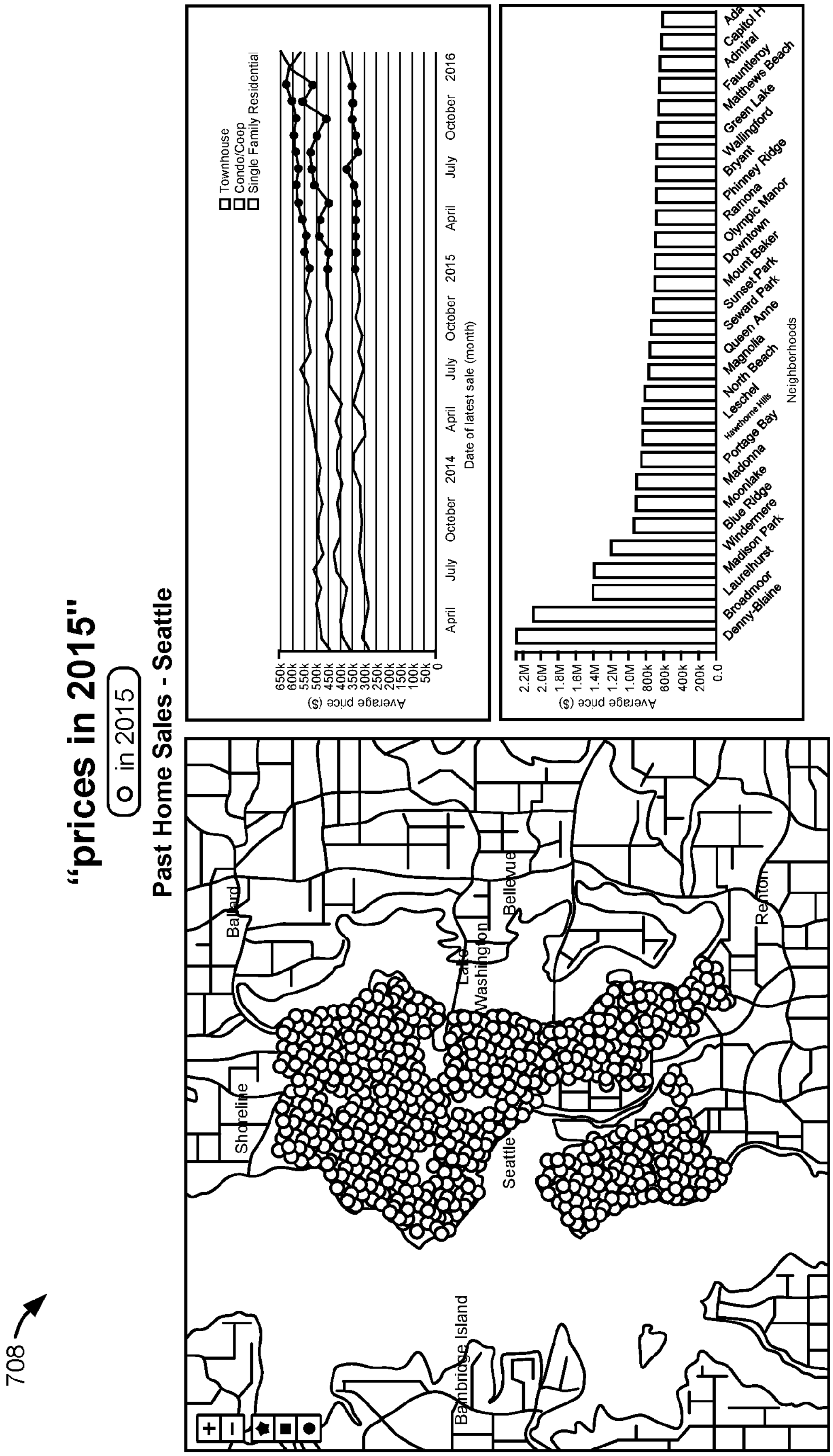
708
"prices in 2015"
in 2015
Past Home Sales - Seattle
Bainbridge Island
Shoreline
Ballard
Seattle
Lake Washington
Bellevue
Renton
Townhouse
Condo/Coop
Single Family Residential
Average price ($)
650k 600k 550k 500k 450k 400k 350k 300k 250k 200k 150k 100k 50k 0
April July October 2014 April July October 2015 April July October 2016
Date of latest sale (month)
Average price ($)
2.2M 2.0M 1.8M 1.6M 1.4M 1.2M 1.0M 800k 600k 400k 200k 0.0
Denny-Blaine
Broadmoor
Laurelhurst
Madison Park
Windermere
Blue Ridge
Moonlake
Madonna
Portage Bay
Hawthorne Hills
Leschel
North Beach
Magnolia
Queen Anne
Seward Park
Sunset Park
Mount Baker
Downtown
Olympic Manor
Ramona
Phinney Ridge
Bryant
Wallingford
Green Lake
Matthews Beach
Fauntleroy
Admiral
Capitol H
Ada
Neighborhoods

Figure 7C

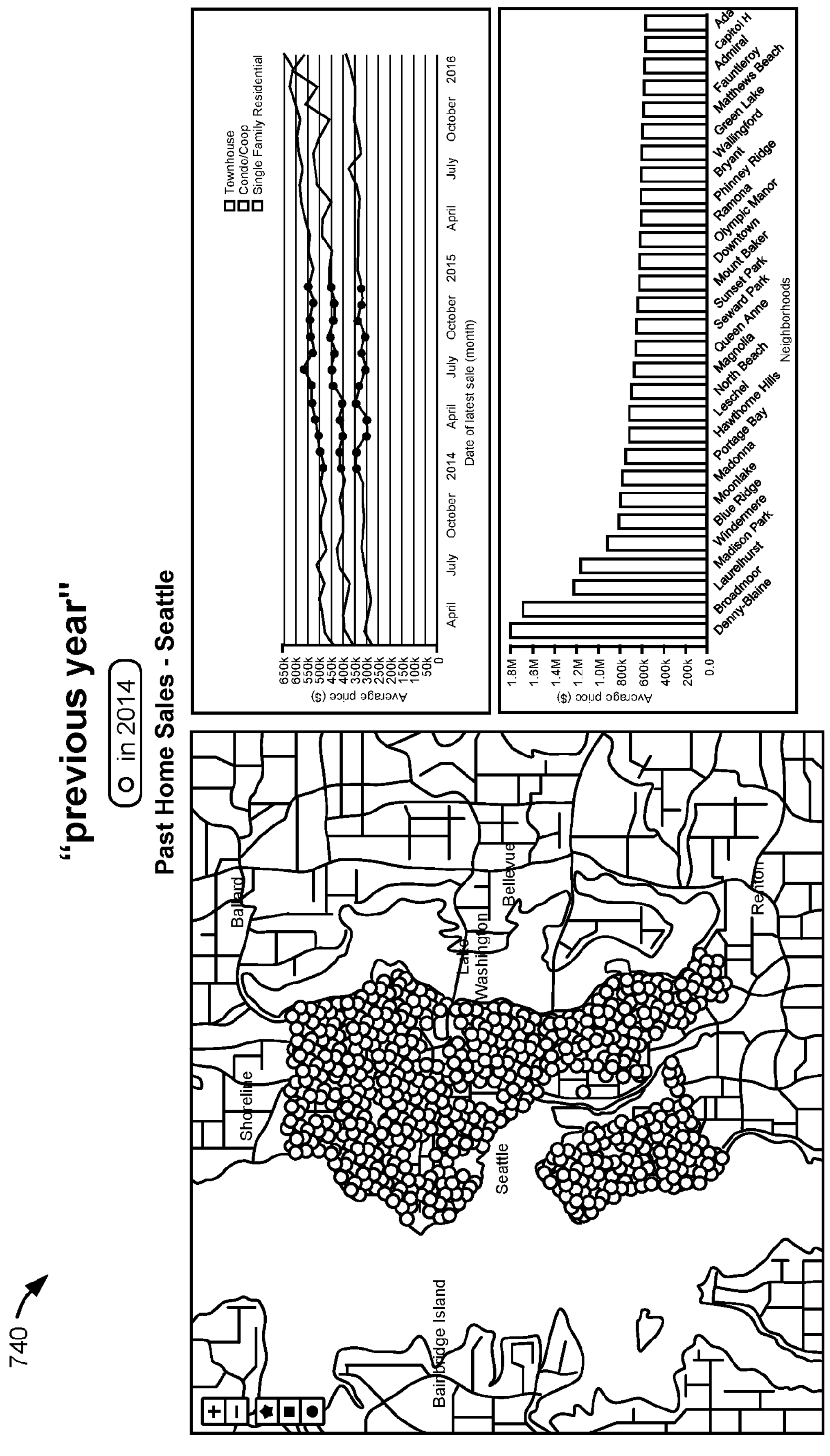
740
"previous year"
in 2014
Past Home Sales - Seattle
Bainbridge Island
Shoreline
Ballard
Seattle
Lake Washington
Bellevue
Renton
Townhouse
Condo/Coop
Single Family Residential
Average price ($)
650k
600k
550k
500k
450k
400k
350k
300k
250k
200k
150k
100k
50k
0
April
July
October
2014
April
July
October
2015
April
July
October
2016
Date of latest sale (month)
1.8M
1.6M
1.4M
1.2M
1.0M
800k
600k
400k
200k
0.0
Average price ($)
Denny-Blaine
Broadmoor
Laurelhurst
Madison Park
Windermere
Blue Ridge
Moonlake
Madonna
Portage Bay
Hawthorne Hills
Leschei
North Beach
Magnolia
Queen Anne
Seward Park
Sunset Park
Mount Baker
Downtown
Olympic Manor
Ramona
Phinney Ridge
Bryant
Wallingford
Green Lake
Matthews Beach
Fauntleroy
Admiral
Capitol H
Ada
Neighborhoods

Figure 7D

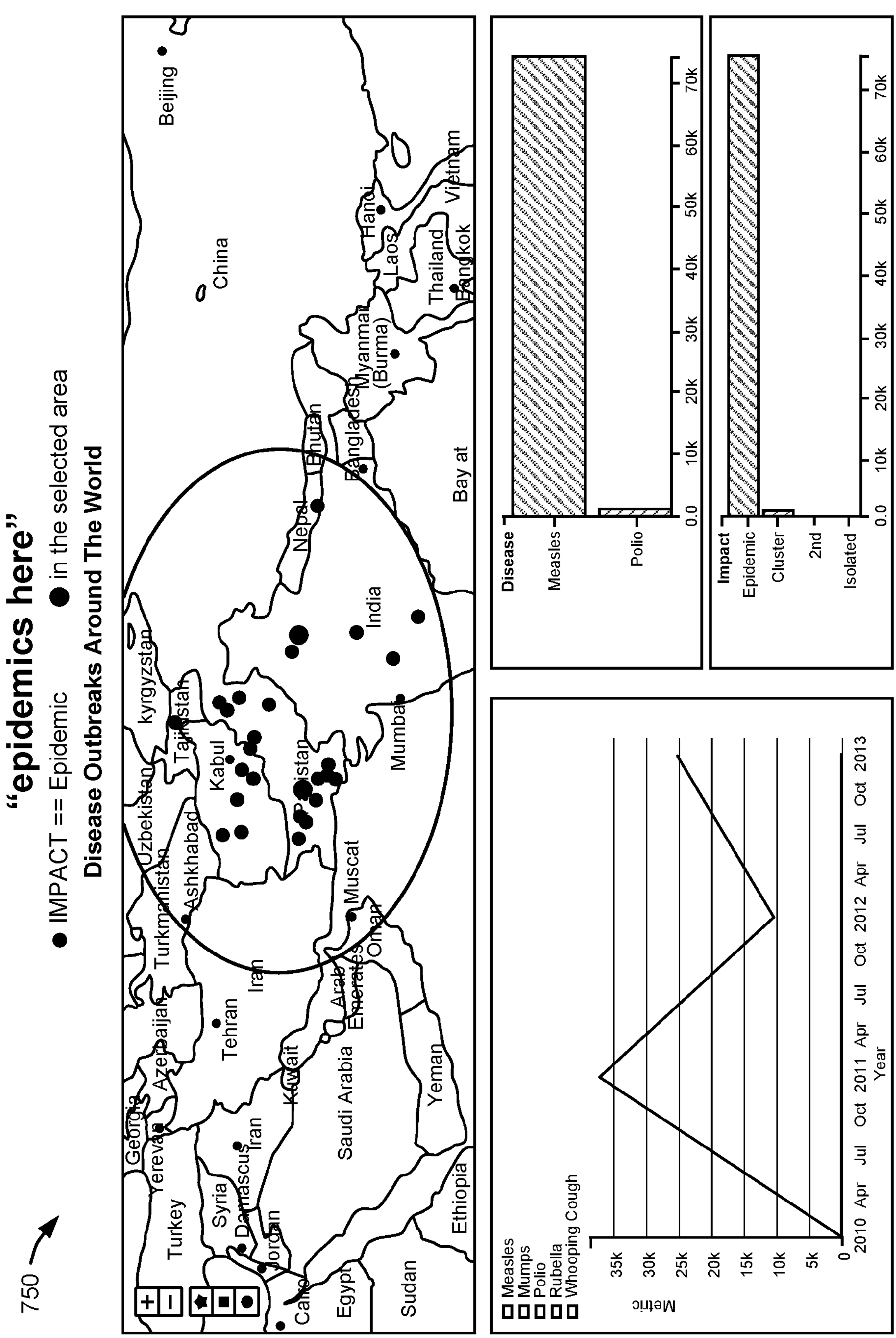
750
"epidemics here"
● IMPACT == Epidemic
● in the selected area
Disease Outbreaks Around The World
Turkey
Georgia
Yerevan
Azerbaijan
Syria
Damascus
Iran
Jordan
Cairo
Egypt
Sudan
Ethiopia
Kuwait
Saudi Arabia
Yeman
Tehran
Iran
Arab Emerates
Oman
Muscat
Turkmenistan
Ashkhabad
Uzbekistan
Kabul
Tajikistan
kyrgyzstan
Pakistan
Mumbai
India
Nepal
Bhutan
Bangladesh
Myanmar (Burma)
Bay at
China
Hanoi
Laos
Thailand
Bangkok
Vietnam
Beijing
Measles
Mumps
Polio
Rubella
Whooping Cough
Metric
35k
30k
25k
20k
15k
10k
5k
0
2010 Apr Jul Oct 2011 Apr Jul Oct 2012 Apr Jul Oct 2013
Year
Disease
Measles
Polio
0.0
10k
20k
30k
40k
50k
60k
70k
Impact
Epidemic
Cluster
2nd
Isolated
0.0
10k
20k
30k
40k
50k
60k
70k

Figure 7E

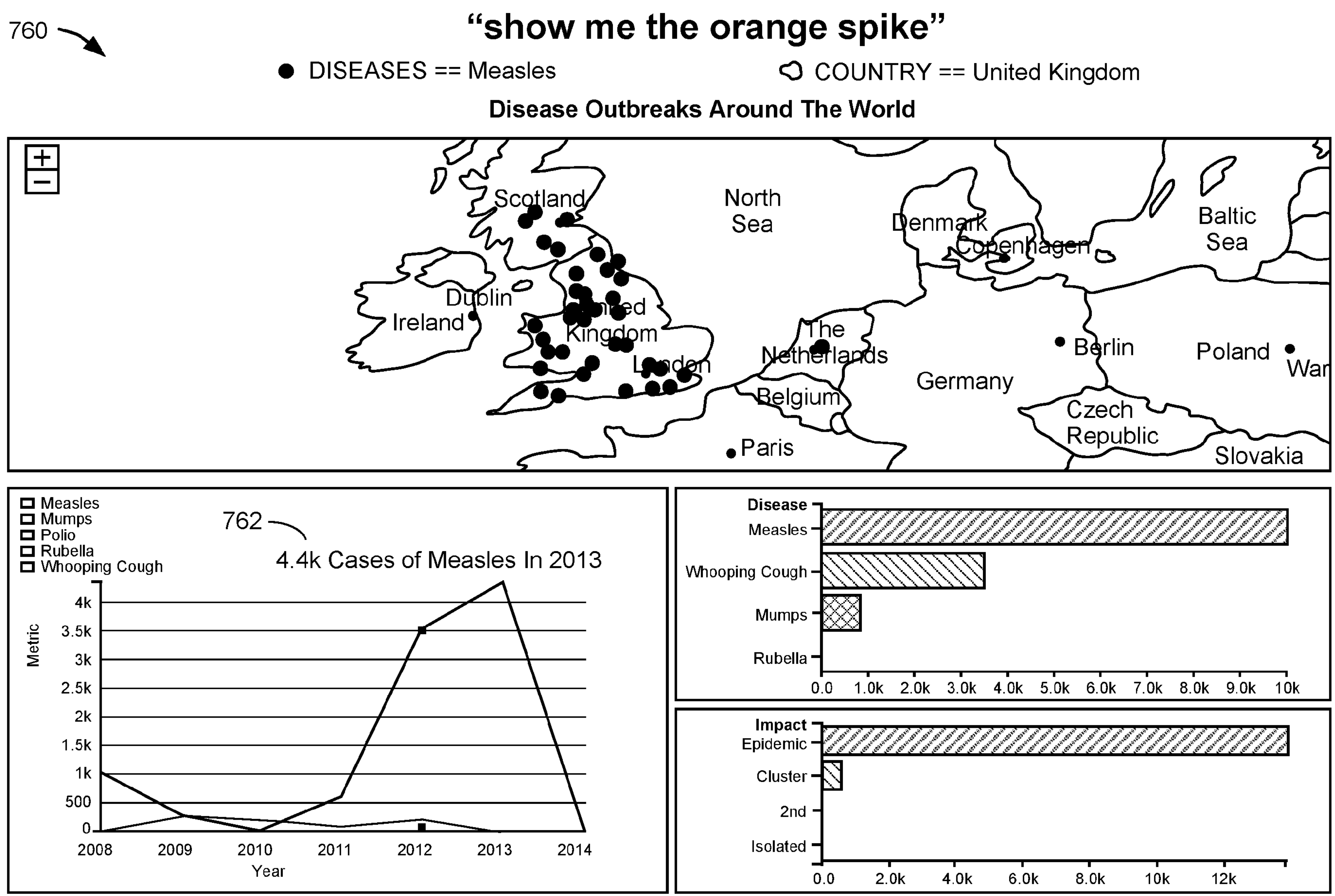
760
"show me the orange spike"
DISEASES == Measles
COUNTRY == United Kingdom
Disease Outbreaks Around The World
Scotland
Dublin
Ireland
United Kingdom
London
North Sea
Denmark
Copenhagen
Baltic Sea
The Netherlands
Belgium
Paris
Germany
Berlin
Poland
War
Czech Republic
Slovakia
Measles
Mumps
Polio
Rubella
Whooping Cough
762
4.4k Cases of Measles In 2013
Metric
4k
3.5k
3k
2.5k
2k
1.5k
1k
500
0
2008
2009
2010
2011
2012
2013
2014
Year
Disease
Measles
Whooping Cough
Mumps
Rubella
0.0 1.0k 2.0k 3.0k 4.0k 5.0k 6.0k 7.0k 8.0k 9.0k 10k
Impact
Epidemic
Cluster
2nd
Isolated
0.0 2.0k 4.0k 6.0k 8.0k 10k 12k

Figure 7F

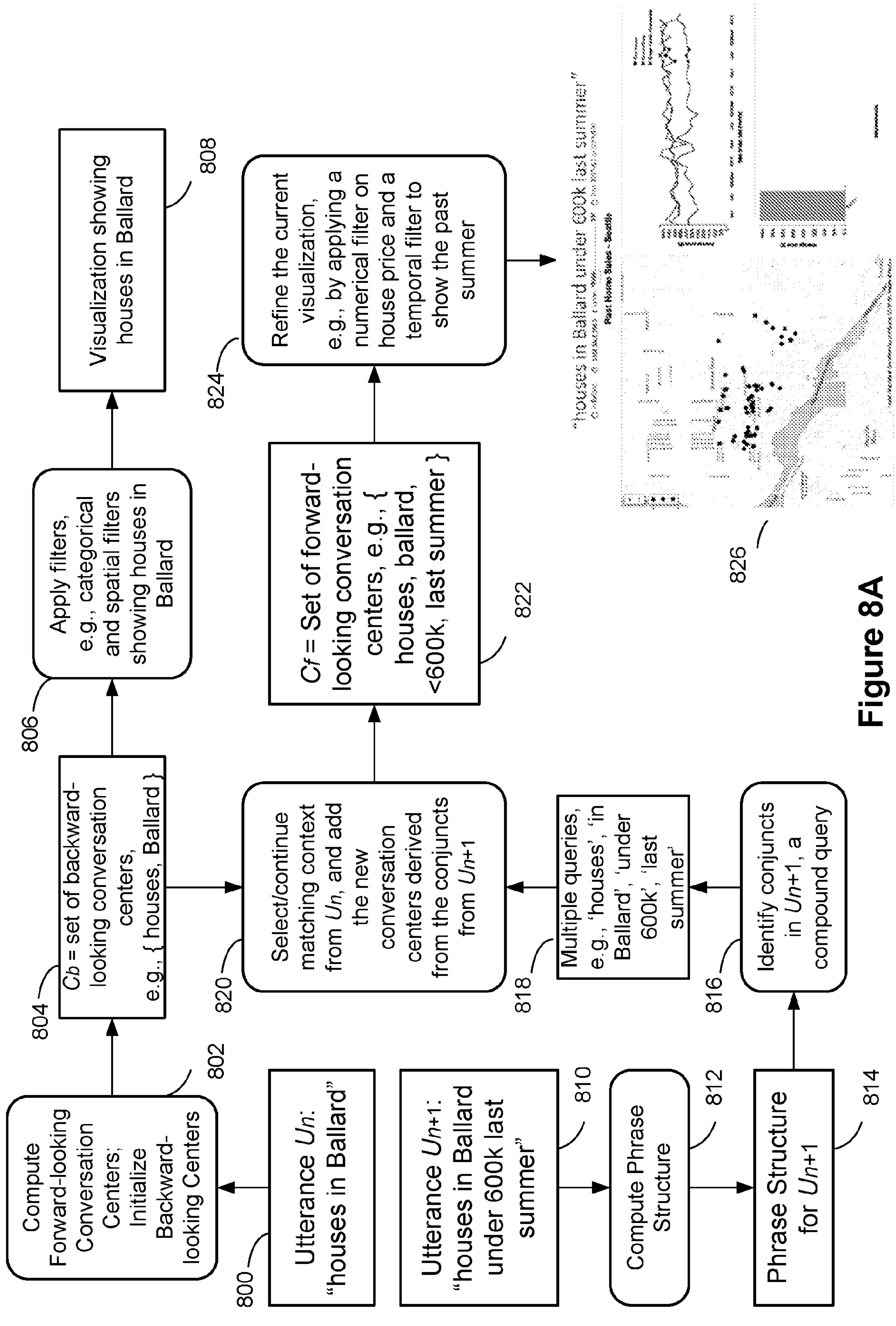
Utterance $U_n$: "houses in Ballard"
800
Compute Forward-looking Conversation Centers; Initialize Backward-looking Centers
802
$C_b$ = set of backward-looking conversation centers, e.g., { houses, Ballard }
804
Apply filters, e.g., categorical and spatial filters showing houses in Ballard
806
Visualization showing houses in Ballard
808
Utterance $U_{n+1}$: "houses in Ballard under 600k last summer"
810
Compute Phrase Structure
812
Phrase Structure for $U_{n+1}$
814
Identify conjuncts in $U_{n+1}$, a compound query
816
Multiple queries, e.g., 'houses', 'in Ballard', 'under 600k', 'last summer'
818
Select/continue matching context from $U_n$, and add the new conversation centers derived from the conjuncts from $U_{n+1}$
820
$C_f$ = Set of forward-looking conversation centers, e.g., { houses, ballard, <600k, last summer }
822
Refine the current visualization, e.g., by applying a numerical filter on house price and a temporal filter to show the past summer
824
"houses in Ballard under 600k last summer"
826

Figure 8A

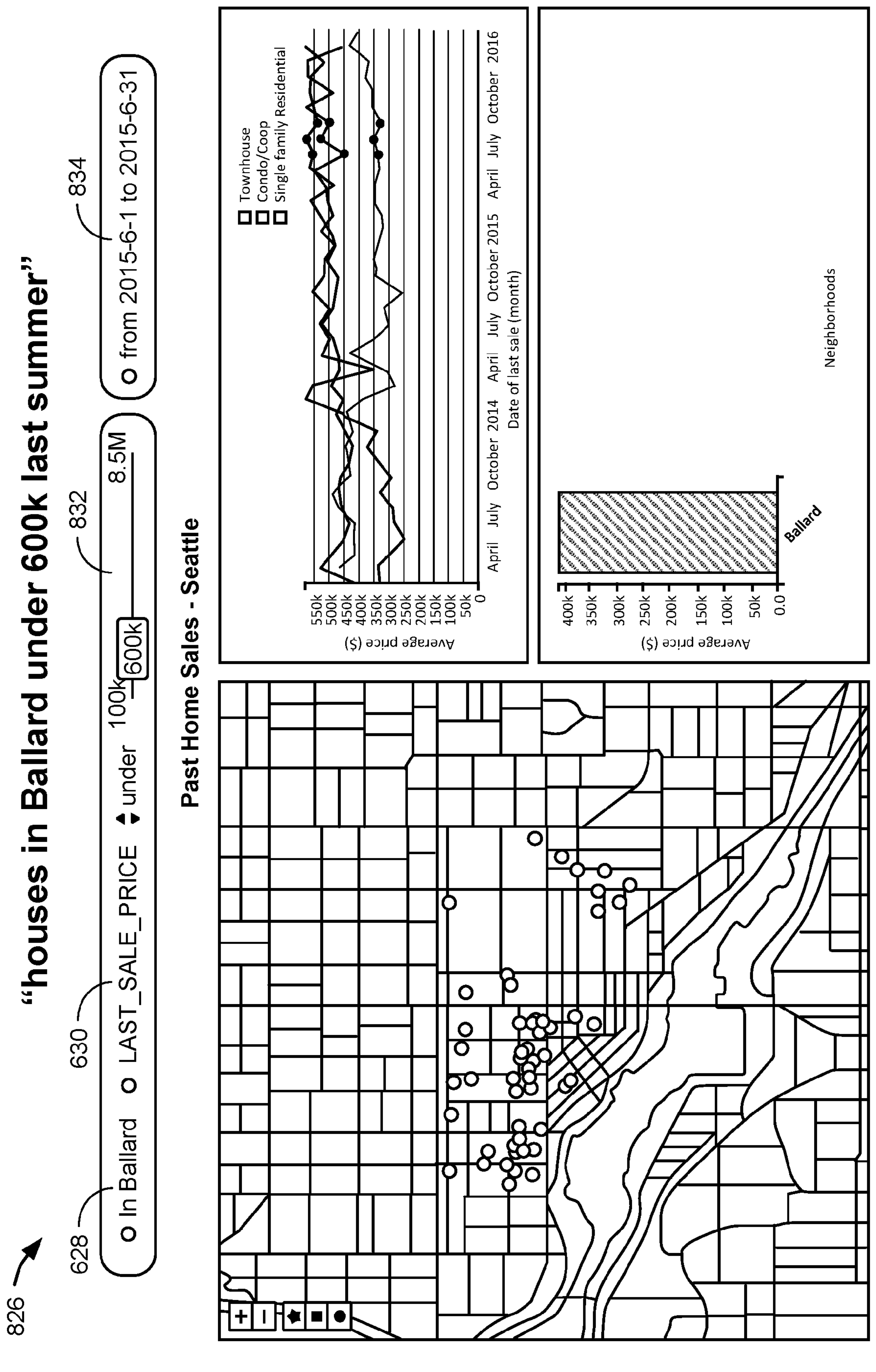
826
"houses in Ballard under 600k last summer"
628
630
832
834
In Ballard
LAST_SALE_PRICE
under
100k
600k
8.5M
from 2015-6-1 to 2015-6-31
Past Home Sales - Seattle
Townhouse
Condo/Coop
Single family Residential
Average price ($)
550k 500k 450k 400k 350k 300k 250k 200k 150k 100k 50k 0
April July October 2014 April July October 2015 April July October 2016
Date of last sale (month)
400k 350k 300k 250k 200k 150k 100k 50k 0.0
Ballard
Neighborhoods

Figure 8B

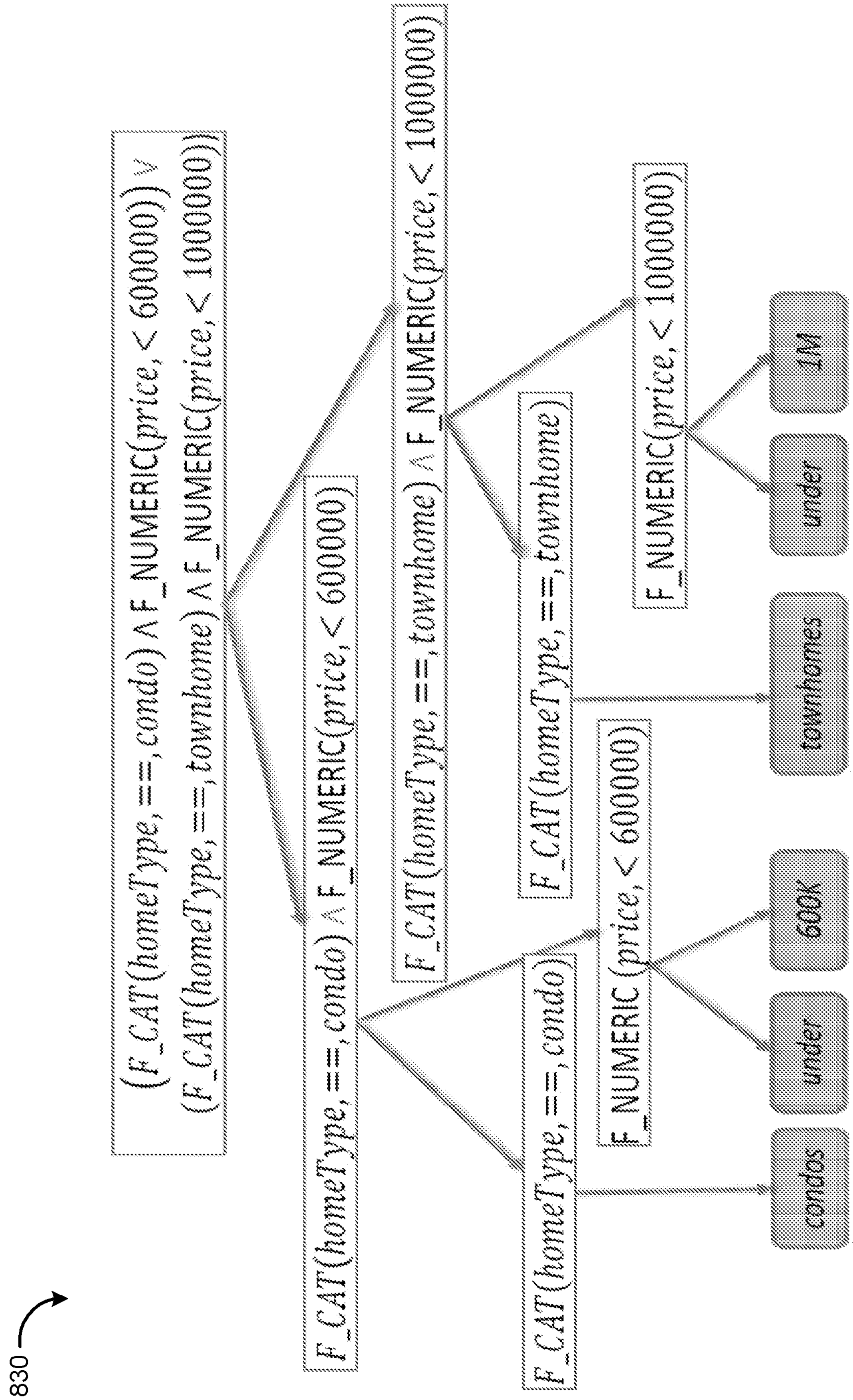
830
(F_CAT(homeType, ==, condo) ∧ F_NUMERIC(price, < 600000)) ∨
(F_CAT(homeType, ==, townhome) ∧ F_NUMERIC(price, < 1000000))
F_CAT(homeType, ==, condo) ∧ F_NUMERIC(price, < 600000)
F_CAT(homeType, ==, townhome) ∧ F_NUMERIC(price, < 1000000)
F_CAT(homeType, ==, condo)
F_NUMERIC (price, < 600000)
F_CAT(homeType, ==, townhome)
F_NUMERIC(price, < 1000000)
condos
under
600K
townhomes
under
1M

Figure 8C

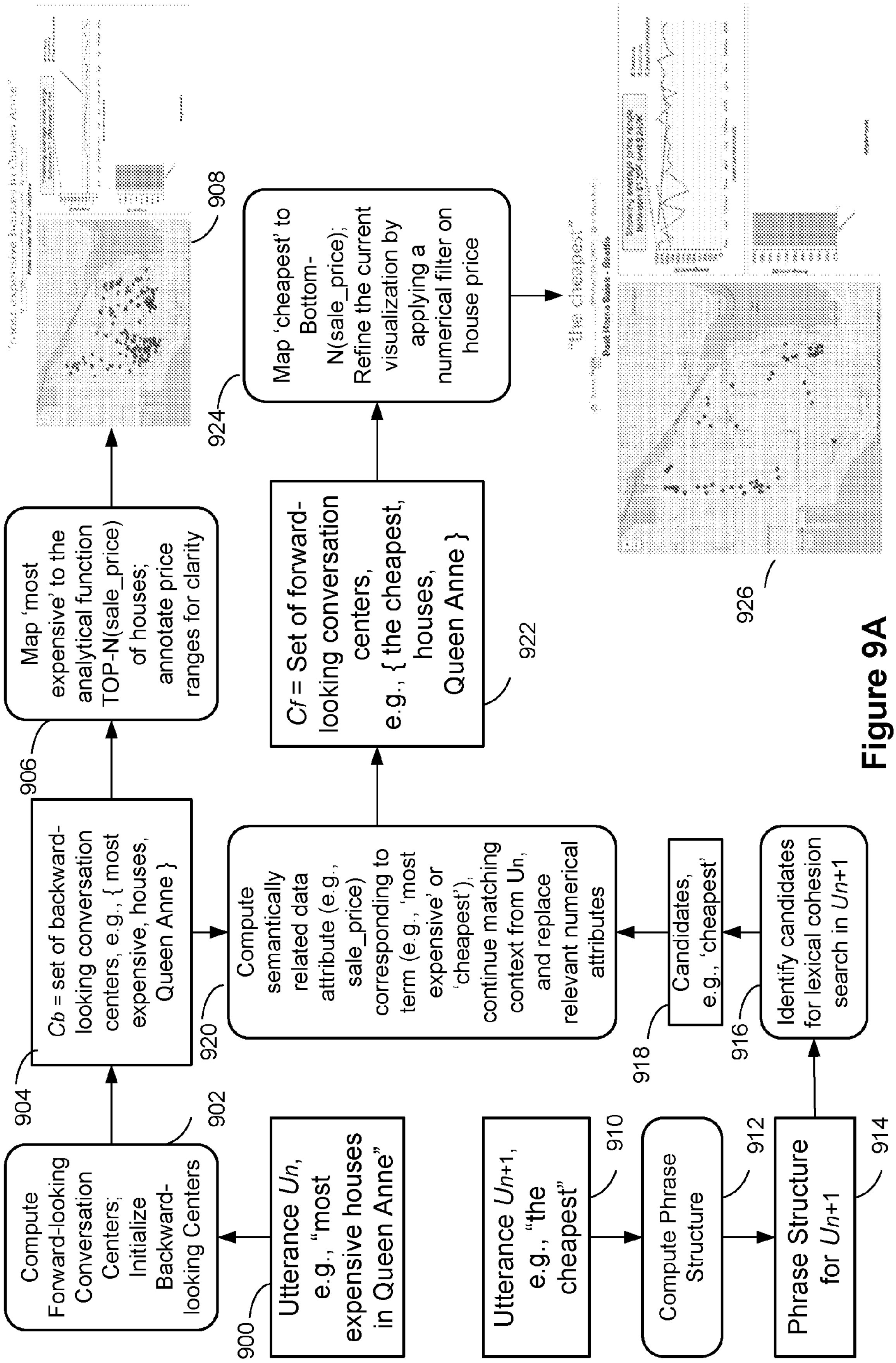
Utterance $U_n$, e.g., "most expensive houses in Queen Anne"
900
Compute Forward-looking Conversation Centers; Initialize Backward-looking Centers
902
$C_b$ = set of backward-looking conversation centers, e.g., { most expensive, houses, Queen Anne }
904
Map 'most expensive' to the analytical function TOP-N(sale_price) of houses; annotate price ranges for clarity
906
908
Utterance $U_{n+1}$, e.g., "the cheapest"
910
Compute Phrase Structure
912
Phrase Structure for $U_{n+1}$
914
Identify candidates for lexical cohesion search in $U_{n+1}$
916
Candidates, e.g., 'cheapest'
918
Compute semantically related data attribute (e.g., sale_price) corresponding to term (e.g., 'most expensive' or 'cheapest'), continue matching context from $U_n$, and replace relevant numerical attributes
920
$C_f$ = Set of forward-looking conversation centers, e.g., { the cheapest, houses, Queen Anne }
922
Map 'cheapest' to Bottom-N(sale_price); Refine the current visualization by applying a numerical filter on house price
924
"the cheapest"
926

Figure 9A

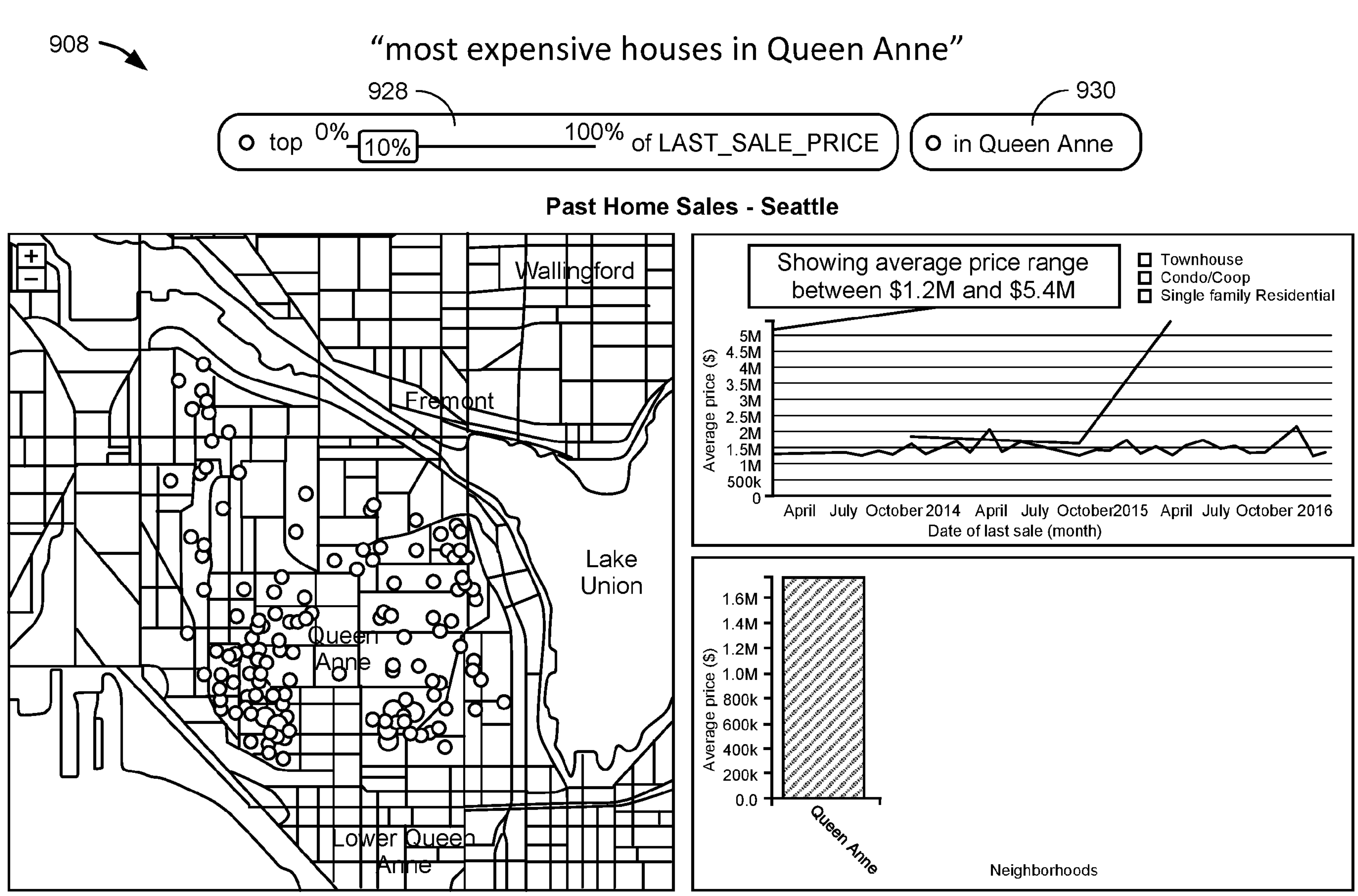
908
"most expensive houses in Queen Anne"
928
930
top 0% 10% 100% of LAST_SALE_PRICE
in Queen Anne
Past Home Sales - Seattle
Wallingford
Fremont
Lake Union
Queen Anne
Lower Queen Anne
Showing average price range between $1.2M and $5.4M
Townhouse
Condo/Coop
Single family Residential
Average price ($)
5M
4.5M
4M
3.5M
3M
2.5M
2M
1.5M
1M
500k
0
April July October 2014 April July October2015 April July October 2016
Date of last sale (month)
1.6M
1.4M
1.2M
1.0M
800k
600k
400k
200k
0.0
Queen Anne
Neighborhoods

Figure 9B

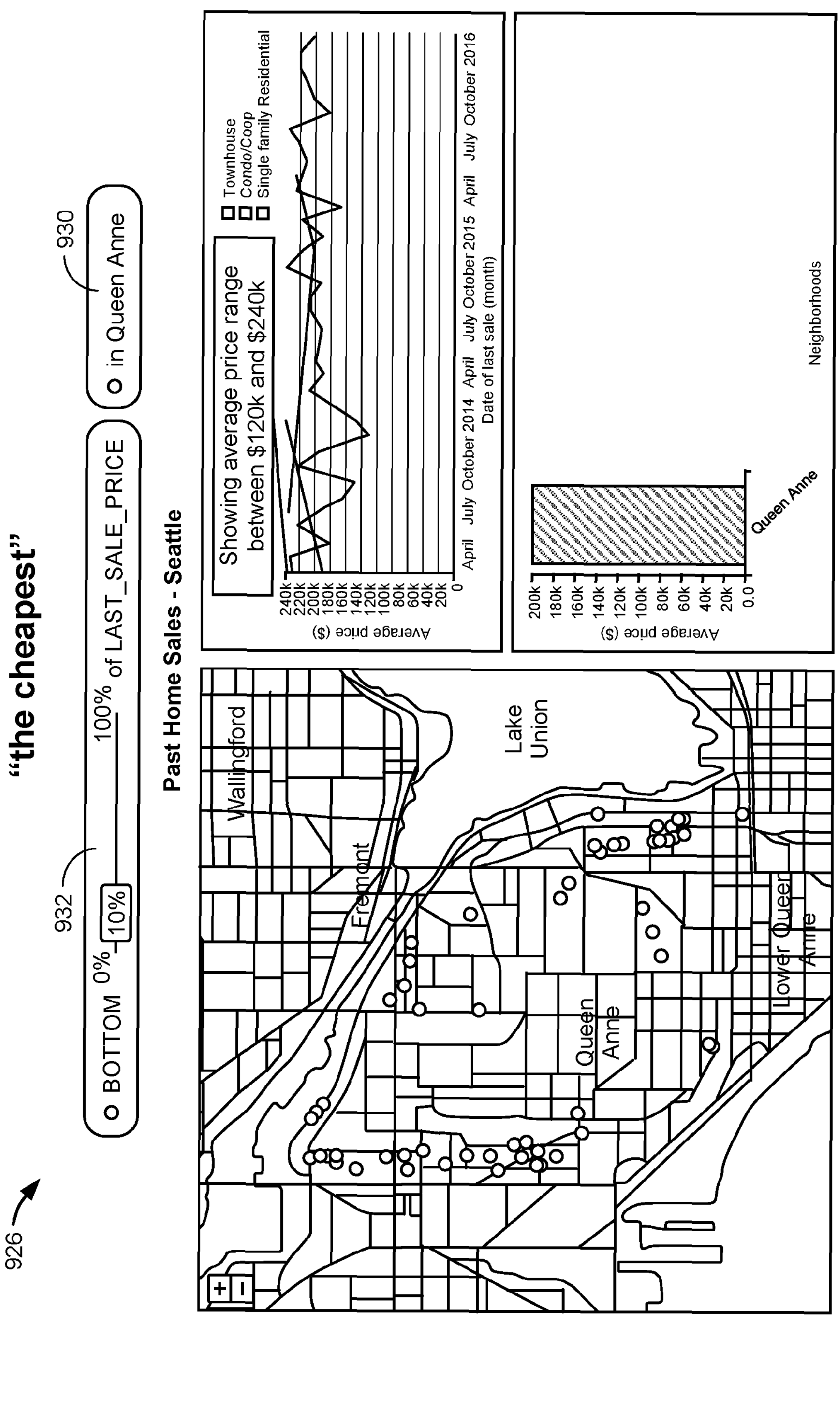

926
"the cheapest"
932
930
BOTTOM 0% 10% 100% of LAST_SALE_PRICE
in Queen Anne
Past Home Sales - Seattle
Wallingford
Fremont
Lake Union
Queen Anne
Lower Queen Anne
Showing average price range between $120k and $240k
Townhouse
Condo/Coop
Single family Residential
Average price ($)
240k
220k
200k
180k
160k
140k
120k
100k
80k
60k
40k
20k
0
April July October 2014 April July October 2015 April July October 2016
Date of last sale (month)
200k
180k
160k
140k
120k
100k
80k
60k
40k
20k
0.0
Queen Anne
Neighborhoods


Figure 9C

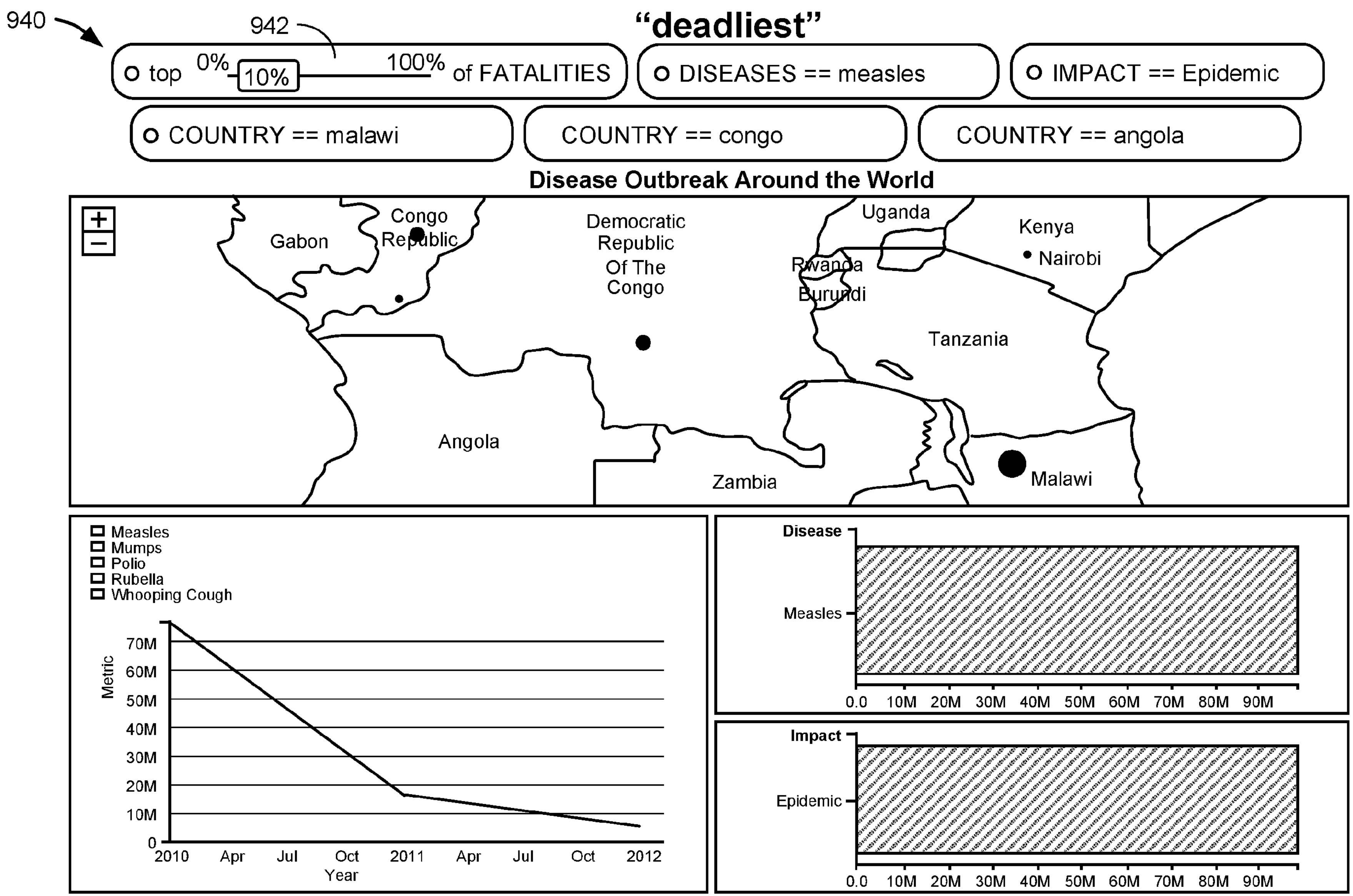
940
942
"deadliest"
top 0% 10% 100% of FATALITIES
DISEASES == measles
IMPACT == Epidemic
COUNTRY == malawi
COUNTRY == congo
COUNTRY == angola
Disease Outbreak Around the World
Gabon
Congo Republic
Democratic Republic Of The Congo
Uganda
Kenya
Nairobi
Rwanda
Burundi
Tanzania
Angola
Zambia
Malawi
Measles
Mumps
Polio
Rubella
Whooping Cough
Metric
70M
60M
50M
40M
30M
20M
10M
0
2010 Apr Jul Oct 2011 Apr Jul Oct 2012
Year
Disease
Measles
0.0 10M 20M 30M 40M 50M 60M 70M 80M 90M
Impact
Epidemic
0.0 10M 20M 30M 40M 50M 60M 70M 80M 90M

Figure 9D

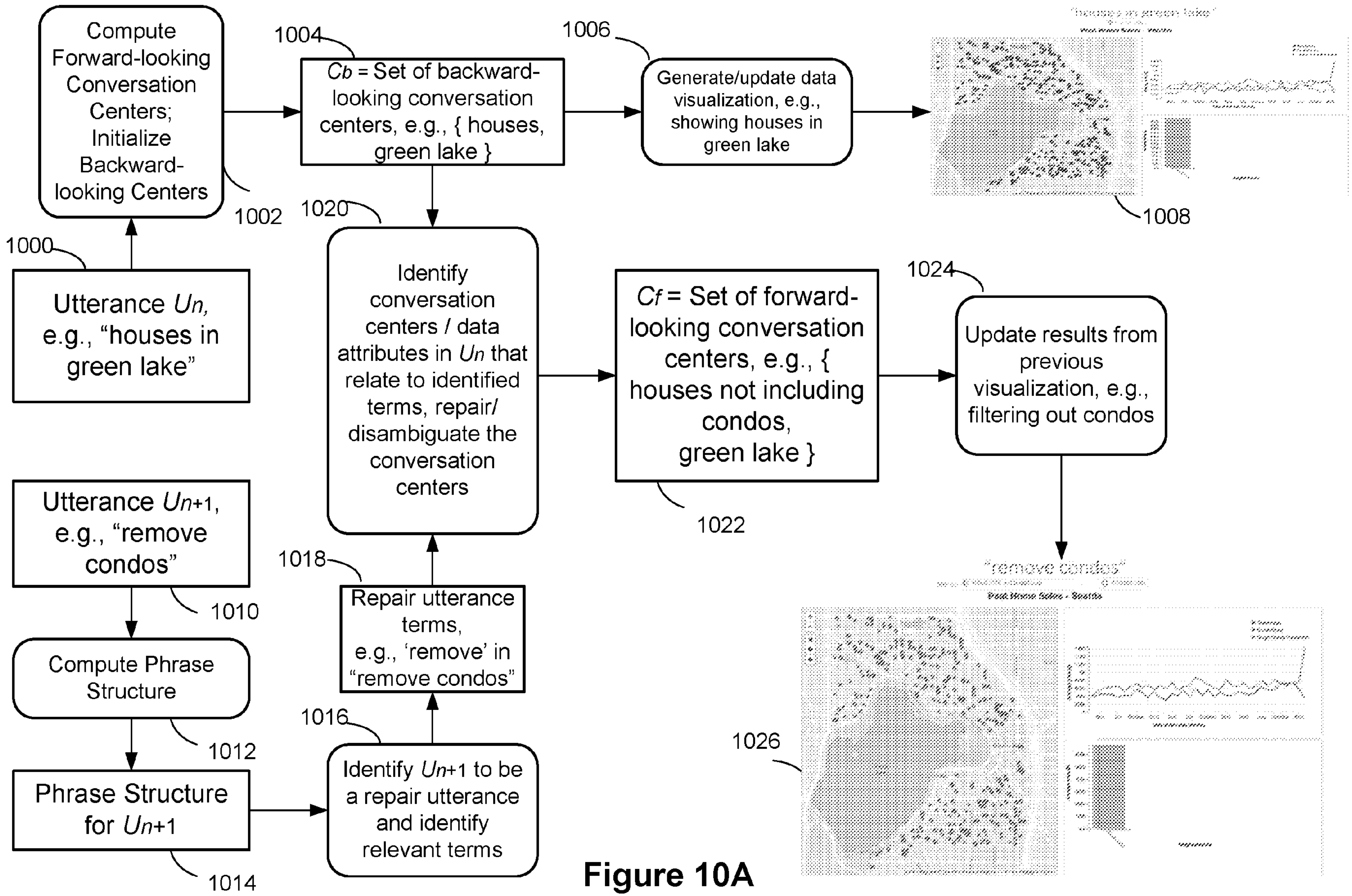
1000
Utterance $U_n$, e.g., "houses in green lake"
1002
Compute Forward-looking Conversation Centers; Initialize Backward-looking Centers
1004
$C_b$ = Set of backward-looking conversation centers, e.g., { houses, green lake }
1006
Generate/update data visualization, e.g., showing houses in green lake
1008
1010
Utterance $U_{n+1}$, e.g., "remove condos"
1012
Compute Phrase Structure
1014
Phrase Structure for $U_{n+1}$
1016
Identify $U_{n+1}$ to be a repair utterance and identify relevant terms
1018
Repair utterance terms, e.g., 'remove' in "remove condos"
1020
Identify conversation centers / data attributes in $U_n$ that relate to identified terms, repair/ disambiguate the conversation centers
1022
$C_f$ = Set of forward-looking conversation centers, e.g., { houses not including condos, green lake }
1024
Update results from previous visualization, e.g., filtering out condos
1026

Figure 10A

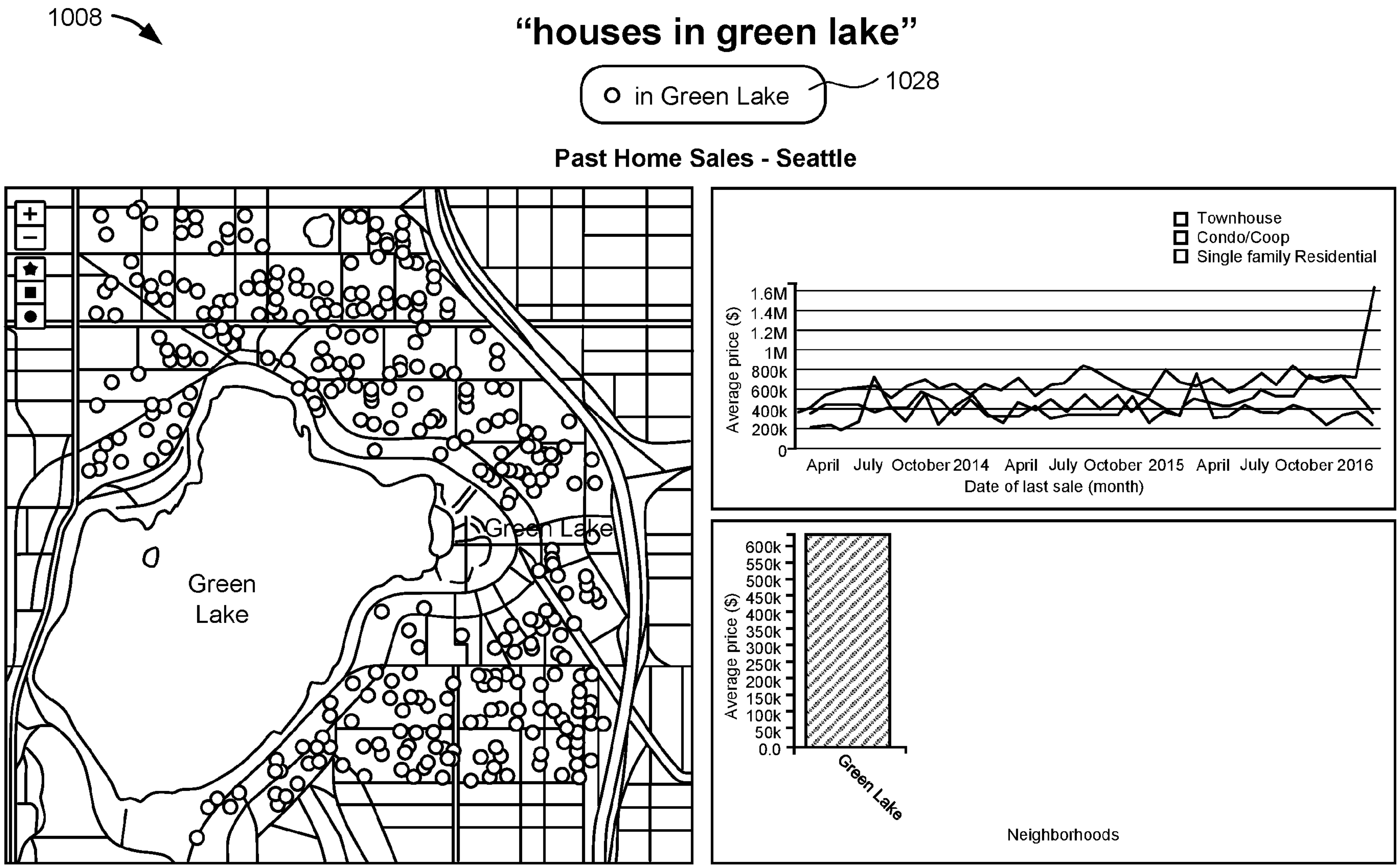
1008
"houses in green lake"
in Green Lake
1028
Past Home Sales - Seattle
Green Lake
Green Lake
Townhouse
Condo/Coop
Single family Residential
Average price ($)
1.6M
1.4M
1.2M
1M
800k
600k
400k
200k
0
April July October 2014 April July October 2015 April July October 2016
Date of last sale (month)
Average price ($)
600k
550k
500k
450k
400k
350k
300k
250k
200k
150k
100k
50k
0.0
Green Lake
Neighborhoods

Figure 10B

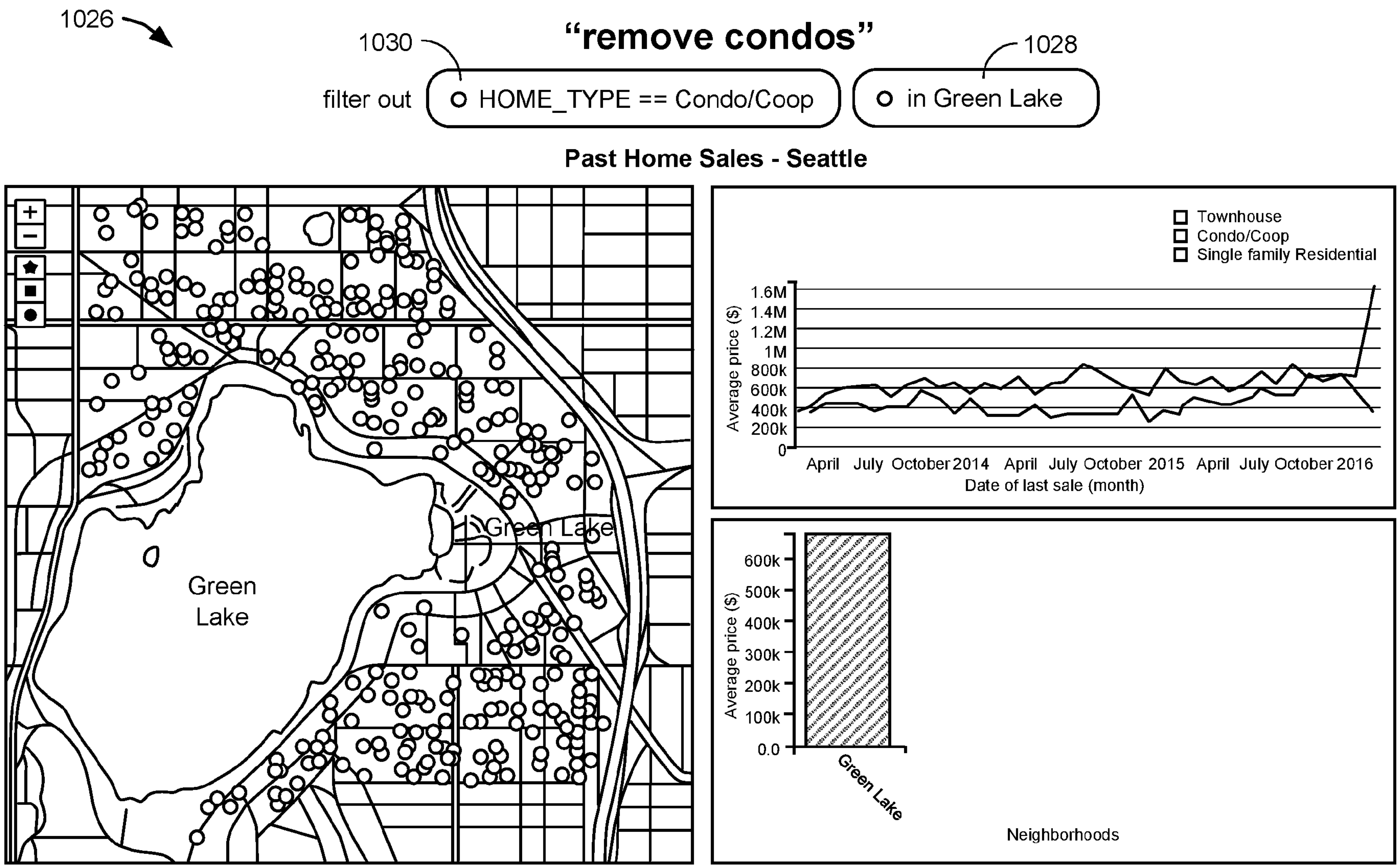
1026
1030
"remove condos"
1028
filter out
HOME_TYPE == Condo/Coop
in Green Lake
Past Home Sales - Seattle
+
−
Green Lake
Green Lake
Townhouse
Condo/Coop
Single family Residential
Average price ($)
1.6M
1.4M
1.2M
1M
800k
600k
400k
200k
0
April July October 2014 April July October 2015 April July October 2016
Date of last sale (month)
Average price ($)
600k
500k
400k
300k
200k
100k
0.0
Green Lake
Neighborhoods

Figure 10C

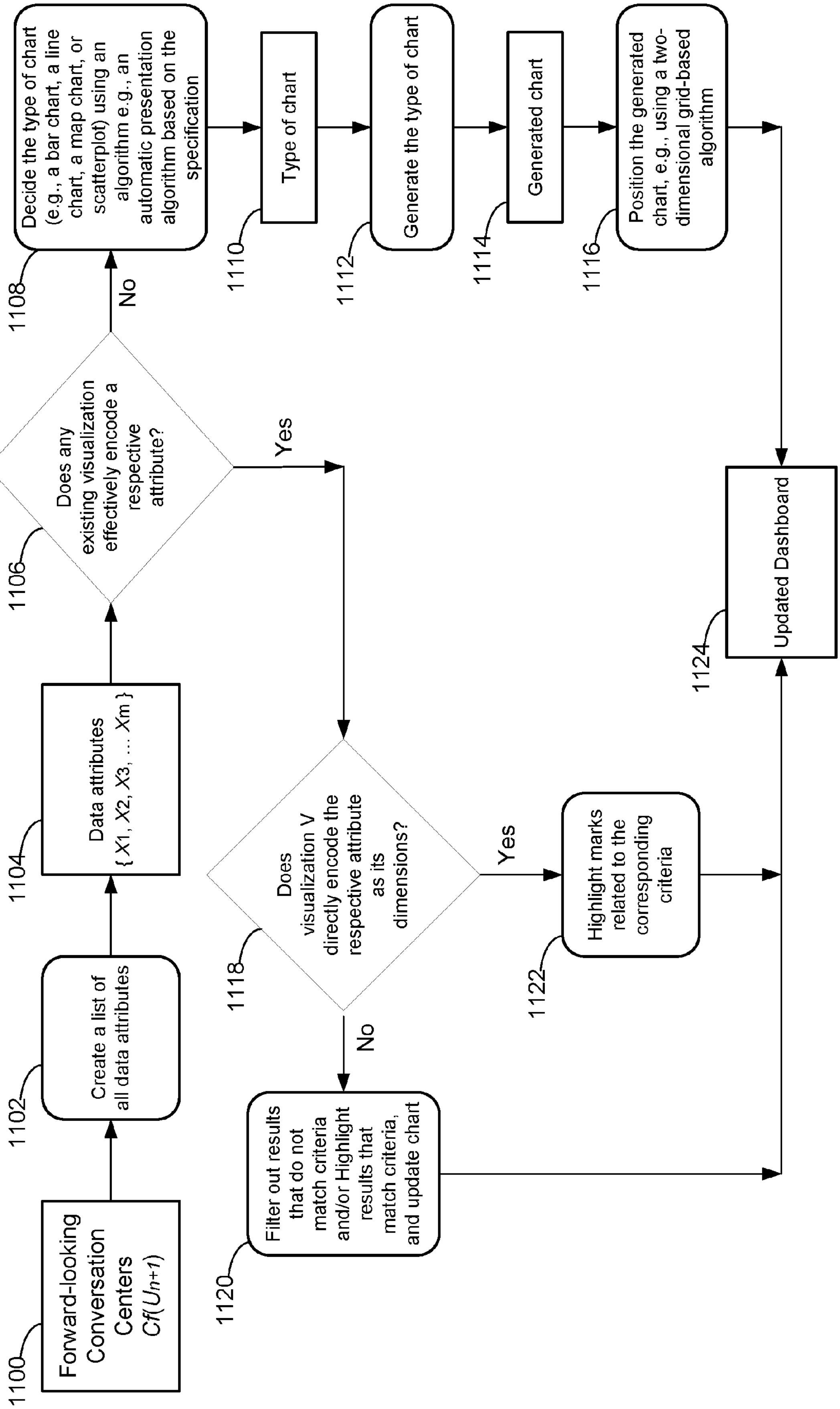
1100
Forward-looking Conversation Centers Cf(Un+1)
1102
Create a list of all data attributes
1104
Data attributes { X1, X2, X3, ... Xm }
1106
Does any existing visualization effectively encode a respective attribute?
No
Yes
1108
Decide the type of chart (e.g., a bar chart, a line chart, a map chart, or scatterplot) using an algorithm e.g., an automatic presentation algorithm based on the specification
1110
Type of chart
1112
Generate the type of chart
1114
Generated chart
1116
Position the generated chart, e.g., using a two-dimensional grid-based algorithm
1118
Does visualization V directly encode the respective attribute as its dimensions?
No
Yes
1120
Filter out results that do not match criteria and/or Highlight results that match criteria, and update chart
1122
Highlight marks related to the corresponding criteria
1124
Updated Dashboard

Figure 11A

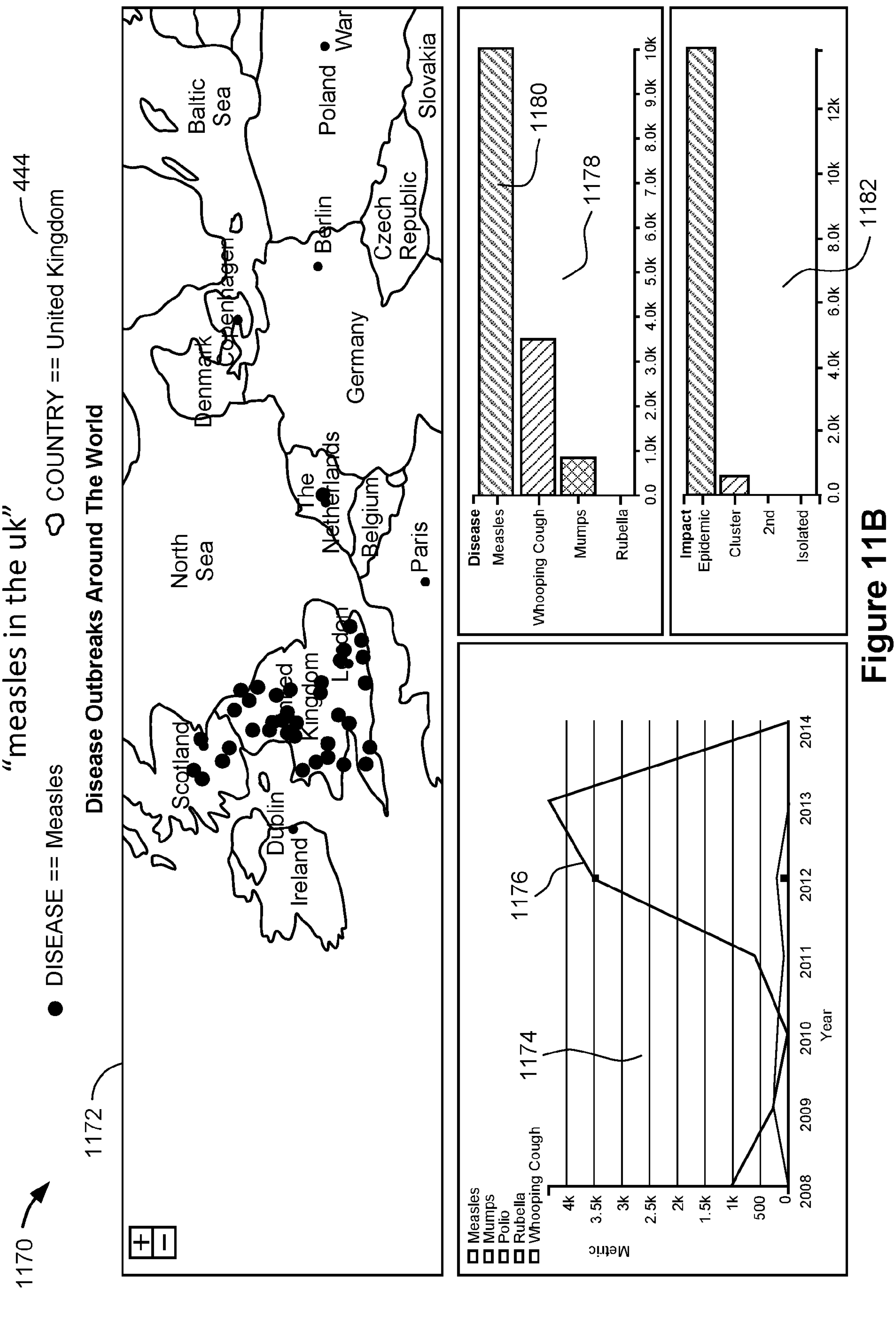
1170
"measles in the uk"
444
DISEASE == Measles
COUNTRY == United Kingdom
1172
Disease Outbreaks Around The World
+
−
Scotland
Dublin
Ireland
United Kingdom
London
North Sea
The Netherlands
Belgium
Paris
Denmark
Copenhagen
Germany
Berlin
Baltic Sea
Poland
War
Czech Republic
Slovakia
1174
1176
Measles
Mumps
Polio
Rubella
Whooping Cough
Metric
4k
3.5k
3k
2.5k
2k
1.5k
1k
500
0
2008
2009
2010
2011
2012
2013
2014
Year
1178
1180
Disease
Measles
Whooping Cough
Mumps
Rubella
0.0
1.0k
2.0k
3.0k
4.0k
5.0k
6.0k
7.0k
8.0k
9.0k
10k
1182
Impact
Epidemic
Cluster
2nd
Isolated
0.0
2.0k
4.0k
6.0k
8.0k
10k
12k

Figure 11B

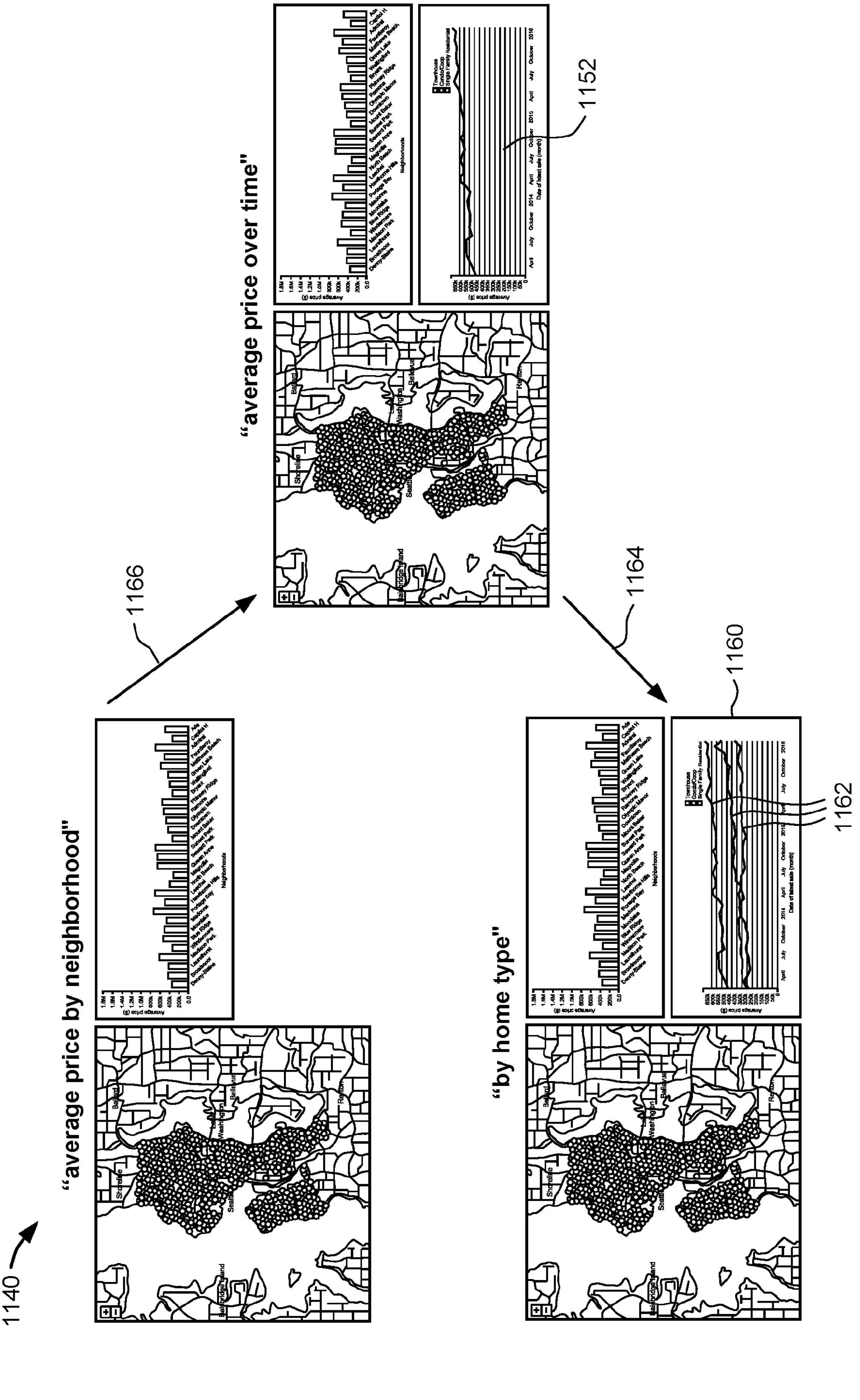
1140
"average price by neighborhood"
1166
"average price over time"
1152
1164
1160
1162
"by home type"

Figure 11C

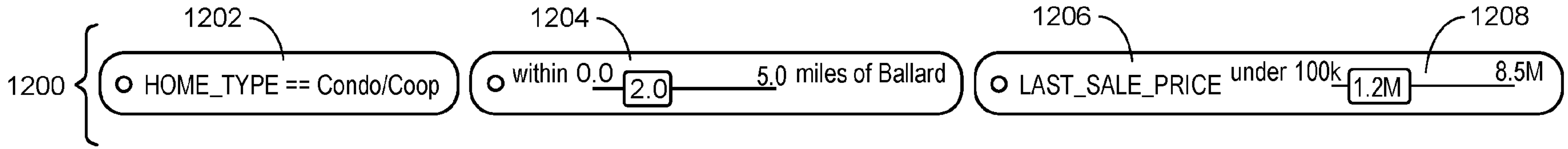


Figure 12A

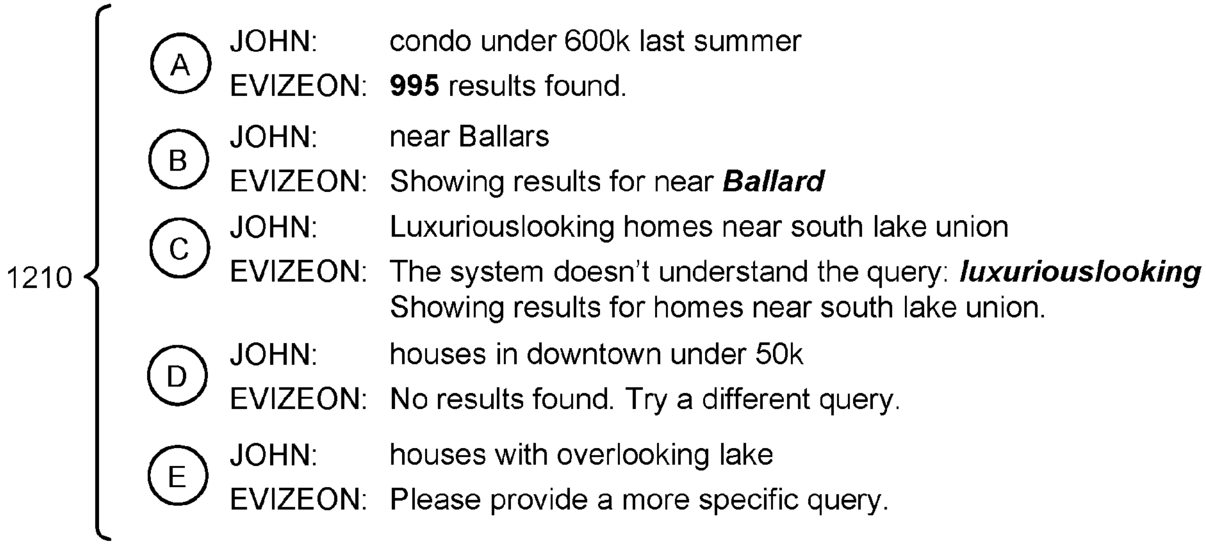


Figure 12B

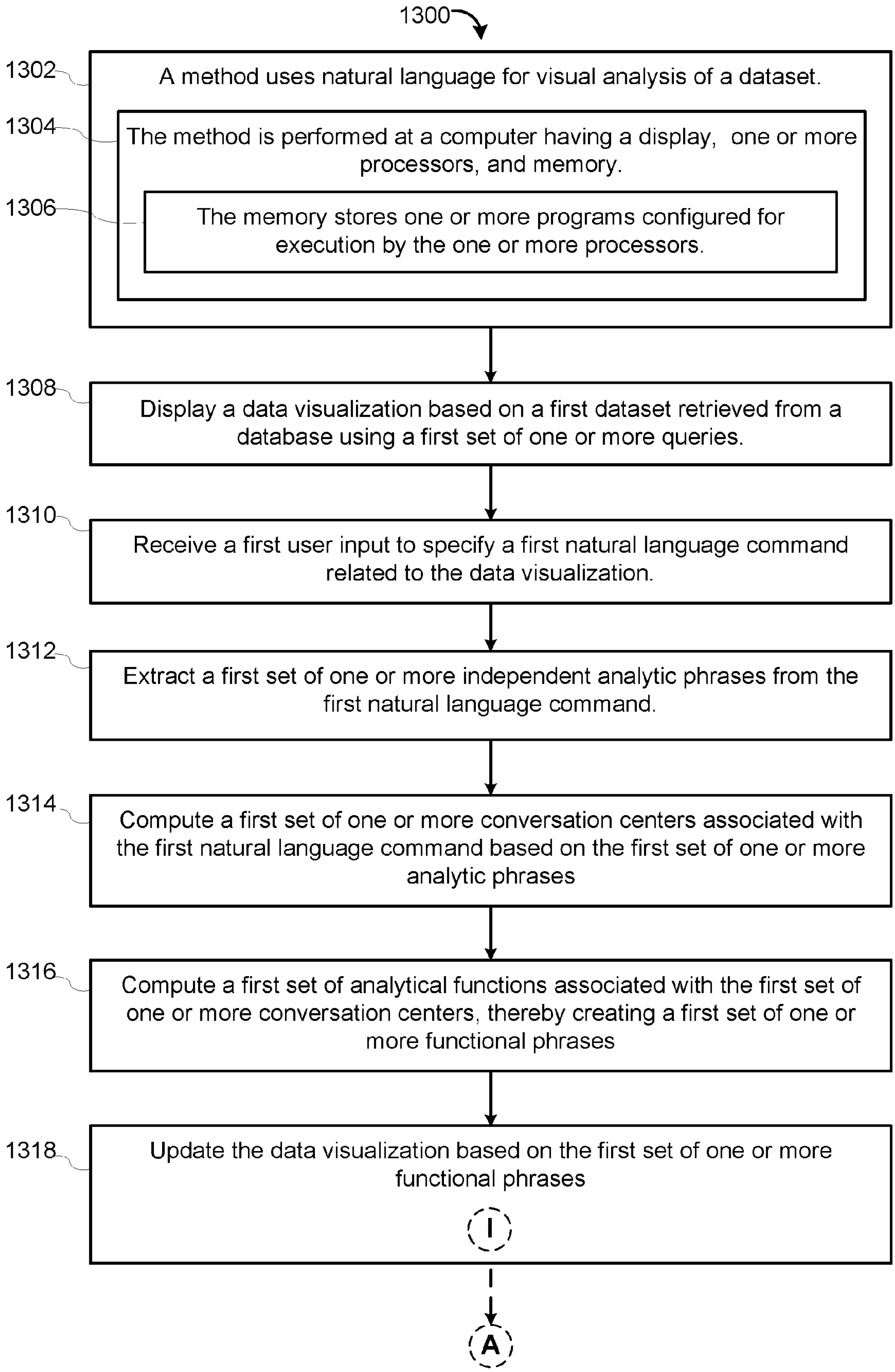
1300
1302
A method uses natural language for visual analysis of a dataset.
1304
The method is performed at a computer having a display, one or more processors, and memory.
1306
The memory stores one or more programs configured for execution by the one or more processors.
1308
Display a data visualization based on a first dataset retrieved from a database using a first set of one or more queries.
1310
Receive a first user input to specify a first natural language command related to the data visualization.
1312
Extract a first set of one or more independent analytic phrases from the first natural language command.
1314
Compute a first set of one or more conversation centers associated with the first natural language command based on the first set of one or more analytic phrases
1316
Compute a first set of analytical functions associated with the first set of one or more conversation centers, thereby creating a first set of one or more functional phrases
1318
Update the data visualization based on the first set of one or more functional phrases
I
A

Figure 13A

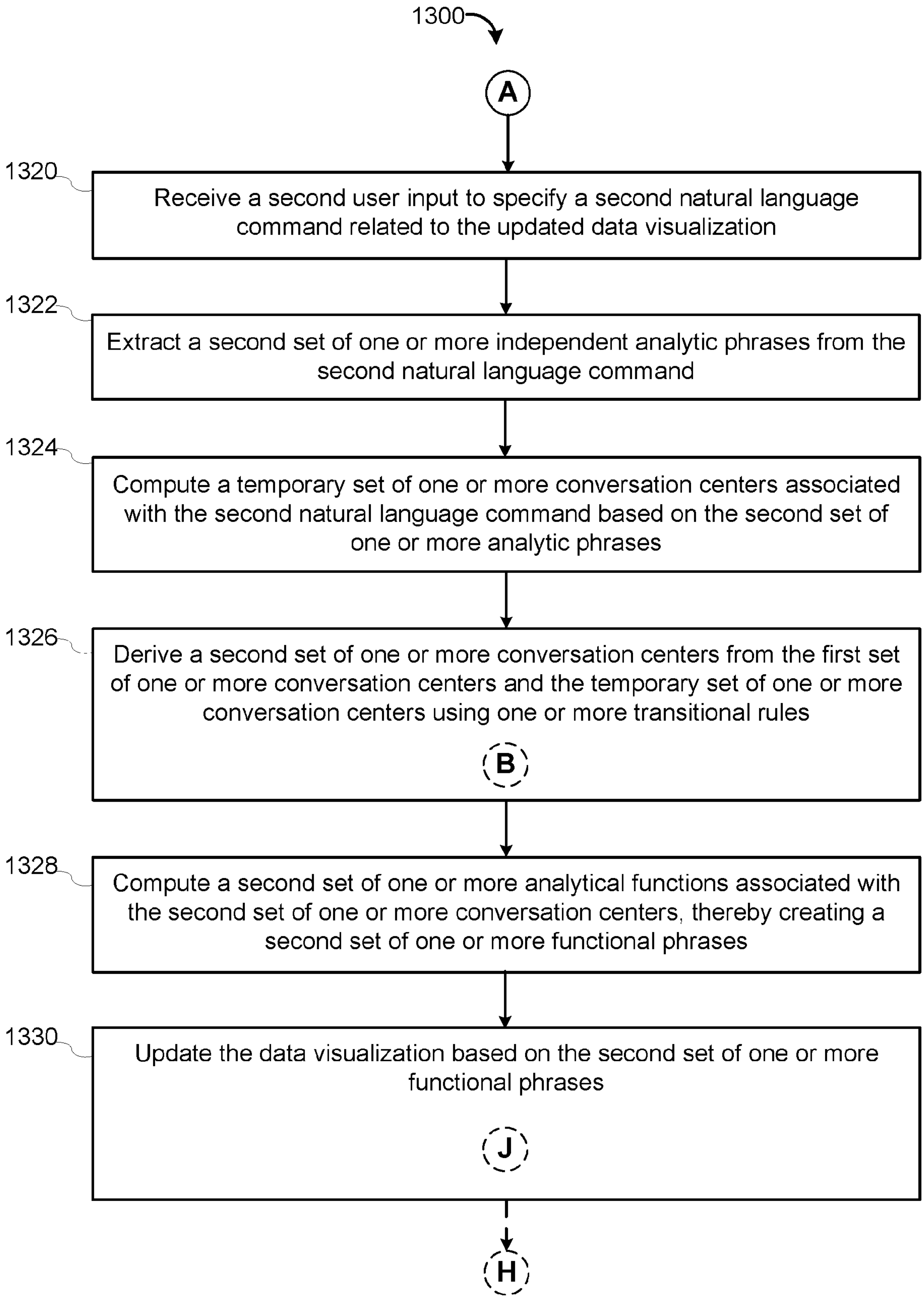
1300
A
1320
Receive a second user input to specify a second natural language command related to the updated data visualization
1322
Extract a second set of one or more independent analytic phrases from the second natural language command
1324
Compute a temporary set of one or more conversation centers associated with the second natural language command based on the second set of one or more analytic phrases
1326
Derive a second set of one or more conversation centers from the first set of one or more conversation centers and the temporary set of one or more conversation centers using one or more transitional rules
B
1328
Compute a second set of one or more analytical functions associated with the second set of one or more conversation centers, thereby creating a second set of one or more functional phrases
1330
Update the data visualization based on the second set of one or more functional phrases
J
H

Figure 13B

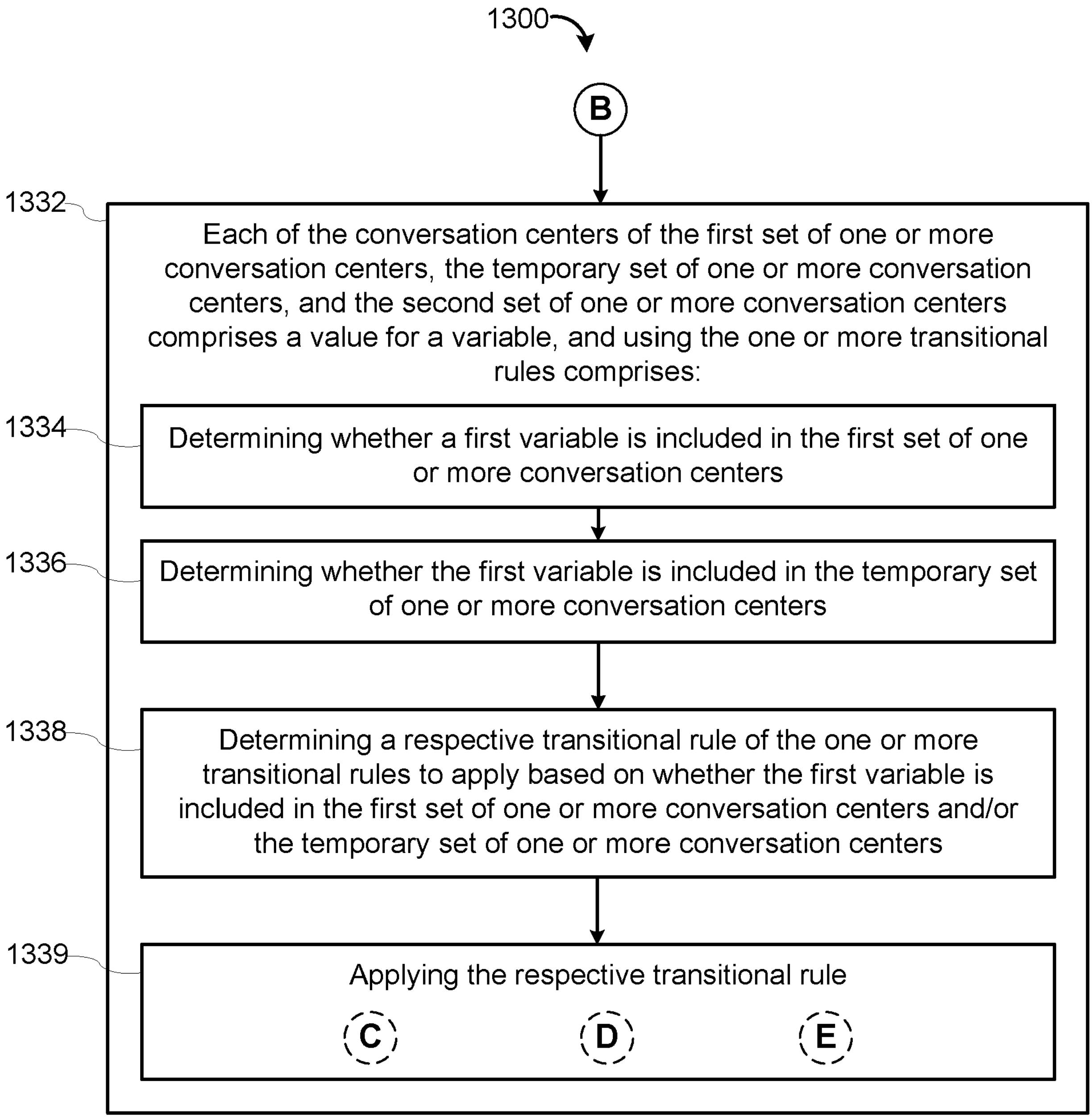
1300
B
1332
Each of the conversation centers of the first set of one or more conversation centers, the temporary set of one or more conversation centers, and the second set of one or more conversation centers comprises a value for a variable, and using the one or more transitional rules comprises:
1334
Determining whether a first variable is included in the first set of one or more conversation centers
1336
Determining whether the first variable is included in the temporary set of one or more conversation centers
1338
Determining a respective transitional rule of the one or more transitional rules to apply based on whether the first variable is included in the first set of one or more conversation centers and/or the temporary set of one or more conversation centers
1339
Applying the respective transitional rule
C
D
E

**Figure 13C**

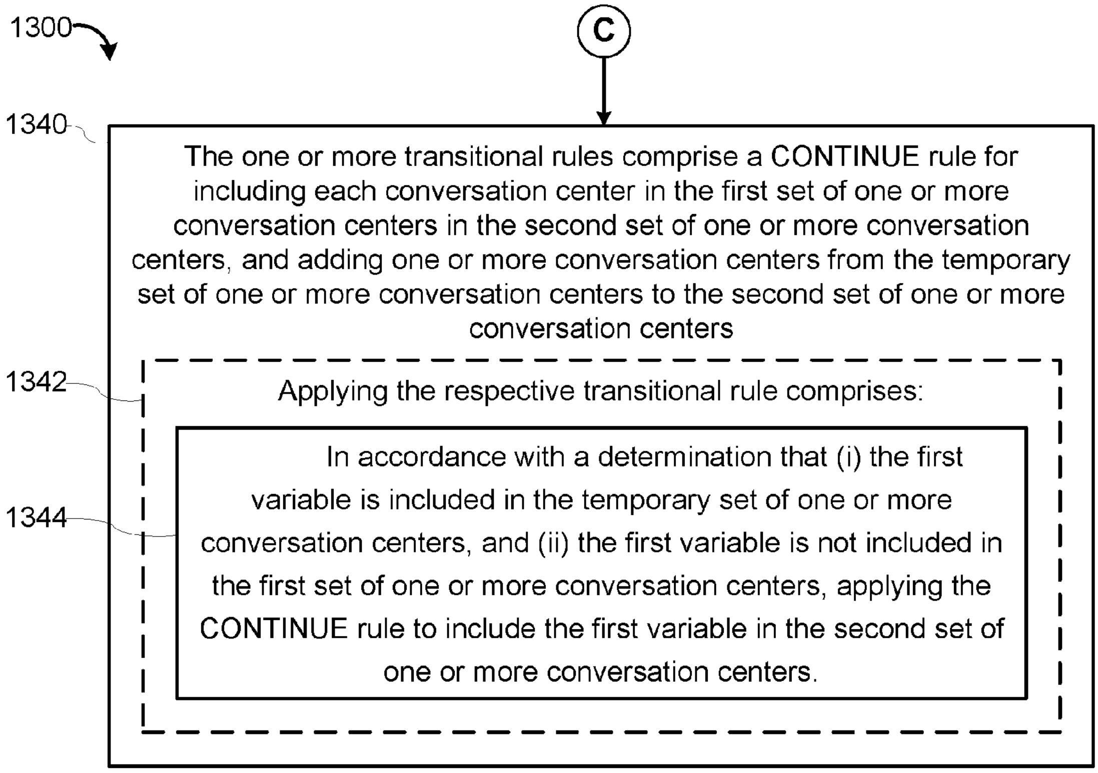


**Figure 13D**

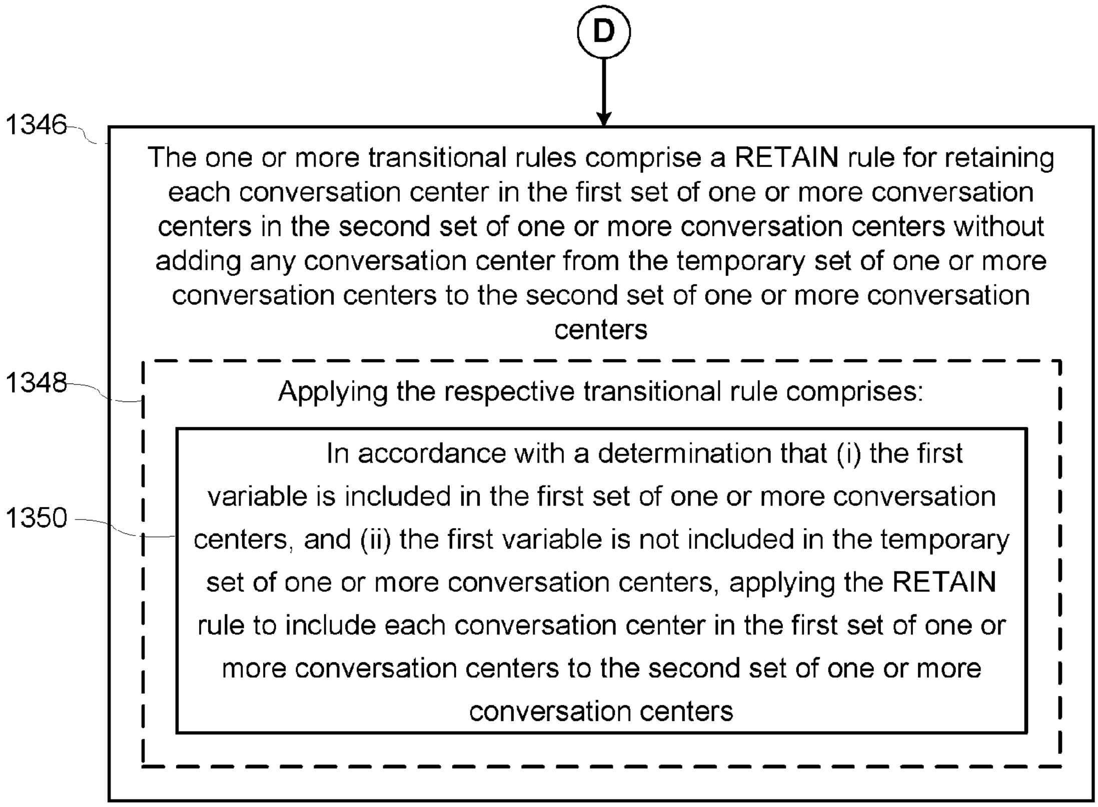


**Figure 13E**

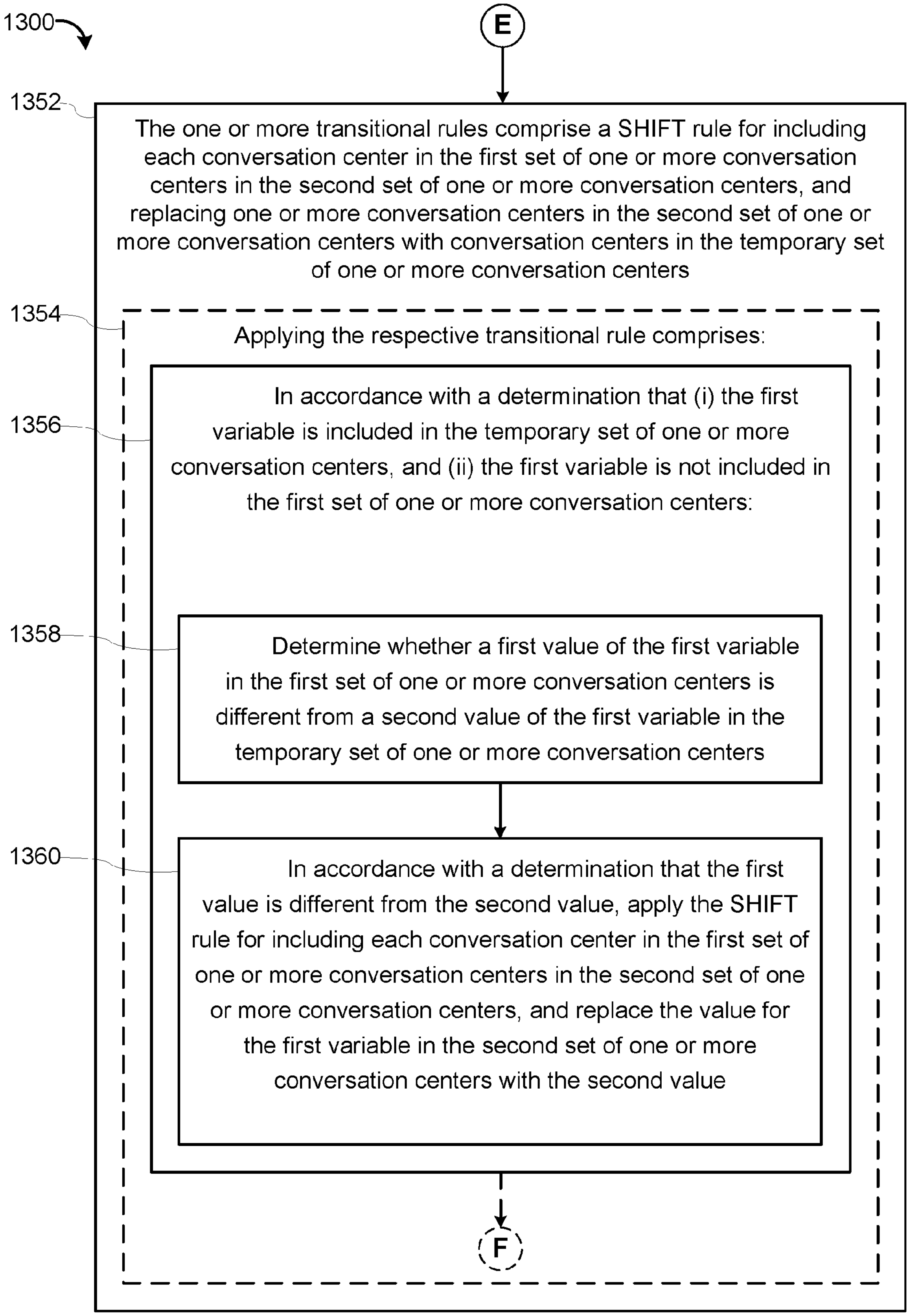
1300
E
1352
The one or more transitional rules comprise a SHIFT rule for including each conversation center in the first set of one or more conversation centers in the second set of one or more conversation centers, and replacing one or more conversation centers in the second set of one or more conversation centers with conversation centers in the temporary set of one or more conversation centers
1354
Applying the respective transitional rule comprises:
1356
In accordance with a determination that (i) the first variable is included in the temporary set of one or more conversation centers, and (ii) the first variable is not included in the first set of one or more conversation centers:
1358
Determine whether a first value of the first variable in the first set of one or more conversation centers is different from a second value of the first variable in the temporary set of one or more conversation centers
1360
In accordance with a determination that the first value is different from the second value, apply the SHIFT rule for including each conversation center in the first set of one or more conversation centers in the second set of one or more conversation centers, and replace the value for the first variable in the second set of one or more conversation centers with the second value
F

Figure 13F

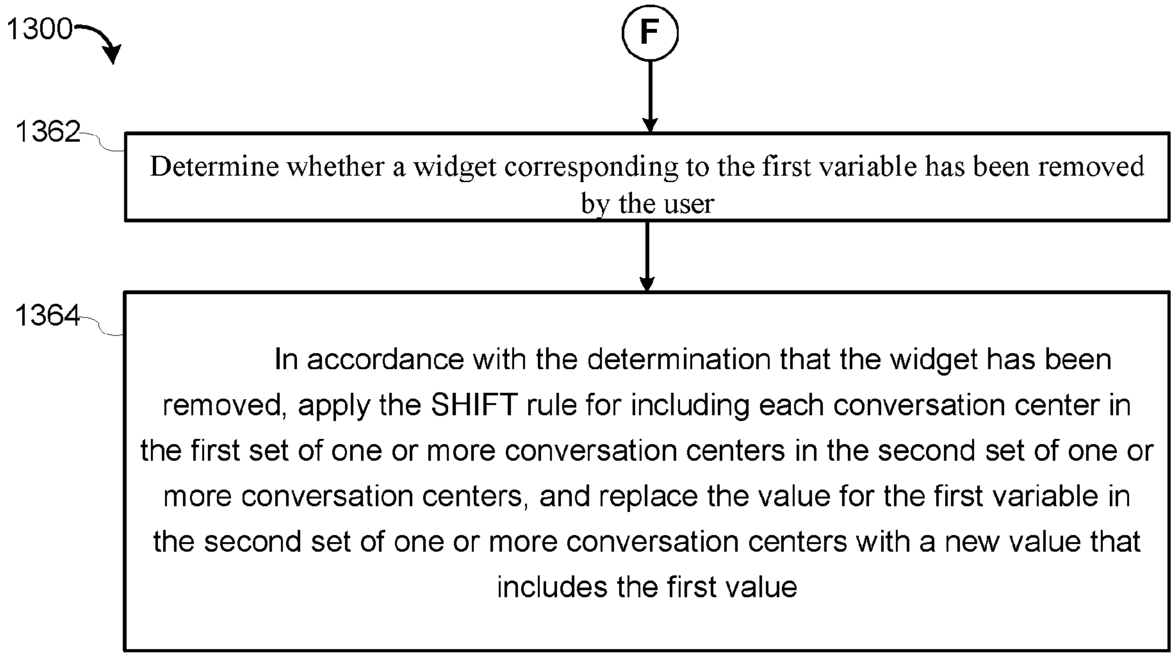


Figure 13G

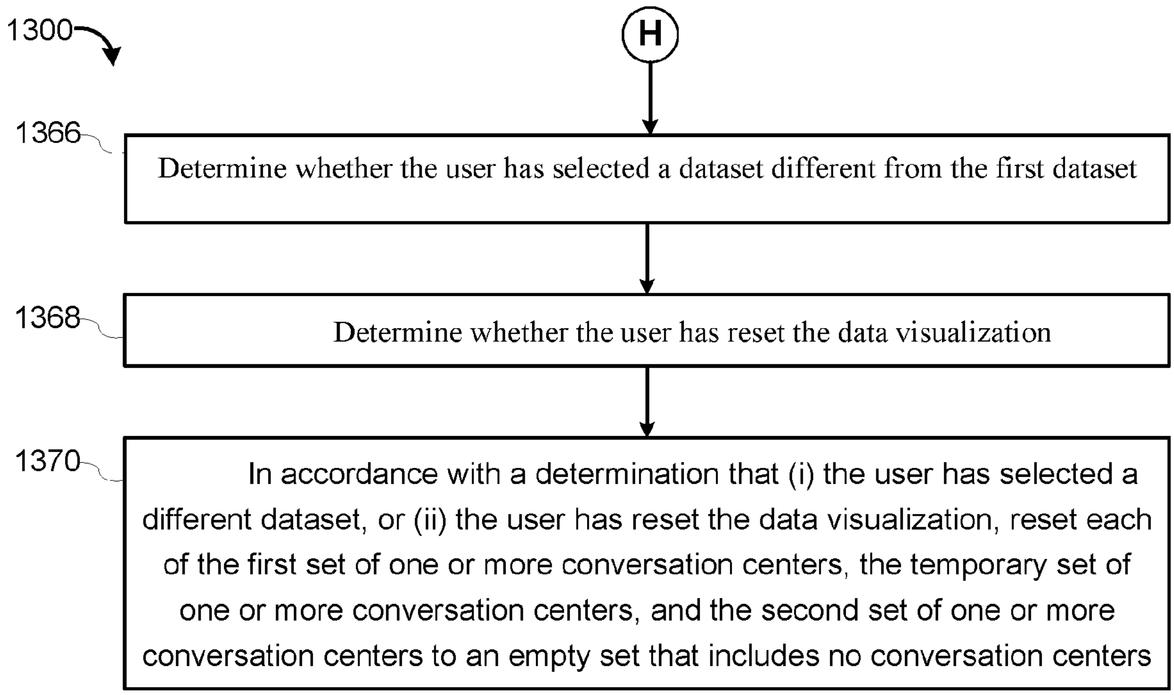


Figure 13H

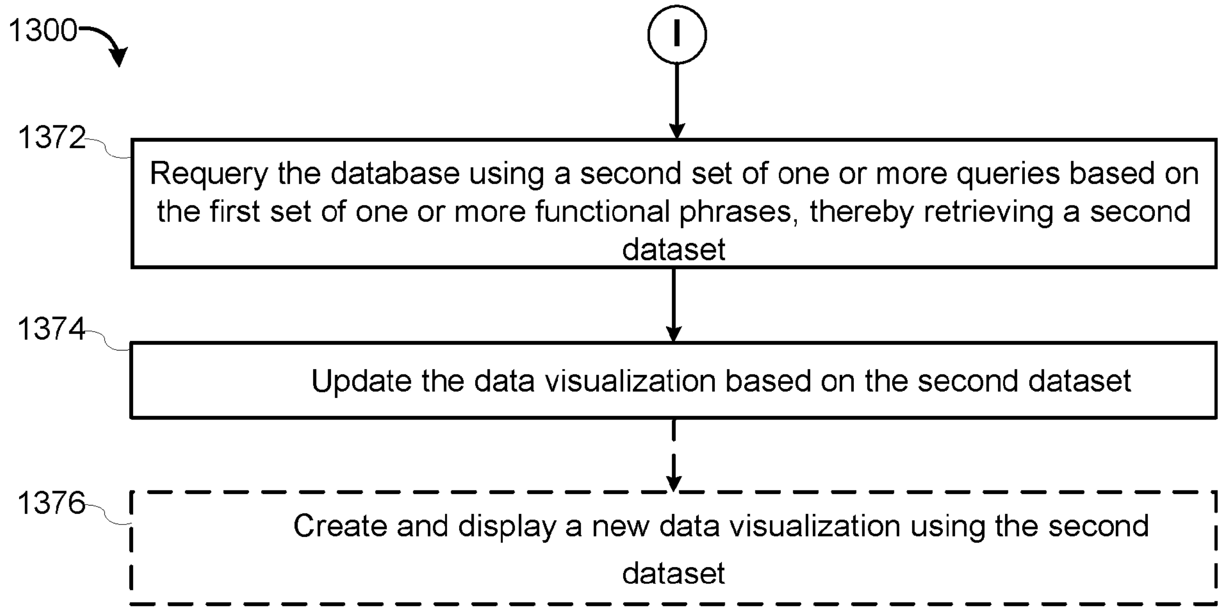


Figure 13I

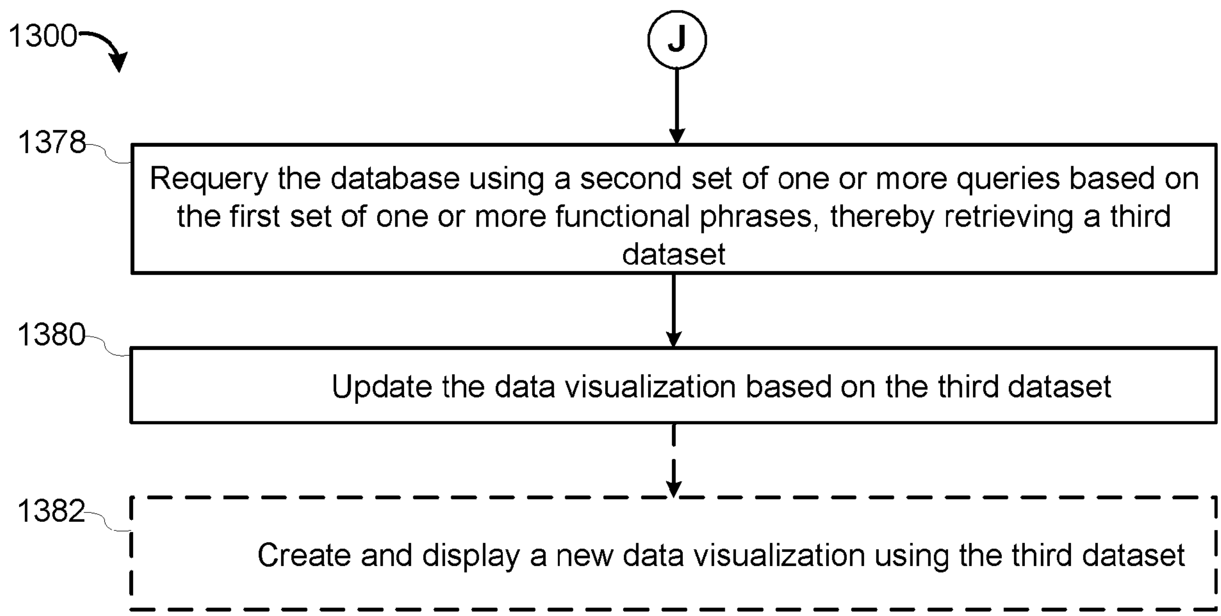


Figure 13J

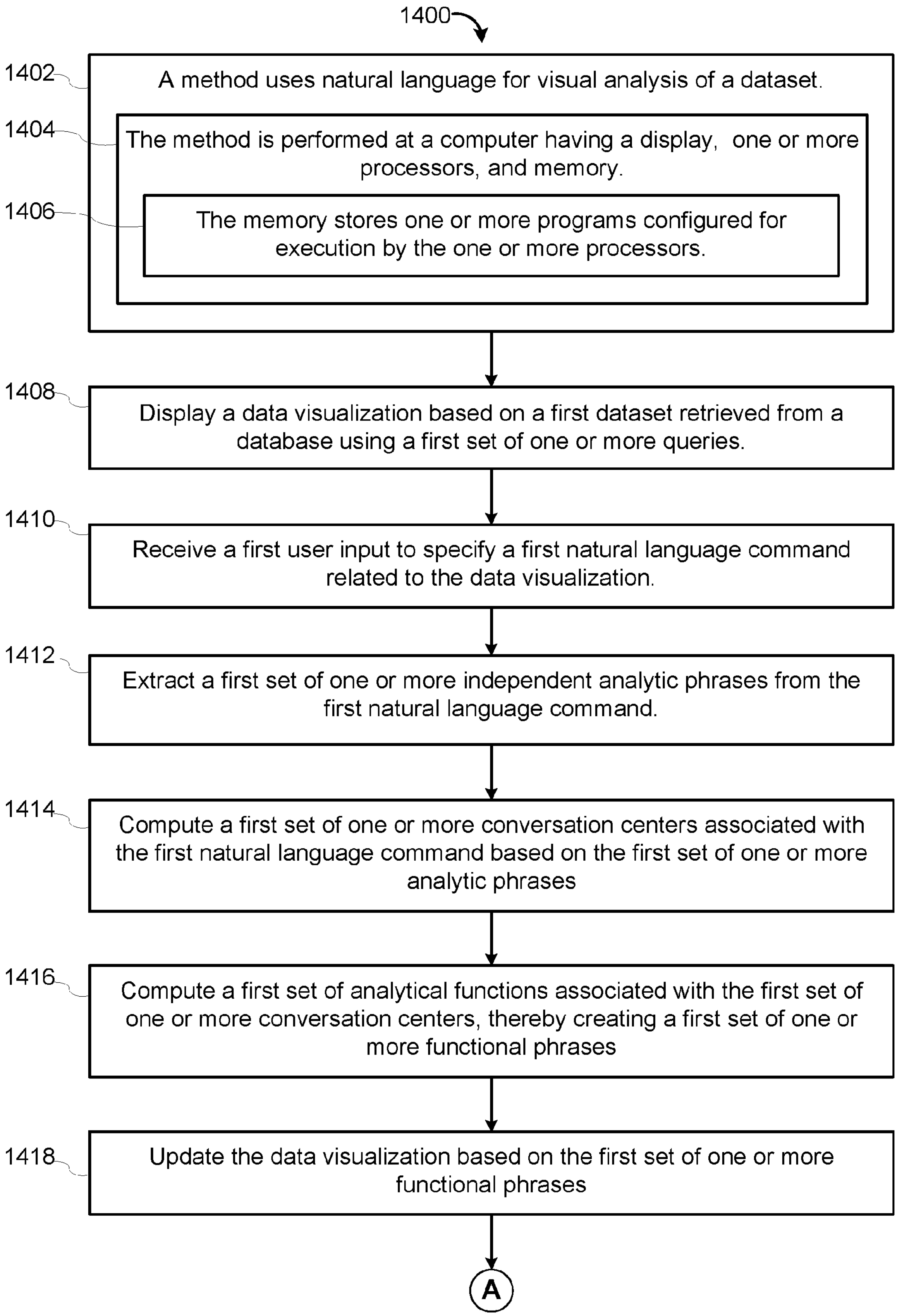
1400
1402
A method uses natural language for visual analysis of a dataset.
1404
The method is performed at a computer having a display, one or more processors, and memory.
1406
The memory stores one or more programs configured for execution by the one or more processors.
1408
Display a data visualization based on a first dataset retrieved from a database using a first set of one or more queries.
1410
Receive a first user input to specify a first natural language command related to the data visualization.
1412
Extract a first set of one or more independent analytic phrases from the first natural language command.
1414
Compute a first set of one or more conversation centers associated with the first natural language command based on the first set of one or more analytic phrases
1416
Compute a first set of analytical functions associated with the first set of one or more conversation centers, thereby creating a first set of one or more functional phrases
1418
Update the data visualization based on the first set of one or more functional phrases
A

Figure 14A

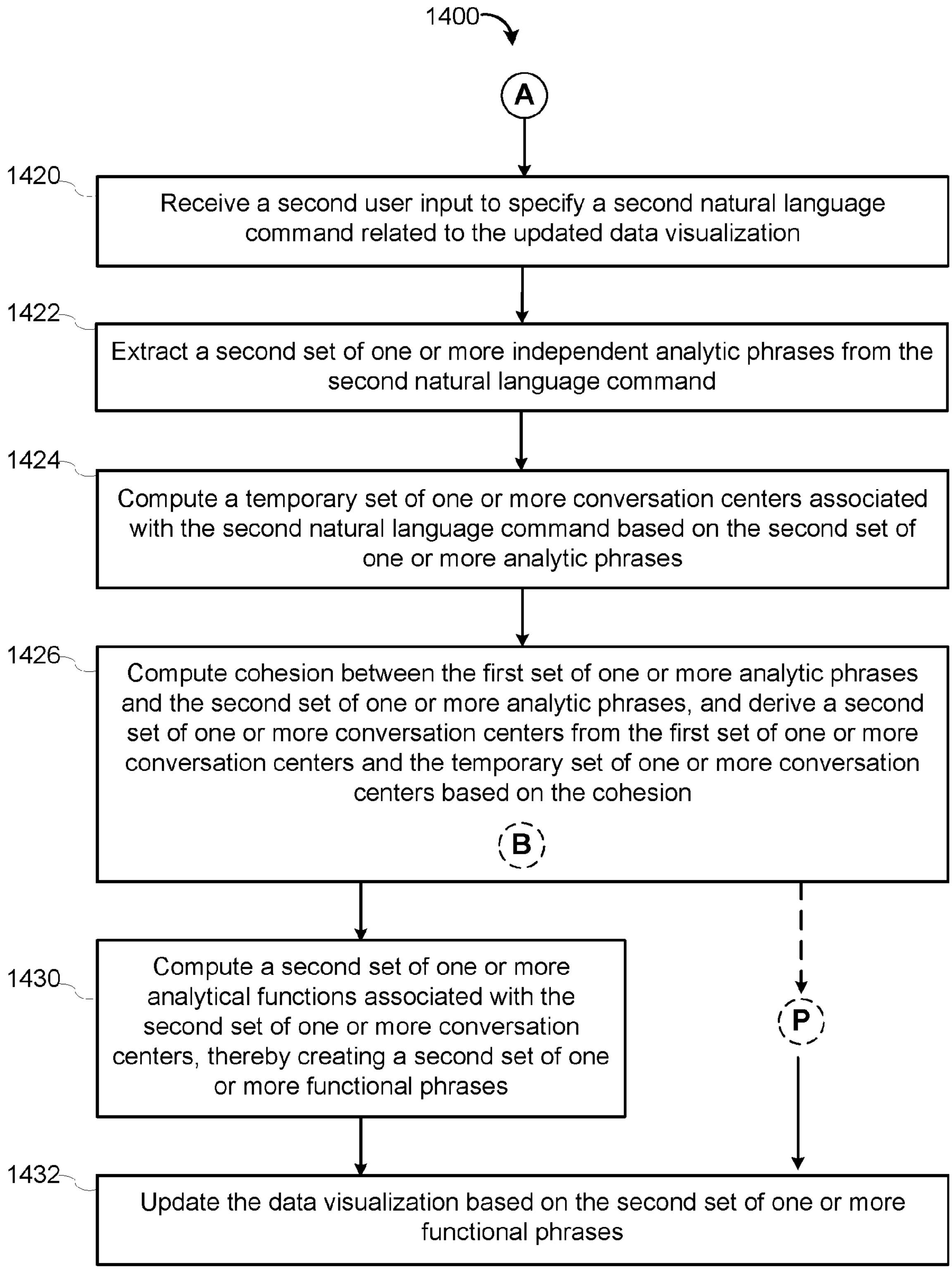
1400
A
1420
Receive a second user input to specify a second natural language command related to the updated data visualization
1422
Extract a second set of one or more independent analytic phrases from the second natural language command
1424
Compute a temporary set of one or more conversation centers associated with the second natural language command based on the second set of one or more analytic phrases
1426
Compute cohesion between the first set of one or more analytic phrases and the second set of one or more analytic phrases, and derive a second set of one or more conversation centers from the first set of one or more conversation centers and the temporary set of one or more conversation centers based on the cohesion
B
1430
Compute a second set of one or more analytical functions associated with the second set of one or more conversation centers, thereby creating a second set of one or more functional phrases
P
1432
Update the data visualization based on the second set of one or more functional phrases

Figure 14B

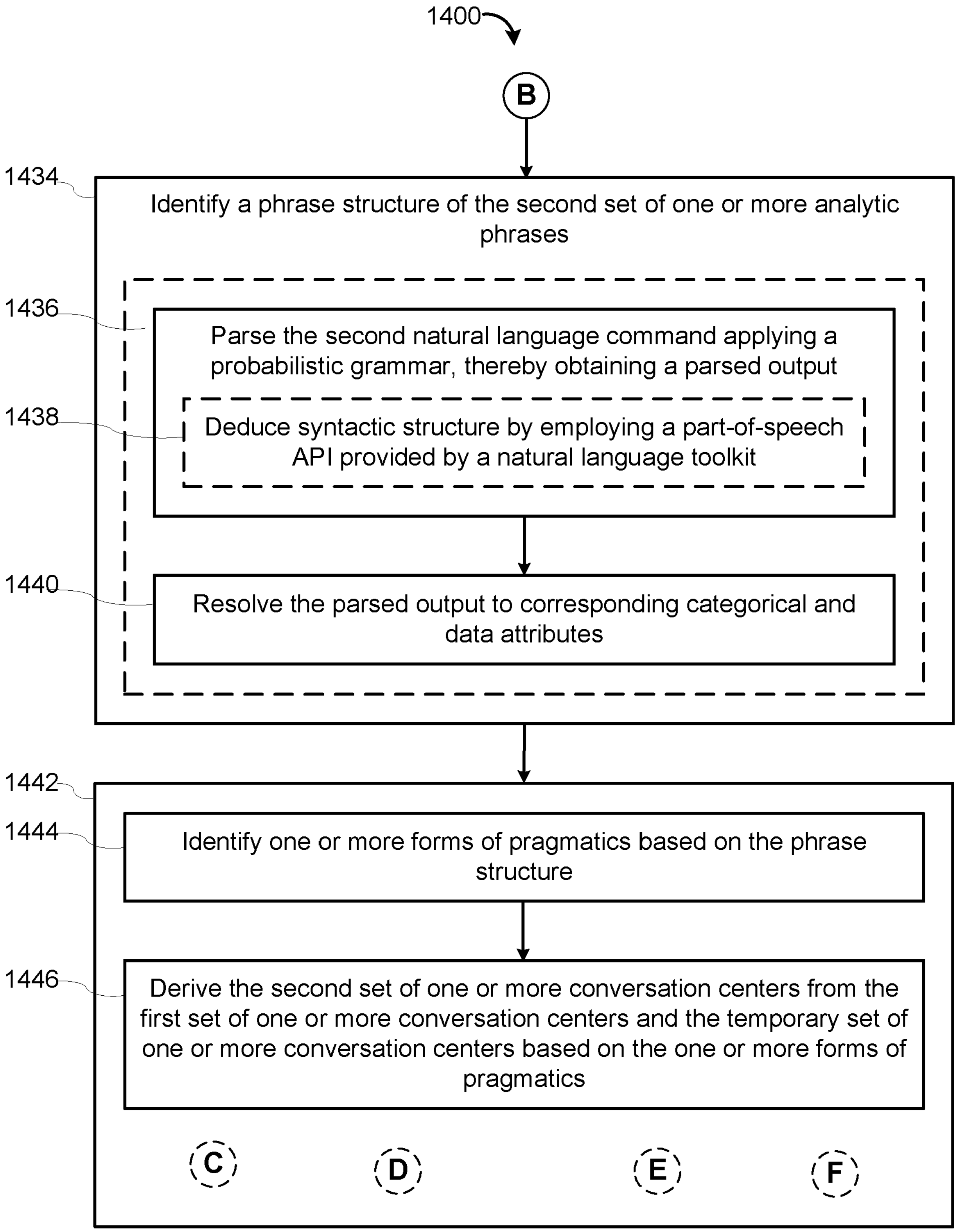
1400
B
1434
Identify a phrase structure of the second set of one or more analytic phrases
1436
Parse the second natural language command applying a probabilistic grammar, thereby obtaining a parsed output
1438
Deduce syntactic structure by employing a part-of-speech API provided by a natural language toolkit
1440
Resolve the parsed output to corresponding categorical and data attributes
1442
1444
Identify one or more forms of pragmatics based on the phrase structure
1446
Derive the second set of one or more conversation centers from the first set of one or more conversation centers and the temporary set of one or more conversation centers based on the one or more forms of pragmatics
C
D
E
F

Figure 14C

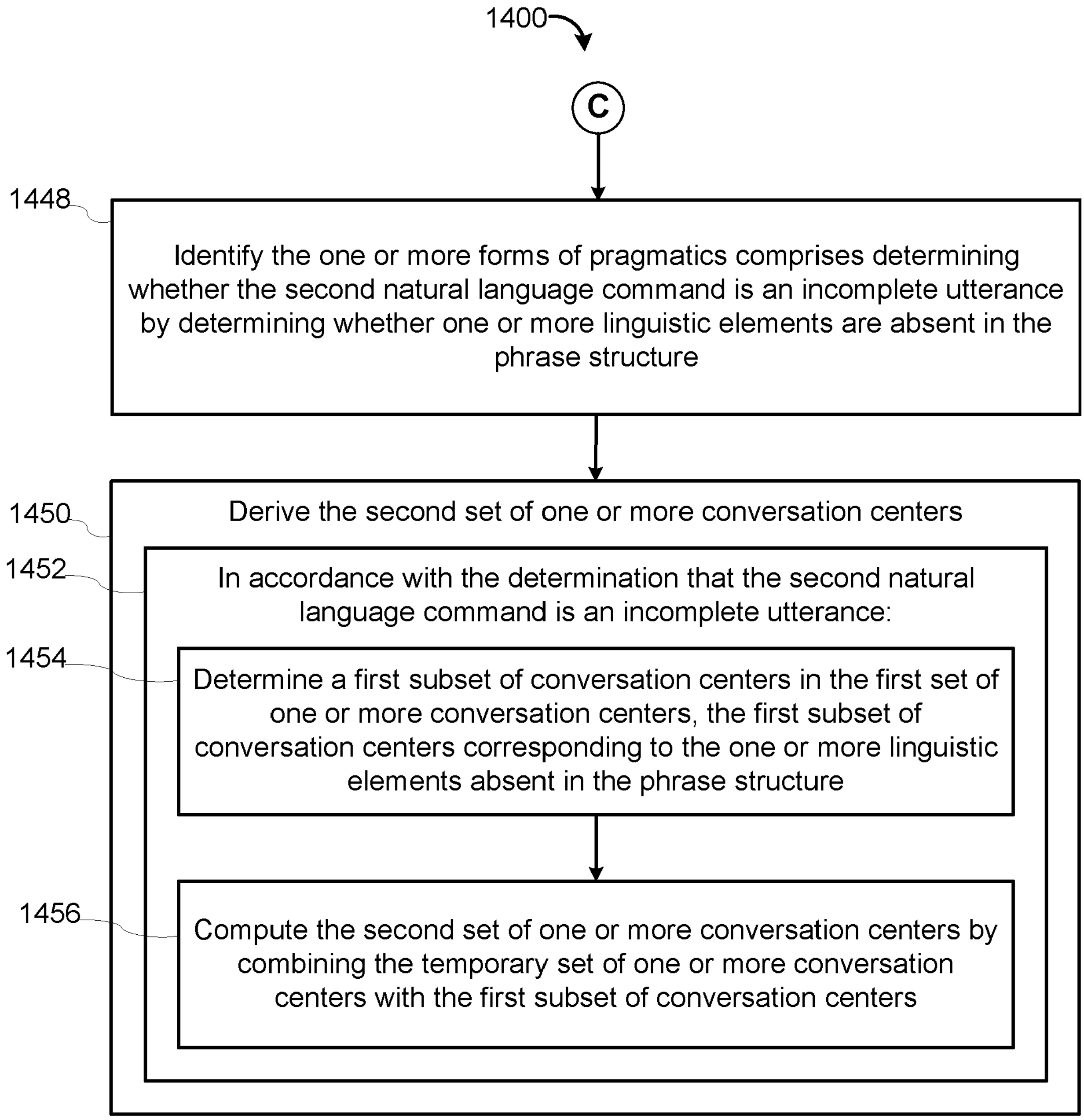
1400
C
1448
Identify the one or more forms of pragmatics comprises determining whether the second natural language command is an incomplete utterance by determining whether one or more linguistic elements are absent in the phrase structure
1450
Derive the second set of one or more conversation centers
1452
In accordance with the determination that the second natural language command is an incomplete utterance:
1454
Determine a first subset of conversation centers in the first set of one or more conversation centers, the first subset of conversation centers corresponding to the one or more linguistic elements absent in the phrase structure
1456
Compute the second set of one or more conversation centers by combining the temporary set of one or more conversation centers with the first subset of conversation centers

Figure 14D

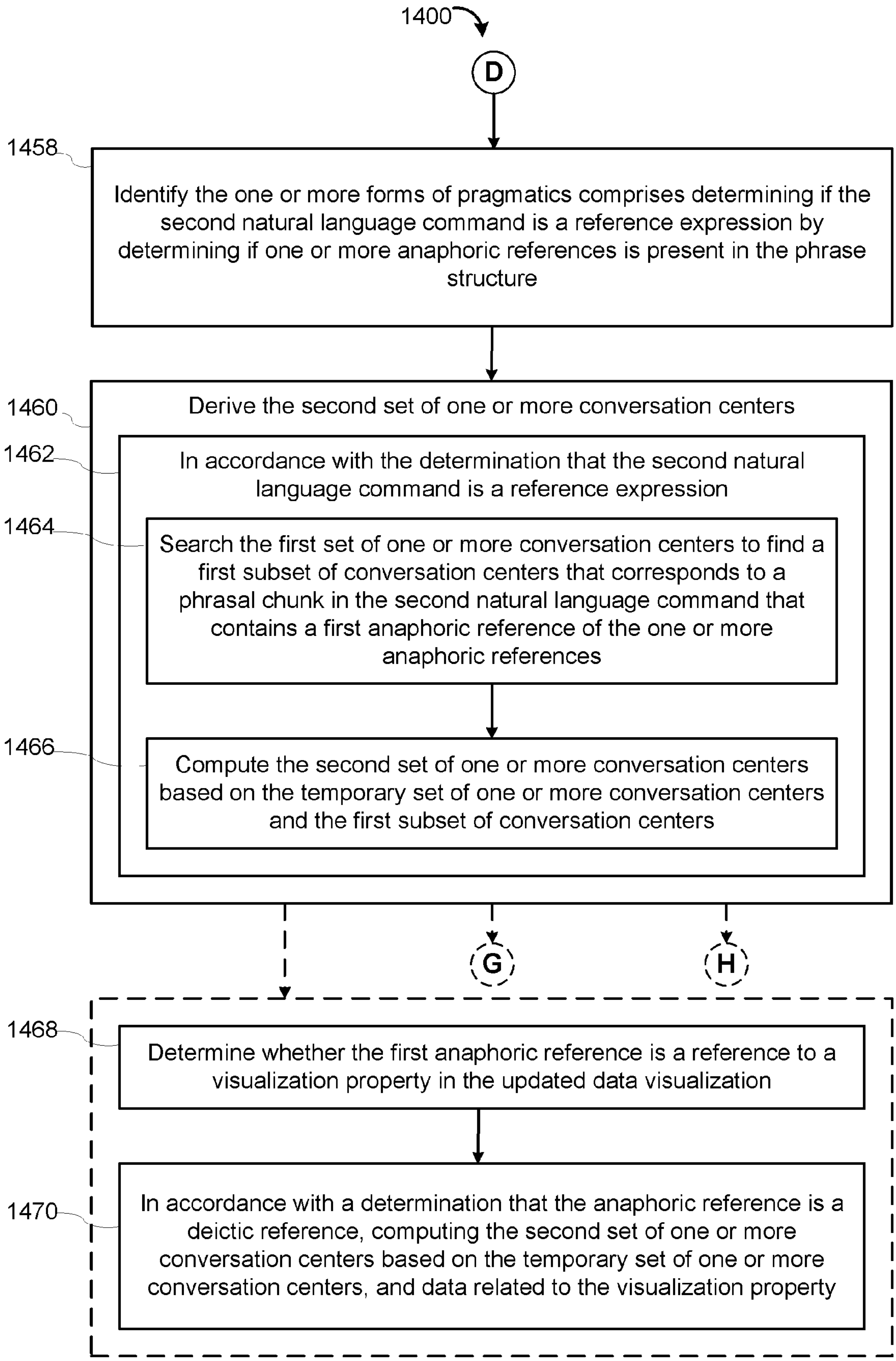
1400
D
1458
Identify the one or more forms of pragmatics comprises determining if the second natural language command is a reference expression by determining if one or more anaphoric references is present in the phrase structure
1460
Derive the second set of one or more conversation centers
1462
In accordance with the determination that the second natural language command is a reference expression
1464
Search the first set of one or more conversation centers to find a first subset of conversation centers that corresponds to a phrasal chunk in the second natural language command that contains a first anaphoric reference of the one or more anaphoric references
1466
Compute the second set of one or more conversation centers based on the temporary set of one or more conversation centers and the first subset of conversation centers
G
H
1468
Determine whether the first anaphoric reference is a reference to a visualization property in the updated data visualization
1470
In accordance with a determination that the anaphoric reference is a deictic reference, computing the second set of one or more conversation centers based on the temporary set of one or more conversation centers, and data related to the visualization property

Figure 14E

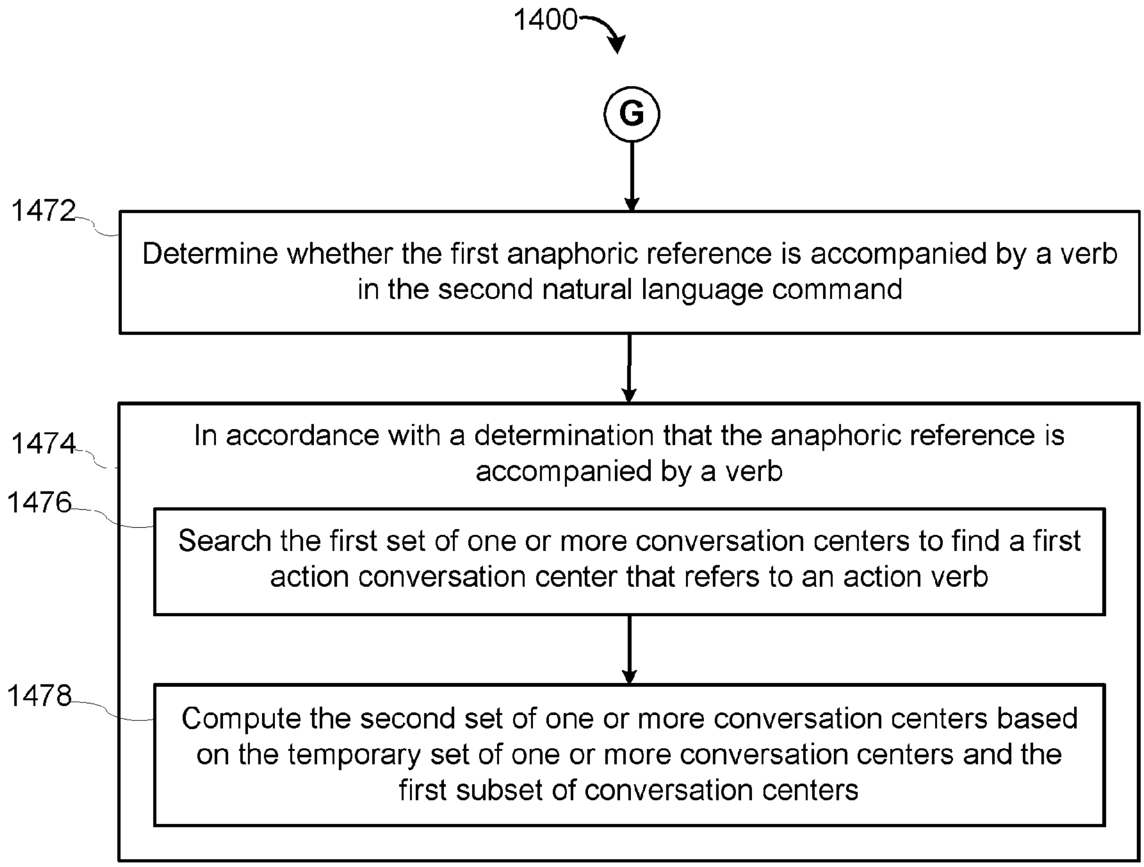


Figure 14F

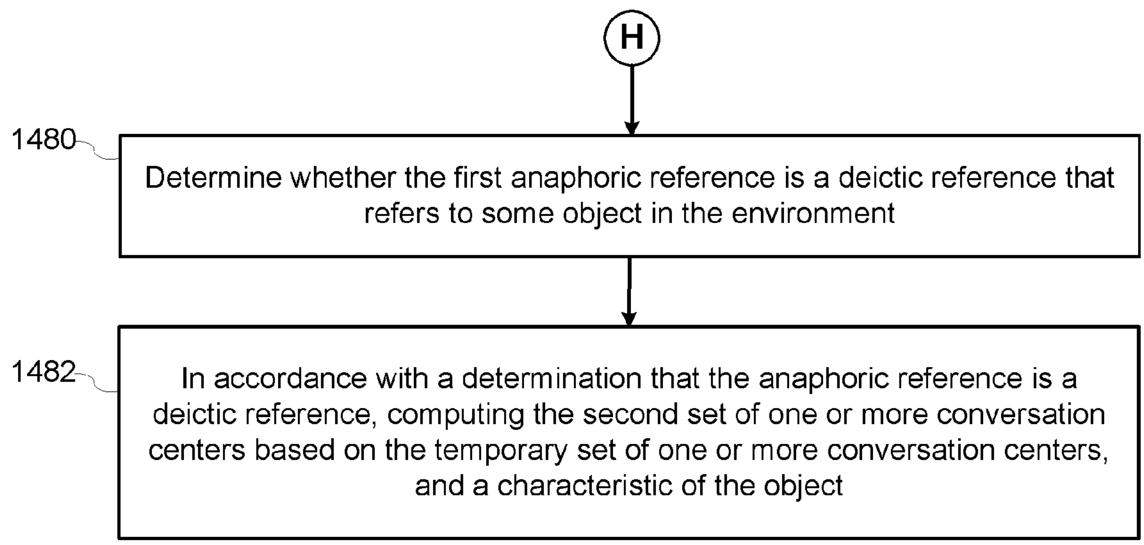


Figure 14G

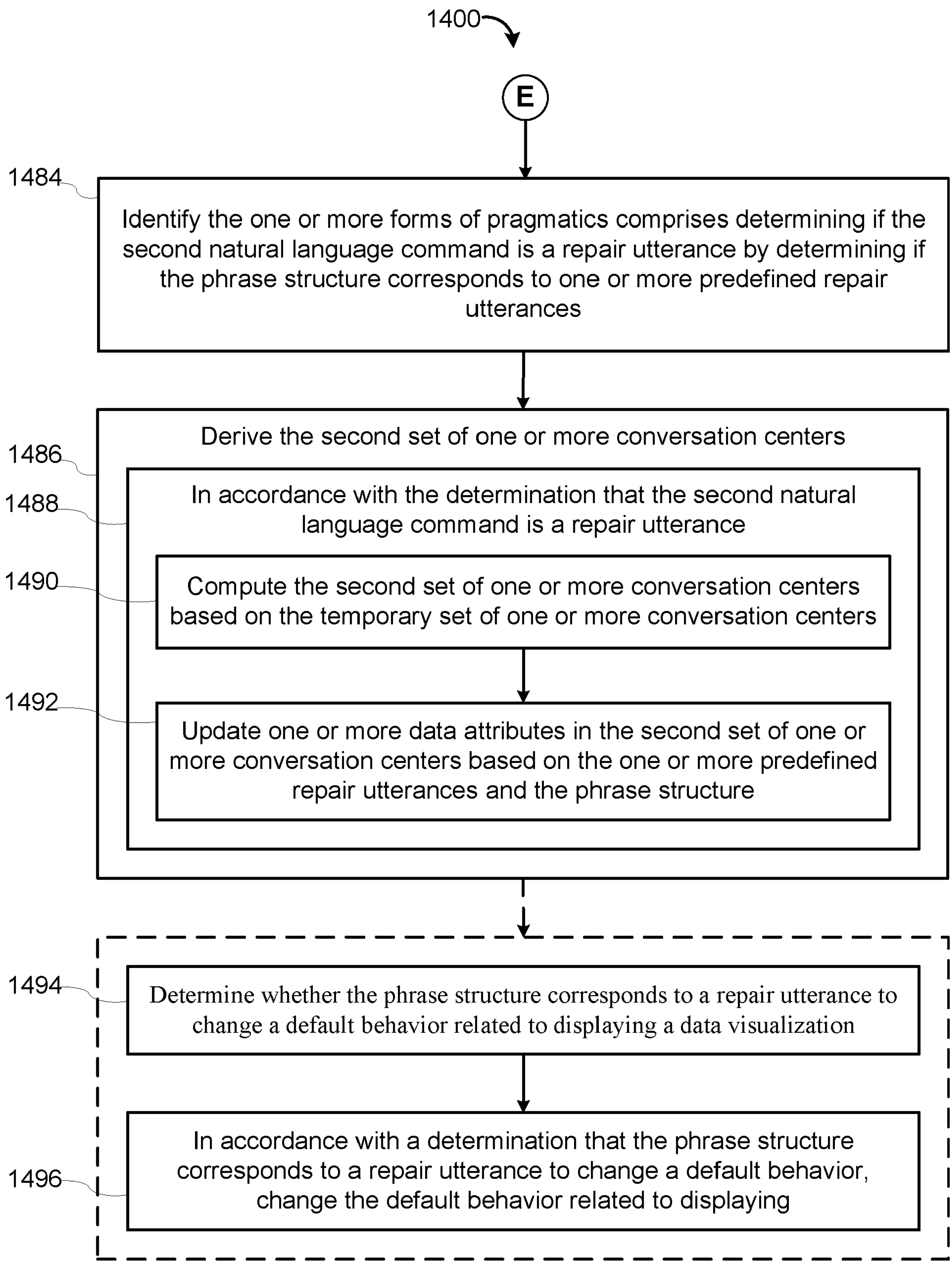
1400
E
1484
Identify the one or more forms of pragmatics comprises determining if the second natural language command is a repair utterance by determining if the phrase structure corresponds to one or more predefined repair utterances
1486
Derive the second set of one or more conversation centers
1488
In accordance with the determination that the second natural language command is a repair utterance
1490
Compute the second set of one or more conversation centers based on the temporary set of one or more conversation centers
1492
Update one or more data attributes in the second set of one or more conversation centers based on the one or more predefined repair utterances and the phrase structure
1494
Determine whether the phrase structure corresponds to a repair utterance to change a default behavior related to displaying a data visualization
1496
In accordance with a determination that the phrase structure corresponds to a repair utterance to change a default behavior, change the default behavior related to displaying

**Figure 14H**

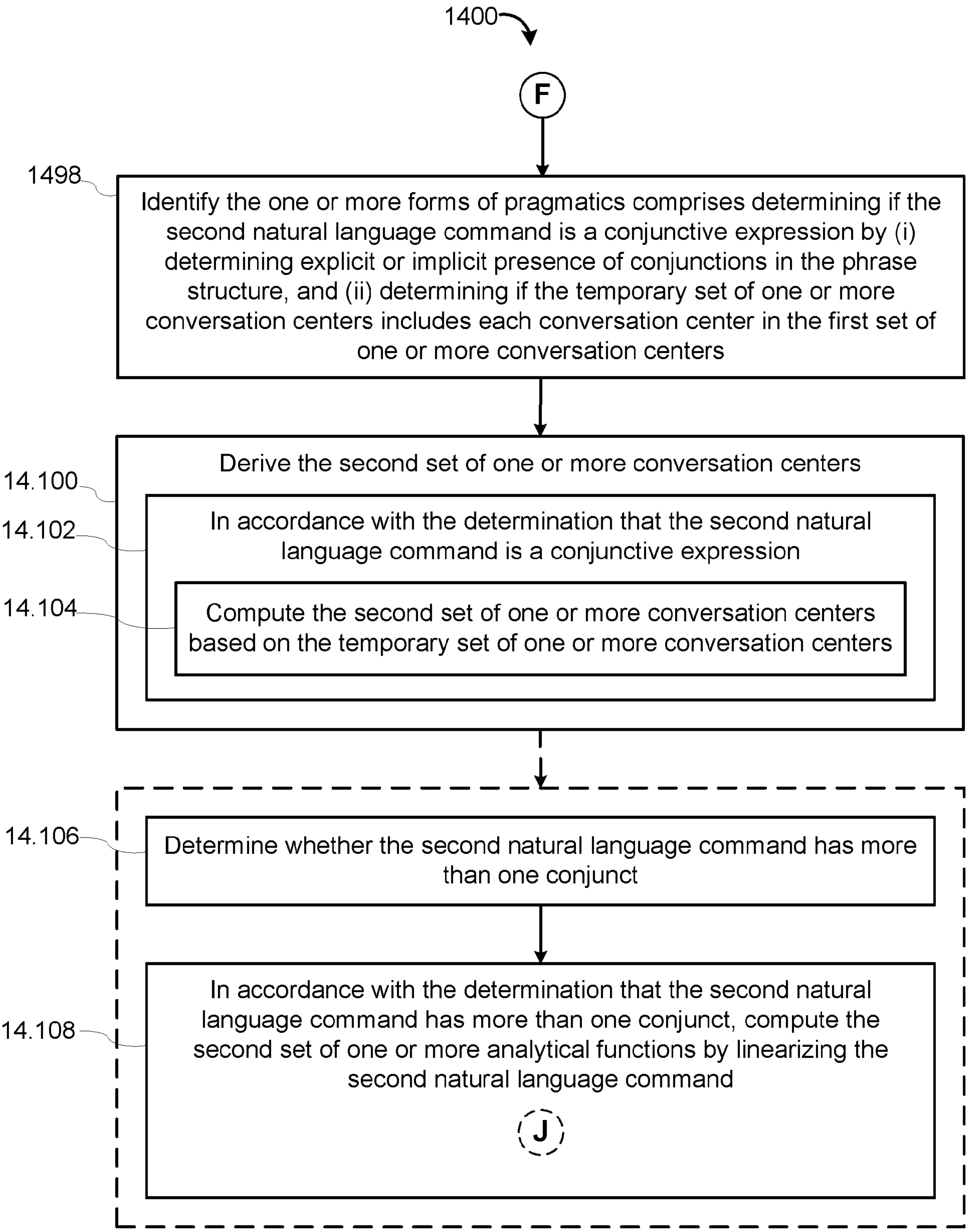
1400
F
1498
Identify the one or more forms of pragmatics comprises determining if the second natural language command is a conjunctive expression by (i) determining explicit or implicit presence of conjunctions in the phrase structure, and (ii) determining if the temporary set of one or more conversation centers includes each conversation center in the first set of one or more conversation centers
14.100
Derive the second set of one or more conversation centers
14.102
In accordance with the determination that the second natural language command is a conjunctive expression
14.104
Compute the second set of one or more conversation centers based on the temporary set of one or more conversation centers
14.106
Determine whether the second natural language command has more than one conjunct
14.108
In accordance with the determination that the second natural language command has more than one conjunct, compute the second set of one or more analytical functions by linearizing the second natural language command
J

Figure 14I

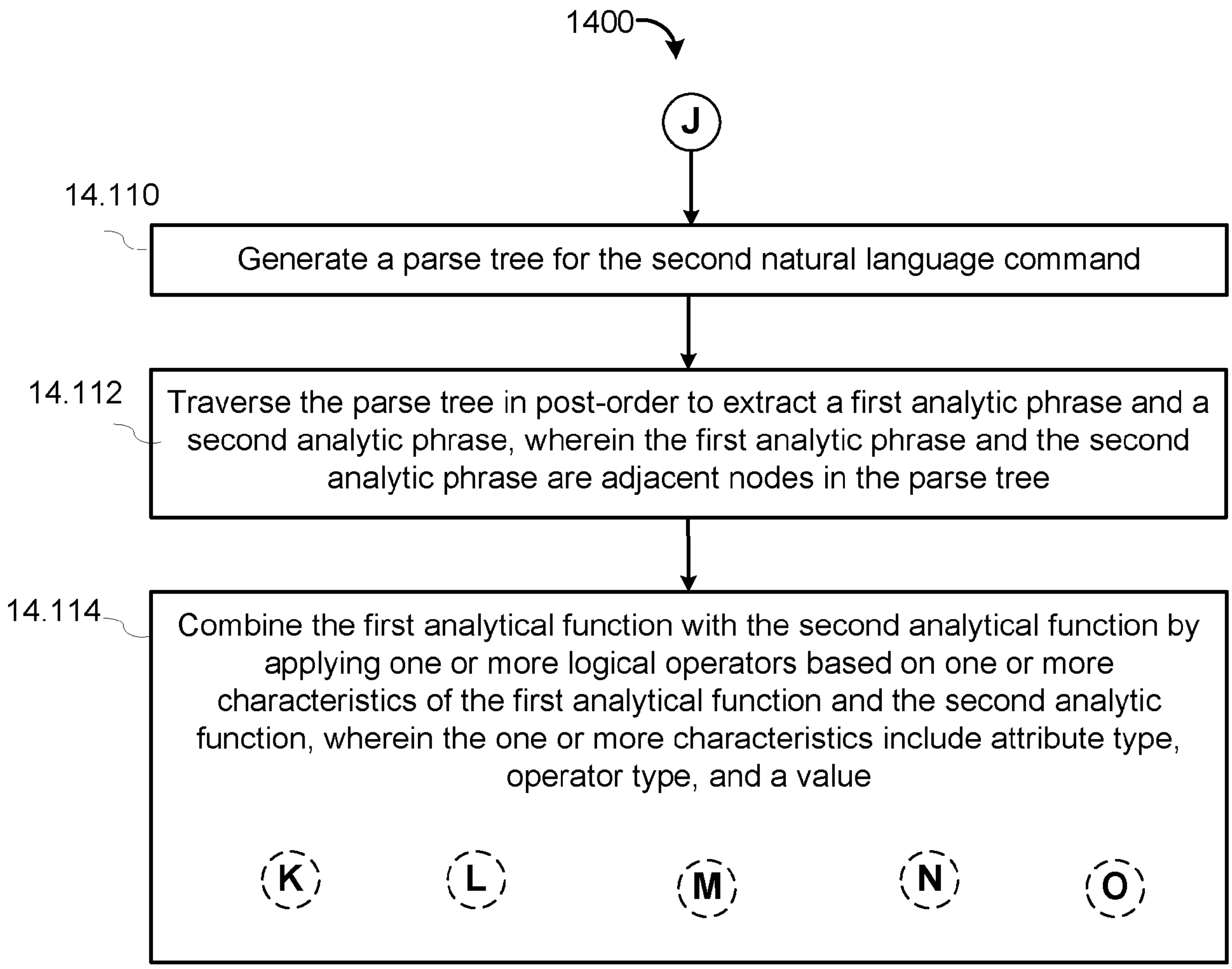
1400
J
14.110
Generate a parse tree for the second natural language command
14.112
Traverse the parse tree in post-order to extract a first analytic phrase and a second analytic phrase, wherein the first analytic phrase and the second analytic phrase are adjacent nodes in the parse tree
14.114
Combine the first analytical function with the second analytical function by applying one or more logical operators based on one or more characteristics of the first analytical function and the second analytic function, wherein the one or more characteristics include attribute type, operator type, and a value
K
L
M
N
O

Figure 14J

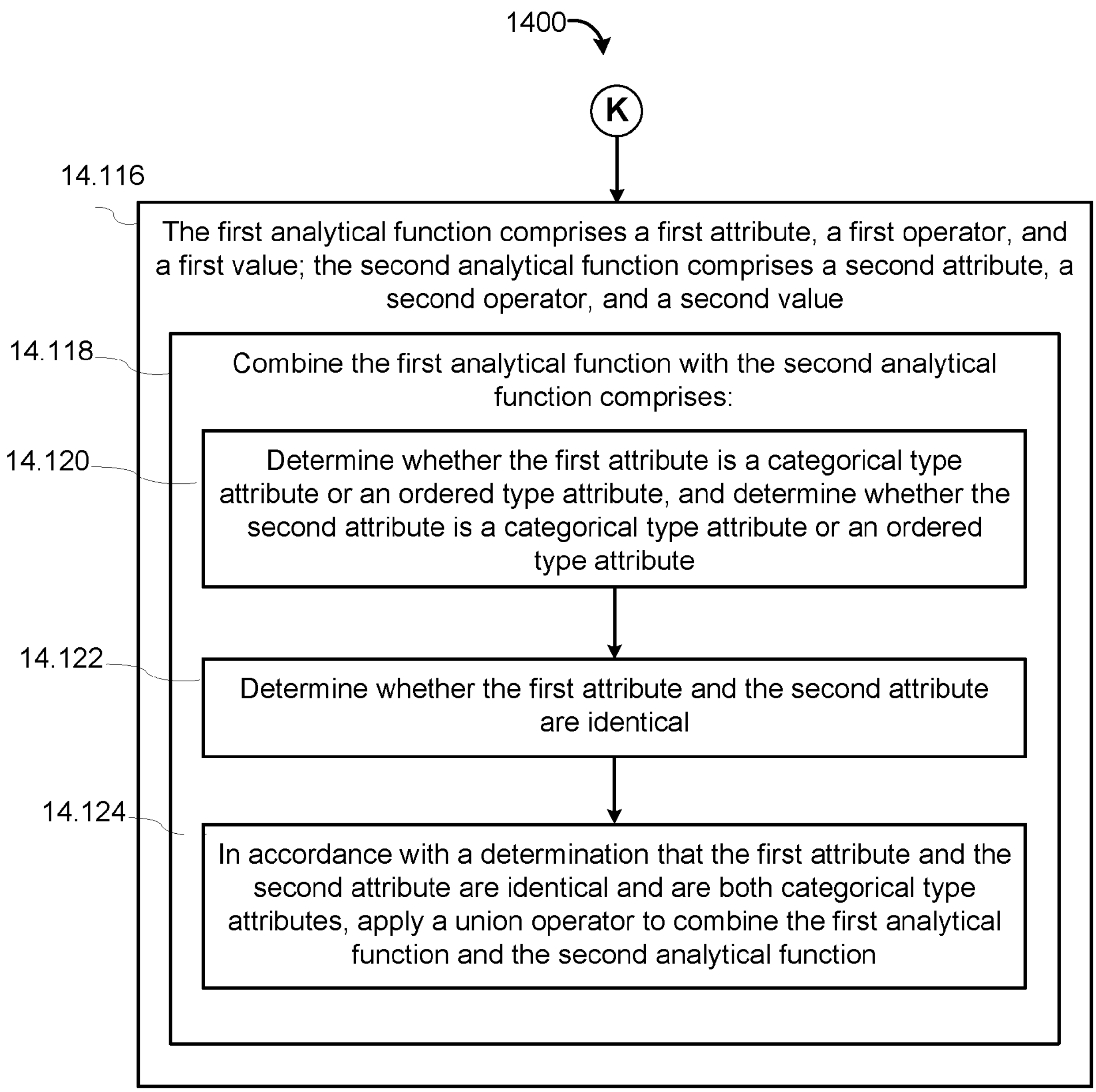
1400
K
14.116
The first analytical function comprises a first attribute, a first operator, and a first value; the second analytical function comprises a second attribute, a second operator, and a second value
14.118
Combine the first analytical function with the second analytical function comprises:
14.120
Determine whether the first attribute is a categorical type attribute or an ordered type attribute, and determine whether the second attribute is a categorical type attribute or an ordered type attribute
14.122
Determine whether the first attribute and the second attribute are identical
14.124
In accordance with a determination that the first attribute and the second attribute are identical and are both categorical type attributes, apply a union operator to combine the first analytical function and the second analytical function

**Figure 14K**

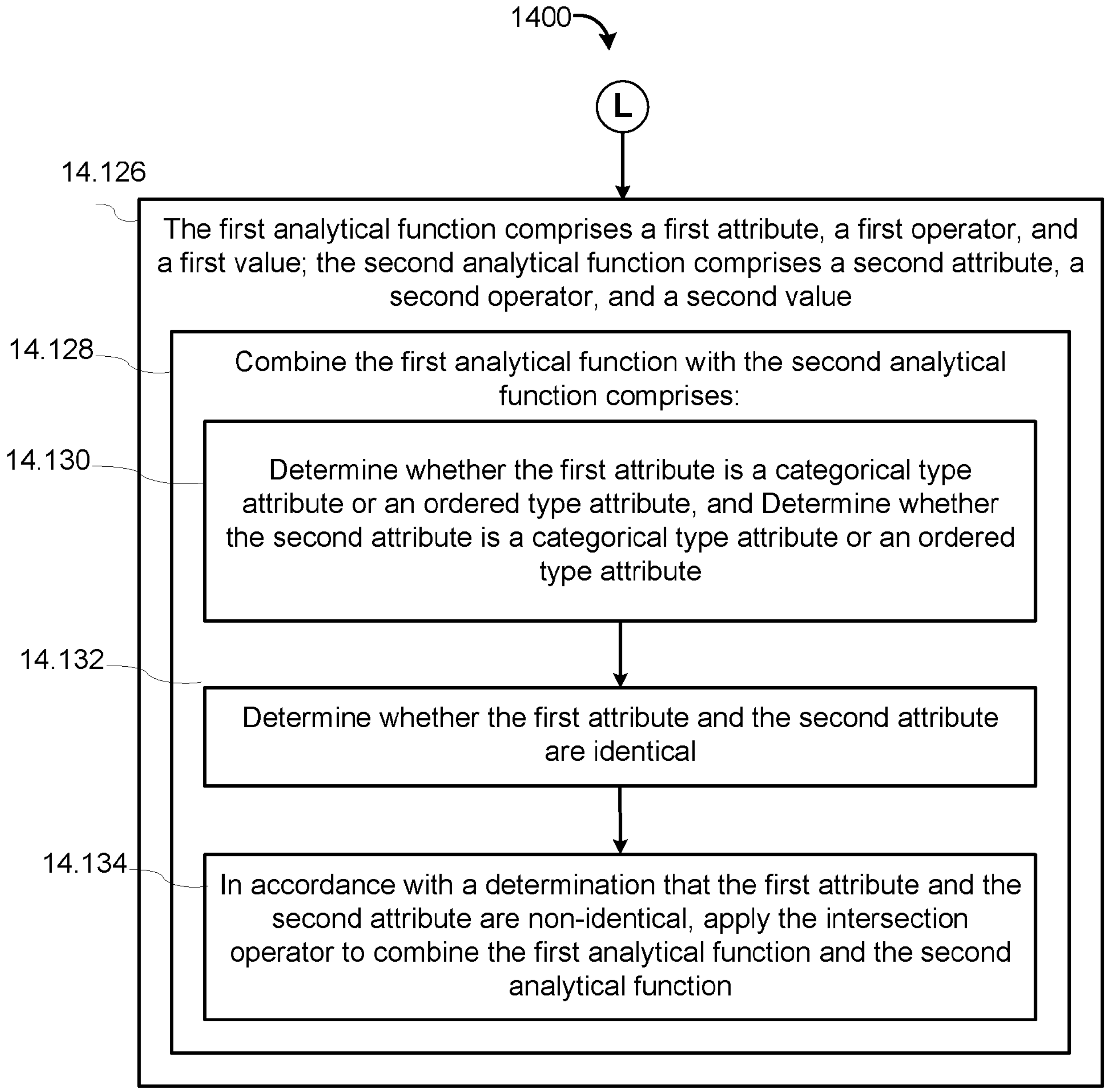
1400
L
14.126
The first analytical function comprises a first attribute, a first operator, and a first value; the second analytical function comprises a second attribute, a second operator, and a second value
14.128
Combine the first analytical function with the second analytical function comprises:
14.130
Determine whether the first attribute is a categorical type attribute or an ordered type attribute, and Determine whether the second attribute is a categorical type attribute or an ordered type attribute
14.132
Determine whether the first attribute and the second attribute are identical
14.134
In accordance with a determination that the first attribute and the second attribute are non-identical, apply the intersection operator to combine the first analytical function and the second analytical function

**Figure 14L**

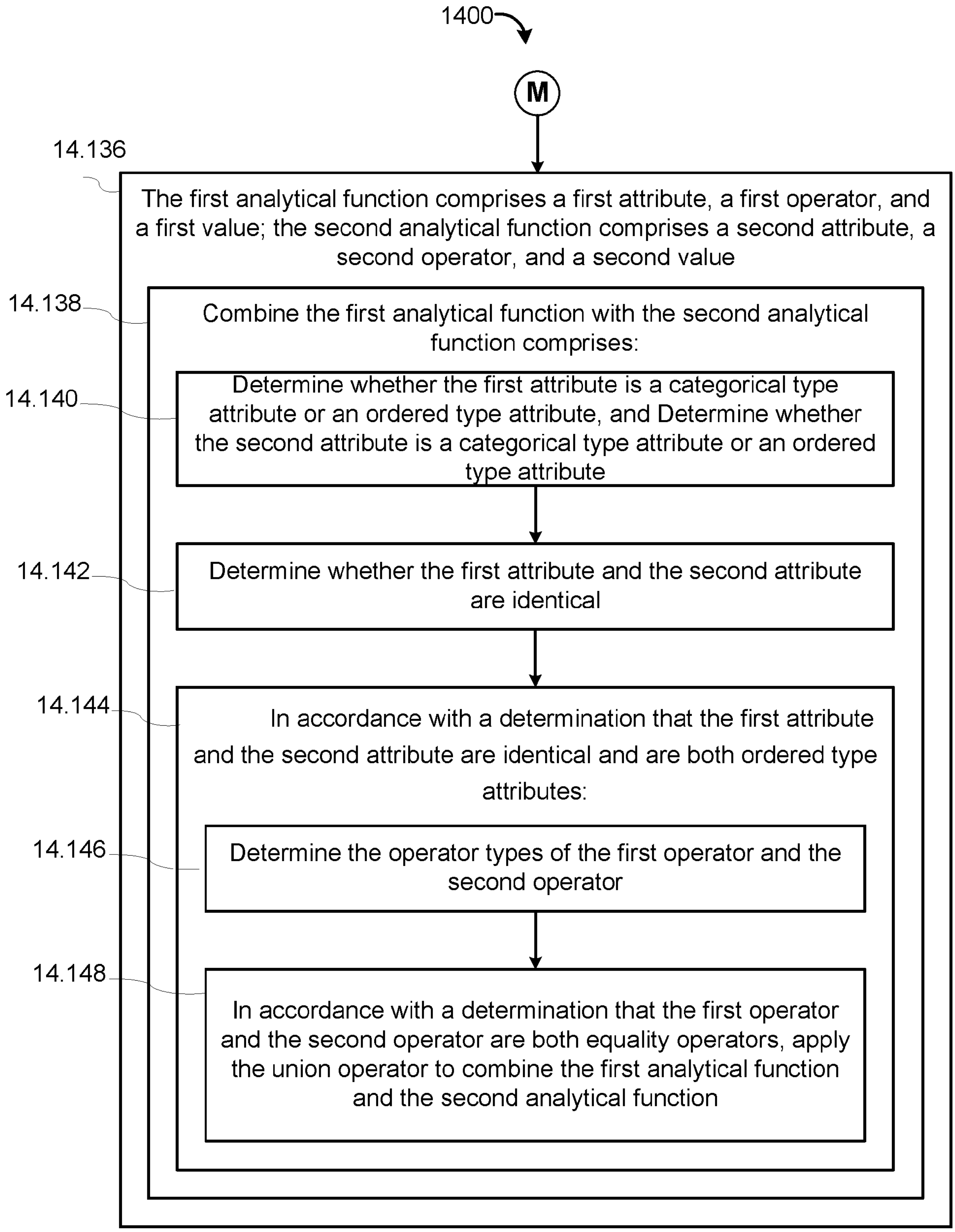
1400
M
14.136
The first analytical function comprises a first attribute, a first operator, and a first value; the second analytical function comprises a second attribute, a second operator, and a second value
14.138
Combine the first analytical function with the second analytical function comprises:
14.140
Determine whether the first attribute is a categorical type attribute or an ordered type attribute, and Determine whether the second attribute is a categorical type attribute or an ordered type attribute
14.142
Determine whether the first attribute and the second attribute are identical
14.144
In accordance with a determination that the first attribute and the second attribute are identical and are both ordered type attributes:
14.146
Determine the operator types of the first operator and the second operator
14.148
In accordance with a determination that the first operator and the second operator are both equality operators, apply the union operator to combine the first analytical function and the second analytical function

**Figure 14M**

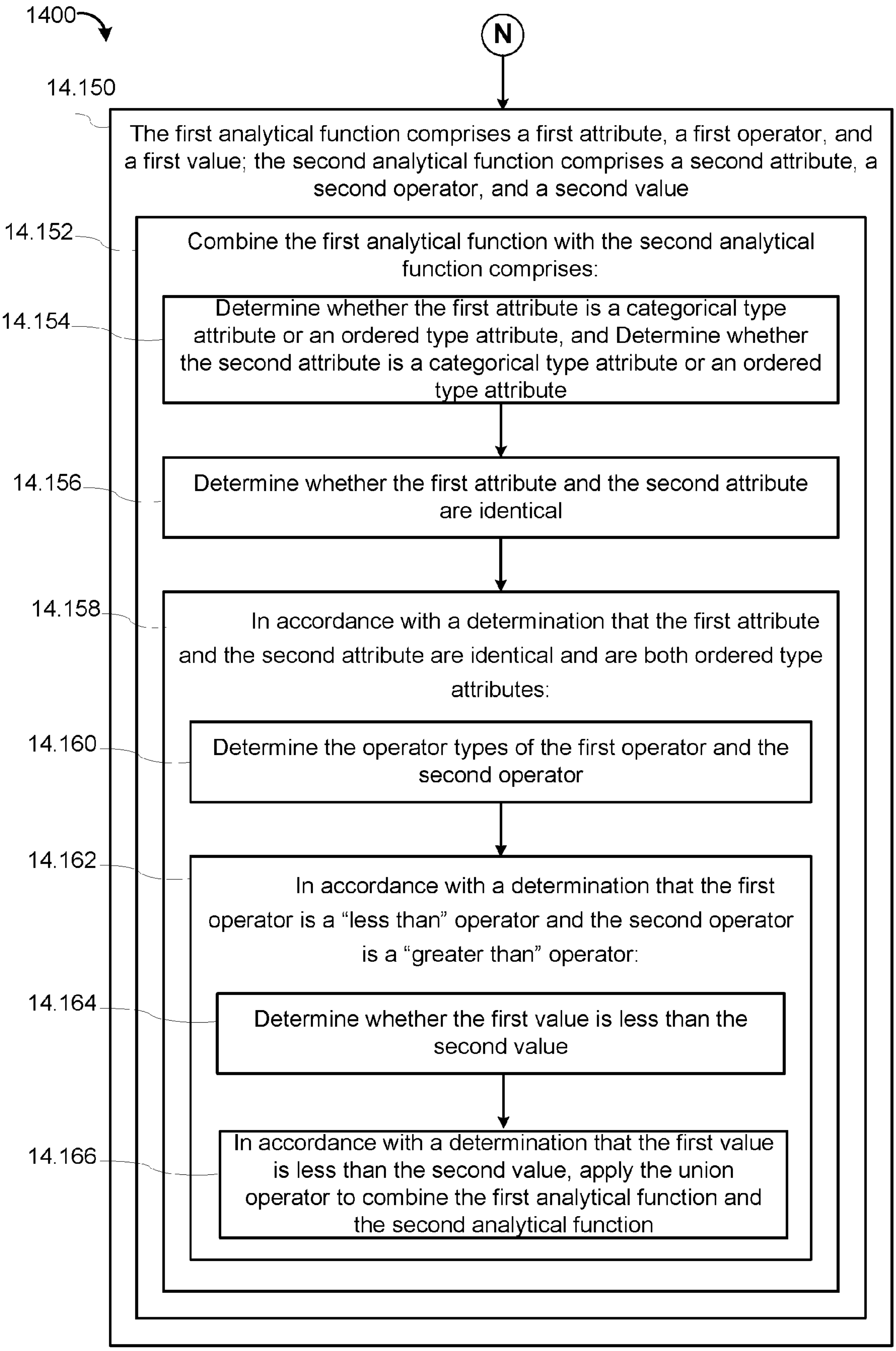
1400
N
14.150
The first analytical function comprises a first attribute, a first operator, and a first value; the second analytical function comprises a second attribute, a second operator, and a second value
14.152
Combine the first analytical function with the second analytical function comprises:
14.154
Determine whether the first attribute is a categorical type attribute or an ordered type attribute, and Determine whether the second attribute is a categorical type attribute or an ordered type attribute
14.156
Determine whether the first attribute and the second attribute are identical
14.158
In accordance with a determination that the first attribute and the second attribute are identical and are both ordered type attributes:
14.160
Determine the operator types of the first operator and the second operator
14.162
In accordance with a determination that the first operator is a "less than" operator and the second operator is a "greater than" operator:
14.164
Determine whether the first value is less than the second value
14.166
In accordance with a determination that the first value is less than the second value, apply the union operator to combine the first analytical function and the second analytical function

**Figure 14N**

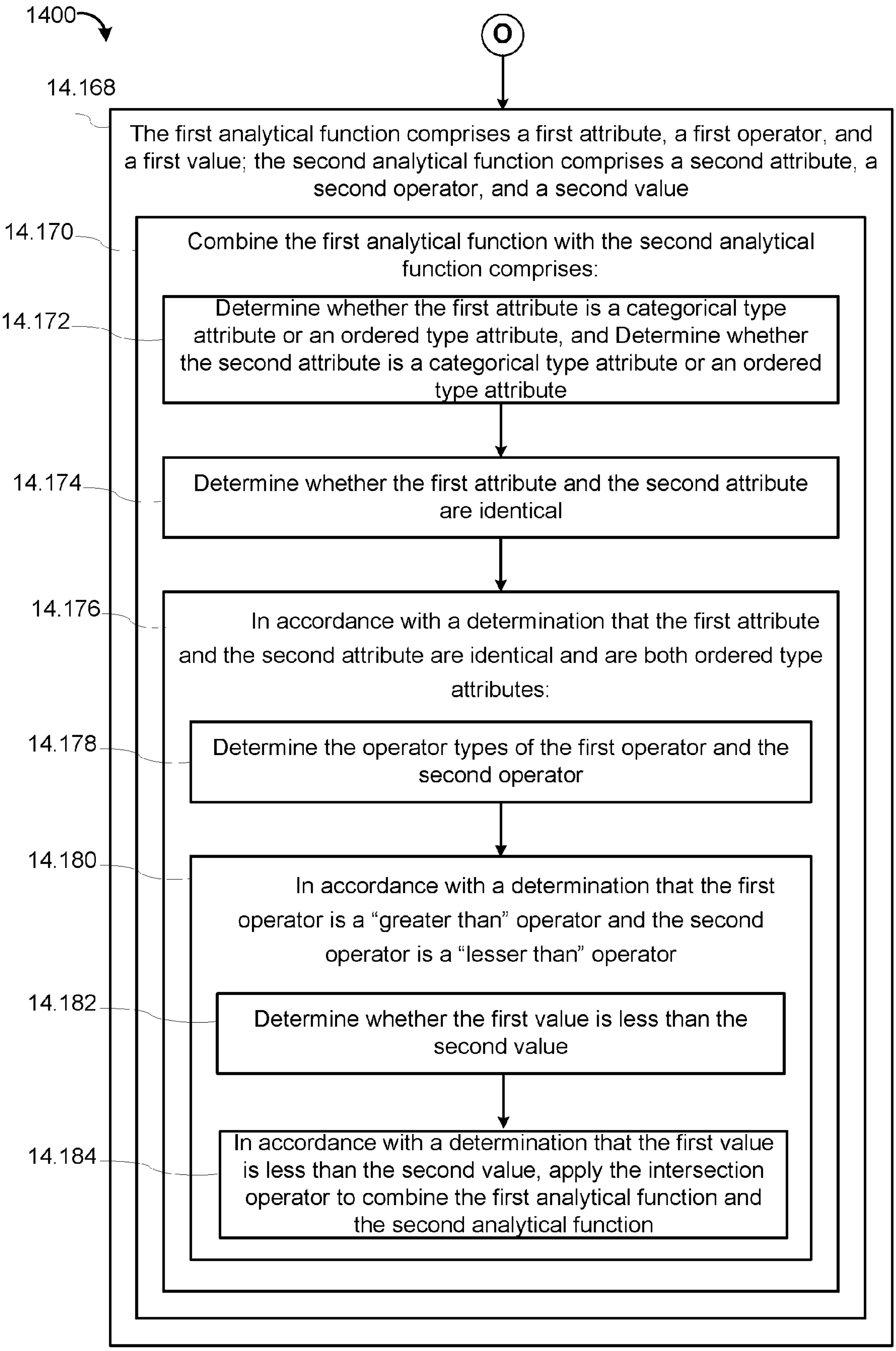
1400
O
14.168
The first analytical function comprises a first attribute, a first operator, and a first value; the second analytical function comprises a second attribute, a second operator, and a second value
14.170
Combine the first analytical function with the second analytical function comprises:
14.172
Determine whether the first attribute is a categorical type attribute or an ordered type attribute, and Determine whether the second attribute is a categorical type attribute or an ordered type attribute
14.174
Determine whether the first attribute and the second attribute are identical
14.176
In accordance with a determination that the first attribute and the second attribute are identical and are both ordered type attributes:
14.178
Determine the operator types of the first operator and the second operator
14.180
In accordance with a determination that the first operator is a "greater than" operator and the second operator is a "lesser than" operator
14.182
Determine whether the first value is less than the second value
14.184
In accordance with a determination that the first value is less than the second value, apply the intersection operator to combine the first analytical function and the second analytical function

**Figure 14O**

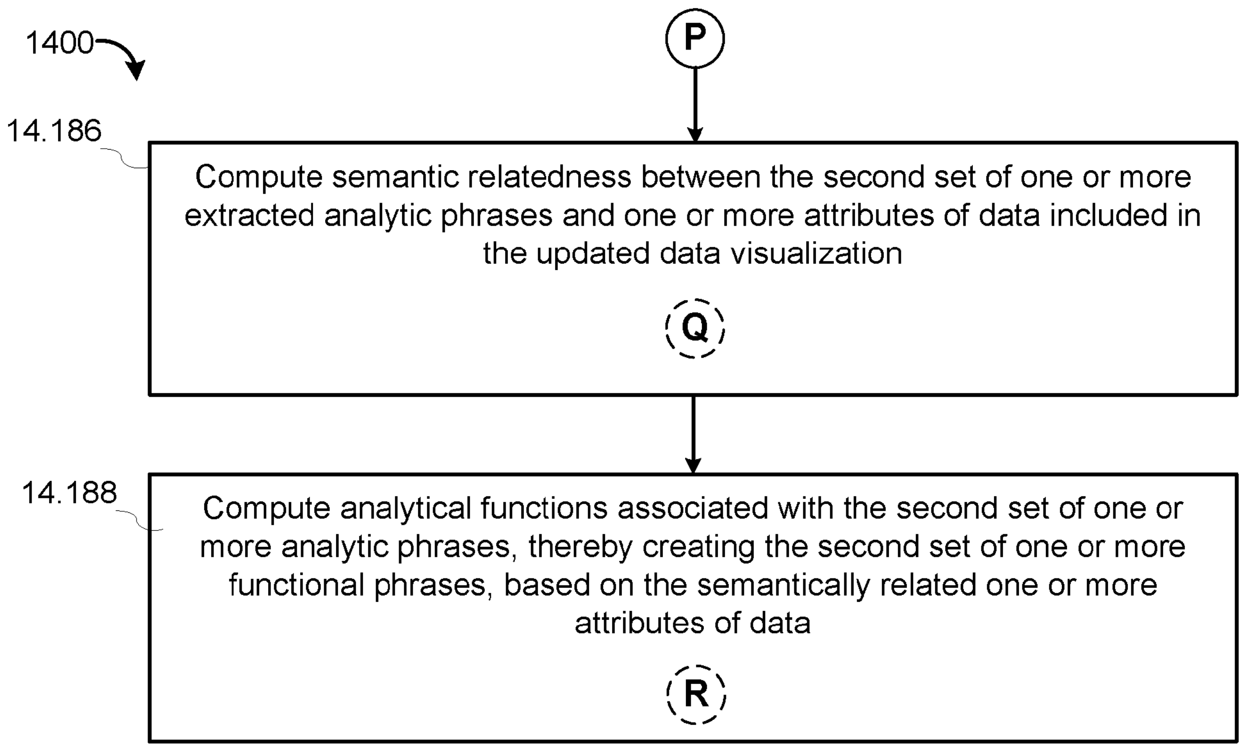
1400
P
14.186
Compute semantic relatedness between the second set of one or more extracted analytic phrases and one or more attributes of data included in the updated data visualization
Q
14.188
Compute analytical functions associated with the second set of one or more analytic phrases, thereby creating the second set of one or more functional phrases, based on the semantically related one or more attributes of data
R

Figure 14P

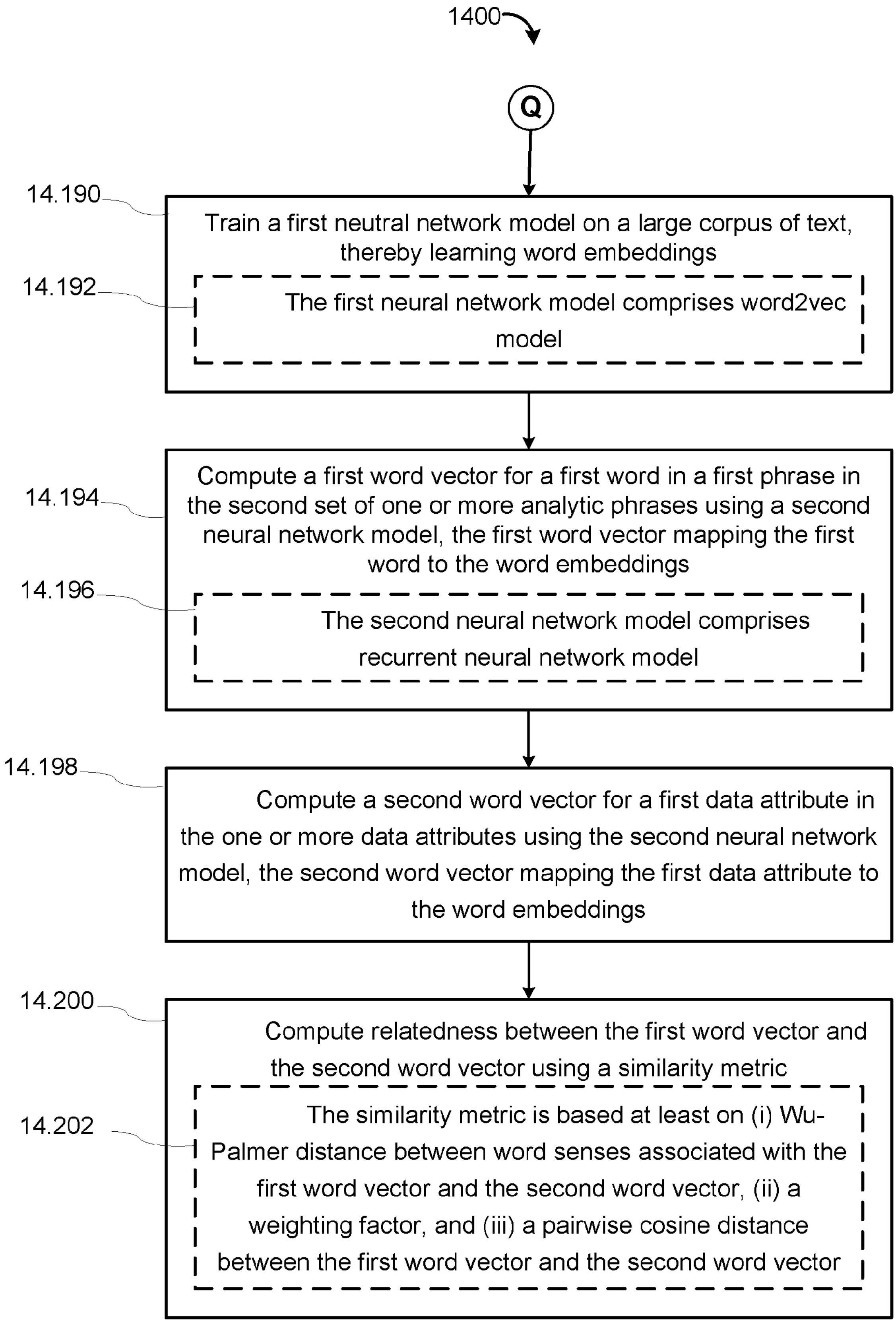
1400
Q
14.190
Train a first neutral network model on a large corpus of text, thereby learning word embeddings
14.192
The first neural network model comprises word2vec model
14.194
Compute a first word vector for a first word in a first phrase in the second set of one or more analytic phrases using a second neural network model, the first word vector mapping the first word to the word embeddings
14.196
The second neural network model comprises recurrent neural network model
14.198
Compute a second word vector for a first data attribute in the one or more data attributes using the second neural network model, the second word vector mapping the first data attribute to the word embeddings
14.200
Compute relatedness between the first word vector and the second word vector using a similarity metric
14.202
The similarity metric is based at least on (i) Wu-Palmer distance between word senses associated with the first word vector and the second word vector, (ii) a weighting factor, and (iii) a pairwise cosine distance between the first word vector and the second word vector

**Figure 14Q**

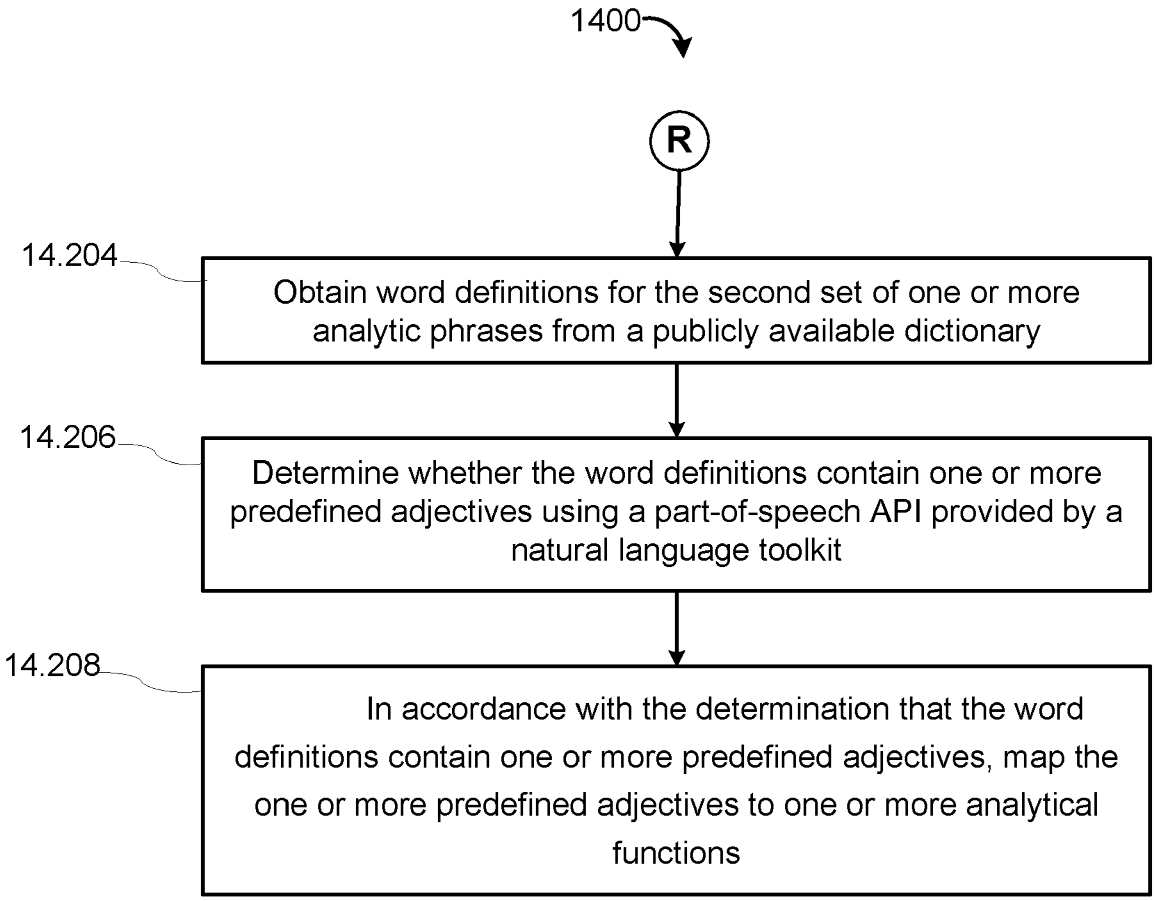
1400
R
14.204
Obtain word definitions for the second set of one or more analytic phrases from a publicly available dictionary
14.206
Determine whether the word definitions contain one or more predefined adjectives using a part-of-speech API provided by a natural language toolkit
14.208
In accordance with the determination that the word definitions contain one or more predefined adjectives, map the one or more predefined adjectives to one or more analytical functions

Figure 14R

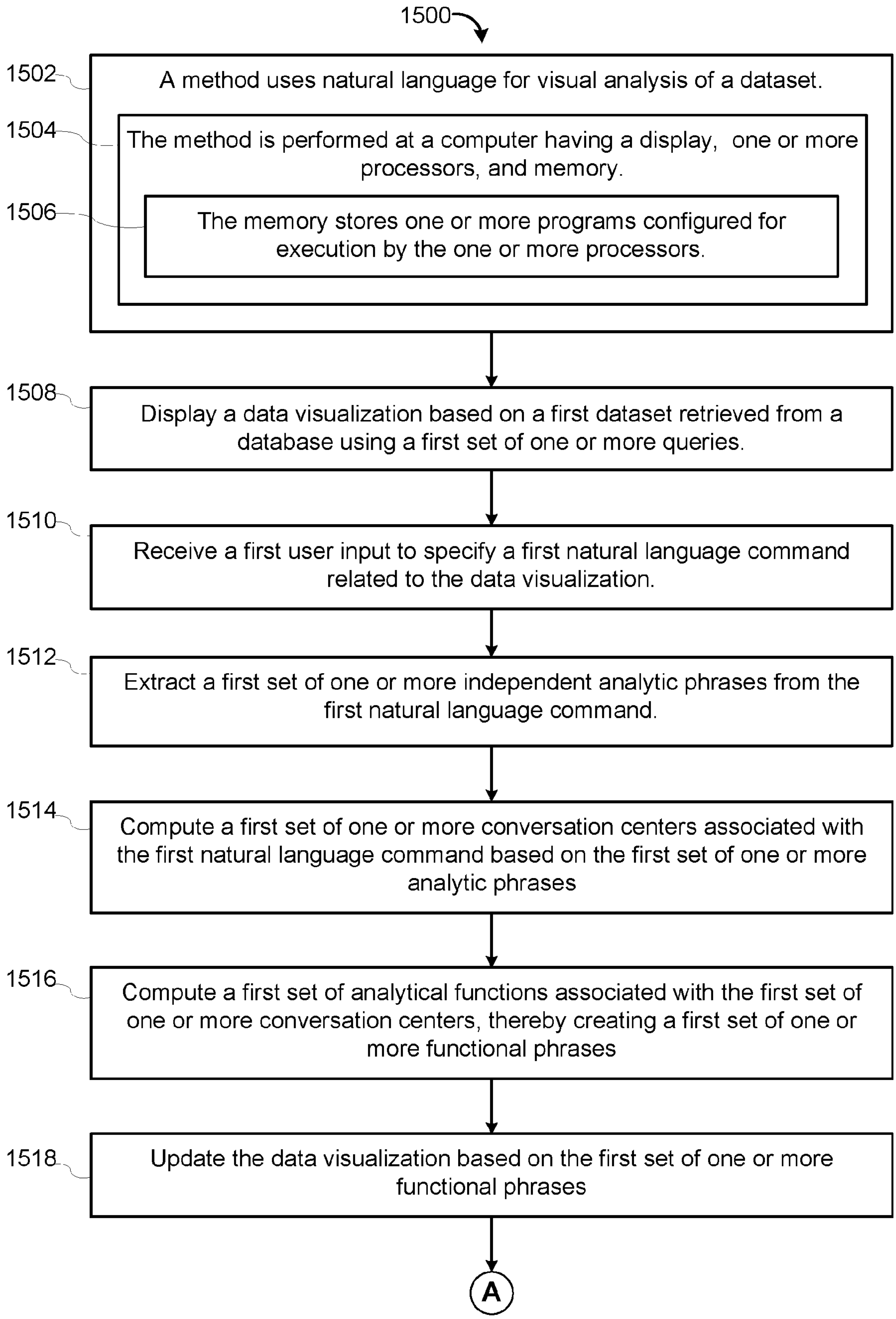
1500
1502
A method uses natural language for visual analysis of a dataset.
1504
The method is performed at a computer having a display, one or more processors, and memory.
1506
The memory stores one or more programs configured for execution by the one or more processors.
1508
Display a data visualization based on a first dataset retrieved from a database using a first set of one or more queries.
1510
Receive a first user input to specify a first natural language command related to the data visualization.
1512
Extract a first set of one or more independent analytic phrases from the first natural language command.
1514
Compute a first set of one or more conversation centers associated with the first natural language command based on the first set of one or more analytic phrases
1516
Compute a first set of analytical functions associated with the first set of one or more conversation centers, thereby creating a first set of one or more functional phrases
1518
Update the data visualization based on the first set of one or more functional phrases
A

Figure 15A

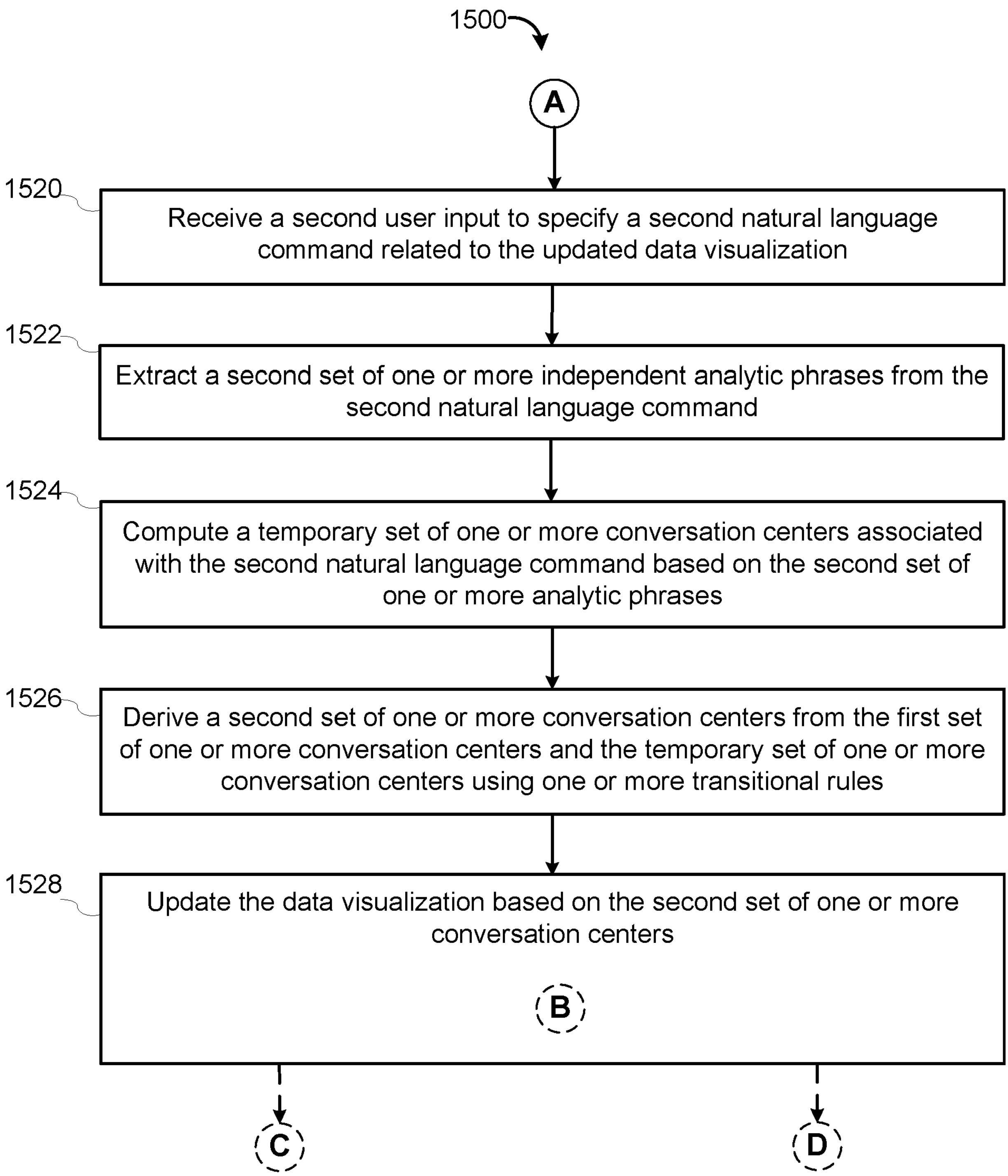
1500
A
1520
Receive a second user input to specify a second natural language command related to the updated data visualization
1522
Extract a second set of one or more independent analytic phrases from the second natural language command
1524
Compute a temporary set of one or more conversation centers associated with the second natural language command based on the second set of one or more analytic phrases
1526
Derive a second set of one or more conversation centers from the first set of one or more conversation centers and the temporary set of one or more conversation centers using one or more transitional rules
1528
Update the data visualization based on the second set of one or more conversation centers
B
C
D

Figure 15B

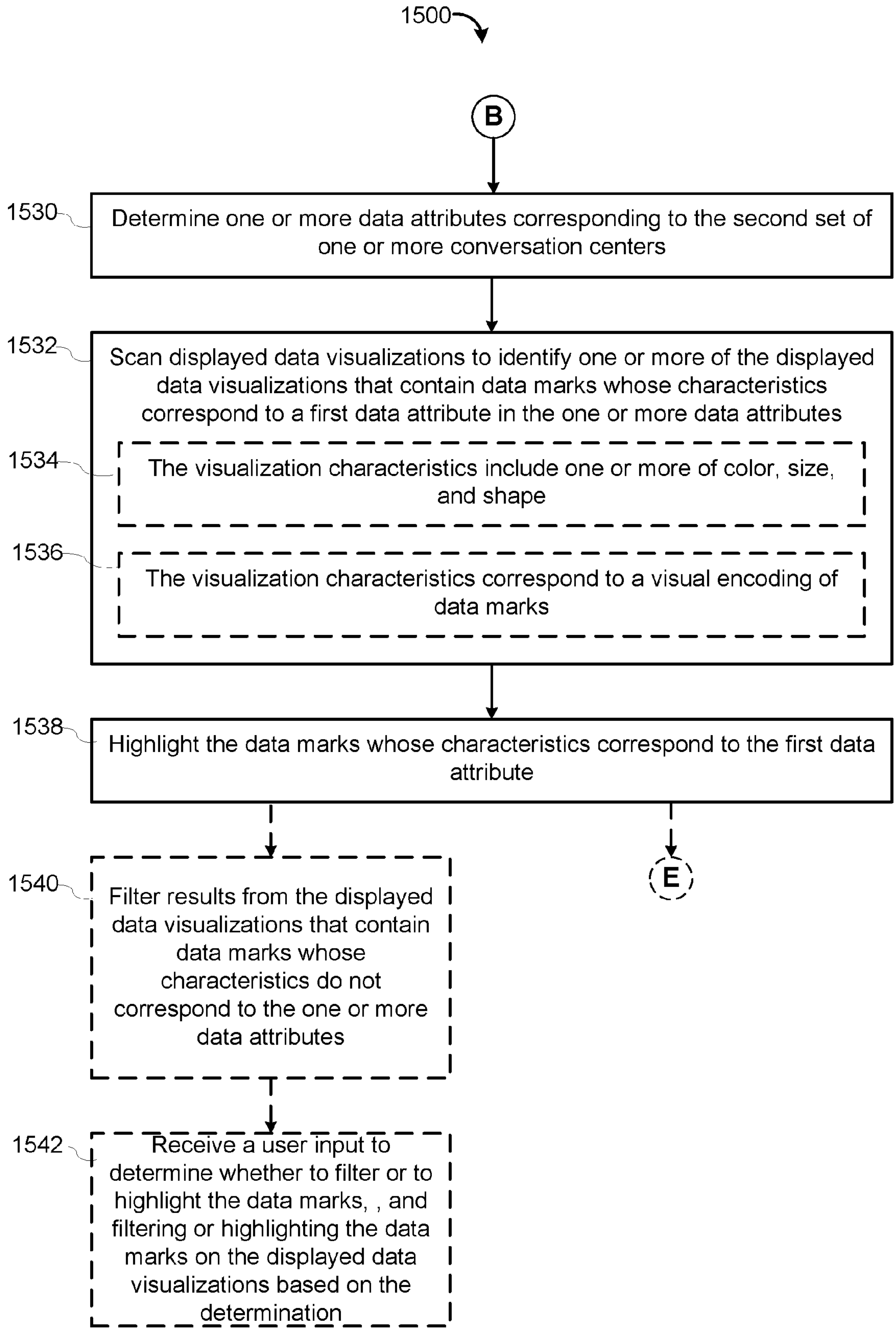
1500
B
1530
Determine one or more data attributes corresponding to the second set of one or more conversation centers
1532
Scan displayed data visualizations to identify one or more of the displayed data visualizations that contain data marks whose characteristics correspond to a first data attribute in the one or more data attributes
1534
The visualization characteristics include one or more of color, size, and shape
1536
The visualization characteristics correspond to a visual encoding of data marks
1538
Highlight the data marks whose characteristics correspond to the first data attribute
1540
Filter results from the displayed data visualizations that contain data marks whose characteristics do not correspond to the one or more data attributes
E
1542
Receive a user input to determine whether to filter or to highlight the data marks, , and filtering or highlighting the data marks on the displayed data visualizations based on the determination

**Figure 15C**

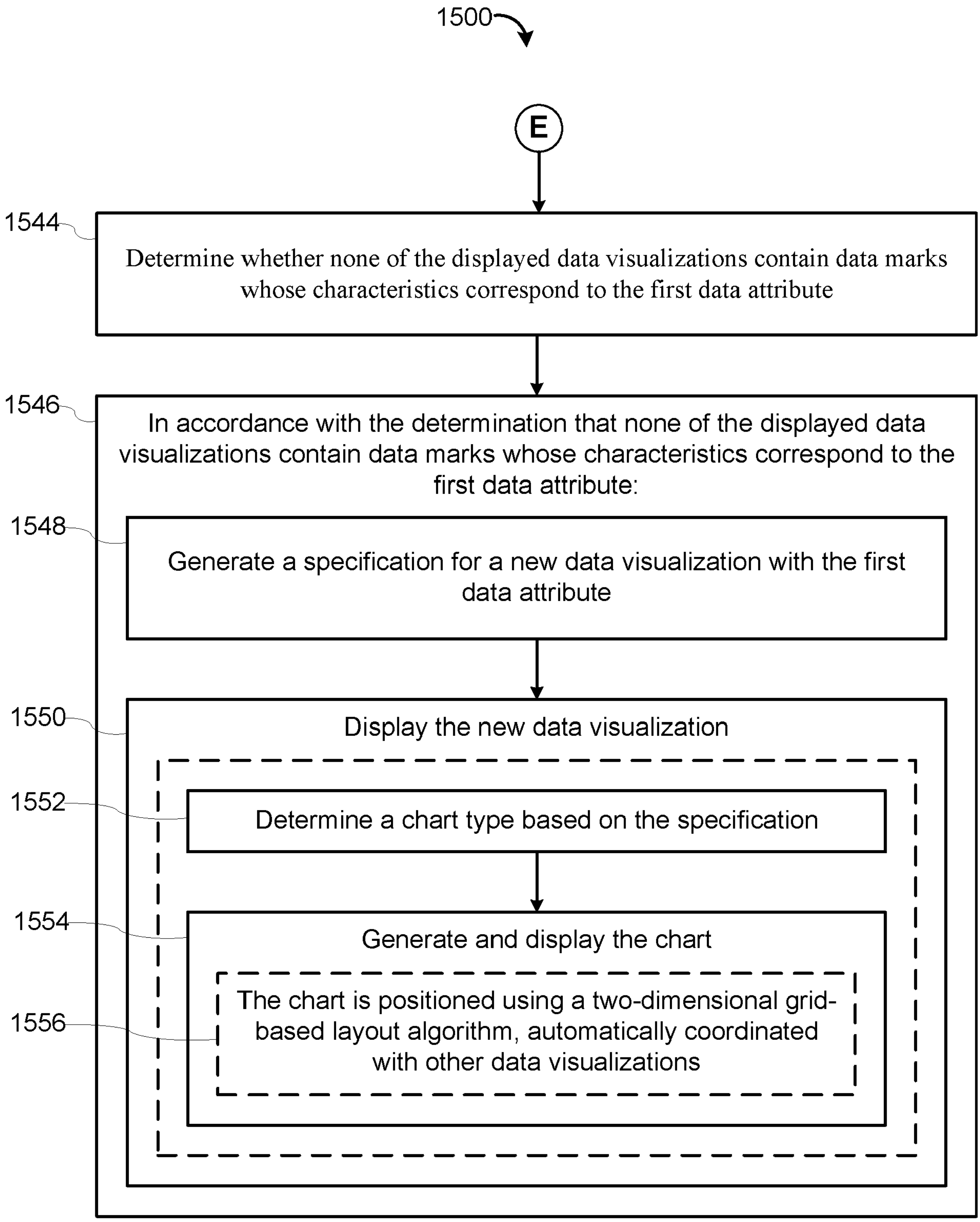
1500
E
1544
Determine whether none of the displayed data visualizations contain data marks whose characteristics correspond to the first data attribute
1546
In accordance with the determination that none of the displayed data visualizations contain data marks whose characteristics correspond to the first data attribute:
1548
Generate a specification for a new data visualization with the first data attribute
1550
Display the new data visualization
1552
Determine a chart type based on the specification
1554
Generate and display the chart
1556
The chart is positioned using a two-dimensional grid-based layout algorithm, automatically coordinated with other data visualizations

Figure 15D

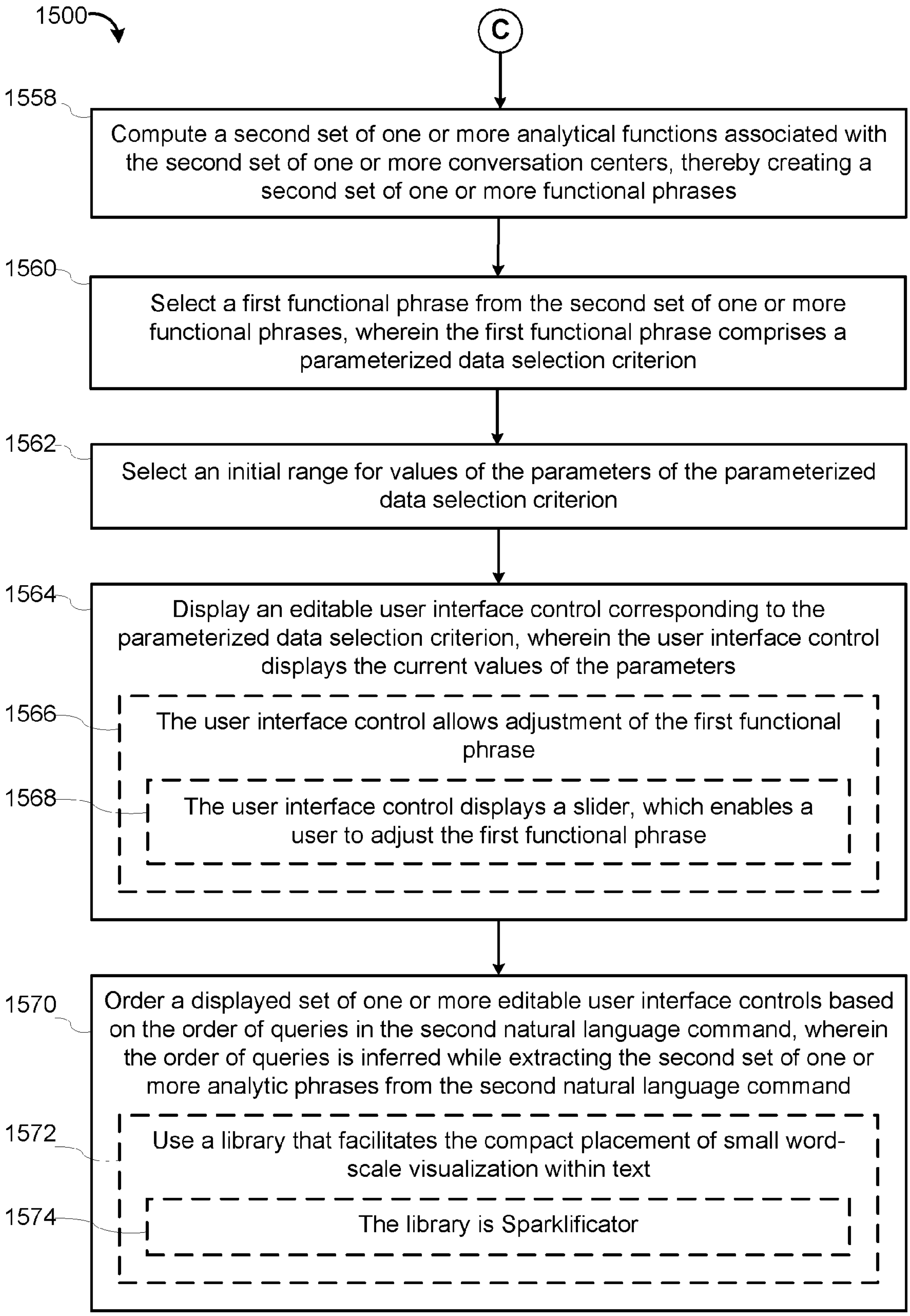
1500
C
1558
Compute a second set of one or more analytical functions associated with the second set of one or more conversation centers, thereby creating a second set of one or more functional phrases
1560
Select a first functional phrase from the second set of one or more functional phrases, wherein the first functional phrase comprises a parameterized data selection criterion
1562
Select an initial range for values of the parameters of the parameterized data selection criterion
1564
Display an editable user interface control corresponding to the parameterized data selection criterion, wherein the user interface control displays the current values of the parameters
1566
The user interface control allows adjustment of the first functional phrase
1568
The user interface control displays a slider, which enables a user to adjust the first functional phrase
1570
Order a displayed set of one or more editable user interface controls based on the order of queries in the second natural language command, wherein the order of queries is inferred while extracting the second set of one or more analytic phrases from the second natural language command
1572
Use a library that facilitates the compact placement of small word-scale visualization within text
1574
The library is Sparklificator

**Figure 15E**

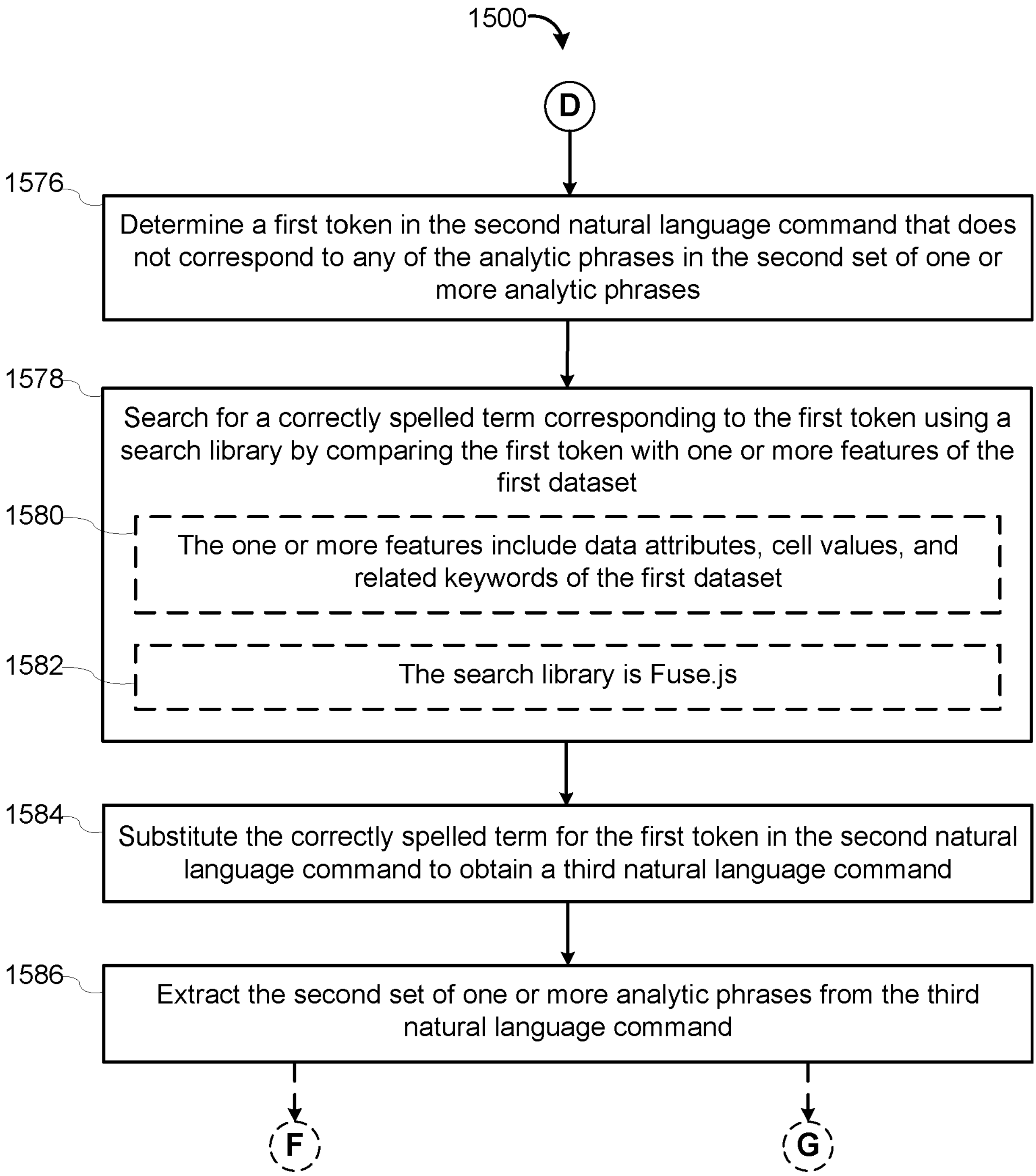
1500
D
1576
Determine a first token in the second natural language command that does not correspond to any of the analytic phrases in the second set of one or more analytic phrases
1578
Search for a correctly spelled term corresponding to the first token using a search library by comparing the first token with one or more features of the first dataset
1580
The one or more features include data attributes, cell values, and related keywords of the first dataset
1582
The search library is Fuse.js
1584
Substitute the correctly spelled term for the first token in the second natural language command to obtain a third natural language command
1586
Extract the second set of one or more analytic phrases from the third natural language command
F
G

Figure 15F

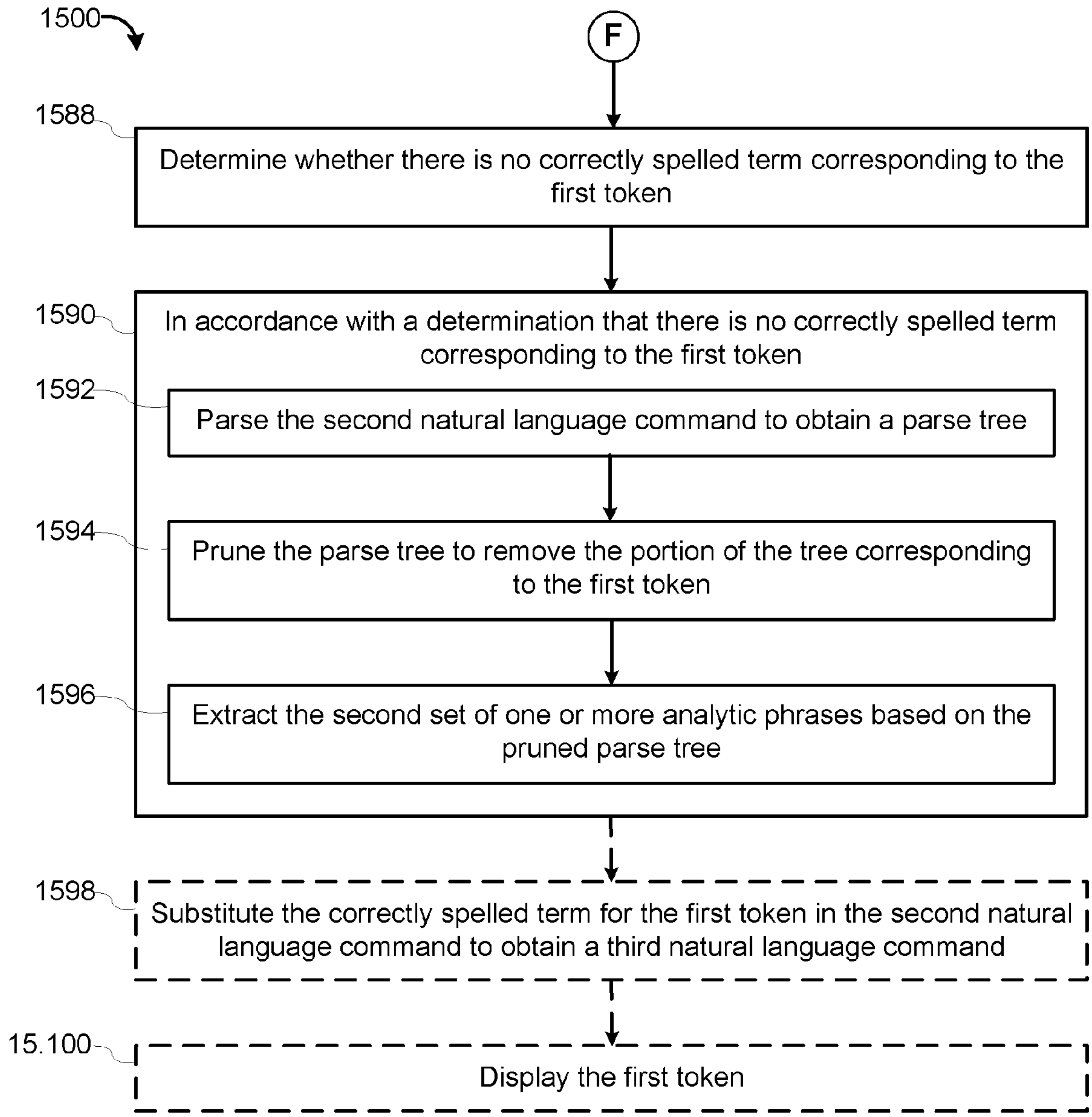


**Figure 15G**

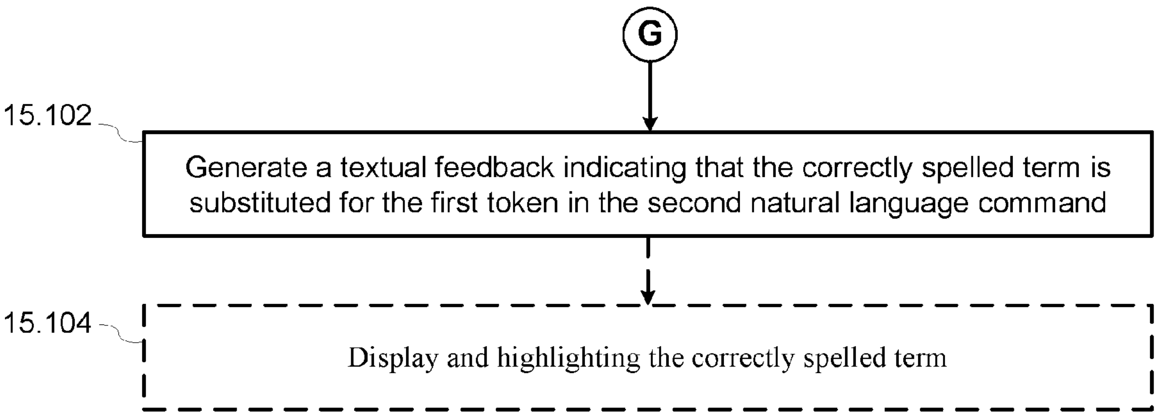


**Figure 15H**

Europäisches Patentamt
European Patent Office
Office européen des brevets

# EUROPEAN SEARCH REPORT

Application Number
EP 21 21 8473

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VIDYA SETLUR ET AL: "Eviza: A Natural Language Interface for Visual Analysis", PROCEEDINGS OF USER INTERFACE SOFTWARE AND TECHNOLOGY (UIST 2016) CONFERENCE, ACM, USA, 16 October 2016 (2016-10-16), pages 365-377, XP058299767, DOI: 10.1145/2984511.2984588 ISBN: 978-1-4503-4189-9 * abstract; figures 1,2,6; table 2 * * pages 366-367, paragraph 3 * * page 367, paragraph 5 - page 368, paragraph 6 * * page 370, paragraph 10 - page 372, paragraph 11.0.1 * * page 374, paragraph 13 * ----- | 1-15 | INV. G06F16/33 G06F16/9032 G06F16/9038 G06F40/20 |
| X | ABHINAV KUMAR ET AL: "Towards a Dialogue System that Supports Rich Visualizations of Data", PROCEEDINGS OF THE SIGDIAL 2016 CONFERENCE, LA, USA, ACL, 13 September 2016 (2016-09-13), pages 304-309, XP055496498, * abstract; figures 2-3 * * page 306, paragraph 4 - page 307, paragraph 4.5 * * page 308, paragraph 6 * ----- | 1-15 | TECHNICAL FIELDS SEARCHED (IPC) G06F |

The present search report has been drawn up for all claims

2

| Place of search | Date of completion of the search | Examiner |
|---|---|---|
| Munich | 28 June 2022 | Michalski, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **J. MACKINLAY ; P. HANRAHAN ; C. STOLE.** *Show me: Automatic presentation for visual analysis*